# EUROPEAN PATENT APPLICATION

(11) **EP 4 617 844 A2**
(43) Date of publication of application: **17.09.2025**
(21) Application number: 25193970.8
(22) Date of filing: 03.06.2022
(51) Int. Cl.: G06F 3/04883

(54) **SYSTEMS AND METHODS FOR INTERACTING WITH MULTIPLE DISPLAY DEVICES**

(30) Priority: 04.06.2021 US 202163197248 P; 04.10.2021 US 202163252114 P; 02.06.2022 US 202217831377
(62) Divisional of application: 22736100.3
(71) Applicant: Apple Inc., Cupertino, CA 95014 (US)
(72) Inventor: LEMMENS, Cas G., Cupertino, 95014 (US); WONG, Chun Kin Minor, Cupertino, 95014 (US); LOUCH, John O., Cupertino, 95014 (US); VAN VECHTEN, Kevin J., Cupertino, 95014 (US); ALONSO RUIZ, Marcos, Cupertino, 95014 (US); SEPULVEDA, Raymond S., Cupertino, 95014 (US); COFFMAN, Patrick L., Cupertino, 95014 (US)
(74) Representative: COPA Copenhagen Patents

(57) **Abstract**

A method is performed at a first computer system having a first display generation component in communication a second computer system having a second display generation component. The method includes, in response to an input, moving a representation of content across a first display region provided by the first display generation component to a second display region provided by the second display generation component when the display generation components are communication in a first mode or a second mode. The method includes moving an application window across the first display region to the second display region provided when the display generation components are communication in the first mode and preventing the moving across the first display region to the second display region when the display generation components are in communication in the second mode.

## Description

### RELATED APPLICATIONS

This application is a continuation of U.S. Patent Application No. 17/831,377, filed June 02, 2022, which claims priority to U.S. Provisional Patent Application No. 63/197,248, filed June 4, 2021 and U.S. Provisional Patent Application No. 63/252,114, filed October 4, 2021.

### TECHNICAL FIELD

The disclosed embodiments relate to interacting with two or more electronic devices (e.g., a first electronic device and a second electronic device) using one or more input devices associated with only one electronic device of the two or more electronic devices. For example, the two or more electronic devices are operated in different modes including a shared input mode (e.g., a first user interface generated by an operating system of the first electronic device and a second user interface generated by an operating system of the second electronic device are controlled with a shared input device) and a companion display mode (e.g., a first user interface generated by the operating system of the first electronic device extends over both a display of the first electronic device and a display of a second electronic device).

### BACKGROUND

Users of computing devices often use multiple computer displays to concurrently visually present content. Using multiple connected displays often improves user efficiency, as users can open more user interfaces and spread their user interfaces across a larger screen area. Connecting multiple computer displays together, however, typically requires specialized knowledge of the computer's operating system or other display software, requires reconfiguration when computing devices or displays are moved, and is otherwise a difficult, cumbersome, and fustrating process. Also, some computing devices or displays are not even compatible with one another and cannot be connected together to concurrently display content. As such, there is a need for a system and method that more easilty allows users to connect and concurrently operate multiple computer displays.

Moreover, the human-machine interfaces for devices operating with multiple displays are typically unintuitive and do not allow provide visual feedback when performing different functions. As such, there is also a need for more intuitive human-machine interfaces, and, in particular, for human-machine interfaces that allow easier and more efficient use of multiple displays.

### SUMMARY

The embodiments described herein address the above shortcomings by providing display devices and methods that allow users to intuitively and efficiently connect and operate displays of multiple display devices (e.g., a desktop electronic device, a laptop electronic device, or a tablet electronic device) in communication with each other to share content between the multiple display devices. Such devices and methods require few inputs to establish communication between different devices, switch between different display modes (e.g., a shared input mode and a companion display mode), and share content between the different displays. Such display devices and methods also provide feedback to assist the user operating the different display devices in different display modes. Such display devices and methods also provide improved human-machine interfaces, e.g., by emphasizing information to make it more discernable on the touch-sensitive display and by requiring fewer interactions from users to achieve the users' desired results. For these reasons and those discussed below, the devices and methods described herein reduce power usage and improve battery life of electronic devices.

In accordance with some embodiments, a method is performed at a first computer system having a first display generation component. The first computer system is in communication with a first input device and a second computer system having a second display generation component. The method includes displaying, via the first display generation component, a first user interface object in the first display region. While displaying the first user interface in the first display region provided by the first display generation component, detecting a first input including first movement via the first input device. The input corresponds to a request for dragging the first user interface object across the first display region to a second display region provided by the second display generation component. In response to detecting the first movement, in accordance with a determination that the first user interface object is a representation of content, moving the first user interface object from the first display region to the second display region when the second display generation component is in communication with the first computer system in a first mode (e.g., an extended display mode) or a second mode (e.g., a shared input mode). In accordance with a determination that the first user interface object is an application window and the first input is detected while the second display generation component is in communication with the first computer system in the first mode (e.g., the extended display mode), moving the first user interface object from the first display region to the second display region. In accordance with a determination that the first user interface object is an application window and the first input is detected while the second display generation component is in communication with the first computer system in the second mode (e.g., the shared input mode), preventing movement of the first user interface object into the second display region provided by the second display generation component. In some embodiments, in the shared input mode, a first computer system displays a user interface controlled by the first computer system and a second computer system displays a user interface controlled by the second computer system while the first computer and the second computer system share an input device. In some embodiments, in the extended display mode first display generation component and the second display generation component both display a user interface generated by the first computer system and first computer and the second computer system receive inputs via the shared input device.

In accordance with some embodiments, a method is performed at a first computer system having a first display generation component. The first computer system is in communication with a first input device. The method includes detecting, while displaying the first user interface in the first display region provided by the first display generation component, a first event that meets first criteria. In response to detecting the first event that meets the first criteria, displaying a respective visual indication of a respective representative spatial position of a user interface generated by a second display generation component of a second computer system. Displaying the respective visual indication includes, in accordance with a determination that the first computer system is sharing the first input device with the second display generation component of the second computer system, and a user interface generated by the second display generation component has a first representative spatial position that can be reached by dragging a user interface object through a first portion of a user interface generated by the first display generation component, displaying a first visual indication in the first portion of the user interface generated by the first display generation component. In accordance with a determination that the first computer system is sharing the first input device with the second computer system that is in communication with the second display generation component, and the user interface generated by the second display generation component has a second representative spatial position that can be reached by dragging a user interface object through a second portion of a user interface generated by the first display generation component, displaying a second visual indication in the second portion of the user interface generated by the first display generation component. While the first computer system is sharing the first input device with the second computer system, detecting a first input via the first input device corresponding to a request for dragging a first user interface object across the first display region. In response to detecting the first input, moving the first user interface object across the user interface generated by the first display generation component and in accordance with a determination that the first input included movement across the portion of the first user interface where the respective visual indication was displayed when the first event that meets the first criteria was detected while user interface generated by the second display generation component has the respective representative spatial position represented by the respective visual indication, moving the first user interface object across the user interface generated by the second display generation component in accordance with the first movement detected via the first input device.

In accordance with some embodiments, a method is performed at a first computer system having a first display generation component. wherein the first computer system is in communication with a first input device and a second computer system having a second display generation component. The method includes displaying, via the first display generation component, in a first display region a configuration user interface that includes a first representation of a representative spatial position for a user interface generated by the first display generation component and a second representation of a representative spatial position for a user interface generated by the second display generation component. In accordance with a determination that the first computer system and the second computer system are connected in a first mode (e.g., in the shared input mode), the method includes displaying the first representation of the representative spatial position for the user interface generated by the first display generation component and the second representation of the representative spatial position for the user interface generated by the second display generation component with first visual characteristics. In accordance with a determination that the first computer system and the second computer system are connected in a second mode, displaying the first representation of the representative spatial position for the user interface generated by the first display generation component and the second representation of the representative spatial position for the user interface generated by the second display generation component with second visual characteristics different from the first visual characteristics.

In accordance with some embodiments, a method is performed at a first computer system comprising a first display generation component and an input device. The method includes, displaying, via the first display generation component, a visual indication of a location of a portal between a first display region associated with the first display generation component and a second display region associated with a second display generation component. The portal is a portion of the first display region at which user interface objects can be moved between the first display region and the second display region. While displaying the visual indication of the portal, the method includes detecting a first input corresponding to a first movement in the first display region. In response to detecting the first input, changing a size and/or location of the visual indication of the portal between the first display region associated with the first display generation component and the second display region associated with a second display generation component to indicate a change to the size and/or location of the portal between the first display region associated with the first display generation component and the second display region associated with a second display generation component.

In accordance with some embodiments, a method is performed at a first computer system having a display generation component and one or more input devices. The method includes, concurrently displaying in a display region provided by the display generation component: a dock including a plurality of icons respectively corresponding to a plurality of applications, and a first region and a second region displayed in a split-screen configuration, wherein the first region displays a first user interface of a first application, and the second region displays a placeholder interface indicating that the second region is available for placement of a user interface of an application other than the first application. The method further includes, while concurrently displaying the dock, the first user interface of the first application in the first region, and the placeholder interface in the second region, detecting a first user input corresponding to selection of an icon in the dock that corresponds to a second application; and in response to detecting the first user input, displaying a second user interface of the second application in the second region, wherein the second user interface of the second application is displayed with the first user interface of the first application in the split-screen configuration.

In accordance with some embodiments, a computer system includes a first display generation component, one or more processors, memory, and one or more programs, wherein the one or more programs are stored in the memory and configured to be executed by the one or more processors, the one or more programs including instructions for performing any of the methods described above. In accordance with some embodiments, a computer readable storage medium stores one or more programs, the one or more programs comprise instructions, which when executed by a first computer system having a first display generation component, cause the computer system to perform any of the methods described above.

The systems and methods described herein improve ways of operating devices with multiple displays concurrently efficiently.

### BRIEF DESCRIPTION OF DRAWINGS

For a better understanding of the various described embodiments, reference should be made to the Description of Embodiments below, in conjunction with the following drawings in which like reference numerals refer to corresponding parts throughout the figures.
Figures 1A-1B illustrate example systems in which a first electronic device operates in communication with a second electronic device and/or a third electronic device (e.g., a combination of two or three of a desktop computer, a laptop computer and a tablet computer), in accordance with some embodiments.
Figure 2 is a block diagram of an electronic device (e.g., a device running a mobile operating system), in accordance with some embodiments.
Figure 3A is a block diagram of an electronic device (e.g., a device running a desktop or a laptop operating system), in accordance with some embodiments.
Figure 3B is a block diagram of components for event handling of Figure 3A, in accordance with some embodiments.
Figure 4A illustrates an example user interface for a menu of applications on a portable multifunction device, in accordance with some embodiments.
Figure 4B illustrates an example user interface for a multifunction device with a touch-sensitive surface that is separate from the display, in accordance with some embodiments.
Figures 5A-5T, 6A-6X, 7A-7Z and 8A-8AI are schematics of display devices used to illustrate example user interfaces for concurrently interacting with multiple display devices. Additional details regarding these figures are also provided below with reference to the descriptions of methods 9000, 10000, 11000, and 12000.
Figures 9A-9D, 10A-10F, 11A-11E and 12A-12F are flowcharts of methods for initiating and interacting with a companion display mode, in accordance with some embodiments.
Figures 13A-13AO are schematics of display devices used to illustrate example user interfaces for concurrently displaying and interacting with multiple applications, in accordance with some embodiments. Additional details regarding these figures are also provided below with reference to the descriptions of method 14000.
Figures 14A-14G are flowcharts of methods for displaying and interacting with a plurality of user interfaces on a display device, in accordance with some embodiments.

### DESCRIPTION OF EMBODIMENTS

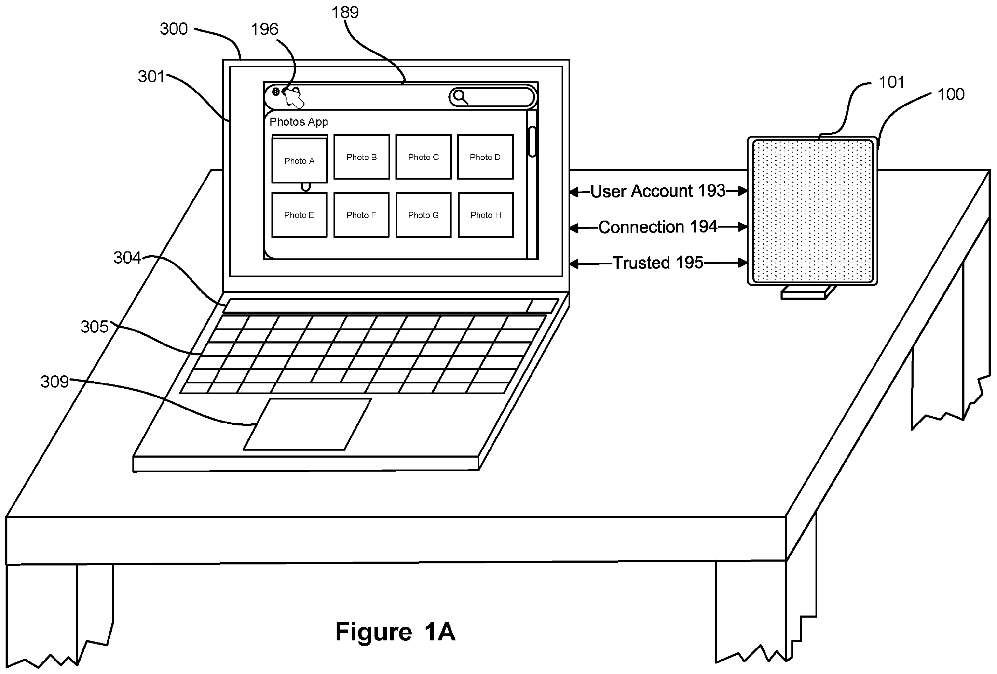

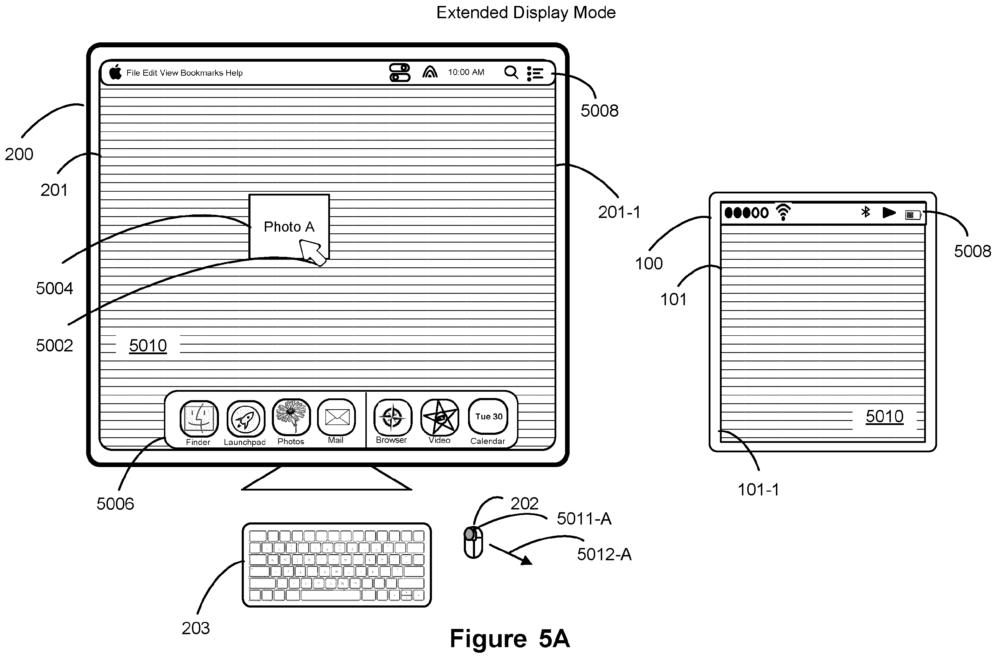

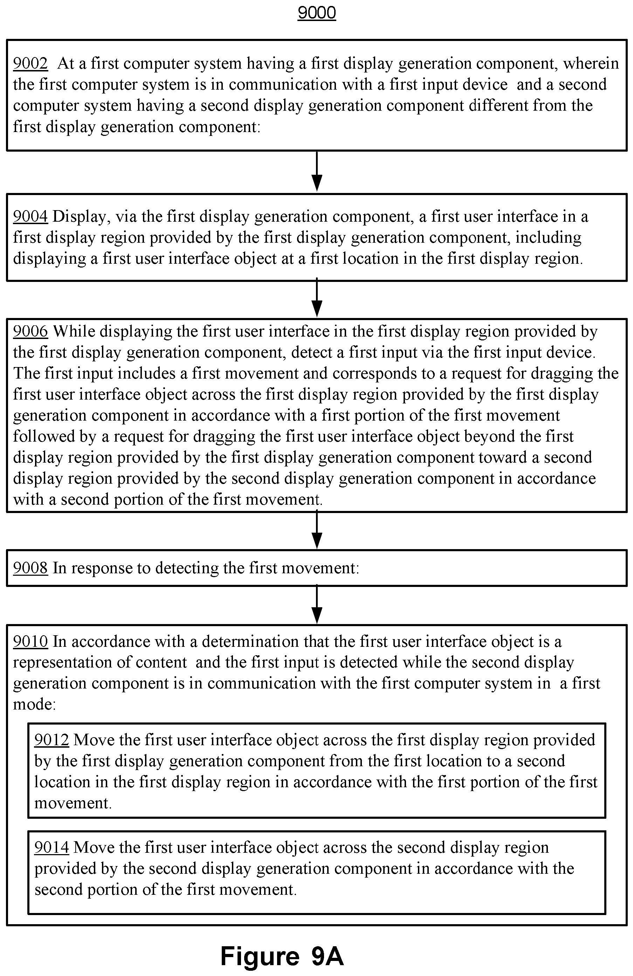

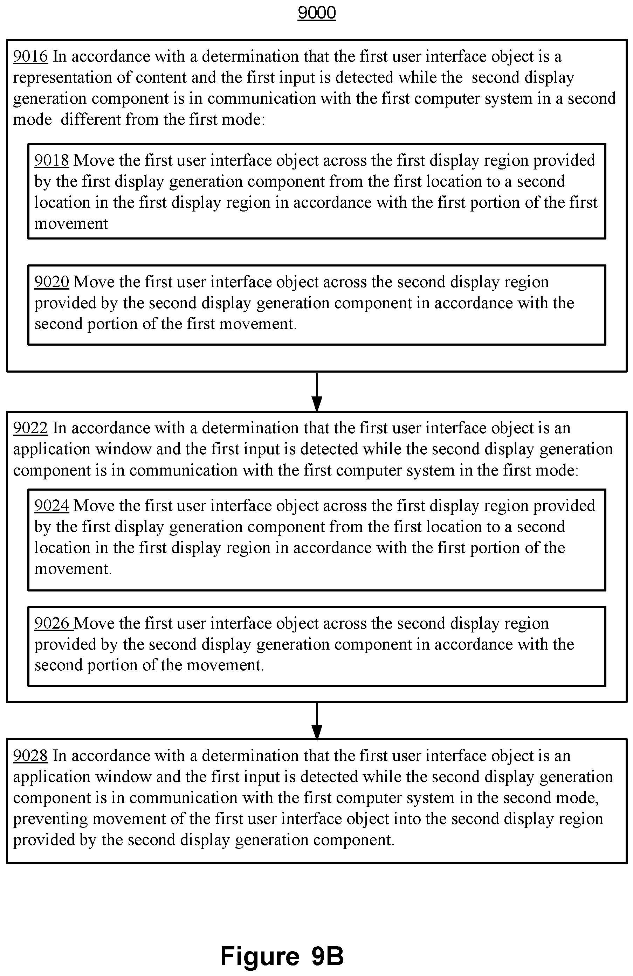

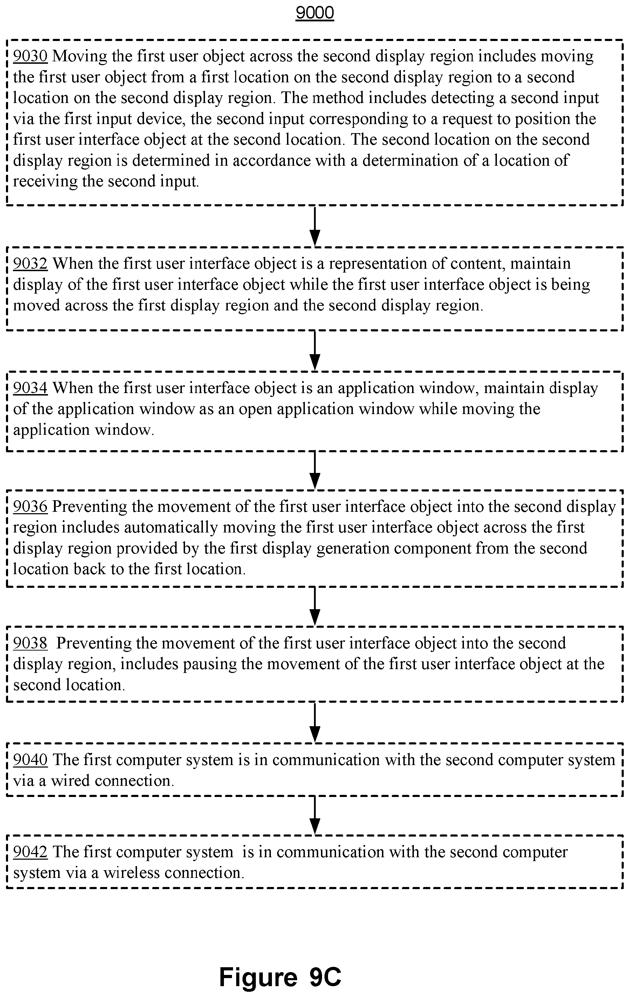

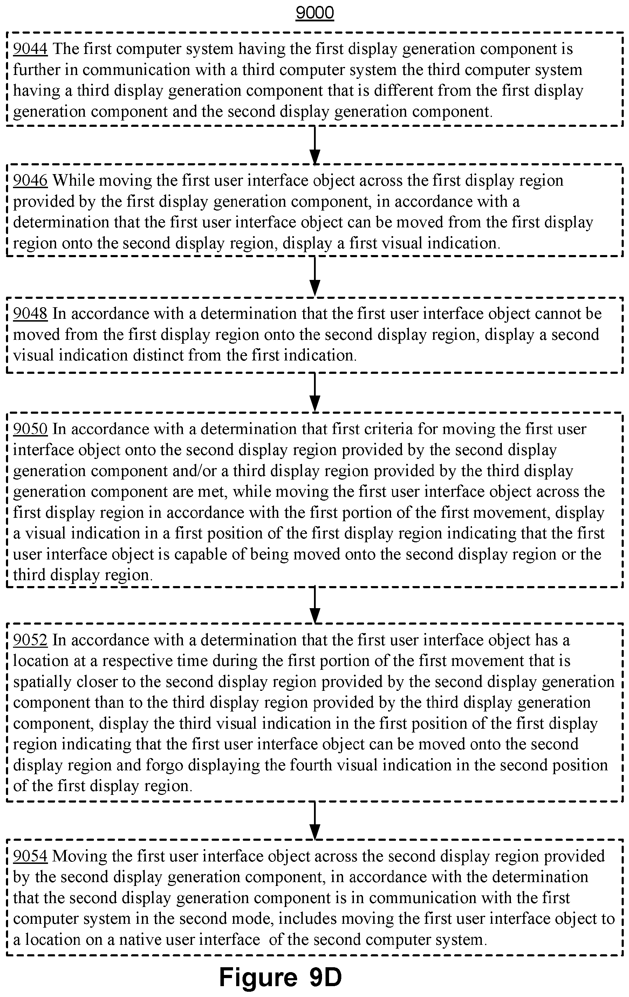

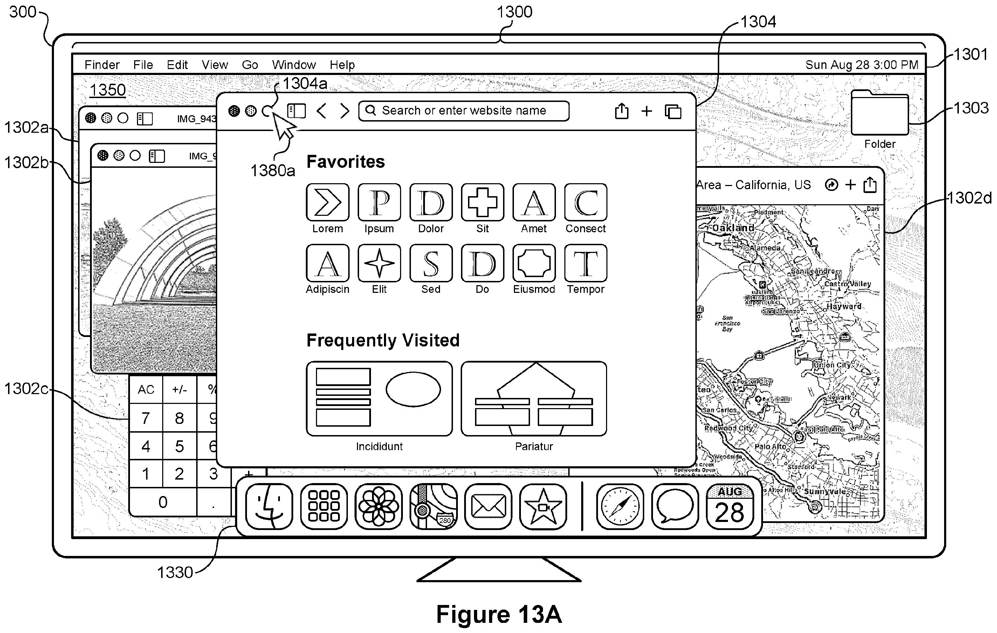

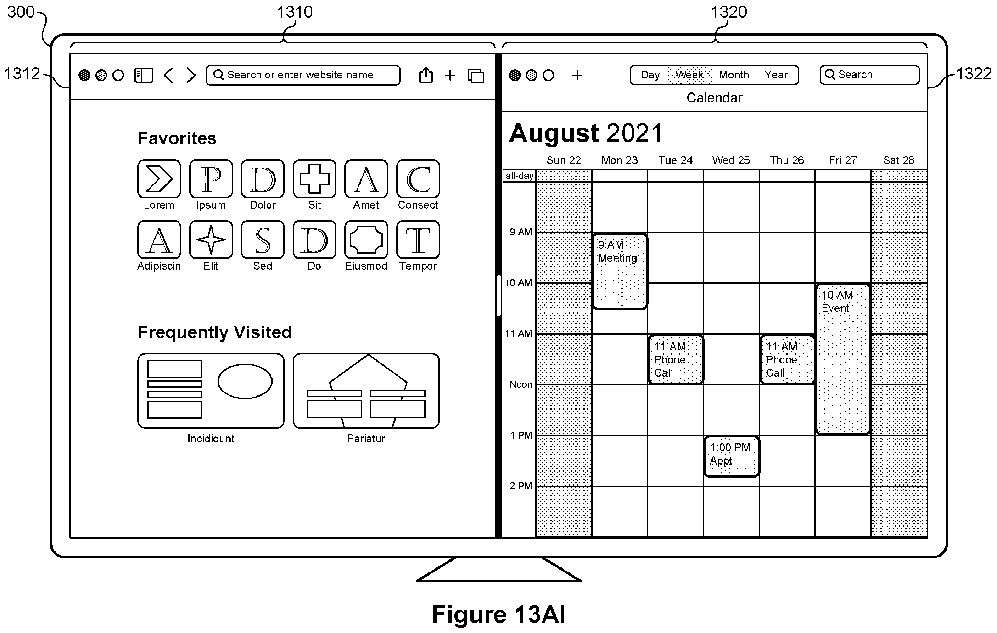

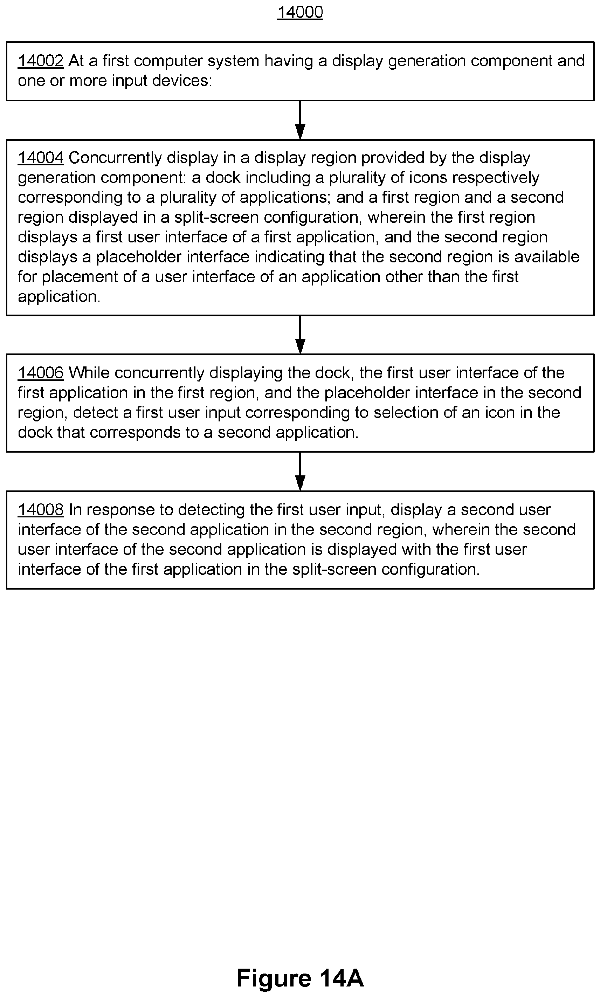

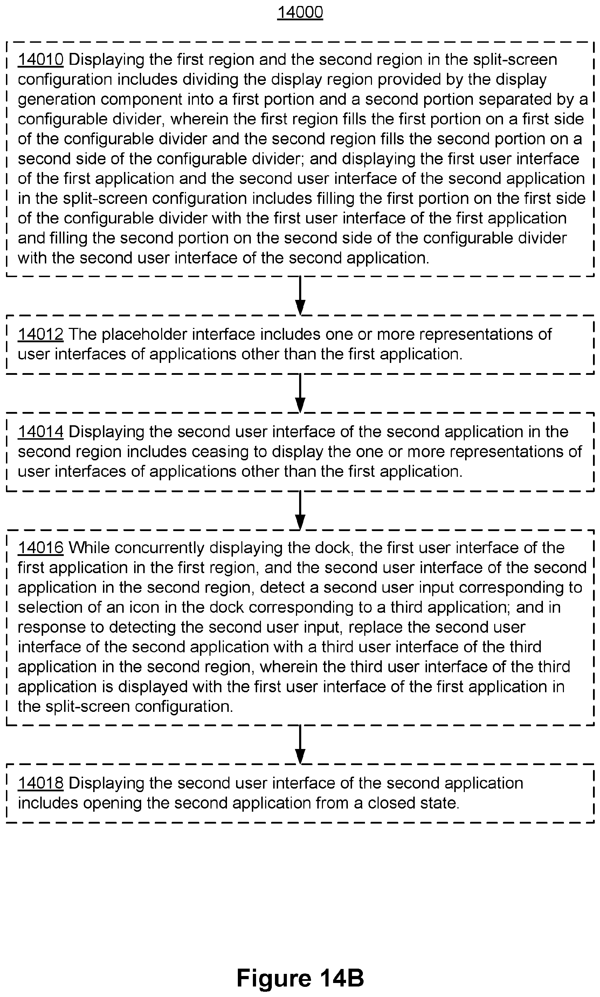

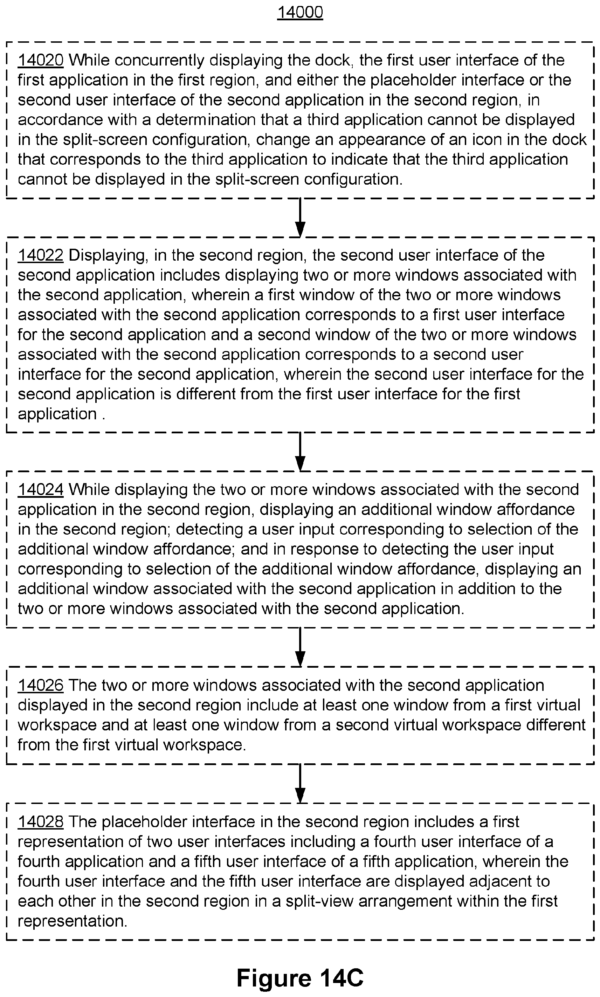

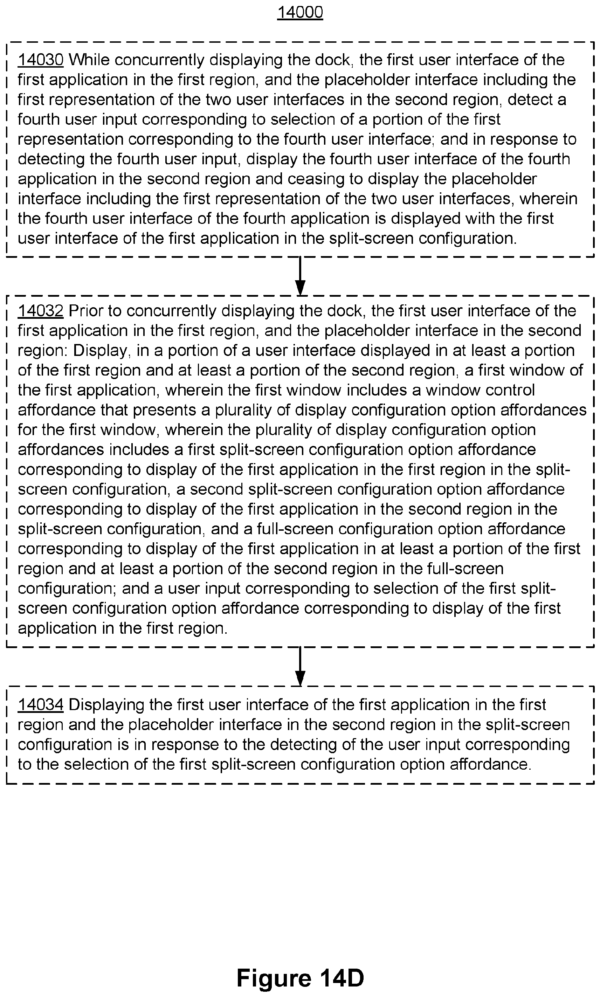

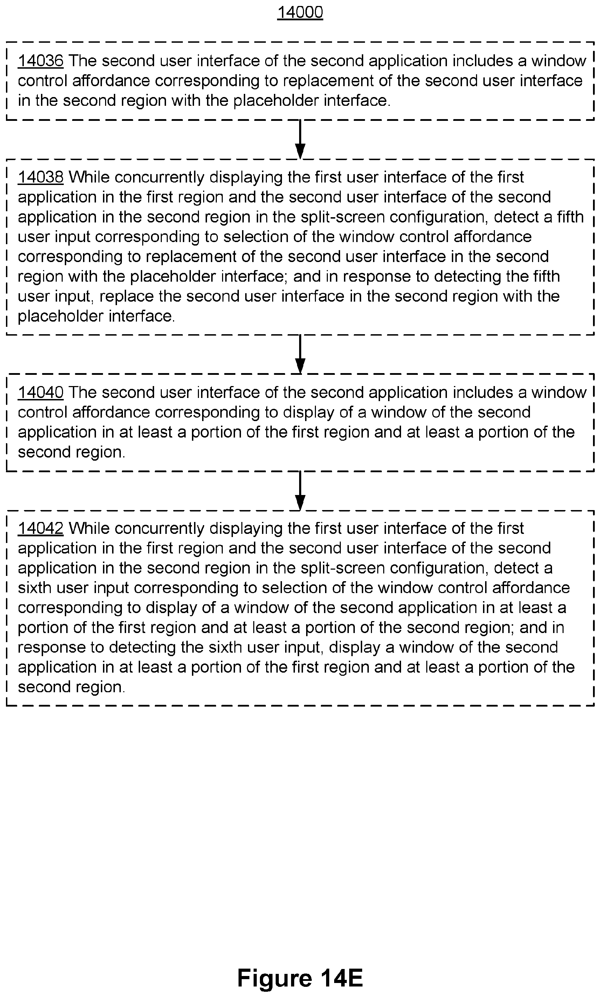

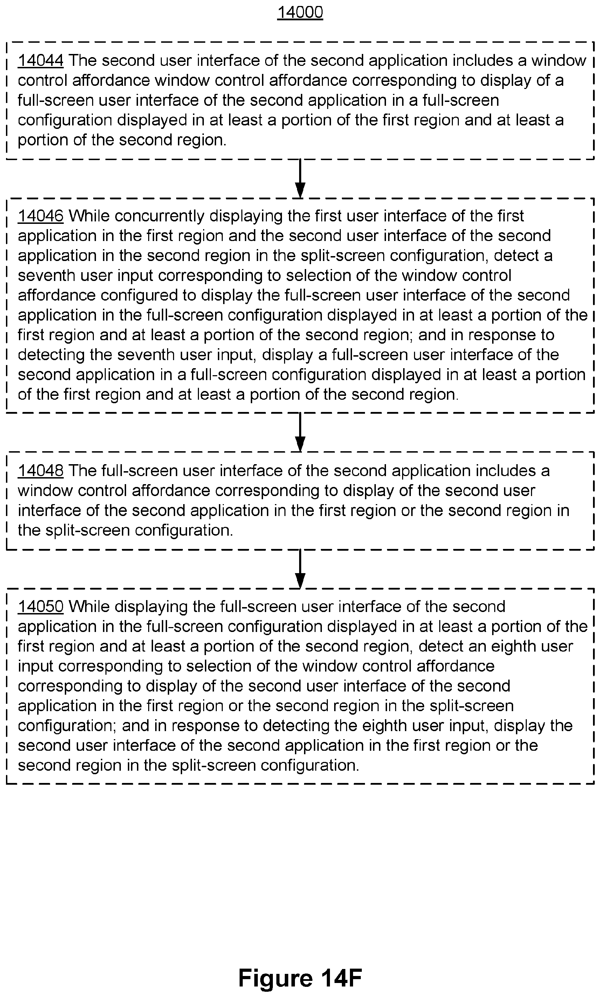

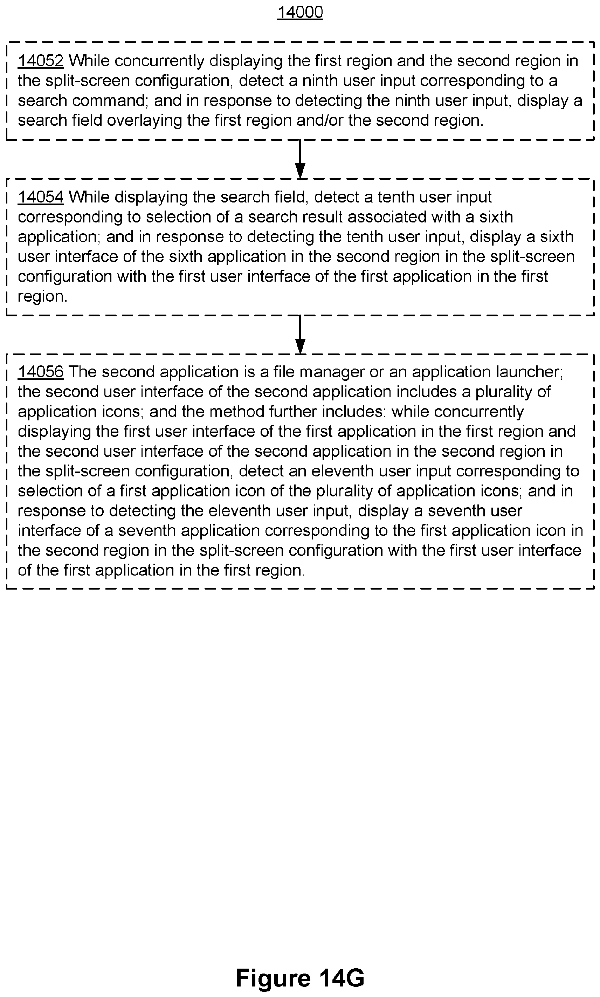

Figures 1A-4B show example devices on which the methods described herein are implemented and performed. Figures 5A-8AI are schematics of a display used to illustrate example user interfaces for initiating and interacting with multiple display devices concurrently in a shared input mode or a companion-display mode (e.g., an extended display mode or a mirroring display mode), and additional descriptions for these user interface figures are also provided with reference to the methods 9000, 10000, 11000, and 12000 in Figures 9A-12F. Figures 13A-13AO are schematics of display devices used to illustrate example user interfaces for concurrently displaying and interacting with multiple applications, and additional descriptions for these user interface figures are also provided with reference to the method 14000 in Figures 14A-14G.

### EXAMPLE DEVICES AND SYSTEMS

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

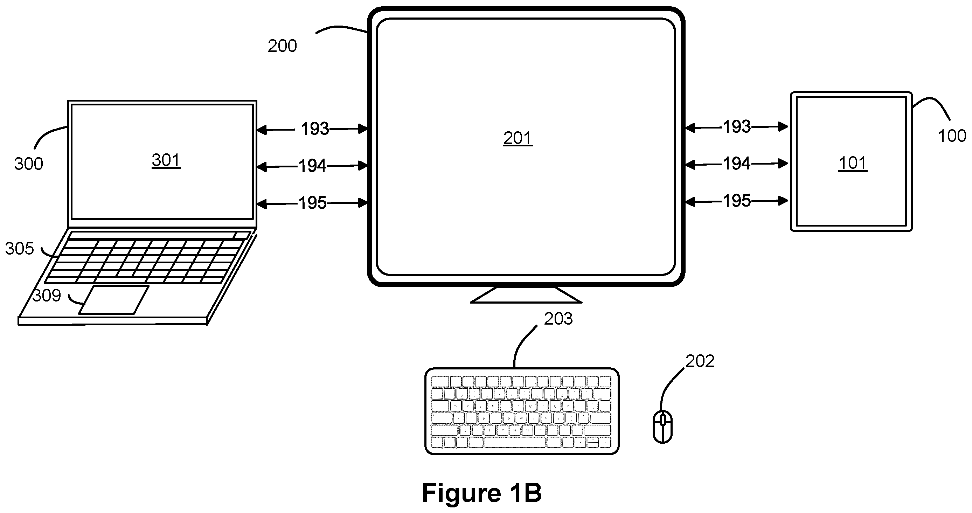

Figure 1A shows an example system in which a first display device (e.g., the illustrated laptop display device 300) operates in connection with a second display device (e.g., the illustrated tablet display device or a desktop computer display device 100). Figure 1B shows an example system in which a first display device (e.g., the illustrated desktop display device 300) operates in connection with a second display device (e.g., the illustrated tablet display device 100) and a third display device (e.g., the illustrated laptop device 200). The devices 100, 200, and 300 are all display devices that include respective display devices 101, 201, and 301 (also referred to as display generation components). In some embodiments, the displays are touch-sensitive displays (e.g., display 101 of tablet device 100 is a touch-sensitive display or a touch-screen). The first display device includes or is in communication with one or more input devices (e.g., the illustrated mouse input device 202, keyboard input devices 203 and 305, and touchpad 309 in Figure 1B). In some embodiments, input devices are implemented on a device (e.g., touchpad 309 and keyboard 305 are part of laptop device 300). In some embodiments, input devices are in wireless or wired communication with a device (e.g., mouse 202 and keyboard 203 are in wireless communication with desktop device 200 in Figure 1B). In some embodiments, the first display device is in communication with the second and/or third display device in a shared input device mode. In the shared input device mode, the first display device shares the one or more input devices (e.g., the illustrated mouse input device and/or keyboard input device) with the second display device and/or the third display device so that the one or more input devices can be used to operate the second display device or the third display device. In some embodiments, the first electronic detects inputs via the one or more input devices, that it is in wireless or wired communication with, and provides information regarding the detected inputs to the second computer system and/or the third computer system. In some embodiments, the first computer system and the second and/or third computer system are all in communication with the same one or more input devices and detect inputs via the one or more input devices. For example, the detected inputs are processed by the computer system that is currently active (e.g., the input is directed to a keyboard, mouse, or touchpad of the currently active computer system). In some embodiments, a computer system is currently active if it is displaying the cursor (e.g., in a shared input mode, the different computers have a common cursor). Alternatively, the first display device may be in communication with the second and/or the third display device in a companion display mode. In the companion display mode, a respective display of the second display device or the third display device displays content provided by the first display device. For example, the respective display of the second display device or the third display device operates as a mirror display or an extended display for the display of the first display device. Additional details regarding the shared input mode and the companion display mode are provided below.

It is also noted that various references are made to first, second, and third display devices. In certain instances, the first, second, and third display devices can be selected from any type of display devices, i.e., electronic devices with respective displays (e.g., a mobile phone, a tablet, a laptop, a wearable, or a desktop display device). Also, references to tablet, laptop, desktop, wearable, and mobile phone display devices are illustrative examples only. The descriptions herein regarding tablet display devices also apply to other portable display devices running mobile operating systems (e.g., a smartphone such as the IPHONE from APPLE INC. of Cupertino, CA that is running the IOS operating system), and the descriptions herein regarding laptop display device also apply to other desktop-like devices running a desktop/laptop operating system.

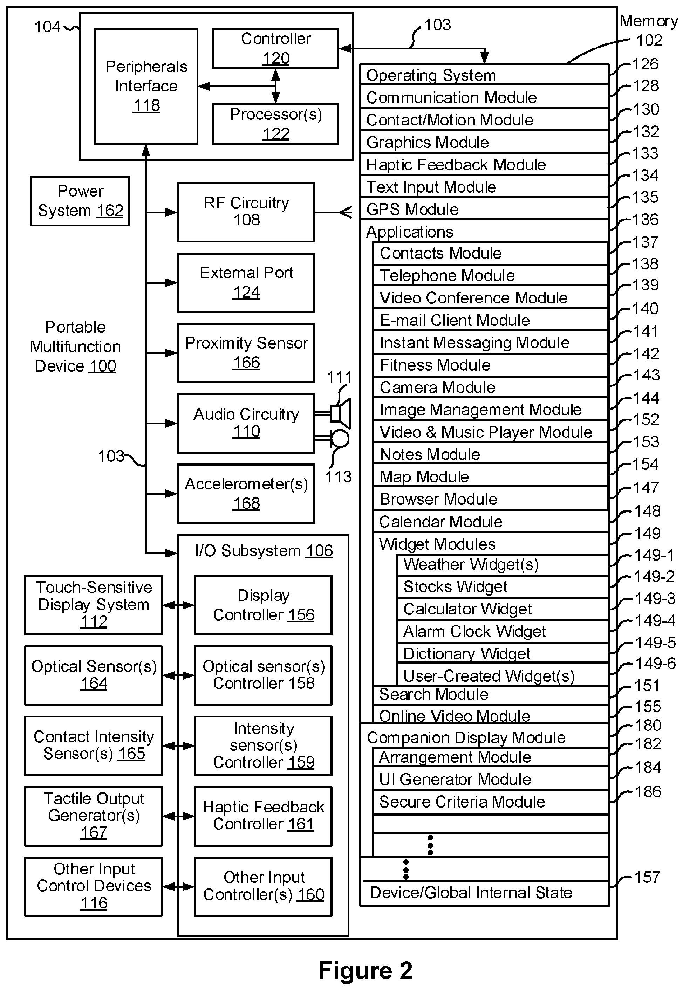

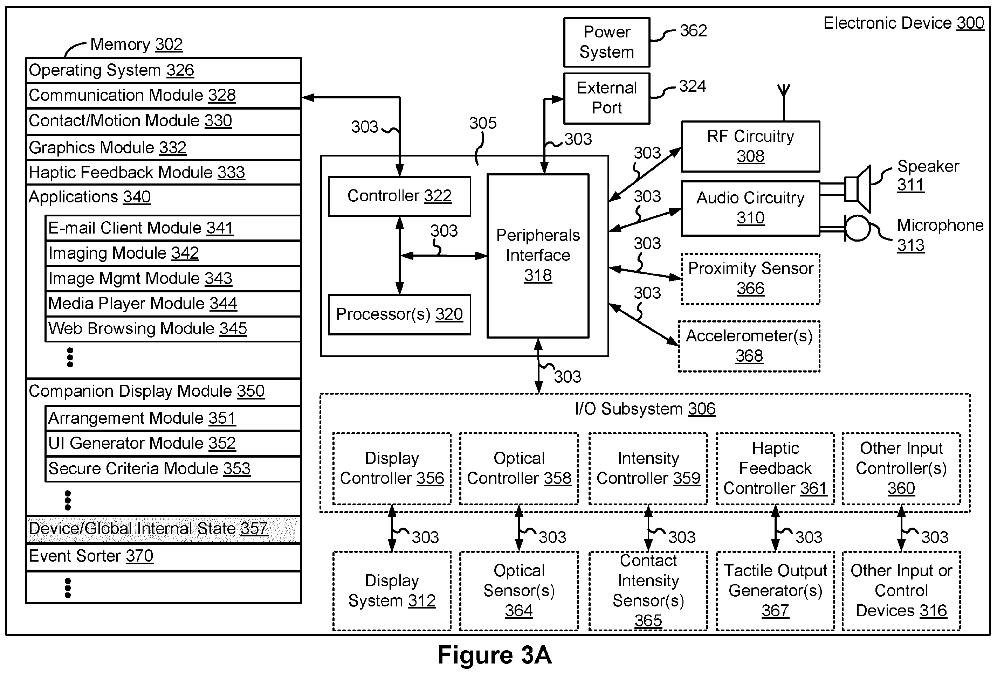

Block diagrams illustrating various components of the first and second electronic devices are shown in Figures 2 and 3A-3B.

Attention is now directed toward embodiments of portable electronic devices with touch-sensitive displays. FIG. 2 is a block diagram illustrating portable multifunction device 100 (also referred to interchangeably herein as electronic device 100 or device 100) with touch-sensitive display 112 in accordance with some embodiments. Touch-sensitive display 112 is sometimes called a "touch screen" for convenience, and is sometimes known as or called a touch-sensitive display system. Device 100 includes memory 102 (which optionally includes one or more computer-readable storage mediums), controller 120, one or more processing units (CPU's) 122, peripherals interface 118, RF circuitry 108, audio circuitry 110, speaker 111, microphone 113, input/output (I/O) subsystem 106, other input or control devices 116, and external port 124. Device 100 optionally includes one or more optical sensors 164. Device 100 optionally includes one or more intensity sensors 165 for detecting intensity of contacts on device 100 (e.g., a touch- sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or a touchpad of device 100). These components optionally communicate over one or more communication buses or signal lines 103.

It should be appreciated that device 100 is only one example of a portable multifunction device, and that device 100 optionally has more or fewer components than shown, optionally combines two or more components, or optionally has a different configuration or arrangement of the components. The various components shown in Figure 1 are implemented in hardware, software, or a combination of both hardware and software, including one or more signal processing and/or application specific integrated circuits.

Memory 102 optionally includes high-speed random access memory (e.g., DRAM, SRAM, DDR RAM or other random access solid state memory devices) and optionally also includes non-volatile memory, such as one or more magnetic disk storage devices, flash memory devices, or other non-volatile solid-state memory devices. Memory 102 optionally includes one or more storage devices remotely located from processor(s) 122. Access to memory 102 by other components of device 100, such as CPU 122 and the peripherals interface 118, is, optionally, controlled by controller 120.

Peripherals interface 118 can be used to couple input and output peripherals of the device to CPU 122 and memory 102. The one or more processors 122 run or execute various software programs and/or sets of instructions stored in memory 102 to perform various functions for device 100 and to process data.

In some embodiments, peripherals interface 118, processor(s) or CPU(s) 122, and controller 120 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The wireless communication optionally uses any of a plurality of communications standards, protocols and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, and/or Wireless Fidelity (Wi-Fi) (e.g., IEEE 802.1 l a, IEEE 802.1 lb, IEEE 802.1l g and/or IEEE 802.1 ln).

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack. The headset jack provides an interface between audio circuitry 110 and removable audio input/output peripherals, such as output-only headphones or a headset with both output (e.g., a headphone for one or both ears) and input (e.g., a microphone).

I/O subsystem 106 connects input/output peripherals on device 100, such as touch screen 112 and other input control devices 116, to peripherals interface 118. I/O subsystem 106 optionally includes display controller 156, optical sensor controller 158, intensity sensor controller 159, haptic feedback controller 161, and one or more input controllers 160 for other input or control devices. The one or more input controllers 160 receive/send electrical signals from/to other input or control devices 116. The other input control devices 116 optionally include physical buttons (e.g., push buttons, rocker buttons, etc.), dials, slider switches, joysticks, click wheels, and so forth. In some alternate embodiments, input controller(s) 160 are, optionally, coupled to any (or none) of the following: a keyboard, infrared port, USB port, and a pointer device such as a mouse. The one or more buttons optionally include an up/down button for volume control of speaker 111 and/or microphone 113. The one or more buttons optionally include a push button.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output corresponds to user-interface objects.

Touch screen 112 has a touch-sensitive surface, a sensor or a set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages or images) that are displayed on touch screen 112. In an example embodiment, a point of contact between touch screen 112 and the user corresponds to an area under a finger of the user.

Touch screen 112 optionally uses LCD (liquid crystal display) technology, LPD (light emitting polymer display) technology, or LED (light emitting diode) technology, or OLED (organic light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an example embodiment, projected mutual capacitance sensing technology is used, such as that found in the IPHONE^{®}, IPOD TOUCH^{®}, and IPAD^{®} from APPLE Inc. of Cupertino, California.

Touch screen 112 optionally has a video resolution in excess of 400 dpi. In some embodiments, touch screen 112 has a video resolution of at least 600 dpi. In other embodiments, touch screen 112 has a video resolution of at least 1000 dpi. The user optionally makes contact with touch screen 112 using any suitable object or digit, such as a stylus or a finger. In some embodiments, the user interface is designed to work primarily with finger-based contacts and gestures. In some embodiments, the device translates the finger-based input into a precise pointer/cursor position or command for performing the actions desired by the user.

In some embodiments, in addition to the touch screen, device 100 optionally includes a touchpad for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indication (e.g., a light-emitting diode (LED)), and any other components associated with the generation, management and distribution of power in portable devices.

Device 100 optionally also includes one or more optical sensors 164. Figure 1 shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen 112 on the front of the device, so that the touch-sensitive display is enabled for use as a viewfinder for still and/or video image acquisition. In some embodiments, another optical sensor is located on the front of the device so that the user's image is, optionally, obtained for videoconferencing while the user views the other video conference participants on the touch-sensitive display.

Device 100 optionally also includes one or more contact intensity sensors 165. Figure 1 shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch- sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen 112 which is located on the front of device 100.

Device 100 optionally also includes one or more proximity sensors 166. Figure 1 shows proximity sensor 166 coupled to peripherals interface 118. Alternately, proximity sensor 166 is coupled to input controller 160 in 1/0 subsystem 106. In some embodiments, the proximity sensor turns off and disables touch screen 112 when the multifunction device is placed near the user's ear (e.g., when the user is making a phone call).

Device 100 optionally also includes one or more tactile output generators 167. Figure 1 shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch- sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch-sensitive display 112 which is located on the front of device 100.

Device 100 optionally also includes one or more accelerometers 168. Figure 1 shows accelerometer 168 coupled to peripherals interface 118. Alternately, accelerometer 168 is, optionally, coupled to an input controller 160 in I/O subsystem 106. In some embodiments, information is displayed on the touch-sensitive display in a portrait view or a landscape view based on an analysis of data received from the one or more accelerometers. Device 100 optionally includes, in addition to accelerometer(s) 168, a magnetometer and a GPS (or GLONASS or other global navigation system) receiver for obtaining information concerning the location and orientation (e.g., portrait or landscape) of device 100.

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments, memory 102 stores device/global internal state 157, as shown in Figure 1. Device/global internal state 157 includes one or more of: active application state, indicating which applications, if any, are currently active; display state, indicating what applications, views or other information occupy various regions of touch-sensitive display 112; sensor state, including information obtained from the device's various sensors and input control devices 116; and location information concerning the device's location and/or attitude (i.e., orientation of the device).

Operating system 126 (e.g., Darwin, RTXC, LINUX, UNIX, OS X, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with the 30-pin connector used on some embodiments of IPOD devices from APPLE Inc. In other embodiments, the external port is a multi-pin (e.g., 8-pin) connector that is the same as, or similar to and/or compatible with the 8-pin connector used in LIGHTNING connectors from APPLE Inc.

Contact/motion module 130 optionally detects contact with touch screen 112 (in conjunction with display controller 156) and other touch sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has selected or "clicked" on an affordance). In some embodiments at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch-sensitive display can be set to any of a large range of predefined thresholds values without changing the trackpad or touch-sensitive display hardware. Additionally, in some implementations a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and, in some embodiments, subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including without limitation text, web pages, icons (such as user-interface objects including soft keys), digital images, videos, animations and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinating data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts module 137, e-mail client module 140, IM module 141, browser module 147, and any other application that needs text input).

GPS module 135 determines the location of the device and provides this information for use in various applications (e.g., to telephone 138 for use in location-based dialing, to camera 143 as picture/video metadata, and to applications that provide location-based services such as weather widgets, local yellow page widgets, and map/navigation widgets).

Applications ("apps") 136 optionally include the following modules (or sets of instructions), or a subset or superset thereof:
- contacts module 137 (sometimes called an address book or contact list);
- telephone module 138;
- video conferencing module 139;
- e-mail client module 140;
- instant messaging (IM) module 141;
- fitness module 142;
- camera module 143 for still and/or video images;
- image management module 144;
- browser module 147;
- calendar module 148;
- widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- search module 151;
- video and music player module 152, which is, optionally, made up of a video player module and a music player module;
- notes module 153;
- map module 154; and/or
- online video module 155.

Examples of other applications 136 that are, optionally, stored in memory 102 include other word processing applications, other image editing applications, drawing applications, presentation applications, website creation applications, disk authoring applications, spreadsheet applications, JAVA-enabled applications, encryption, digital rights management, voice recognition, widget creator module for making user-created widgets 149-6, and voice replication.

In conjunction with touch screen 112, display controller 156, contact module 130, graphics module 132, and text input module 134, contacts module 137 is, optionally, used to manage an address book or contact list (e.g., stored in contacts module 137 in memory 102 or memory 302), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone module 138, video conference module 139, e-mail client module 140, or IM module 141; and so forth.

In conjunction with RF circuitry 108, audio circuitry 110, speaker 111, microphone 113, touch screen 112, display controller 156, contact module 130, graphics module 132, and text input module 134, telephone module 138 is, optionally, used to enter a sequence of characters corresponding to a telephone number, access one or more telephone numbers in address book 137, modify a telephone number that has been entered, dial a respective telephone number, conduct a conversation and disconnect or hang up when the conversation is completed. As noted above, the wireless communication optionally uses any of a plurality of communications standards, protocols and technologies.

In conjunction with RF circuitry 108, audio circuitry 110, speaker 111, microphone 113, touch screen 112, display controller 156, optical sensor 164, optical sensor controller 158, contact module 130, graphics module 132, text input module 134, contact list 137, and telephone module 138, videoconferencing module 139 includes executable instructions to initiate, conduct, and terminate a video conference between a user and one or more other participants in accordance with user instructions.

In conjunction with RF circuitry 108, touch screen 112, display controller 156, contact module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages and to view received instant messages. In some embodiments, transmitted and/or received instant messages optionally include graphics, photos, audio files, video files, and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact module 130, graphics module 132, text input module 134, GPS module 135, map module 154, and video and music player module 146, fitness module 142 includes executable instructions to create workouts (e.g., with time, distance, and/or calorie burning goals), communicate with workout sensors (sports devices such as a watch or a pedometer), receive workout sensor data, calibrate sensors used to monitor a workout, select and play music for a workout, and display, store and transmit workout data.

In conjunction with touch screen 112, display controller 156, optical sensor(s) 164, optical sensor controller 158, contact module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display system controller 156, contact module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display system controller 156, contact module 130, graphics module 132, text input module 134, e-mail client module 140, and browser module 147, calendar module 148 includes executable instructions to create, display, modify, and store calendars and data associated with calendars (e.g., calendar entries, to do lists, etc.) in accordance with user instructions.

In conjunction with RF circuitry 108, touch screen 112, display system controller 156, contact module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display system controller 156, contact module 130, graphics module 132, text input module 134, and browser module 147, a widget creator module (not pictured) is, optionally, used by a user to create widgets (e.g., turning a user-specified portion of a web page into a widget).

In conjunction with touch screen 112, display system controller 156, contact module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display system controller 156, contact module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present or otherwise play back videos (e.g., on touch screen 112 or on an external, connected display via external port 124). In some embodiments, device 100 optionally includes the functionality of an MP3 player, such as an IPOD from APPLE Inc.

In conjunction with touch screen 112, display controller 156, contact module 130, graphics module 132, and text input module 134, notes module 153 includes executable instructions to create and manage notes, to do lists, and the like in accordance with user instructions.

In conjunction with RF circuitry 108, touch screen 112, display system controller 156, contact module 130, graphics module 132, text input module 134, GPS module 135, and browser module 147, map module 154 is, optionally, used to receive, display, modify, and store maps and data associated with maps (e.g., driving directions; data on stores and other points of interest at or near a particular location; and other location-based data) in accordance with user instructions.

In conjunction with touch screen 112, display system controller 156, contact module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video.

As pictured in FIG. 2, portable multifunction device 100 also includes a companion display module 180 for managing operations associated with a companion-display mode multitasking on device 100. Companion display module 180 optionally includes the following modules (or sets of instructions), or a subset or superset thereof:
- Arrangement module 182 for determining an arrangement of displays for a laptop and a tablet device next to one another in conjunction with the companion-display mode described herein;
- UI Generator Module 184 for generating user interfaces and sharing data related to those user interfaces between different devices in conjunction with companion-display and annotation modes; and
- Secure criteria module 186 for monitoring whether devices have satisfied a set of secure-connection criterion that is used to determine when a companion-display mode is available for use between different devices (e.g., a laptop and a tablet device).

In conjunction with touch screen 112, display controller 156, contact module 130, graphics module 132, and contact intensity sensor(s) 165, PIP module 186 includes executable instructions to determine reduced sizes for video content and to determine an appropriate location on touch screen 112 for displaying the reduced size video content (e.g., a location that avoids important content within an active application that is overlaid by the reduced size video content).

Each of the above identified modules and applications correspond to a set of executable instructions for performing one or more functions described above and the methods described in this application (e.g., the computer-implemented methods and other information processing methods described herein). These modules (i.e., sets of instructions) need not be implemented as separate software programs, procedures or modules, and thus various subsets of these modules are, optionally, combined or otherwise re-arranged in various embodiments. In some embodiments, memory 102 optionally stores a subset of the modules and data structures identified above. Furthermore, memory 102 optionally stores additional modules and data structures not described above.

Figure 3A is a block diagram of an electronic device 300, in accordance with some embodiments. In some embodiments, electronic device 300 is a laptop or desktop computer that is running a desktop operating system that is distinct from a mobile operating system.

Electronic device 300 typically supports a variety of applications, such as one or more of the following: a drawing application, a presentation application, a word processing application, a website creation application, a disk authoring application, a spreadsheet application, a gaming application, a video conferencing application, an e-mail application, an instant messaging application, an image management application, a digital camera application, a digital video camera application, a web browser application, and/or a media player application.

The various applications that are executed on electronic device 300 optionally use at least one common physical user-interface device, such as the touch-sensitive surface. One or more functions of the touch-sensitive surface as well as corresponding information displayed by electronic device 300 are, optionally, adjusted and/or varied from one application to the next and/or within an application. In this way, a common physical architecture (such as the touch-sensitive surface) of electronic device 300 optionally supports the variety of applications with user interfaces that are intuitive and transparent to the user.

Electronic device 300 includes memory 302 (which optionally includes one or more computer readable storage mediums), memory controller 322, one or more processing units (CPU(s)) 320, peripherals interface 318, RF circuitry 308, audio circuitry 310, speaker 311, microphone 313, input/output (I/O) subsystem 306, other input or control devices 316, and external port 324. Electronic device 300 optionally includes a display system 312, which may be a touch-sensitive display (sometimes also herein called a "touch screen" or a "touch screen display"). Electronic device 300 optionally includes one or more optical sensors 364. Electronic device 300 optionally includes one or more intensity sensors 365 for detecting intensity of contacts on a touch-sensitive surface such as touch-sensitive display or a touchpad. Electronic device 300 optionally includes one or more tactile output generators 367 for generating tactile outputs on a touch-sensitive surface such as touch-sensitive display or a touchpad. These components optionally communicate over one or more communication buses or signal lines 303.

As used in the specification, the term "intensity" of a contact on a touch-sensitive surface refers to the force or pressure (force per unit area) of a contact (e.g., a finger contact) on the touch sensitive surface, or to a substitute (proxy) for the force or pressure of a contact on the touch sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure and the estimated force or pressure is used to determine whether an intensity threshold has been exceeded (e.g., the intensity threshold is a pressure threshold measured in units of pressure).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or touch/track pad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that electronic device 300 is only an example and that electronic device 300 optionally has more or fewer components than shown, optionally combines two or more components, or optionally has a different configuration or arrangement of the components. The various components shown in Figure 3A are implemented in hardware, software, firmware, or a combination thereof, including one or more signal processing and/or application specific integrated circuits.

Memory 302 optionally includes high-speed random access memory and optionally also includes non-volatile memory, such as one or more magnetic disk storage devices, flash memory devices, or other non-volatile solid-state memory devices. Access to memory 302 by other components of electronic device 300, such as CPU(s) 320 and peripherals interface 318, is, optionally, controlled by memory controller 322. Peripherals interface 318 can be used to couple input and output peripherals to CPU(s) 320 and memory 302. The one or more processing units 320 run or execute various software programs and/or sets of instructions stored in memory 302 to perform various functions for electronic device 300 and to process data. In some embodiments, peripherals interface 318, CPU(s) 320, and memory controller 322 are, optionally, implemented on a single chip, such as chip 305. In some other embodiments, they are, optionally, implemented on separate chips.

RF (radio frequency) circuitry 308 receives and sends RF signals, also called electromagnetic signals. RF circuitry 308 converts electrical signals to/from electromagnetic signals and communicates with communications networks and other communications devices via the electromagnetic signals. RF circuitry 308 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 308 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The wireless communication optionally uses any of a plurality of communications standards, protocols and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g, and/or IEEE 802.11n), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

Audio circuitry 310, speaker 311, and microphone 313 provide an audio interface between a user and electronic device 300. Audio circuitry 310 receives audio data from peripherals interface 318, converts the audio data to an electrical signal, and transmits the electrical signal to speaker 311. Speaker 311 converts the electrical signal to human-audible sound waves. Audio circuitry 310 also receives electrical signals converted by microphone 313 from sound waves. Audio circuitry 310 converts the electrical signals to audio data and transmits the audio data to peripherals interface 318 for processing. Audio data is, optionally, retrieved from and/or transmitted to memory 302 and/or RF circuitry 308 by peripherals interface 318. In some embodiments, audio circuitry 310 also includes a headset jack. The headset jack provides an interface between audio circuitry 310 and removable audio input/output peripherals, such as output-only headphones or a headset with both output (e.g., a headphone for one or both ears) and input (e.g., a microphone).

I/O subsystem 306 couples the input/output peripherals of electronic device 300, such as display system 312 and other input or control devices 316, to peripherals interface 318. I/O subsystem 306 optionally includes display controller 356, optical sensor controller 358, intensity sensor controller 359, haptic feedback controller 361, and one or more other input controllers 360 for other input or control devices. The one or more other input controllers 360 receive/send electrical signals from/to other input or control devices 316. The other input or control devices 316 optionally include physical buttons (e.g., push buttons, rocker buttons, etc.), dials, slider switches, joysticks, click wheels, and so forth. In some alternate embodiments, other input controller(s) 360 are, optionally, coupled with any (or none) of the following: a keyboard, infrared port, USB port, and a pointer device such as a mouse. The one or more physical buttons optionally include an up/down button for volume control of speaker 311 and/or microphone 313.

Display system 312 provides an output interface (and, optionally, an input interface when it is a touch-sensitive display) between electronic device 300 and a user. Display controller 356 receives and/or sends electrical signals from/to display system 312. Display system 312 displays visual output to the user. The visual output optionally includes graphics, text, icons, video, and any combination thereof (collectively termed "graphics"). In some embodiments, some or all of the visual output corresponds to user-interface objects/elements.

In some embodiments, display system 312 is a touch-sensitive display with a touch-sensitive surface, sensor, or set of sensors that accepts input from the user based on haptic and/or tactile contact. As such, display system 312 and display controller 356 (along with any associated modules and/or sets of instructions in memory 302) detect contact (and any movement or breaking of the contact) on display system 312 and convert the detected contact into interaction with user-interface objects (e.g., one or more soft keys, icons, web pages, or images) that are displayed on display system 312. In one example embodiment, a point of contact between display system 312 and the user corresponds to an area under a finger of the user.

Display system 312 optionally uses LCD (liquid crystal display) technology, LPD (light emitting polymer display) technology, LED (light emitting diode) technology, or OLED (organic light emitting diode) technology, although other display technologies are used in other embodiments. In some embodiments, when display system 312 is a touch-sensitive display, display system 312 and display controller 356 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with display system 312. In one example embodiment, projected mutual capacitance sensing technology is used, such as that found in the iPHONE^{®}, iPODTOUCH^{®}, and iPAD^{®} from Apple Inc. of Cupertino, California.

Display system 312 optionally has a video resolution in excess of 400 dpi (e.g., 500 dpi, 800 dpi, or greater). In some embodiments, display system 312 is a touch-sensitive display with which the user optionally makes contact using a stylus, a finger, and so forth. In some embodiments, the user interface is designed to work primarily with finger-based contacts and gestures. In some embodiments, electronic device 300 translates the rough finger-based input into a precise pointer/cursor position or command for performing the actions desired by the user.

In some embodiments, in addition to display system 312, electronic device 300 optionally includes a touchpad for activating or deactivating particular functions. In some embodiments, the touchpad is a touch-sensitive area of electronic device 300 that, unlike display system 312, does not display visual output. In some embodiments, when display system 312 is a touch-sensitive display, the touchpad is, optionally, a touch-sensitive surface that is separate from display system 312, or an extension of the touch-sensitive surface formed by display system 312.

Electronic device 300 also includes power system 362 for powering the various components. Power system 362 optionally includes a power management system, one or more power sources (e.g., battery, alternating current (AC), etc.), a recharging system, a power failure detection circuit, a power converter or inverter, a power status indication (e.g., a light-emitting diode (LED)) and any other components associated with the generation, management and distribution of power in portable devices.

Electronic device 300 optionally also includes one or more optical sensors 364 coupled with optical sensor controller 358 in I/O subsystem 306. Optical sensor(s) 364 optionally includes charge-coupled device (CCD) or complementary metal-oxide semiconductor (CMOS) phototransistors. Optical sensor(s) 364 receive light from the environment, projected through one or more lens, and converts the light to data representing an image. In conjunction with imaging module 343, optical sensor(s) 364 optionally capture still images or video. In some embodiments, an optical sensor is located on the front of electronic device 300 so that the user's image is, optionally, obtained for videoconferencing while the user views the other video conference participants on display system 312.

Electronic device 300 optionally also includes one or more contact intensity sensor(s) 365 coupled with intensity sensor controller 359 in I/O subsystem 306. Contact intensity sensor(s) 365 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor(s) 365 receives contact intensity information (e.g., pressure information or a proxy for pressure information) from the environment. In some embodiments, at least one contact intensity sensor is collocated with, or proximate to, a touch-sensitive surface.

Electronic device 300 optionally also includes one or more tactile output generators 367 coupled with haptic feedback controller 361 in I/O subsystem 306. Tactile output generator(s) 367 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor(s) 365 receives tactile feedback generation instructions from haptic feedback module 333 and generates tactile outputs that are capable of being sensed by a user of electronic device 300. In some embodiments, at least one tactile output generator is collocated with, or proximate to, a touch-sensitive surface and, optionally, generates a tactile output by moving the touch-sensitive surface vertically (e.g., in/out of a surface of electronic device 300) or laterally (e.g., back and forth in the same plane as a surface of electronic device 300).

Electronic device 300 optionally also includes one or more proximity sensors 366 coupled with peripherals interface 318. Alternately, proximity sensor(s) 366 are coupled with other input controller(s) 360 in I/O subsystem 306. Electronic device 300 optionally also includes one or more accelerometers 368 coupled with peripherals interface 318. Alternately, accelerometer(s) 368 are coupled with other input controller(s) 360 in I/O subsystem 306.

In some embodiments, the software components stored in memory 302 include operating system 326, communication module 328 (or set of instructions), contact/motion module 330 (or set of instructions), graphics module 332 (or set of instructions), applications 340 (or sets of instructions), and touch-bar management module 350 (or sets of instructions). Furthermore, in some embodiments, memory 302 stores device/global internal state 357 (or sets of instructions), as shown in Figures 3A. Device/global internal state 357 includes one or more of: active application state, indicating which applications, if any, are currently active and/or in focus; display state, indicating what applications, views or other information occupy various regions of display system 312 and/or a peripheral display system; sensor state, including information obtained from various sensors and input or control devices 316 of electronic device 300; and location information concerning the location and/or attitude of electronic device 300.

Operating system 326 (e.g., DARWIN, RTXC, LINUX, UNIX, OS X, WINDOWS, or an embedded operating system such as VXWorks) includes various software components and/or drivers for controlling and managing general system tasks (e.g., memory management, storage device control, power management, etc.) and facilitates communication between various hardware and software components.

Communication module 328 facilitates communication with other devices over one or more external ports 324 and/or RF circuitry 308 and also includes various software components for sending/receiving data via RF circuitry 308 and/or external port 324. External port 324 (e.g., Universal Serial Bus (USB), FIREWIRE, etc.) is adapted for coupling directly to other devices or indirectly over a network (e.g., the Internet, wireless LAN, etc.). In some embodiments, external port 324 is a multi-pin (e.g., 30-pin) connector that is the same as, or similar to and/or compatible with the 30-pin connector used on iPod^{®} devices.

Contact/motion module 330 optionally detects contact with display system 312 when it is a touch-sensitive display (in conjunction with display controller 356) and other touch sensitive devices (e.g., a touchpad or physical click wheel). Contact/motion module 330 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 330 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 330 also detects contact on a touchpad.

In some embodiments, contact/motion module 330 uses a set of one or more intensity thresholds to determine whether an operation has been performed by a user (e.g., to determine whether a user has selected or "clicked" on an affordance). In some embodiments at least a subset of the intensity thresholds are determined in accordance with software parameters (e.g., the intensity thresholds are not determined by the activation thresholds of particular physical actuators and can be adjusted without changing the physical hardware of electronic device 300). For example, a mouse "click" threshold of a trackpad or touch screen display can be set to any of a large range of predefined thresholds values without changing the trackpad or touch screen display hardware. Additionally, in some implementations a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 330 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap contact includes detecting a finger-down event followed by detecting a finger-up (a lift off) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and in some embodiments also followed by detecting a finger-up (a lift off) event.

Graphics module 332 includes various known software components for rendering and causing display of graphics on primary display 301 or other display, including components for changing the visual impact (e.g., brightness, transparency, saturation, contrast or other visual property) of graphics that are displayed. As used herein, the term "graphics" includes any object that can be displayed to a user, including without limitation text, web pages, icons (such as user-interface objects including soft keys), digital images, videos, animations and the like. In some embodiments, graphics module 332 stores data representing graphics to be used. Each graphic is, optionally, assigned a corresponding code. Graphics module 332 receives, from applications etc., one or more codes specifying graphics to be displayed along with, if necessary, coordinate data and other graphic property data, and then generates screen image data to output to display controller 356.

Haptic feedback module 333 includes various software components for generating instructions used by tactile output generator(s) 367 to produce tactile outputs at one or more locations on electronic device 300 in response to user interactions with electronic device 300.

Applications 340 optionally include the following modules (or sets of instructions), or a subset or superset thereof:
- e-mail client module 341 (sometimes also herein called "mail app" or "e-mail app") for receiving, sending, composing, and viewing e-mails;
- imaging module 342 for capturing still and/or video images;
- image management module 343 (sometimes also herein called "photo app") for editing and viewing still and/or video images;
- media player module 344 (sometimes also herein called "media player app") for playback of audio and/or video; and
- web browsing module 345 (sometimes also herein called "web browser") for connecting to and browsing the Internet.

Examples of other applications 340 that are, optionally, stored in memory 302 include messaging and communications applications, word processing applications, other image editing applications, drawing applications, presentation applications, JAVA-enabled applications, encryption applications, digital rights management applications, voice recognition applications, and voice replication applications.

In conjunction with one or more of RF circuitry 308, display system 312, display controller 356, and contact module 330, graphics module 332, e-mail client module 341 includes executable instructions to create, send, receive, and manage e-mail in response to user instructions. In conjunction with image management module 343, e-mail client module 341 makes it very easy to create and send e-mails with still or video images taken with imaging module 342.

In conjunction with one or more of display system 312, display controller 356, optical sensor(s) 364, optical sensor controller 358, contact module 330, graphics module 332, and image management module 343, imaging module 342 includes executable instructions to capture still images or video (including a video stream) and store them into memory 302, modify characteristics of a still image or video, or delete a still image or video from memory 302.

In conjunction with one or more of display system 312, display controller 356, contact module 330, graphics module 332, and imaging module 342, image management module 343 includes executable instructions to arrange, modify (e.g., edit), or otherwise manipulate, label, delete, present (e.g., in a digital slide show or album), and store still and/or video images.

In conjunction with one or more of display system 312, display controller 356, contact module 330, graphics module 332, audio circuitry 310, speaker 311, RF circuitry 308, and web browsing module 345, media player module 344 includes executable instructions that allow the user to download and play back recorded music and other sound files stored in one or more file formats, such as MP3 or AAC files, and executable instructions to display, present or otherwise play back videos.

In conjunction with one or more of RF circuitry 308, display system 312, display controller 356, contact module 330, and graphics module 332, web browsing module 345 includes executable instructions to browse the Internet in accordance with user instructions, including searching, linking to, receiving, and displaying web pages or portions thereof, as well as attachments and other files linked to web pages.

As pictured in FIG. 3A, the device 300 can also include a companion display module 350 for managing operations associated with a companion-display mode multitasking on device 100. Companion display module 350 optionally includes the following modules (or sets of instructions), or a subset or superset thereof:
- Arrangement module 351 for determining an arrangement of displays for a laptop and a tablet device next to one another in conjunction with the companion-display mode described herein;
- UI Generator Module 352 for generating user interfaces and sharing data related to those user interfaces between different devices in conjunction with companion-display and annotation modes; and
- Secure criteria module 353 for monitoring whether devices have satisfied a set of secure-connection criterion that is used to determine when a companion-display mode is available for use between different devices (e.g., a laptop and a tablet device).

Each of the above identified modules and applications correspond to a set of executable instructions for performing one or more functions described above and the methods described in this application (e.g., the computer-implemented methods and other information processing methods described herein). These modules (i.e., sets of instructions) need not be implemented as separate software programs, procedures or modules, and thus various subsets of these modules are, optionally, combined or otherwise re-arranged in various embodiments. In some embodiments, memory 302 optionally stores a subset of the modules and data structures identified above. Furthermore, memory 302 optionally stores additional modules and data structures not described above.

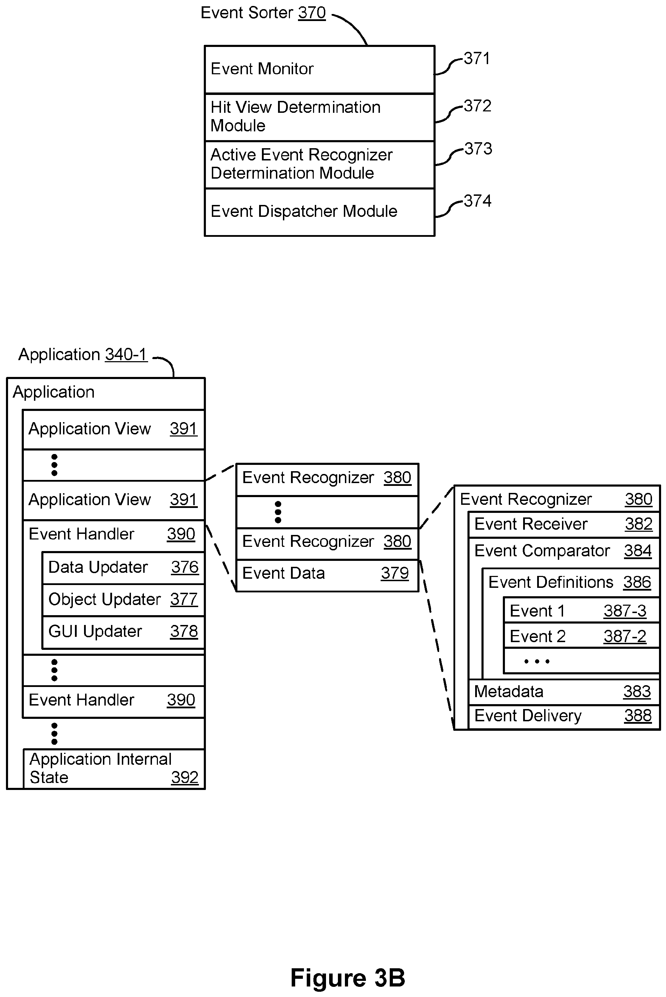

Figure 3B is a block diagram of components for event handling of Figure 3A, in accordance with some embodiments. In some embodiments, memory 302 (Figure 3A) includes event sorter 370 (e.g., in operating system 326) and an application 340-1 (e.g., any of the aforementioned applications 341, 342, 343, 344, or 345).

Event sorter 370 receives event information and determines the application 340-1 and application view 391 of application 340-1 to which to deliver the event information. Event sorter 370 includes event monitor 371 and event dispatcher module 374. In some embodiments, application 340-1 includes application internal state 392, which indicates the current application view(s) displayed on display system 312 when the application is active or executing. In some embodiments, device/global internal state 357 is used by event sorter 370 to determine which application(s) is (are) currently active or in focus, and application internal state 392 is used by event sorter 370 to determine application views 391 to which to deliver event information.

In some embodiments, application internal state 392 includes additional information, such as one or more of: resume information to be used when application 340-1 resumes execution, user interface state information that indicates information being displayed or that is ready for display by application 340-1, a state queue for enabling the user to go back to a prior state or view of application 340-1, and a redo/undo queue of previous actions taken by the user.

Event monitor 371 receives event information from peripherals interface 318. Event information includes information about a sub-event (e.g., a user touch on display system 312 when it is a touch-sensitive display, as part of a multi-touch gesture). Peripherals interface 318 transmits information it receives from I/O subsystem 306 or a sensor, such as proximity sensor(s) 366, accelerometer(s) 368, and/or microphone 313 (through audio circuitry 310). Information that peripherals interface 318 receives from I/O subsystem 306 includes information from display system 312 when it is a touch-sensitive display or another touch-sensitive surface.

In some embodiments, event monitor 371 sends requests to the peripherals interface 318 at predetermined intervals. In response, peripherals interface 318 transmits event information. In other embodiments, peripheral interface 318 transmits event information only when there is a significant event (e.g., receiving an input above a predetermined noise threshold and/or for more than a predetermined duration).

In some embodiments, event sorter 370 also includes a hit view determination module 372 and/or an active event recognizer determination module 373.

Hit view determination module 372 provides software procedures for determining where a sub-event has taken place within one or more views, when display system 312 displays more than one view, where views are made up of controls and other elements that a user can see on the display.

Another aspect of the user interface associated with an application is a set of views, sometimes herein called application views or user interface windows, in which information is displayed and touch-based gestures occur. The application views (of an application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 372 receives information related to sub-events of a touch-based gesture. When an application has multiple views organized in a hierarchy, hit view determination module 372 identifies a hit view as the lowest view in the hierarchy which should handle the sub-event. In most circumstances, the hit view is the lowest level view in which an initiating sub-event occurs (i.e., the first sub-event in the sequence of sub-events that form an event or potential event). Once the hit view is identified by the hit view determination module, the hit view typically receives all sub-events related to the same touch or input source for which it was identified as the hit view.

Active event recognizer determination module 373 determines which view or views within a view hierarchy should receive a particular sequence of sub-events. In some embodiments, active event recognizer determination module 373 determines that only the hit view should receive a particular sequence of sub-events. In other embodiments, active event recognizer determination module 373 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 374 dispatches the event information to an event recognizer (e.g., event recognizer 380). In embodiments including active event recognizer determination module 373, event dispatcher module 374 delivers the event information to an event recognizer determined by active event recognizer determination module 373. In some embodiments, event dispatcher module 374 stores in an event queue the event information, which is retrieved by a respective event receiver 382.

In some embodiments, operating system 326 includes event sorter 370. Alternatively, application 340-1 includes event sorter 370. In yet other embodiments, event sorter 370 is a stand-alone module, or a part of another module stored in memory 302, such as contact/motion module 330.

In some embodiments, application 340-1 includes a plurality of event handlers 390 and one or more application views 391, each of which includes instructions for handling touch events that occur within a respective view of the application's user interface. Each application view 391 of the application 340-1 includes one or more event recognizers 380. Typically, an application view 391 includes a plurality of event recognizers 380. In other embodiments, one or more of event recognizers 380 are part of a separate module, such as a user interface kit or a higher level object from which application 340-1 inherits methods and other properties. In some embodiments, a respective event handler 390 includes one or more of: data updater 376, object updater 377, GUI updater 378, and/or event data 379 received from event sorter 370. Event handler 390 optionally utilizes or calls data updater 376, object updater 377 or GUI updater 378 to update the application internal state 392. Alternatively, one or more of the application views 391 includes one or more respective event handlers 390. Also, in some embodiments, one or more of data updater 376, object updater 377, and GUI updater 378 are included in an application view 391.

A respective event recognizer 380 receives event information (e.g., event data 379) from event sorter 370, and identifies an event from the event information. Event recognizer 380 includes event receiver 382 and event comparator 384. In some embodiments, event recognizer 380 also includes at least a subset of: metadata 383, and event delivery instructions 388 (which optionally include sub-event delivery instructions).

Event receiver 382 receives event information from event sorter 370. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 384 compares the event information to predefined event or sub-event definitions and, based on the comparison, determines an event or sub-event, or determines or updates the state of an event or sub-event. In some embodiments, event comparator 384 includes event definitions 386. Event definitions 386 contain definitions of events (e.g., predefined sequences of sub-events), for example, event 1 (387-1), event 2 (387-2), and others. In some embodiments, sub-events in an event 387 include, for example, touch begin, touch end, touch movement, touch cancellation, and multiple touching. In one example, the definition for event 1 (387-1) is a double tap on a displayed object. The double tap, for example, comprises a first touch (touch begin) on the displayed object for a predetermined phase, a first lift-off (touch end) for a predetermined phase, a second touch (touch begin) on the displayed object for a predetermined phase, and a second lift-off (touch end) for a predetermined phase. In another example, the definition for event 2 (387-2) is a dragging on a displayed object. The dragging, for example, comprises a touch (or contact) on the displayed object for a predetermined phase, a movement of the touch across display system 312 when it is a touch-sensitive display, and lift-off of the touch (touch end). In some embodiments, the event also includes information for one or more associated event handlers 390.

In some embodiments, event definition 387 includes a definition of an event for a respective user-interface object. In some embodiments, event comparator 384 performs a hit test to determine which user-interface object is associated with a sub-event. For example, in an application view in which three user-interface objects are displayed on display system 312, when a touch is detected on display system 312 when it is a touch-sensitive display, event comparator 384 performs a hit test to determine which of the three user-interface objects is associated with the touch (sub-event). If each displayed object is associated with a respective event handler 390, the event comparator uses the result of the hit test to determine which event handler 390 should be activated. For example, event comparator 384 selects an event handler associated with the sub-event and the object triggering the hit test.

In some embodiments, the definition for a respective event 387 also includes delayed actions that delay delivery of the event information until after it has been determined whether the sequence of sub-events does or does not correspond to the event recognizer's event type.

When a respective event recognizer 380 determines that the series of sub-events do not match any of the events in event definitions 386, the respective event recognizer 380 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 380 includes metadata 383 with configurable properties, flags, and/or lists that indicate how the event delivery system should perform sub-event delivery to actively involved event recognizers. In some embodiments, metadata 383 includes configurable properties, flags, and/or lists that indicate how event recognizers interact, or are enabled to interact, with one another. In some embodiments, metadata 383 includes configurable properties, flags, and/or lists that indicate whether sub-events are delivered to varying levels in the view or programmatic hierarchy.

In some embodiments, a respective event recognizer 380 activates event handler 390 associated with an event when one or more particular sub-events of an event are recognized. In some embodiments, a respective event recognizer 380 delivers event information associated with the event to event handler 390. Activating an event handler 390 is distinct from sending (and deferred sending) sub-events to a respective hit view. In some embodiments, event recognizer 380 throws a flag associated with the recognized event, and event handler 390 associated with the flag catches the flag and performs a predefined process.

In some embodiments, event delivery instructions 388 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 376 creates and updates data used in application 340-1. For example, data updater 376 stores a video file used by media player module 344. In some embodiments, object updater 377 creates and updates objects used by application 340-1. For example, object updater 376 creates a new user-interface object or updates the position of a user-interface object. GUI updater 378 updates the GUI. For example, GUI updater 378 prepares display information and sends it to graphics module 332 for display on display system 312.

In some embodiments, event handler(s) 390 includes or has access to data updater 376, object updater 377, and GUI updater 378. In some embodiments, data updater 376, object updater 377, and GUI updater 378 are included in a single module of an application 340-1 or application view 391. In other embodiments, they are included in two or more software modules.

It shall be understood that the foregoing discussion regarding event handling of user touches on touch-sensitive displays also applies to other forms of user inputs to operate electronic device 300 with input-devices, not all of which are initiated on touch screens. For example, mouse movement and mouse button presses, optionally coordinated with single or multiple keyboard presses or holds; contact movements such as taps, drags, scrolls, etc., on touchpads; pen stylus inputs; movement of the device; oral instructions; detected eye movements; biometric inputs; and/or any combination thereof are optionally utilized as inputs corresponding to sub-events which define an event to be recognized.

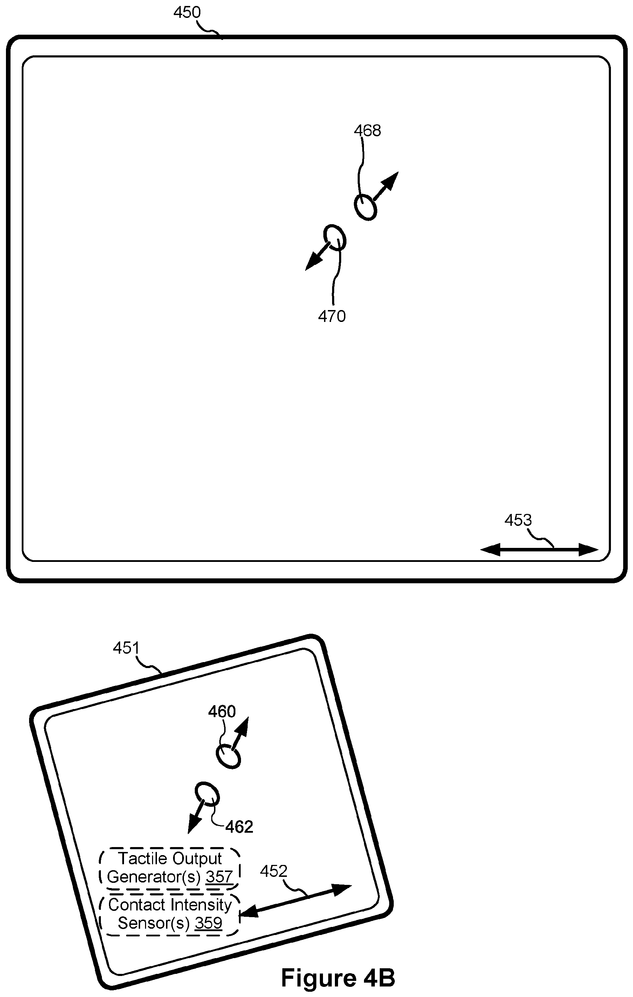

As used herein, the term "focus selector" refers to an input element that indicates a current part of a user interface with which a user is interacting. In some implementations that include a cursor or other location marker, the cursor acts as a "focus selector," so that when an input (e.g., a press input) is detected on a touch-sensitive surface (e.g., touchpad 355 in Figure 3 or touch-sensitive surface 451 in Figure 4B) while the cursor is over a particular user interface element (e.g., a button, window, slider or other user interface element), the particular user interface element is adjusted in accordance with the detected input. In some implementations that include a touch-screen display that enables direct interaction with user interface elements on the touch-screen display, a detected contact on the touch-screen acts as a "focus selector," so that when an input (e.g., a press input by the contact) is detected on the touch-screen display at a location of a particular user interface element (e.g., a button, window, slider or other user interface element), the particular user interface element is adjusted in accordance with the detected input. In some implementations, focus is moved from one region of a user interface to another region of the user interface without corresponding movement of a cursor or movement of a contact on a touch-screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch-screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "intensity" of a contact on a touch-sensitive surface refers to the force or pressure (force per unit area) of a contact (e.g., a finger contact or a stylus contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average or a sum) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be readily accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of the portable computing device 100). For example, a mouse "click" threshold of a trackpad or touch-screen display can be set to any of a large range of predefined thresholds values without changing the trackpad or touch-screen display hardware. Additionally, in some implementations a user of the device is provided with software settings for adjusting one or more of the set of intensity thresholds (e.g., by adjusting individual intensity thresholds and/or by adjusting a plurality of intensity thresholds at once with a system-level click "intensity" parameter).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds may include a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second intensity threshold results in a third operation. In some embodiments, a comparison between the characteristic intensity and one or more intensity thresholds is used to determine whether or not to perform one or more operations (e.g., whether to perform a respective option or forgo performing the respective operation) rather than being used to determine whether to perform a first operation or a second operation.

In some embodiments, a portion of a gesture is identified for purposes of determining a characteristic intensity. For example, a touch-sensitive surface may receive a continuous swipe contact transitioning from a start location and reaching an end location (e.g., a drag gesture), at which point the intensity of the contact increases. In this example, the characteristic intensity of the contact at the end location may be based on only a portion of the continuous swipe contact, and not the entire swipe contact (e.g., only the portion of the swipe contact at the end location). In some embodiments, a smoothing algorithm may be applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

In some embodiments one or more predefined intensity thresholds are used to determine whether a particular input satisfies an intensity-based criterion. For example, the one or more predefined intensity thresholds include (i) a contact detection intensity threshold IT₀, (ii) a light press intensity threshold IT_{L}, (iii) a deep press intensity threshold IT_{D} (e.g., that is at least initially higher than I_{L} ), and/or (iv) one or more other intensity thresholds (e.g., an intensity threshold I_{H} that is lower than I_{L}). In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold IT₀ below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

In some embodiments, the response of the device to inputs detected by the device depends on criteria based on the contact intensity during the input. For example, for some "light press" inputs, the intensity of a contact exceeding a first intensity threshold during the input triggers a first response. In some embodiments, the response of the device to inputs detected by the device depends on criteria that include both the contact intensity during the input and time-based criteria. For example, for some "deep press" inputs, the intensity of a contact exceeding a second intensity threshold during the input, greater than the first intensity threshold for a light press, triggers a second response only if a delay time has elapsed between meeting the first intensity threshold and meeting the second intensity threshold. This delay time is typically less than 200 ms in duration (e.g., 40, 100, or 120 ms, depending on the magnitude of the second intensity threshold, with the delay time increasing as the second intensity threshold increases). This delay time helps to avoid accidental deep press inputs. As another example, for some "deep press" inputs, there is a reduced-sensitivity time period that occurs after the time at which the first intensity threshold is met. During the reduced-sensitivity time period, the second intensity threshold is increased. This temporary increase in the second intensity threshold also helps to avoid accidental deep press inputs. For other deep press inputs, the response to detection of a deep press input does not depend on time-based criteria.

In some embodiments, one or more of the input intensity thresholds and/or the corresponding outputs vary based on one or more factors, such as user settings, contact motion, input timing, application running, rate at which the intensity is applied, number of concurrent inputs, user history, environmental factors (e.g., ambient noise), focus selector position, and the like. Example factors are described in U.S. Patent Application Serial Nos. 14/399,606 and 14/624,296, which are incorporated by reference herein in their entireties.

For ease of explanation, the description of operations performed in response to a press input associated with a press-input intensity threshold or in response to a gesture including the press input are, optionally, triggered in response to detecting: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold. As described above, in some embodiments, the triggering of these responses also depends on time-based criteria being met (e.g., a delay time has elapsed between a first intensity threshold being met and a second intensity threshold being met).

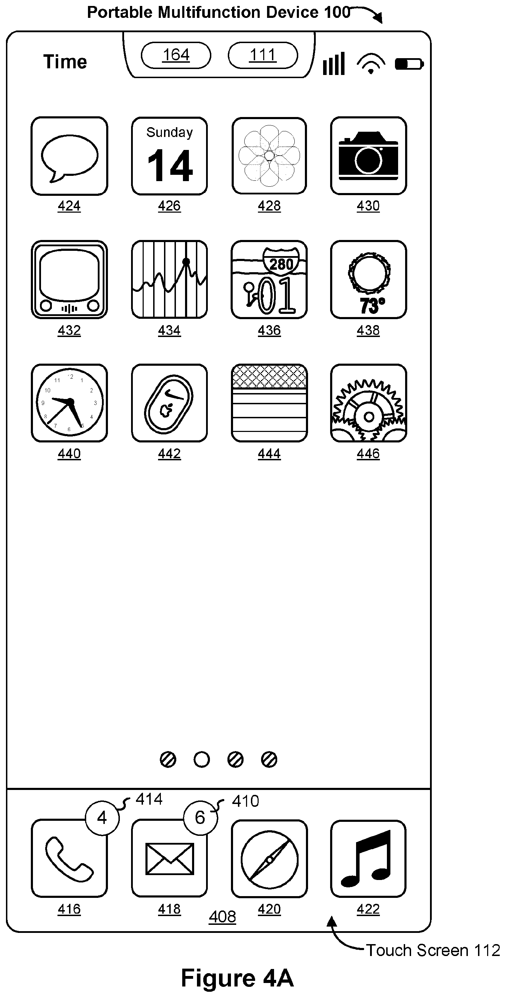

Figure 4A illustrates an example user interface 400 for a menu of applications on portable multifunction device 100 in accordance with some embodiments. Similar user interfaces are, optionally, implemented on device 300. In some embodiments, user interface 400 includes the following elements, or a subset or superset thereof:
Signal strength indication(s) for wireless communication(s), such as cellular and Wi-Fi signals;
Time;
a Bluetooth indication;
a Battery status indication;
Tray 408 with icons for frequently used applications, such as:
Icon 416 for telephone module 138, labeled "Phone," which optionally includes an indication 414 of the number of missed calls or voicemail messages;
Icon 418 for e-mail client module 140, labeled "Mail," which optionally includes an indication 410 of the number of unread e-mails;
Icon 420 for browser module 147, labeled "Browser;" and
Icon 422 for video and music player module 152, labeled "Music;" and
Icons for other applications, such as:
Icon 424 for IM module 141, labeled "Messages;"
Icon 426 for calendar module 148, labeled "Calendar;"
Icon 428 for image management module 144, labeled "Photos;"
Icon 430 for camera module 143, labeled "Camera;"
Icon 432 for online video module 155, labeled "Online Video;"
Icon 434 for stocks widget 149-2, labeled "Stocks;"
Icon 436 for map module 154, labeled "Maps;"
Icon 438 for weather widget 149-1, labeled "Weather;"
Icon 440 for alarm clock widget 149-4, labeled "Clock;"
Icon 442 for workout support module 142, labeled "Workout Support;"
Icon 444 for notes module 153, labeled "Notes;" and
Icon 446 for a settings application or module, which provides access to settings for device 100 and its various applications 136.

It should be noted that the icon labels illustrated in Figure 4A are merely examples. For example, other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

Figure 4B illustrates an example user interface on a device (e.g., device 300, Figure 3) with a touch-sensitive surface 451 (e.g., a tablet or touchpad 355, Figure 3) that is separate from the display 450. Although many of the examples that follow will be given with reference to inputs on touch screen display 112 (where the touch sensitive surface and the display are combined), in some embodiments, the device detects inputs on a touch-sensitive surface that is separate from the display, as shown in FIG. 4B. In some embodiments, the touch-sensitive surface (e.g., 451 in Figure 4B) has a primary axis (e.g., 452 in Figure 4B) that corresponds to a primary axis (e.g., 453 in Figure 4B) on the display (e.g., 450). In accordance with these embodiments, the device detects contacts (e.g., 460 and 462 in Figure 4B) with the touch-sensitive surface 451 at locations that correspond to respective locations on the display (e.g., in Figure 4B, 460 corresponds to 468 and 462 corresponds to 470). In this way, user inputs (e.g., contacts 460 and 462, and movements thereof) detected by the device on the touch-sensitive surface (e.g., 451 in Figure 4B) are used by the device to manipulate the user interface on the display (e.g., 450 in Figure 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures, etc.), it should be understood that, in some embodiments, one or more of the finger inputs are replaced with input from another input device (e.g., a mouse based input or a stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

As used herein, the term "focus selector" refers to an input element that indicates a current part of a user interface with which a user is interacting. In some implementations that include a cursor or other location marker, the cursor acts as a "focus selector," so that when an input (e.g., a press input) is detected on a touch-sensitive surface (e.g., touchpad 355 in Figure 3 or touch-sensitive surface 451 in Figure 4B) while the cursor is over a particular user interface element (e.g., a button, window, slider or other user interface element), the particular user interface element is adjusted in accordance with the detected input. In some implementations that include a touch screen display (e.g., touch-sensitive display system 112 in Figure 1A or the touch screen in Figure 4A) that enables direct interaction with user interface elements on the touch screen display, a detected contact on the touch screen acts as a "focus selector," so that when an input (e.g., a press input by the contact) is detected on the touch screen display at a location of a particular user interface element (e.g., a button, window, slider or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "intensity" of a contact on a touch-sensitive surface refers to the force or pressure (force per unit area) of a contact (e.g., a finger contact or a stylus contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average or a sum) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be readily accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds is determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined thresholds values without changing the trackpad or touch screen display hardware. Additionally, in some implementations a user of the device is provided with software settings for adjusting one or more of the set of intensity thresholds (e.g., by adjusting individual intensity thresholds and/or by adjusting a plurality of intensity thresholds at once with a system-level click "intensity" parameter).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting lift-off of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, a value produced by low-pass filtering the intensity of the contact over a predefined period or starting at a predefined time, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds may include a first intensity threshold and a second intensity threshold. In this example, a contact with a characteristic intensity that does not exceed the first intensity threshold results in a first operation, a contact with a characteristic intensity that exceeds the first intensity threshold and does not exceed the second intensity threshold results in a second operation, and a contact with a characteristic intensity that exceeds the second intensity threshold results in a third operation. In some embodiments, a comparison between the characteristic intensity and one or more intensity thresholds is used to determine whether or not to perform one or more operations (e.g., whether to perform a respective option or forgo performing the respective operation) rather than being used to determine whether to perform a first operation or a second operation.

In some embodiments, a portion of a gesture is identified for purposes of determining a characteristic intensity. For example, a touch-sensitive surface may receive a continuous swipe contact transitioning from a start location and reaching an end location (e.g., a drag gesture), at which point the intensity of the contact increases. In this example, the characteristic intensity of the contact at the end location may be based on only a portion of the continuous swipe contact, and not the entire swipe contact (e.g., only the portion of the swipe contact at the end location). In some embodiments, a smoothing algorithm may be applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The user interface figures described herein optionally include various intensity diagrams that show the current intensity of the contact on the touch-sensitive surface relative to one or more intensity thresholds (e.g., a contact detection intensity threshold IT₀, a light press intensity threshold IT_{L}, a deep press intensity threshold IT_{D} (e.g., that is at least initially higher than IT_{L} ), and/or one or more other intensity thresholds (e.g., an intensity threshold IT_{H} that is lower than IT_{L})). This intensity diagram is typically not part of the displayed user interface, but is provided to aid in the interpretation of the figures. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold IT₀ below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

In some embodiments, the response of the device to inputs detected by the device depends on criteria based on the contact intensity during the input. For example, for some "light press" inputs, the intensity of a contact exceeding a first intensity threshold during the input triggers a first response. In some embodiments, the response of the device to inputs detected by the device depends on criteria that include both the contact intensity during the input and time-based criteria. For example, for some "deep press" inputs, the intensity of a contact exceeding a second intensity threshold during the input, greater than the first intensity threshold for a light press, triggers a second response only if a delay time has elapsed between meeting the first intensity threshold and meeting the second intensity threshold. This delay time is typically less than 200 ms (milliseconds) in duration (e.g., 40, 100, or 120 ms, depending on the magnitude of the second intensity threshold, with the delay time increasing as the second intensity threshold increases). This delay time helps to avoid accidental recognition of deep press inputs. As another example, for some "deep press" inputs, there is a reduced-sensitivity time period that occurs after the time at which the first intensity threshold is met. During the reduced-sensitivity time period, the second intensity threshold is increased. This temporary increase in the second intensity threshold also helps to avoid accidental deep press inputs. For other deep press inputs, the response to detection of a deep press input does not depend on time-based criteria.

In some embodiments, one or more of the input intensity thresholds and/or the corresponding outputs vary based on one or more factors, such as user settings, contact motion, input timing, application running, rate at which the intensity is applied, number of concurrent inputs, user history, environmental factors (e.g., ambient noise), focus selector position, and the like. Example factors are described in U.S. Patent Application Serial Nos. 14/399,606 and 14/624,296, which are incorporated by reference herein in their entireties.

### USER INTERFACES AND ASSOCIATED PROCESSES

Attention is now directed towards embodiments of user interfaces ("UIs") and associated processes that may be implemented on a system that includes a laptop device 300 (Figure 1A), tablet device 100 (Figure 2A-2B) and/or a desktop device 200 (e.g., Figure 1B). The system may operate in different modes, including a shared input mode and a companion display mode. In the shared input mode, user interfaces generated by each device (e.g., laptop device 300, tablet device 100, or desktop device 200) are presented on respective displays of the devices (e.g., displays 301, 101, and 201 of laptop device 300, tablet device 100, or desktop device 200, respectively) so that the devices share the same input devices (e.g., mouse 202, and keyboard 203 or keyboard 305 and/or touchpad 309). In the companion display mode, user interfaces generated by one device (e.g., laptop device 300 in Figure 1A) are presented at another device (e.g., tablet device 100 in Figure 1A). The devices described here (e.g., a desktop, a laptop, a tablet, a mobile phone) are used as illustrative examples in the descriptions that follow, and one of skill in the art would readily understand that the techniques described here are equally applicable to any device that is running a desktop/laptop/tablet operating system, or in some instances, the operations that are described as being performed on the laptop can also be performed by a tablet device or a desktop, and vice versa. The examples that follow depict one or more embodiments.

Figure 1A illustrates that laptop device 300 has a connection 194 (e.g., a wired or wireless connection), is associated with (e.g., logged into) a same user account as the tablet device 100, and has established a trusted connection with the tablet device (e.g., a trust prompt, such as that described below has been accepted by a user of the devices). The laptop includes a display 301, which can also be a touch-sensitive display. Additionally, in some embodiments, the laptop can also include a dynamic function row 304, for displaying additional information (additional details regarding such a dynamic function row 304 are provided in U.S. Patent Application Serial No.: 15/655,707, which application is hereby incorporated by reference in its entirety). Furthermore, the laptop also includes a keyboard 305 and touchpad 309. With respect to the tablet device 100, tablet device 100 includes a touch-sensitive display 101, which can be capacitive sensing, and the device 100 is also able to receive inputs from input devices such as a stylus or a user's finger. Figure 1A also illustrates performing a selection operation with a cursor (e.g., by hovering or performing a right click) on a maximize button 196 (e.g., a button that is displayed in between two other buttons in a corner of a user interface window, and that maximize button can also be presented in a green color) of photos application window 189.

In some embodiments, when in the shared input mode, both devices 100 and 300 run their own respective operating systems while sharing the input devices (e.g., keyboard 305 and touchpad 309) implemented on device 300. In some embodiments, when in the companion-display mode, device 100 will continue to run its operating system, but will then receive information from the device 300 that allows the device 100 to display user interfaces generated by the device 300 (in some instances, the device 100 also ceases to display any user interface elements associated with its operating system when the companion-display mode is initiated). The companion-display mode includes an extended display mode and a mirroring display mode. In the extended display mode, the displays of devices 100 and 300 display a continuous view of content generated by device 300 (e.g., the display of device 100 extends the display of device 300). In the mirroring display mode, the display of device 100 displays a mirror image of display of device 300 where the content on the display is generated by device 300. In some embodiments, two or three or more devices can be running the same operating system (e.g., two tablet devices running a mobile operating system or two laptop devices running a desktop operating system). For example, in Figure 1B, device 200 is in a trusted 195 connection 194 with device 300 and device 100 and shares the same user account 193. The device 200 may in the shared input mode or in the companion-display mode with either or both of the devices 300 and 100.

Figure 1A illustrates two devices, the laptop device 300, and the tablet device 100, that are both signed into the same user account 193 (e.g., a same ICLOUD account from APPLE INC. of Cupertino, CA, on both of the displays for the two devices), and have an established connection 194 (e.g., a wired or wireless connection). When the two devices are logged into the same user account and have the established connection, the companion-display mode or the share input mode may not yet be available until the devices have a trusted connection (e.g., 195). The laptop device 300 and the tablet device 100 are both connected to the same Wi-Fi wireless network, to show that the devices have an established connection 194. In some embodiments, the user may not need to be on the same Wi-Fi network, and other forms of connection between the two devices may be possible, such as Near Field Communication (NFC), Bluetooth, or other short-range communication protocols.

Figures 5A-8AI are schematics of the laptop's display 301, desktop's display 201, and the tablet device's touch-sensitive display 101, which are used to illustrate example user interfaces in accordance with some embodiments. The user interfaces in these figures are used to illustrate the methods and/or processes described below. One of ordinary skill in the art will appreciate that the following user interfaces are merely examples and that the user interfaces depicted in each of the figures can be invoked in any particular order. Moreover, one of ordinary skill in the art will appreciate that different layouts with additional or fewer affordances, user interface elements, or graphics can be used in various circumstances. It should also be understood that any one of the following example user interfaces can correspond to separate embodiments, and do not need to follow any particular order. The user interfaces in these figures are used to illustrate the processes described below, including the processes in Figures 9A-12F.

Figures 5A-5E illustrate a user input that moves an object (e.g., a user interface object) from a first display of a first device to a second display of a second device when the first device and the second device are in an extended display mode, in accordance with some embodiments. In Figure 5A, device 200 (e.g., the desktop device) displays a first user interface 5010 (e.g., a home screen user interface) and a menu bar (e.g., menu bar 5008) and a dock (e.g., dock 5006). As referred to herein, a menu bar includes a plurality of affordances for invoking commands, performing system level or application level tasks, and/or status indications (e.g., time, signal strength). As referred herein, a dock includes a plurality of application icons (e.g., icons for involving or launching applications). In some embodiments, at least some application icons in the dock correspond to recently viewed applications, frequently used applications, and/or applications based on a user's preference or selection. Device 200 further displays a user interface object (e.g., photo object 5004) and a cursor (e.g., cursor 5002) positioned on the object. Movements of the cursor are controlled by an input device (e.g., mouse 202 and/or keyboard 203 in communication with device 200). In Figures 5A-5E, desktop device 200 is in communication with tablet device 100 in an extended display mode. In some embodiments, desktop device 200 is in communication with tablet device 100 when desktop device 200 and tablet device 100 are both signed into the same user account 193, and have an established a trusted (e.g., 195) connection 194 (e.g., a wired or wireless connection), as described with respect to Figure 1A. In some embodiments, when desktop device 200 is in communication with tablet device 100, desktop device 200 and tablet device 100 are both connected to the same Wi-Fi wireless network or other forms of connection (e.g., Near Field Communication (NFC), Bluetooth, or other short-range communication protocols).In particular, device 200 is positioned next to device 100 so that a first edge (e.g., edge 201-1) of display 201 of device 200 is substantially parallel to, and proximate to (e.g., within a foot or two), a first edge (e.g., edge 101-1) of display 101 of device 100. In some embodiments, an edge of a display refers to a location on the device (e.g., touch-sensitive display or touch screen 112 or display system 312 described above) where the display area ends and an edge of a frame of the display device begins (or if an edgeless display, the side of the device). In the extended display mode, the displays of devices 100 and 200 display a continuous view of display content generated by device 200 (e.g., a desktop of the display of device 100 extends over to the display of device 300) as illustrated with the corresponding horizontal desktop wallpaper (e.g., a background image of user interface 5010) displayed on displays 201 and 101. In some embodiments, as shown, device 100 also displays menu bar 5008 corresponding to the menu bar displayed on device 200. It is noted that some of the aspects of the user interface features, such as the menu bar, may appear different or include a different selection of indications and/or affordances based on, e.g., the size and orientation of different displays. Edges 201-1 and 101-1 of the respective devices include portals for moving certain objects (e.g., a cursor or a user interface object) from display 201 across edge 201-1 onto display 101. For example, a portal corresponds to a first portion of a respective edge that allows moving certain objects from display 201 to display 101. Portions of the respective edge that are outside the first portion do not allow moving of certain objects. In some embodiments, a portal extends along a portion (e.g., a portion corresponding to about 25%, about 50%, or about 75 %) of a respective edge of edges 201-1 and 101-1 or along a full length of the respective edge of edges 201-1 and 101-1. For example, a portal extends along about 50 % of a width of a respective display.

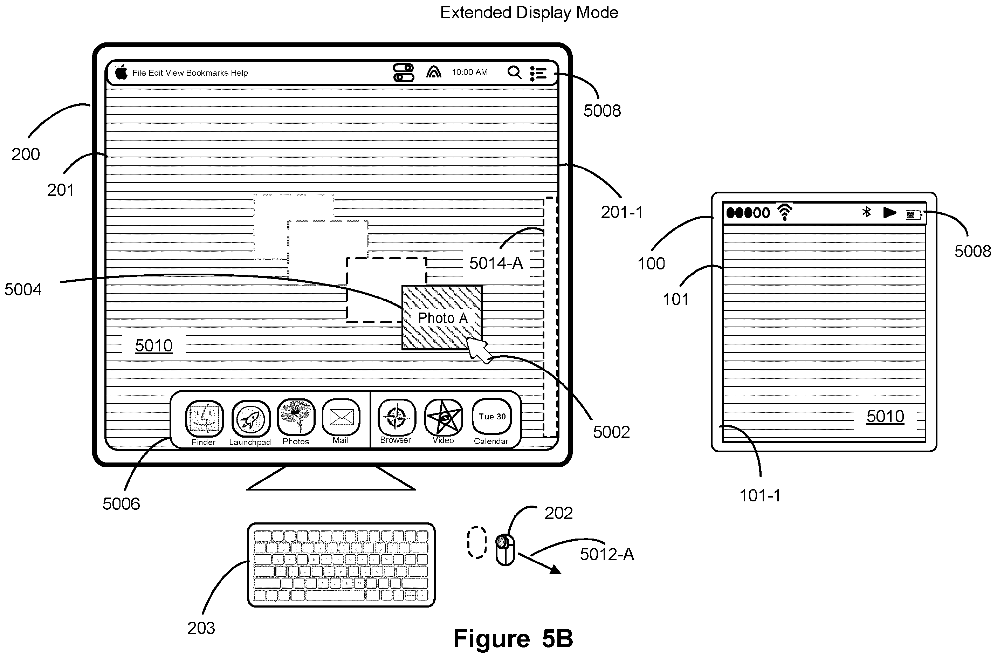

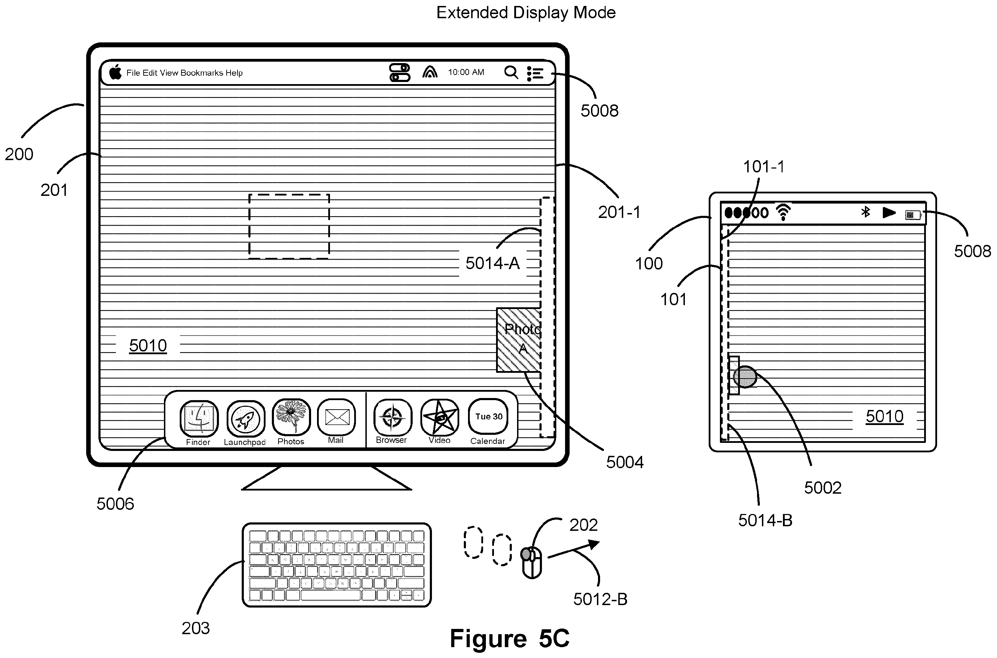

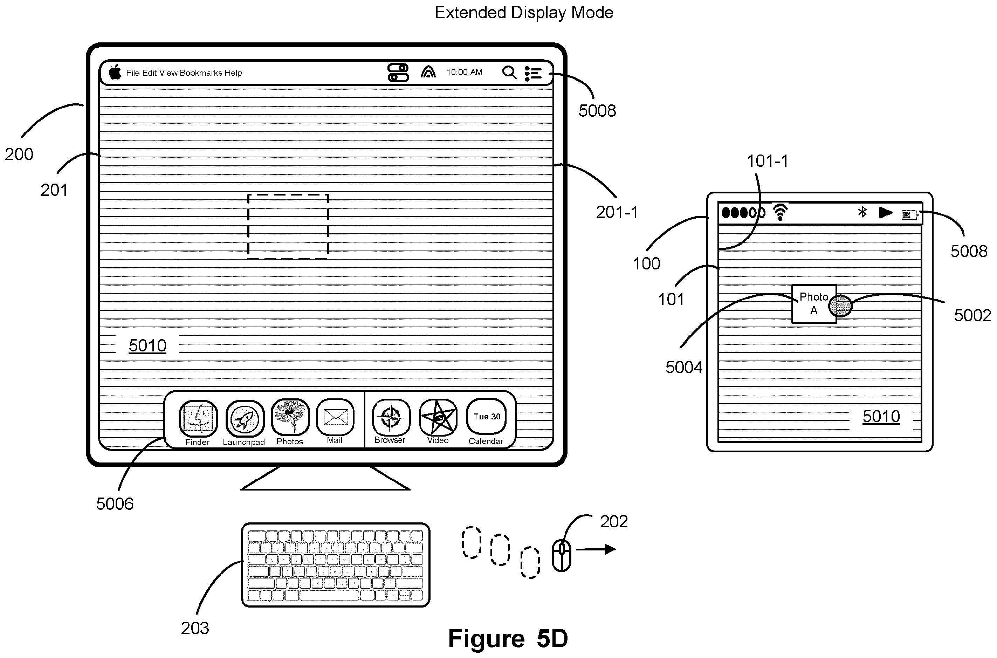

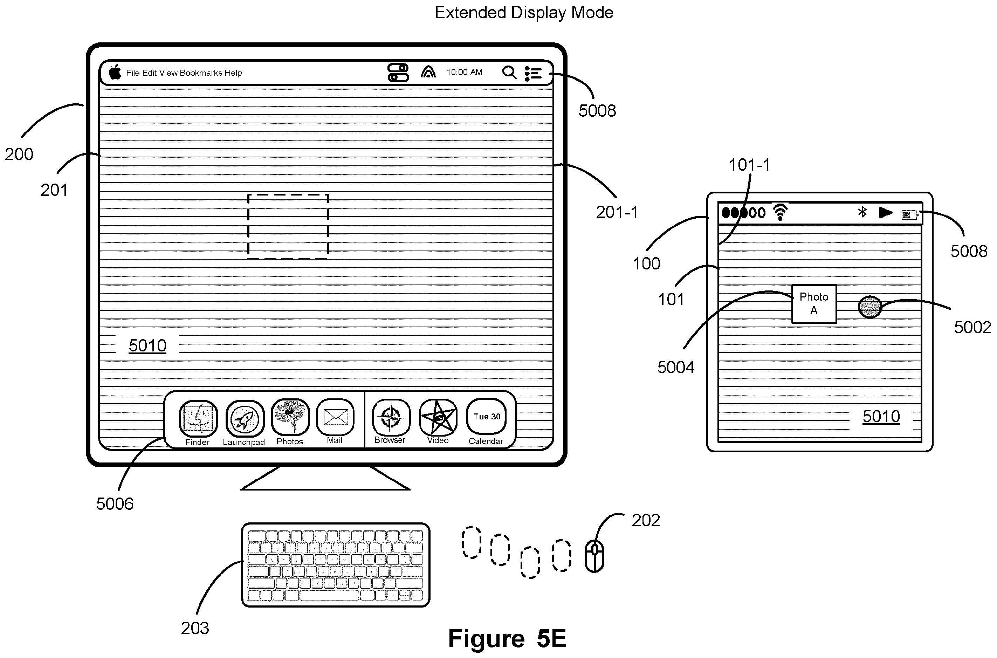

In Figure 5A, device 200 detects an input via mouse 202 (e.g., an input including a press-down 5011-A (e.g., gray dot) on mouse 202 followed by movement 5012-A mouse 202 in a direction indicated by the arrow in Figure 5A) while cursor 5002 is displayed on photo object 5004. In some embodiments, the input corresponds to a request to select and move photo object 5004. In some embodiments, the input corresponds to a request to select and drag the photo object 5004 in accordance with a movement of mouse 202 (e.g., movement 5012-A). For example, the user input includes a press-down 5011-A (e.g., as shown with a gray dot on mouse 202) and a drag input performed via mouse 202 for selecting photo object 5004 and moving photo object in accordance with the drag input. In Figure 5B, device 200 displays moving photo object 5004 in accordance with movement 5012-A of mouse 202 toward edge 201-1 of display 201. In some embodiments, photo object 5004 is moved in a direction corresponding to movement 5012-A, and with a speed and/or acceleration corresponding to movement 5012-A. For example, the movement of photo object 5004 may be increased, decreased, or even halted in accordance with movement 5012-A. As long as photo object 5004 remains selected, the object follows the movement of mouse 202. In some embodiments, in response to detecting that the photo object 5004 is being moved toward edge 201-1 which includes the portal for moving objects to display 101 of device 100, device 200 displays an indication (e.g., indication 5014-A) to indicate of the position of the portal allowing objects to be moved from display 201 to display 101. In some embodiments, the length of indication 5014-A corresponds to the size of the portal. In some embodiments, the length of indication 5014-A corresponds to the length of edge 101-1 of device 100 (e.g., the extended display). In some embodiments, concurrently with displaying indication 5014-A by display 201, display 101 displays a corresponding indication 5014-B. Indication 5014-B extends along edge 101-1 of display 101 facing edge 201-1 of display 201. In some embodiments, indication 5014-A and/or indication 5014-B is displayed in accordance with the determination that the object (or a set of one or more objects) being moved toward edge 201-1 is a representation of content that can be moved from display 201 to display 101. In some embodiments, the content that can be moved from display 101 to display 201 corresponds to text content (e.g., one or more text files or a selection of text), photo object (e.g., one or more photos), video content, audio content, presentation content. In Figure 5C, in accordance with a determination that photo object 5004 can be moved from display 201 to display 101, when devices 200 and 100 are in the extended display mode, photo object is 5004 is moved through the portals across edges 201-1 and 101-1. In Figure 5C, the user input further includes movement 5012-B for moving photo object 5004 to a desired position on display 101. In some embodiments, movements 5012-A and 5012-B are portions of a continuous dragging input. In some embodiments, an appearance (e.g., a size, shape, color, pattern) of cursor 5002 changes in accordance with the device that it is displayed on. As shown, the appearance of cursor 5002 is changed as the cursor moved from display 201 (e.g., the desktop display) to display 101 (e.g., a tablet touch screen). In some embodiments, an appearance of the moved object is also changed. For example, device 200 having a smaller display size may display an object with reduced size compared to device 100 having a larger display size. In Figure 5D, photo object 5004 is moved to a middle portion of display 201. In Figure 5D, device 200 further detects an end of the gesture for moving photo object (e.g., the press-down gesture on mouse 202 is released). In some embodiments, the release of the input corresponds to a request to drop photo object 5004 to the position of cursor 5002. As shown in Figure 5E, photo object 5004 is positioned (e.g., dropped) to the position corresponding to the position of cursor 5002 when the press-down on mouse 202 was released. As shown, photo object 5004 remains in the same position while cursor 5002 is moved away from the object. The selecting, moving, and releasing an object using an input detected on a mouse, as described with respect to Figures 5A-5F, is applicable to other user interfaces described below. It is also understood that moving a user interface object (e.g., photo object 5004) from display 201 to display 101 is exemplary. It is understood that the user interface object can be also moved from display 101 to display 101 with similar operations.

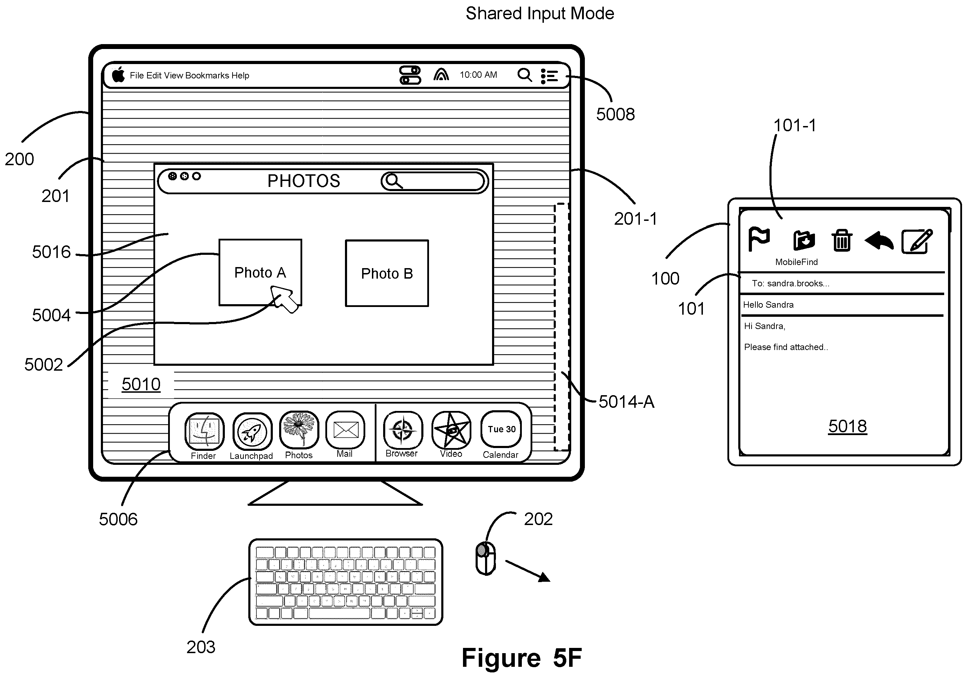

Figures 5F-5J illustrate a user input causing moving an object from the first display of the first device to the second display of the second device when the first device and the second device are in a shared input mode, in accordance with some embodiments. In Figure 5A, device 200 displays an application user interface (e.g., photos application 5016) on top of the first user interface 5010. Photos application 5016 includes photo object 5004 that was displayed on user interface 5010 in Figure 5A. Device 200 is positioned adjacent to device 100 so that a first edge (e.g., edge 201-1) of display 201 of device 200 is substantially parallel to, and proximate to, a first edge (e.g., edge 101-1) of display 101 of device 100. In Figure 5F-5J, desktop device 200 and tablet device 100 are in a shared input mode. As described above, in the shared input mode, devices 100 and 200 share one or more input devices (e.g., keyboard 203 and mouse 202). However, device 100 and device 200 operate their respective operating systems while receiving input via the same input devices (e.g., keyboard 203 and mouse 202 in communication with device 200). In some embodiments, device 200 receives the inputs and communicates the inputs to device 100 in accordance with a determination that the cursor is displayed on display 101 of device 100. Device 100 thereby receives the information regarding the inputs from device 200 and performs an operation accordingly. As shown in Figure 5F, display 101 of device 100 displays a user interface (e.g., email user interface 5018) that is distinct from the user interface (e.g., user interface 5010 and application user interface 5016) displayed on display 201 of device 200.

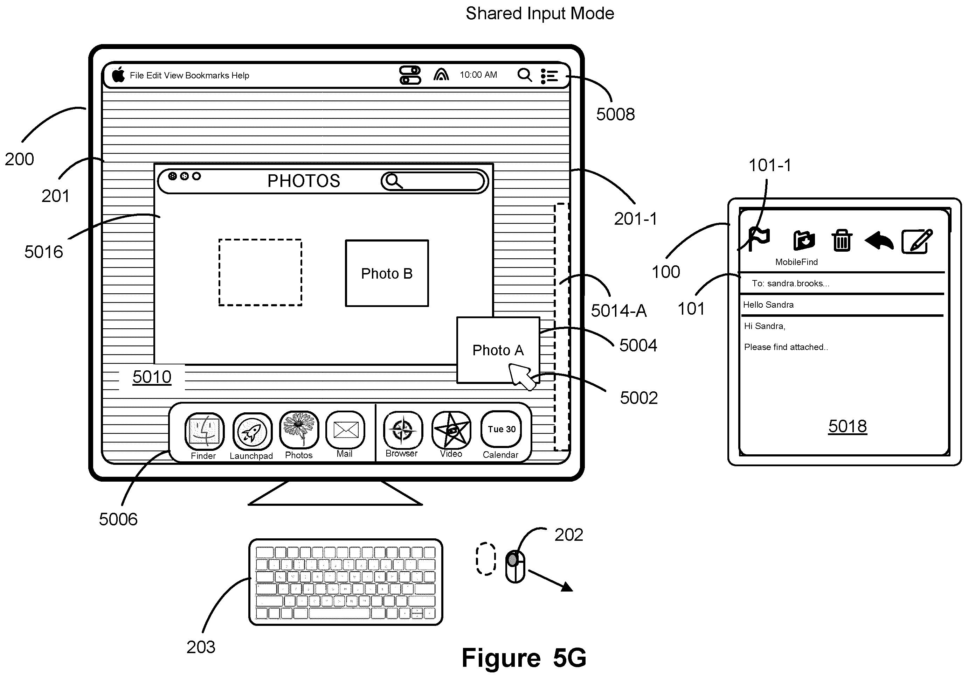

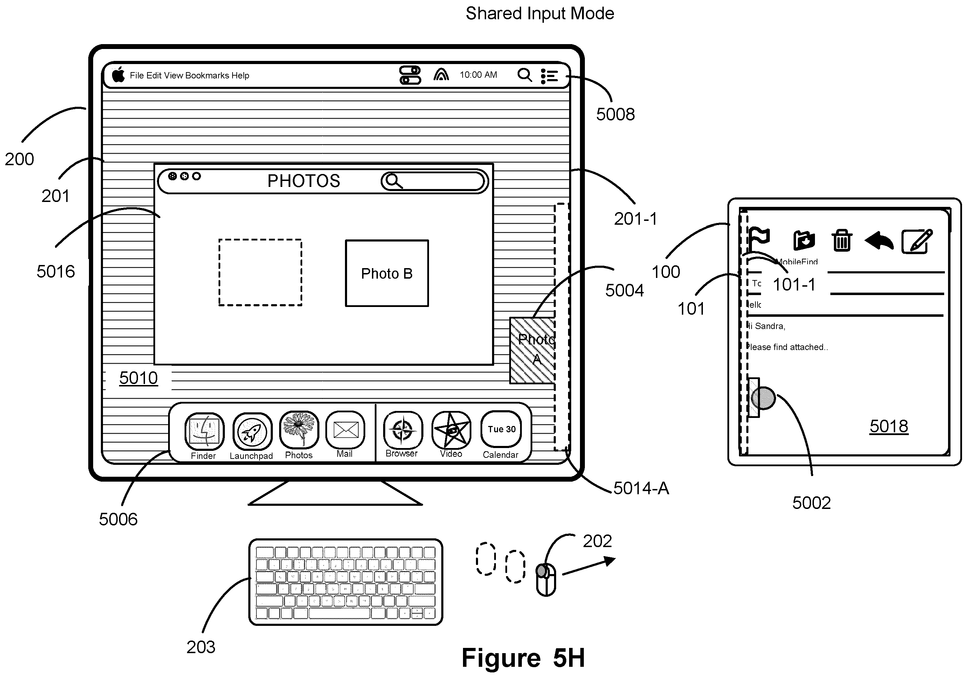

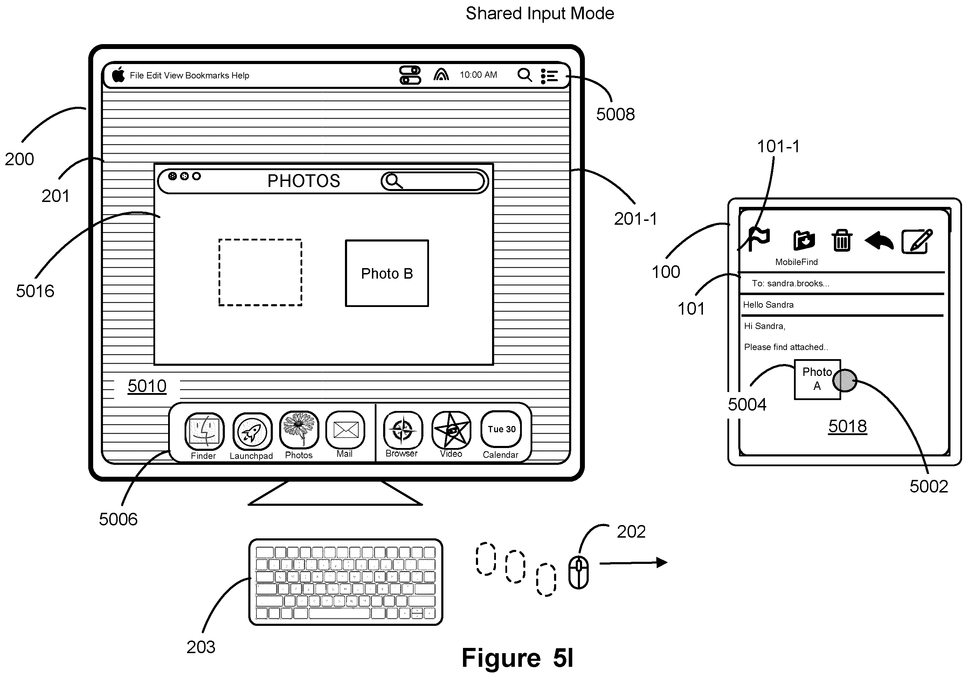

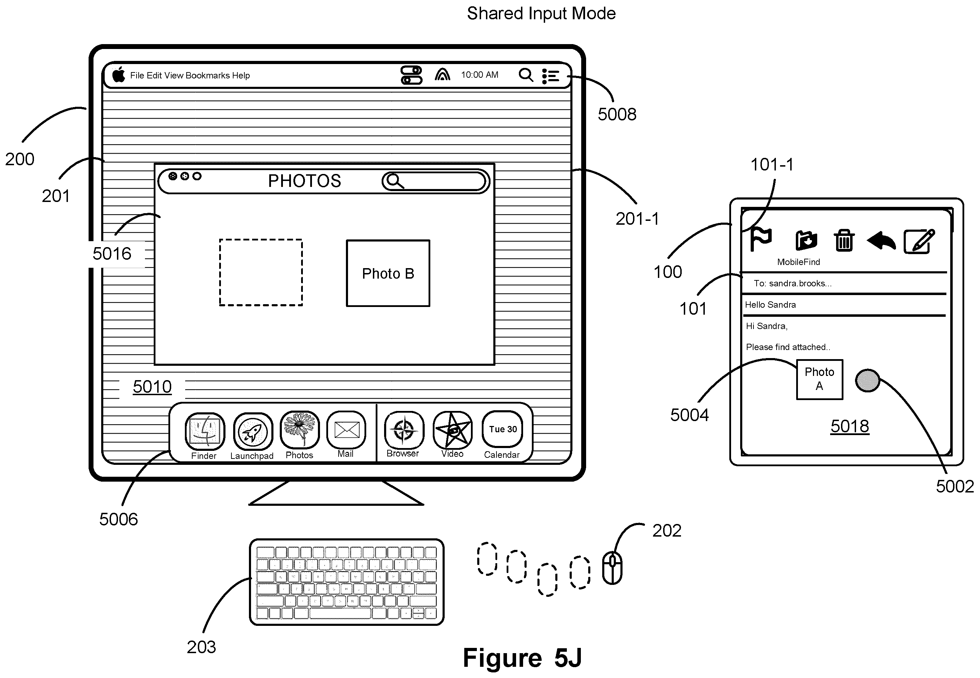

In Figure 5F, device 200 detects an input via mouse 202 corresponding to a request to select and move photo object 5004 (e.g., a press-down on mouse 202 followed by a drag movement in a direction indicated by the illustrated arrow). As described above, the input corresponds to a request to drag the photo object 5004 in accordance with a movement of mouse 202. In Figure 5G, device 200 displays moving photo object 5004 in accordance with the movement of mouse 202 toward edge 201-1 of display 201(e.g., in accordance with the direction, speed, acceleration, etc., of the movement of mouse 202). In some embodiments, in response to detecting that the photo object 5004 is being moved toward edge 201-1 which includes the portal for moving objects to display 101 of device 100, device 200 displays an indication (e.g., indication 5014-A) to indicate of the position of the portal allowing objects to be moved from display 201 to display 101. In Figure 5H, in accordance with a determination that photo object 5004 can be moved from display 201 to display 101, when devices 200 and 100 are in a shared input mode, photo object is 5004 is moved through the portals across edges 201-1 and 101-1 from display 201 to display 101. In Figure 5I, photo object 5004 is moved in the middle portion of display 201 and positioned on application user interface 5018. In Figure 5I, device 200 further detects an end of the gesture for moving photo object (e.g., the press-down gesture on mouse 202 is released). In some embodiments, the release of the input corresponds to a request to drop photo object 5004 to the position of cursor 5002. As shown in Figure 5J, photo object 5004 is positioned (e.g., dropped) to the position corresponding to the position of cursor 5002 when the press-down on mouse 202 was released. As shown, photo object 5004 remains in the same position while cursor 5002 is moved away from the object. As shown in Figures 5F-5J, in addition to moving user interface objects between system level user interfaces (e.g., user interface 5010 such as a home screen user interface in Figures 5A-5F) a user interface object can be moved from a first application window displayed on a first display of a first device (e.g., photo application user interface 5016 on display 201 of device 200) to a second application window displayed on a second display of a second device (e.g., email application 5018 on display 101 of device 100). The first application and the second application can be user interfaces of the same application or of different applications.

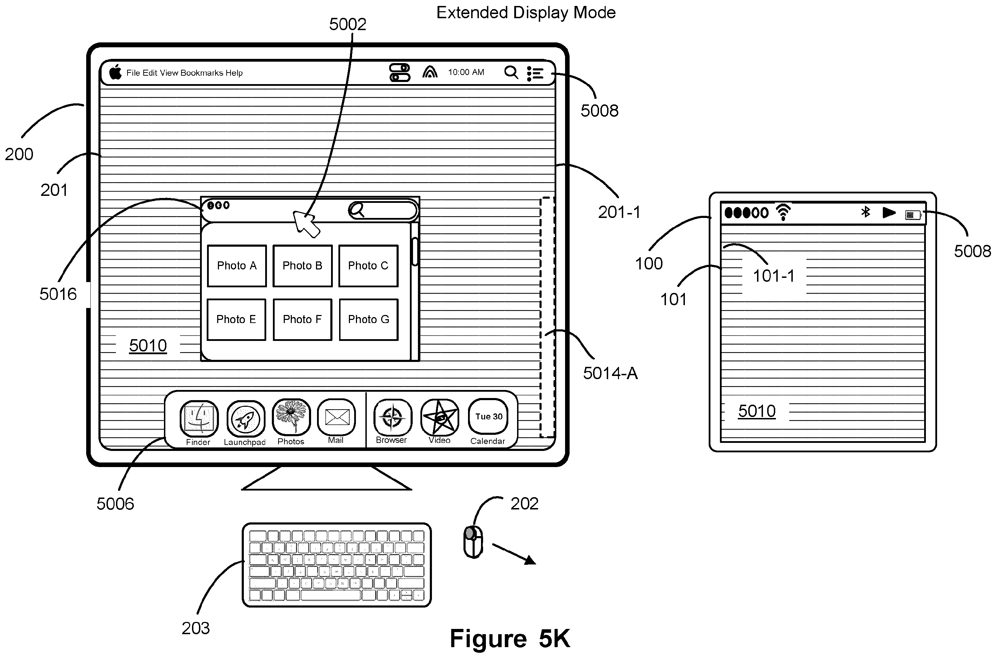

Figures 5K-5N illustrate a user input causing moving an application window from the first display of the first device to the second display of the second device when the first device and the second device are in the extended display mode, in accordance with some embodiments. In Figures 5K-5N, devices 200 and 100 are in the extended display mode, as described above with respect to Figure 5A. In Figure 5K, device 200 displays an application user interface (also referred to as an application window) (e.g., photo application 5016). In Figure 5K, device 200 detects an input (e.g., press-down followed by movement in the direction indicated with the arrow) via mouse 202. In Figure 5K, cursor 5001 is positioned in a predefined region of the application window (e.g., a region corresponding to a menu bar of the application user interface) associated with a selection of the user interface instead a user interface object. In some embodiments, the press-down input received on mouse 202 while cursor 5002 is positioned on the predefined region of application user interface 5016 corresponds to a request to select the application user interface 5016 and move the application user interface 5016 in accordance with the movement of the mouse.

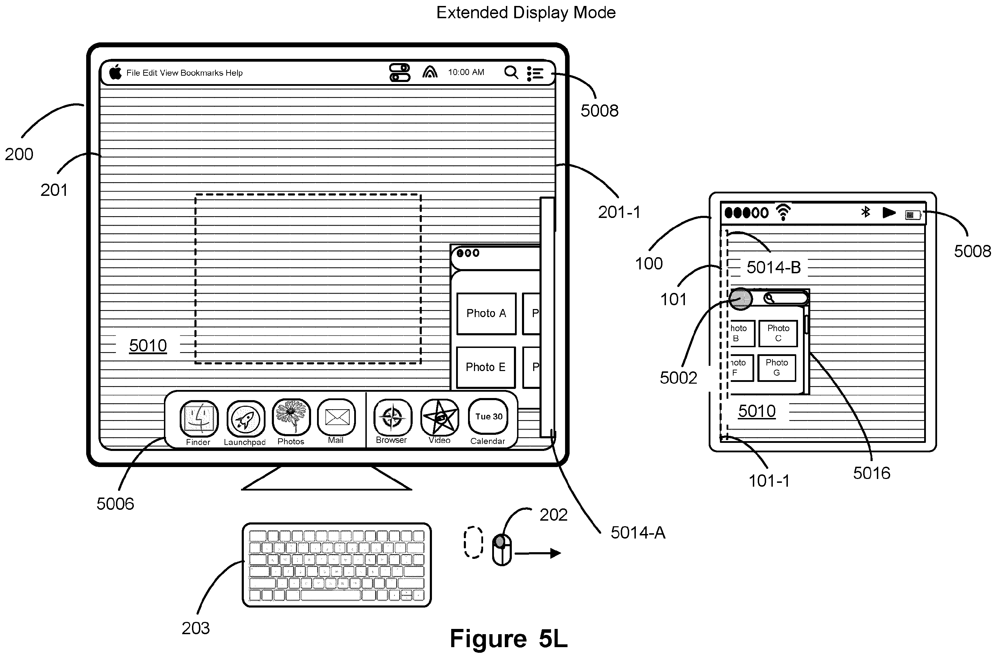

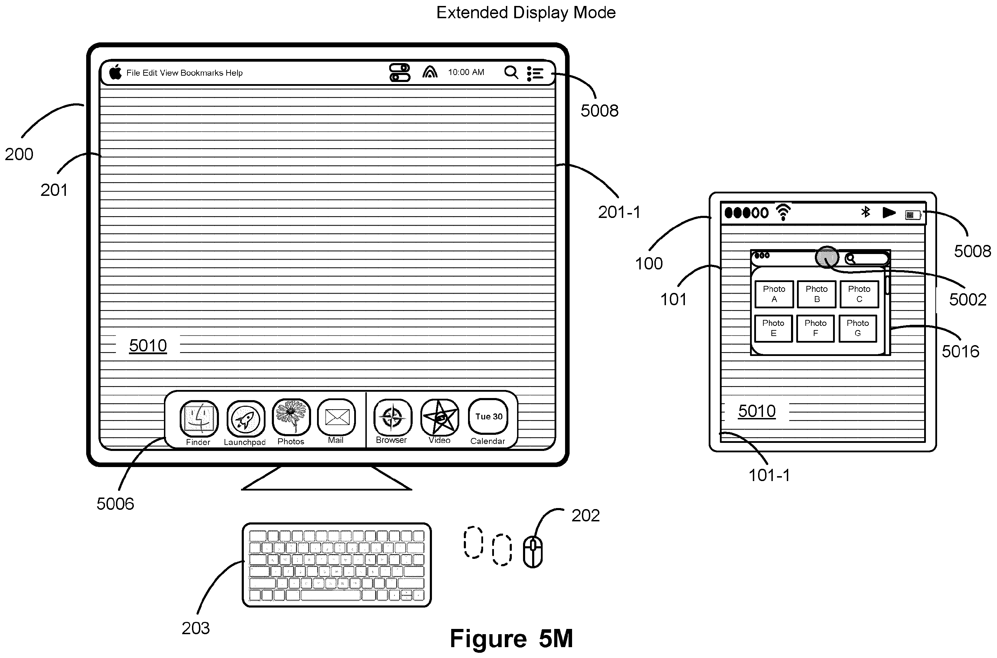

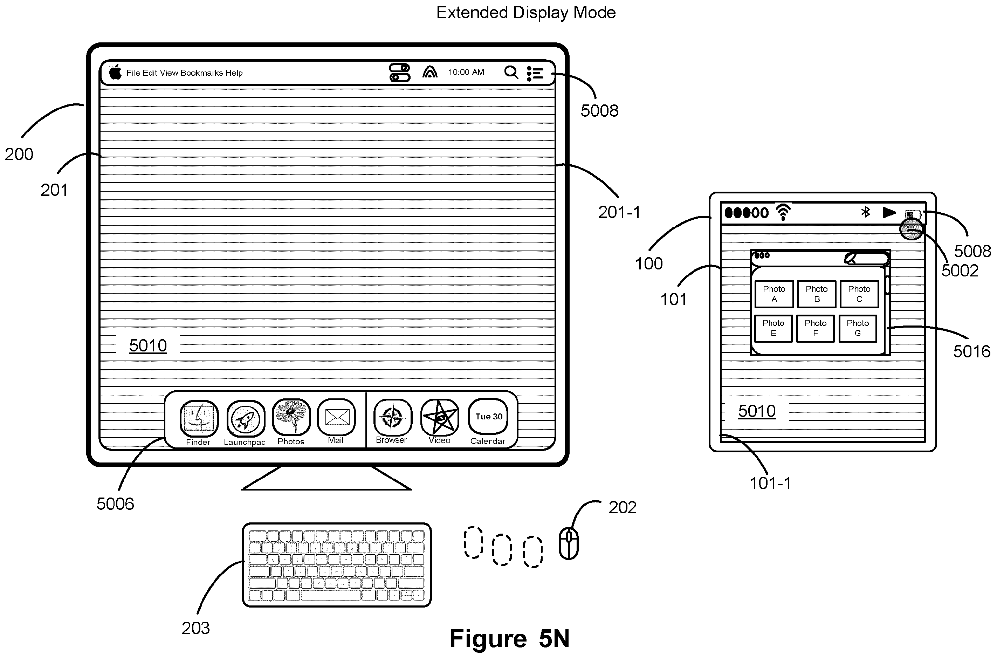

In Figure 5L, in accordance with a determination that application user interface 5016 can be moved from display 201 to display 101, when devices 200 and 100 are in the extended display mode, device 200 displays moving application user interface 5016 across edge 201-1 of display 201 to display 101 in accordance with the movement of mouse 202. As shown, in some embodiments, indication 5014-A and/or indication 5014-B are displayed in accordance with a determination that application user interface 5016 is moved toward edge 201-1. In Figure 5M, application user interface 5016 is moved to the middle portion of display 201. In Figure 5M, device 200 further detects an end of the gesture for moving photo object (e.g., the press-down gesture on mouse 202 is released). In some embodiments, the release of the input corresponds to a request to drop application user interface 5016 to the position of cursor 5002. As shown in Figure 5N, application user interface 5016 is positioned (e.g., dropped) to the position corresponding to the position of cursor 5002 when the press-down on mouse 202 was released. As shown, application user interface 5016 remains in the same position while cursor 5002 is moved away from the application user interface (e.g., via movement of mouse 202).

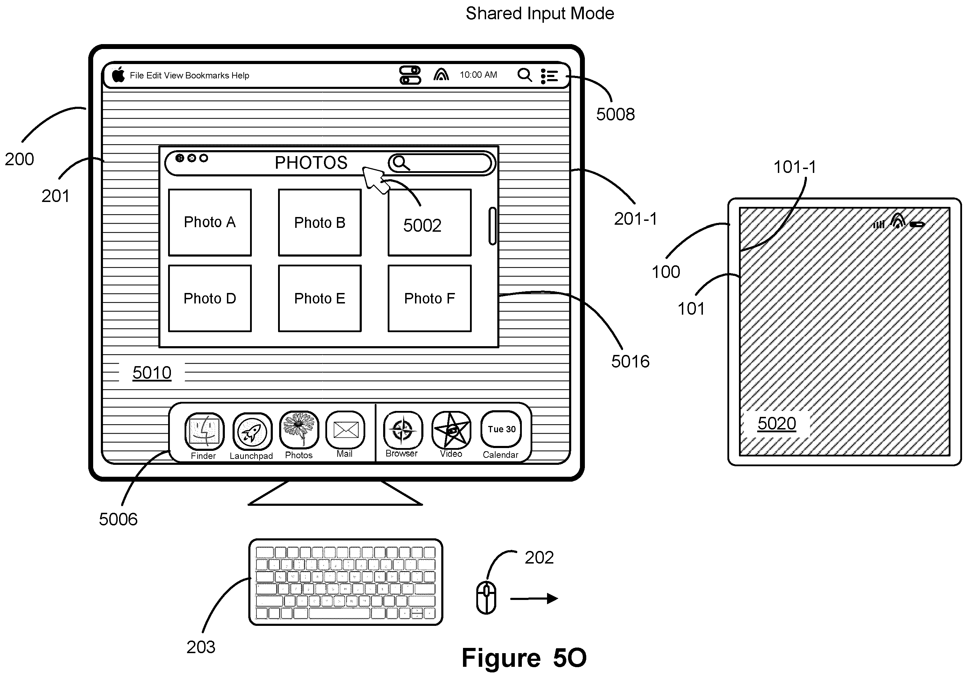

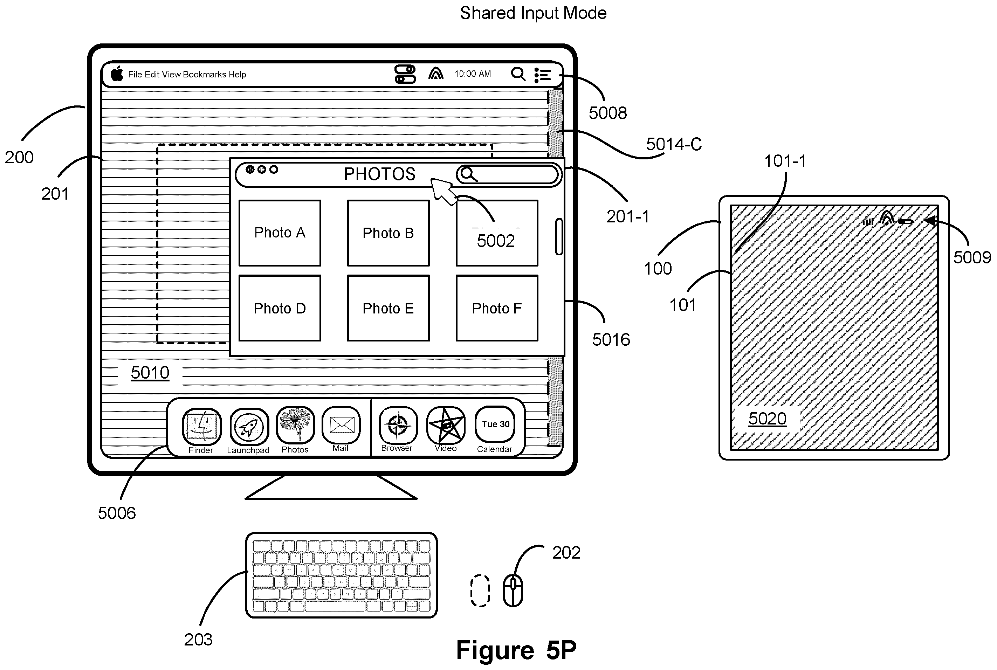

Figures 5O-5P illustrate a user input for attempting to move the application window from the first display of the first device to the second display of the second device when the first device and the second device are in the extended display mode and an indication provided by the first display that moving the application window to the second display is prevented, in accordance with some embodiments. In Figures 5O-5P, devices 200 and 100 are in the shared input mode, as described above with respect to Figure 5F. In Figure 5P, device 100 displays a system level user interface (e.g., home screen 5020) that is distinct from the system level user interface (e.g., home screen user interface 5010) displayed by device 200 (e.g., as indicated with a diagonally striped wallpaper of device 100 that is distinct from the horizontally striped wallpaper of device 200). Furthermore, device 200 displays a status bar 5009 (e.g., including an indication for signal strength, battery, and Wi-Fi signal) that is distinct from menu bar 5008 displayed by device 200. In Figure 5O, device 200 displays application user interface 5016. In Figure 5K, device 200 detects an input (e.g., a press-down followed by movement in the direction indicated with the arrow) via mouse 202 while cursor 5001 is positioned in the predefined region of the application window (e.g., a region corresponding to a menu bar of the application user interface) associated with a selection of the user interface instead a user interface object. In some embodiments, the press-down input received on mouse 202 while cursor 5002 is positioned on the predefined region of application user interface 5016 corresponds to a request to select the application user interface 5016 and move the application user interface 5016 in accordance with the movement of the mouse.

In Figure 5P the application user interface 5016 is moved to edge 201-1 of display 201 (e.g., application user interface 5016 has reached edge 201-1 of display 201 or has reached a distance that is within a threshold distance from edge 201-1). I accordance with a determination that the moved object is an application user interface that cannot be moved from display 201 to display 101 when devices 200 and 100 are in the shared display mode, device 200 halts the movement of application user interface 5016 even though the movement of the mouse continues in the projected direction. In some embodiments, in accordance with the determination that the moved object is the application user interface and cannot be moved between the displays, device 200 displays an indication (e.g., indication 5014-C) indicating that moving the object between the displays is not allowed. In some embodiments, indication corresponds to bar extending along edge 201-1 (e.g., similar to indication 5014-A described with respect to Figure 5B), but indication 5014-C has an appearance that is distinct from the appearance of indication 5014-A indicating that moving the object between the displays is allowed. For example, indication 5014-C has a color, size, or pattern that is distinct from the color, size, or pattern of indication 5014-A. In some embodiments, device 200 provides other visual indication that moving of application user interface 5016 from display 201 to display 101 is not allowed. In some embodiments, device 200 displays an animation illustrating that application user interface 5016 appears to bounce back from edge 201-1. In some embodiments, device 200 displays an animation illustrating that application user interface 5016 appears to bounce back to its original position on display 201 (e.g., the position when the select and drag user input was initiated). In some embodiments, device 200 displays an animation illustrating that edge 201-1 is resisting the movement of application user interface 5016. For example, cursor 5002 continues to move toward edge 201-1 in accordance with the movement of mouse 202 while application user interface 5016 stops moving as it has reached edge 201-1.

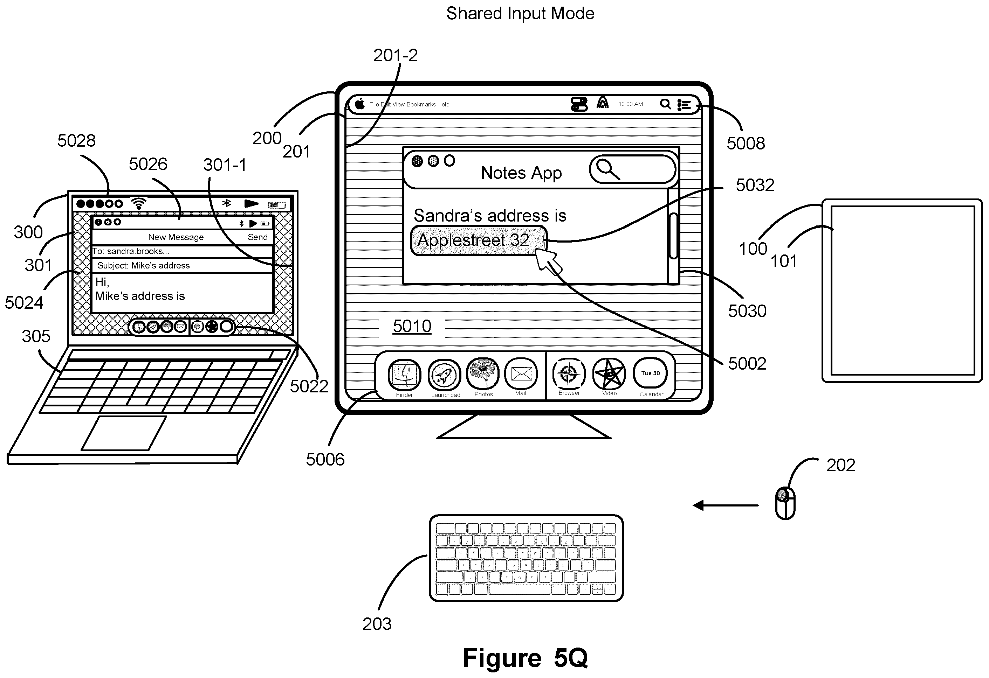

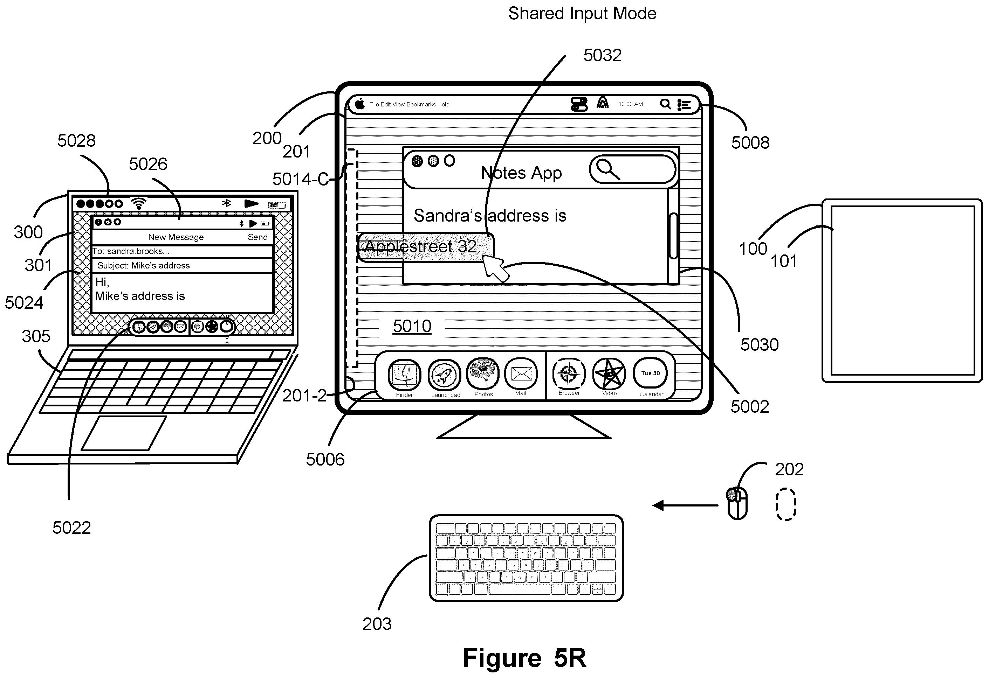

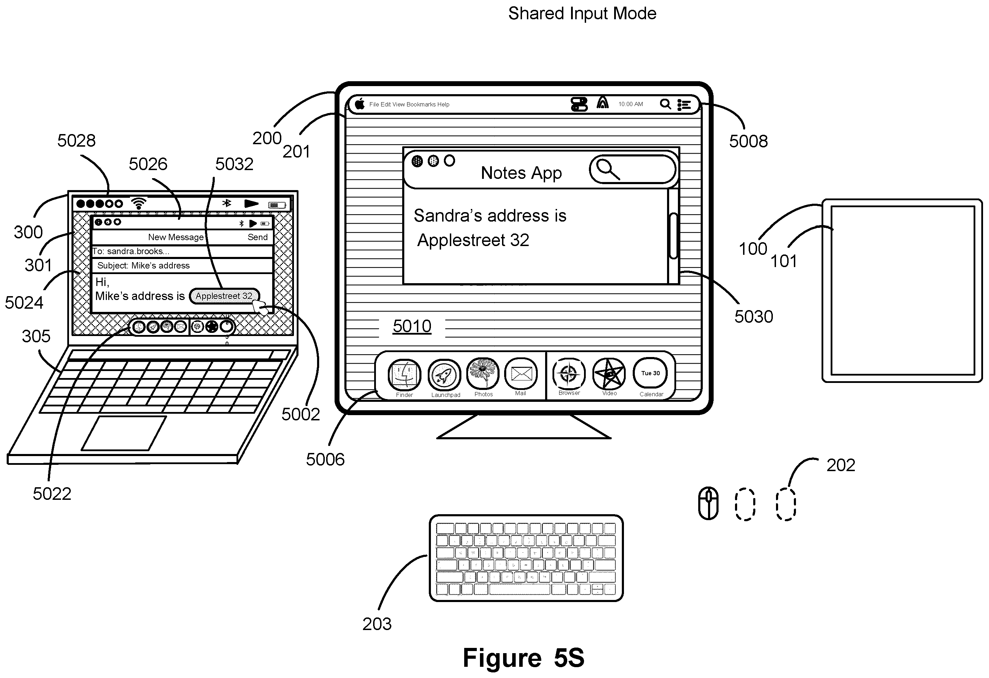

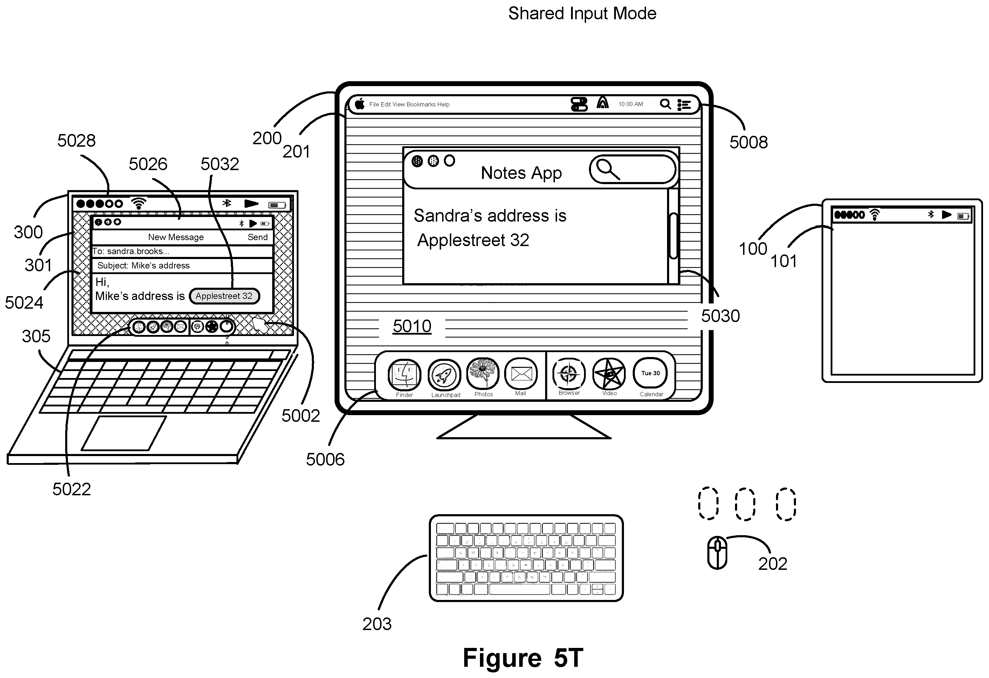

Figures 5Q-5T illustrate a user input causing moving a selected text from the first display of the first device to a third display of a third device when the first device and the third device are in the extended display mode and the first device is also in communication with the second device, in accordance with some embodiments. In Figure 5Q, desktop device 200 is in communication with tablet device 100 and laptop device 300. In particular, device 300 is positioned next to device 200 so that a first edge (e.g., edge 301-1) of display 301 of device 300 is substantially parallel to, and proximate to, a second edge (e.g., edge 201-2) of display 201 of device 200. Device 200 is in communication with device 300 in the shared input mode (e.g., device 300 is operating its own operating system while receiving commands from the input devices in communication with device 200). As shown, device 300 displays a system level user interface (e.g., home screen user interface 5024) including a menu bar (e.g., menu bar 5028). Home screen 5025 and menu bar 5028 are distinct from home screen user interface 5010 and menu bar 5008, respectively, displayed by device 200. Device 200 can be in communication with device 100 in the shared input mode or in the extended display more or the mirroring display mode. In Figure 5Q, device 200 displays an application user interface (e.g., notes application 5030) including text arranged in two lines. As shown, text line 5032 has been selected as indicated with highlighting. For example, device 200 has detected a user input corresponding to a request to select text. In some embodiments, the user input corresponding to a request to select text line 5032 includes a press-down and a hold while cursor 5002 is positioned on the text to be selected and then dragging cursor 5002 to expand the selection to the desired size. In Figure 5Q, device 200 detects a user input (e.g., a press-down followed by a movement in the direction indicated with the arrow) via mouse 202 while cursor 5001 is on the selected text line 5032. In some embodiments, move text line 5032 in accordance with the movement of the mouse. In Figure 5R, text line 5053 is moved to edge 201-2 of display 201. In some embodiments, in accordance with a determination that the movement of text line 5034 is toward edge 201-2, indication 5014-C is displayed along edge 201-2 to indicate a position of a portal allowing objects to be moved from display 201 to display 301. In some embodiments, in accordance with the determination that the movement of text line 5034 is toward edge 201-2 (and not toward edge 201-1), device 200 forgoes displaying an indication (e.g., indication 5014-A in Figure 5B) along edge 201-1. In accordance with a determination that the moved object is a text line that can be moved from display 201 to display 301 when devices 200 and 100 are in the shared input mode, device 200 displays moving text line 5034 across edge 201-2 of display 201 to display 101 in accordance with the movement of mouse 202. In Figure 5S, text line 5032 is moved to email application 5026. In Figure 5S, device 200 further detects an end of the gesture for text line 5032 (e.g., the press-down input on mouse 202 is released). In some embodiments, the release of the input corresponds to a request to drop text line 5034 to the position of cursor 5002 on email application 5026. As shown in Figure 5T, text line 5034 is positioned (e.g., dropped) to the position corresponding to the position of cursor 5002 when the press-down on mouse 202 was released. As shown, text line 5034 remains in the same position while cursor 5002 is moved away from text line 5034 (e.g., via movement of mouse 202). Based on a request to either copy or move an object, such as text line 5032, the object can be copied or moved to a new position on a different display. As shown in Figure 5T, text line 5032 is copied from notes application 5030 on display 201 to email application so that text line 5034 continues to be displayed on notes application 5030. Alternatively, text line 5034 is moved from notes application 5030 on display 201 to email application so that text line 5034 is no longer displayed on notes application 5030.

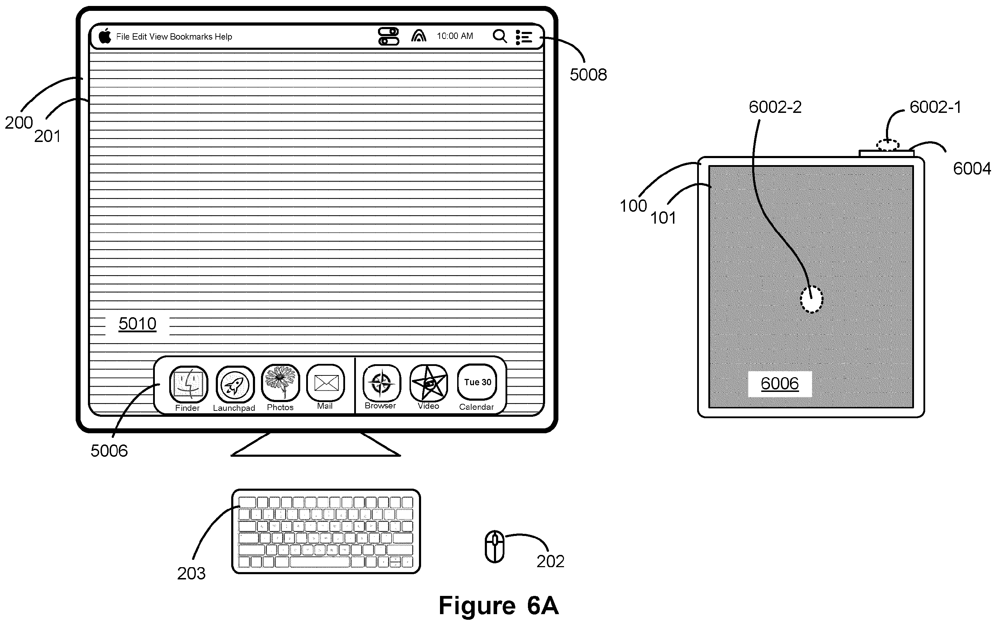

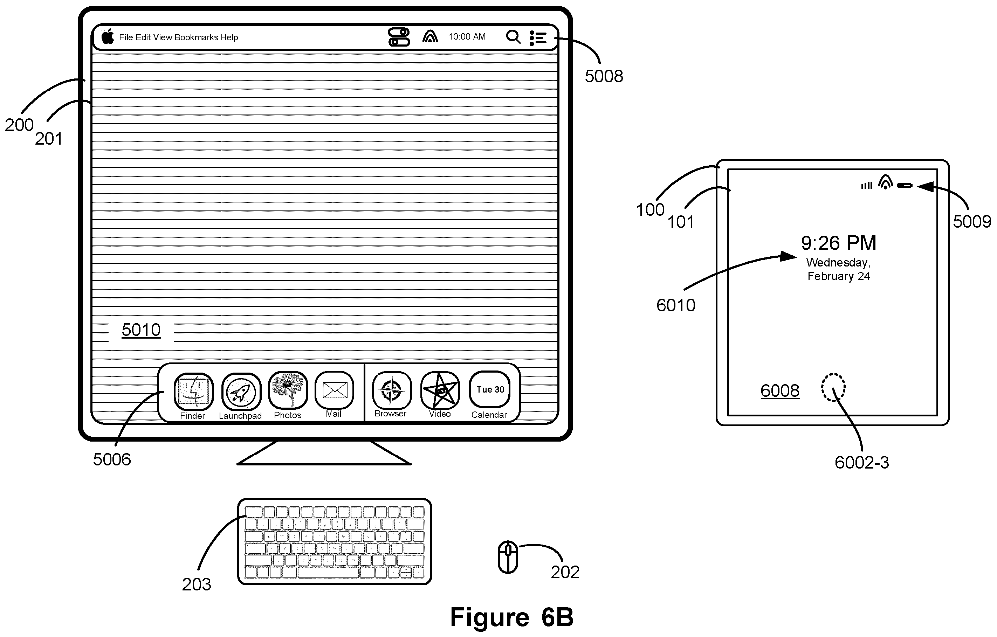

Figures 6A-6D illustrate displaying an indication on a first display of a first device when a second display of a second display is available to have content moved to the second display from the first display, in accordance with some embodiments. In Figure 6A, tablet device 100 is positioned near desktop device 200. Display device 100 is in a sleep mode 6006 (e.g., a power saving mode or a low-power mode). In some embodiments, when in the sleep mode, the device has turned touch screen display 101 off thereby reducing the power consumption of device 100. For example, the device has turned off any display by a display generation component (e.g., display controller 156 associated with display 101). In some embodiments, the device turns on the sleep mode in accordance with a determination that there has been no user interaction device 100 for a predetermined time period. In some embodiments, device 100 turns on the sleep mode in response to detecting a user input for turning on the sleep mode. In some embodiments, device 100 turns off the sleep mode (e.g., wakes display 101) in response to detecting a user input. In some embodiments, the user input is a gesture (e.g., a tap or a swipe gesture by contact 6002-2 on the touch sensitive display 101) or a push on a button (e.g., push 6002-1 on button 6004 (e.g., a start button)). In some embodiments, the device turns off the low power mode in response to detecting a change in the orientation of device 100. For example, the orientation of device 100 has changed from a horizontal orientation (e.g., lying flat) to a vertical position. When the device exits the sleep mode, display 101 displays a wake screen user interface (e.g., wake screen user interface 6008), as illustrated in Figure 6B. In some embodiments, the wake screen user interface is initially displayed in a locked state, and later transitions into an unlocked state after authentication information has been obtained (e.g., through passcode entry, or biometric information verification). In some embodiments, the wake screen user interface and the lock screen user interface have a similar appearance. In some embodiments, the wake screen user interface includes a time element (e.g., time element 6010) that displays the current time and optionally date. In some embodiments, the wake screen use interface includes status bar 5009. When device 100 is in sleep mode 6006 or displaying wake screen user interface 6008, display 101 is not available for receiving objects moved from display 201 of device 200 to display 101 of device 200 (e.g., as described with respect to Figures 5A-5T). In some embodiments, no communication between devices 200 and 100 has been established (e.g., the devices operate independently without any communication between each other or the devices do not share user account 193 and/or have trusted 195 connection 194). In some embodiments, device 100 exits the wake screen and/or lock screen in response to detecting a user input and/or in response to receiving authentication information. For example, device 100 detects a user input (e.g., a tap or a swipe gesture by contact 6002-3 on the touch sensitive display 101 shown in Figure 6B or a user input on a button).

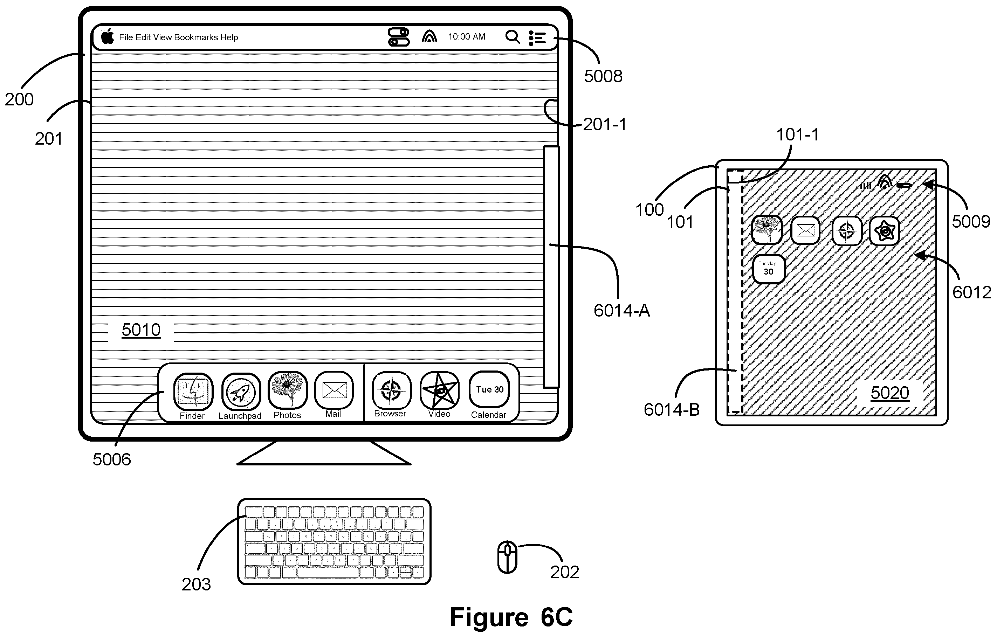

In Figure 6C, device 100 displays a system level user interface (e.g., home screen 5020) after exiting the wake screen and/or lock screen in response to detecting the user input (e.g., by contact 6002-3). Home screen 5020 includes a plurality of application icons 6012 (e.g., application launch icons). In some embodiments, application icons 6012 correspond to application icons described with respect to Figure 4A. When device 100 has initiated displaying home screen 5020, or an application user interface (e.g., email user interface 5018 in Figure 5F), after exiting the sleep mode and/or wake screen/lock screen user interface 6008, device 100 may be available for receiving one or more user interface objects to be moved (e.g., dragged) from display 201 of device to display 101 of device 100. In response to detecting an event (e.g., initiating display of home screen 5020 and/or an application user interface 5018 after exiting the sleep mode and/or wake screen or lock screen user interface 6008) device 200 determines whether display 101 satisfies a first set of criteria for being available for receiving one or more user interface objects to be moved between display 101 and display 201. In some embodiments, the first set of criteria includes that the devices share user account 193 and/or have trusted 195 connection 194 or may establish such trusted connection. In some embodiments, the first set of criteria includes that the devices have established a communication in the shared display mode, as described above. In some embodiments, the first set of criteria includes that the devices have established a communication in the extended display mode. In some embodiments, the first set of criteria includes that a distance between device 200 and device 100 is below a threshold distance (e.g., as determined based on a Bluetooth range or based on Ultra-Wideband (UWB) positioning technology). In some embodiments, the first set of criteria includes that display 101 of device 100 and display 201 of device 200 both display user interfaces that allow displaying movable user interface objects (e.g., devices 100 and 200 are not in a sleep mode, or display a wake screen user interface or a lock screen user interface). In response to the determination that the first set of criteria for being able to move user interface objects between the devices is met, device 200 displays an indication (e.g., indication 6014-A) on a first region of display 201. In some embodiments, indication 6014-A is displayed adjacent to edge 201-1 of display 201. In some embodiments, indication 6014-A has a similar appearance as indication 5014-A described with respect to Figure 5B. In some embodiments, indication 6014-A corresponds to indication 5014-A. For example, indication 6014-A indicates a position of a portal allowing objects to be moved from display 201 to display 101. In some embodiments, in response to the determination that the first set of criteria for being able to move user interface objects between the devices is met, display 101 displays indication 6014-B in a first region of display 101. In some embodiments, indication 6014-B is displayed adjacent to edge 101-1 of display 101 (e.g., edge 101-1 facing edge 201-1 of display 201). In some embodiments, indication 6014-B has a similar appearance as indication 5014-B described with respect to Figure 5B. In some embodiments, indication 6014-B corresponds to indication 5014-B. For example, indication 6014-B indicates a position of a portal allowing objects to be moved from display 201 to display 101. As shown in Figure 6C, indications 6014 are displayed in positions corresponding to respective portions of displays 201 and 101 corresponding to the a portals that allow moving user interface objects between the displays.

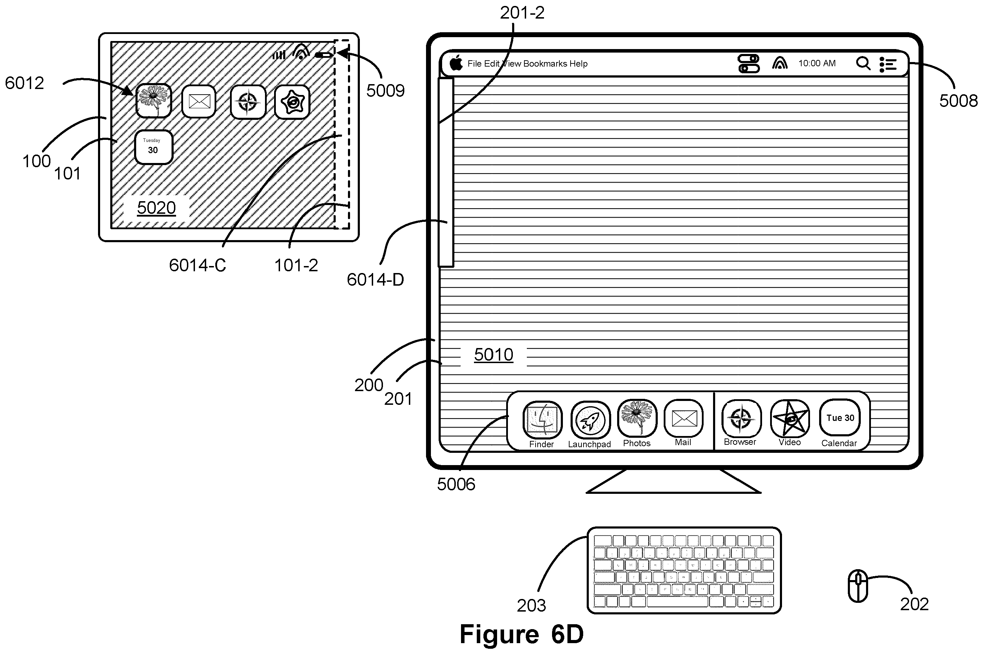

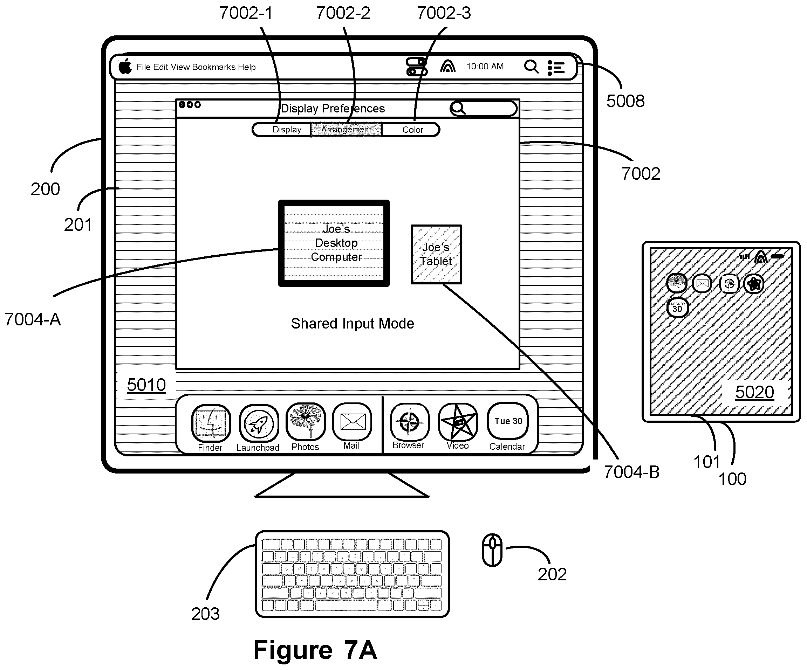

In Figure 6D, device 100 has been moved to a different side of device 200 (e.g., device 100 is facing edge 201-2 of display 201 that is opposite to edge 201-1). In some embodiments, the relative positions of devices 100 and 200 are determined based Bluetooth, Wi-Fi or UWB signals. In some embodiments, the relative positions of devices 100 and 200 are determined based on user input (e.g., while displaying display preferences user interface described with respect to Figures 7A- 7G). As shown in Figure 6D, device 200 displays indication 6014-D on a second portion of display 201 (e.g., along edge 201-2 facing device 100). In some embodiments, device 100 displays indication 6014-C on a second portion of display 101 (e.g., along edge 101-2 facing device 200). As shown in Figures 6C-6D, device 200 and optionally device 100 display the indications for indicating that user interface object can be moved between the devices in regions of their respective displays corresponding to the a portal (e.g., portions of respective edges that can be used for dragging user interface object between the displays).

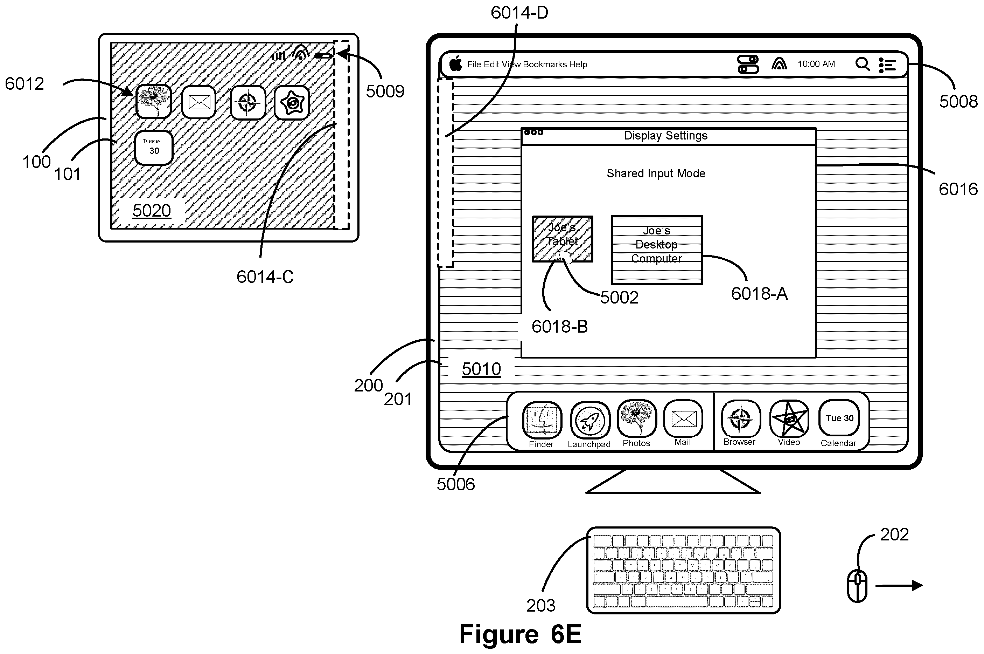

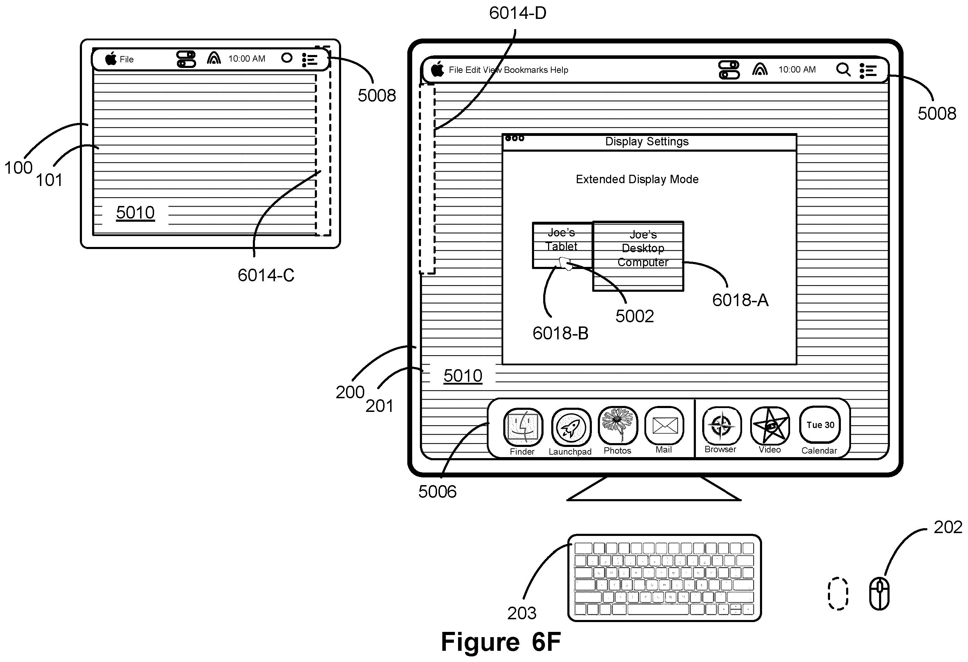

Figures 6E-6F illustrate switching a display mode of the first device and the second device in communication with each other in a display settings user interface of the first device, in accordance with some embodiments. In Figure 6E, device 200 displays display settings user interface 6016. In some embodiments, display settings user interface 6016 is displayed in response to a user input on an affordance or a keystroke combination corresponding to a request to display settings user interface 6016. Display settings user interface 6016 includes representations of device 200 (e.g., representation 6018-A) and device 100 (e.g., representation 6018-B). In some embodiments, the representations include a text identifier (e.g., "Joe's tablet and Joe's desktop computer"). In some embodiments, the representations display patterns and/or figures corresponding to wallpapers of the respective devices. In Figure 6E, device 200 and device 100 are in the shared input mode. In some embodiments, the mode is indicated by a text indication (e.g., "Shared Input Mode") on display settings user interface 6016. Also, as shown in Figure 6E, representation 6018-A has a horizontal stripe pattern corresponding to the wallpaper displayed on home screen user interface 5010 of device 200 and representation 6018-B has a diagonal stripe pattern corresponding to the wallpaper displayed on home screen user interface 5020 of device 100. In Figure 6E, representations 6018-A and 6018-B are displayed separate from each other. In some embodiments, representation 6018-B is separated from representation 6018-A by a distance that is greater than a predetermined distance. In Figure 6E, device 200 detects a user input (e.g., a press-down on mouse 202 followed up by movement of mouse 202 in the direction of the arrow) while cursor 5002 is displayed on representation 6018-B. In some embodiments, the user input in Figure 6E corresponds to a request to select representation 6018-B and move representation 6018-B in accordance with the movement of mouse 202. In Figure 6F, representation 6018-B is moved to be adjacent to (e.g., in direct contact with) representation 6018-A. In some embodiments, device 200 displays an animation of "snapping" the representations in contact with each other (e.g., the representations slide together) when the representation 6018-B has been reached the predetermined distance from representation 6018-A. In some embodiments, the user input for moving the representations to be adjacent to each other corresponds to a request to change mode from the shared input mode to the extended display mode, as shown in Figure 6F. In Figure 6F, in response to changing the mode to the extended display mode, display 101 displays home screen user interface 5010 and menu bar 5008 corresponding to the home screen user interface and menu bar displayed on display 201. Concurrently, the appearance of representation 6018-B has changed to reflect the appearance of display 101 (e.g., representation 6018-B has the horizontal stripe pattern corresponding to the wallpaper of home screen user interface 5010).

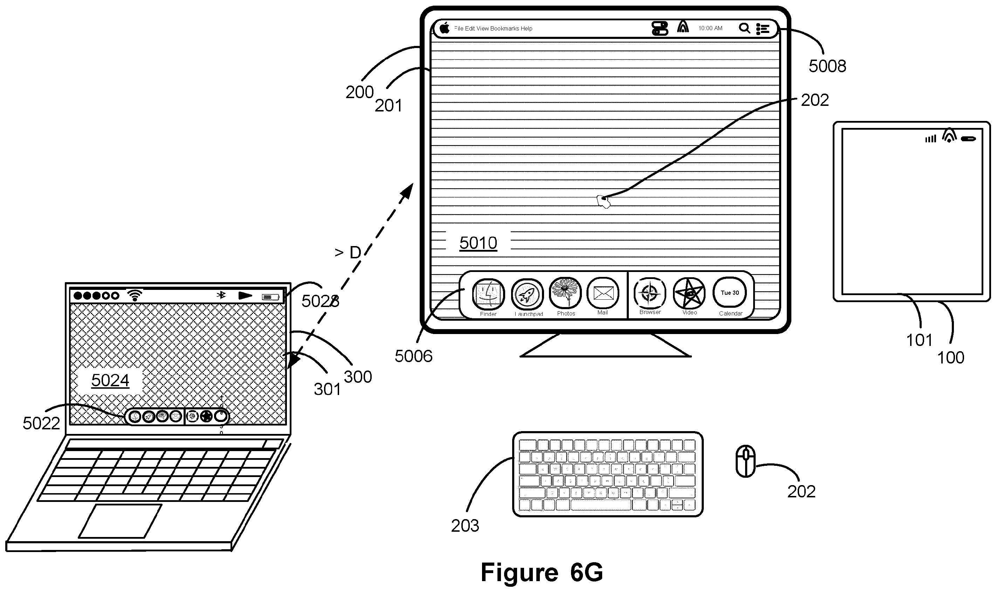

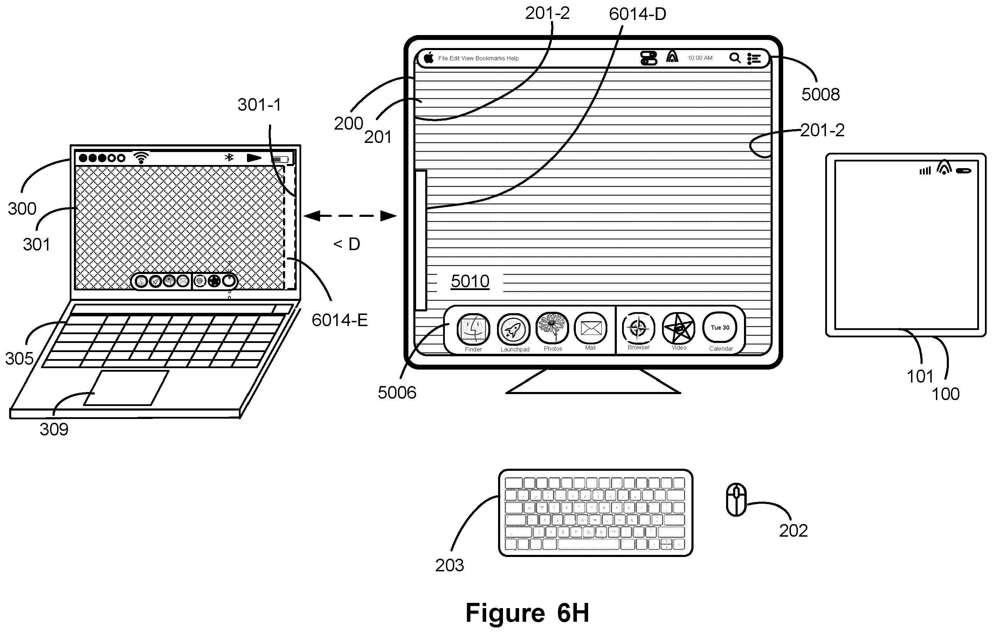

Figures 6G-6H illustrate displaying an indication on the first display of the first device when a third display of a third display is available to have content moved to the third display from the first display, while the first device is also in communication with the second device, in accordance with some embodiments. In Figure 6G, laptop device 300 is positioned away from desktop device 200 by a distance that is greater than a threshold distance (e.g., distance D) for establishing a communication (e.g., in the shared input mode or in the extended display mode) between devices 200 and 300. In Figure 6G, device 300 is therefore not in communication with device 200 in the shared input mode or in the extended display mode. Instead, device 300 operates its own operating system. As shown, device 300 displays a system level user interface (e.g., home screen user interface 5024), a dock (e.g., dock 5022), and a menu bar (e.g., menu bar 5028) that are distinct from the home screen user interface, dock, and menu bar displayed by display 201 of device 200. In Figure 6H, device 300 is moved closer to device 100 so that the distance between the devices is less than the threshold distance D for establishing the communication (e.g., in the shared input mode or in the extended display mode) between devices 200 and 300. In accordance with a determination that device 300 is within the threshold distance D for establishing the communication, and in accordance with the determination that any other criteria of the first set of criteria for moving user interface objects between devices 200 and 300 are satisfied, device 200 displays indication 6014-D in the second region of display 201 (e.g., along edge 201-1 of display 201). In some embodiments, display 201 of device 200 also displays an indication in a first region of display 301 (e.g., indication 6014-E along edge 301-1 facing device 200).

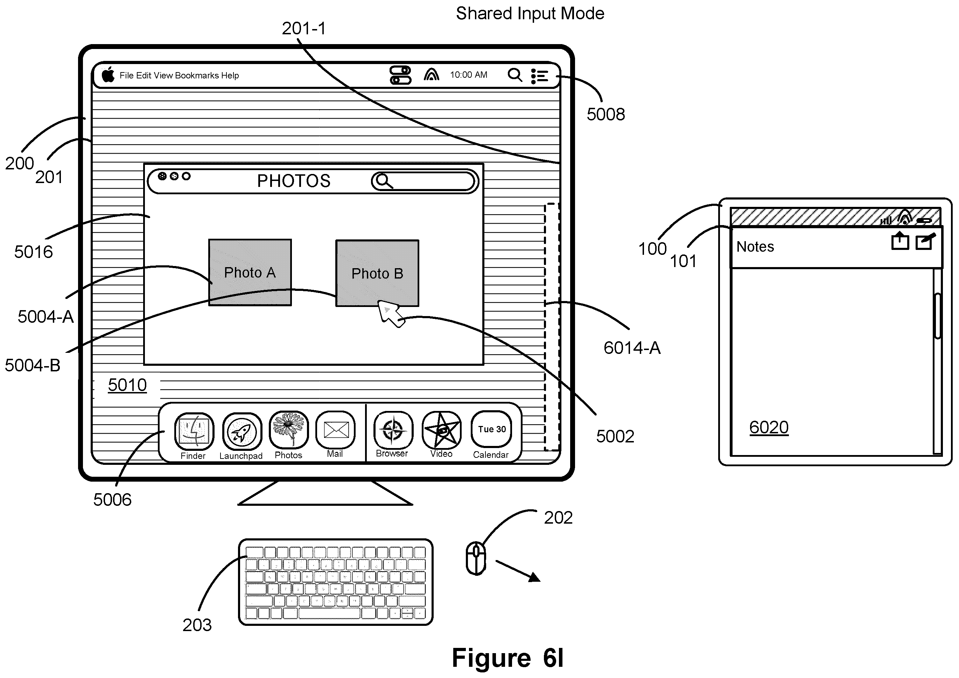

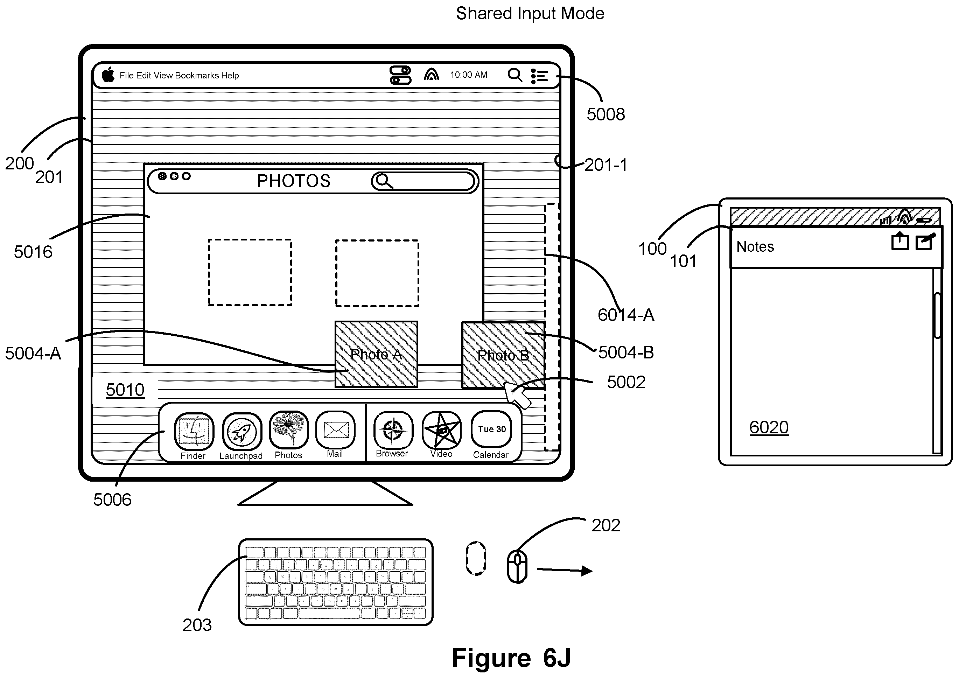

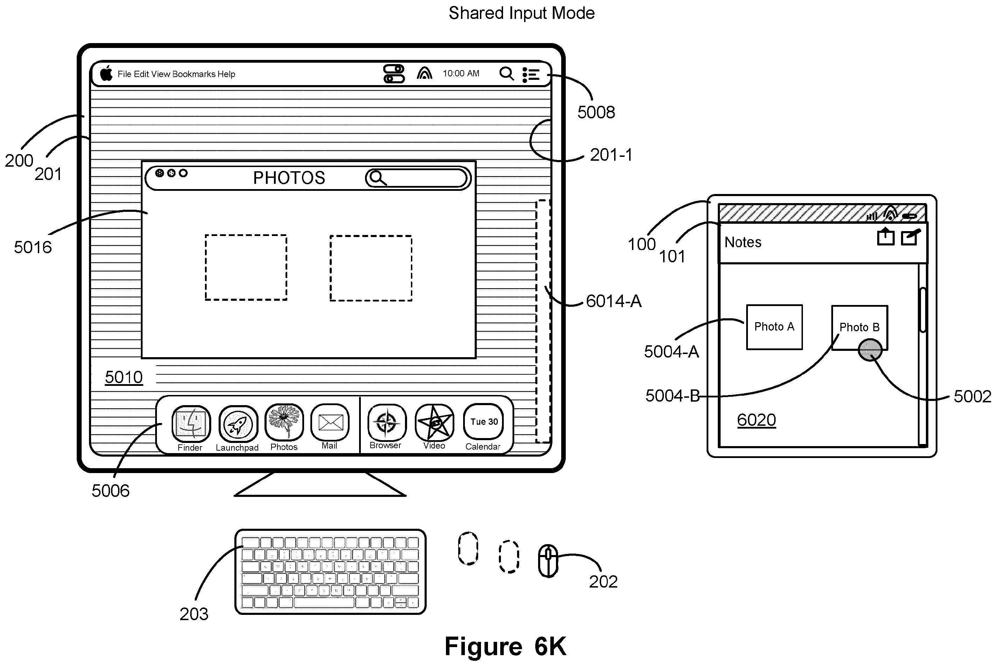

Figures 6I-6K illustrate a user input causing moving objects (e.g., user interface objects) from the first display of the first device to the second display of the second device when the first device and the second device are in the shared input mode, in accordance with some embodiments. In Figure 6I, display 201 of device 200 displays photo application user interface 5016 including photo objects 5004-A and 5004-B. Display 201 of device 100 displays notes application user interface 6020. Devices 200 and 100 are in the shared input mode. In Figure 6I, photo objects 5004-A and 5004-B are selected, as indicated with gray highlight and cursor 5002 is positioned on the selected photo object 5004-B. For example, multiple user interface objects may be selected with a user input corresponding to dragging (e.g., moving mouse 202 while holding a press-down on mouse 202) over an area including the multiple user interface objects. In Figure 6I, while displaying cursor 5002 over the selected photo objects 5004-A and 5004-B, device 200 detects a user input (e.g., a press-down on mouse 202 followed by a movement in the direction indicated by the arrow). In some embodiments, the user input in Figure 6I corresponds to a request to move the selected photo objects 5004-A and 5004-B in accordance with the movement of mouse 202. In some embodiments, indication 6014-A is displayed along edge 201-1 of display 201 to indicate that user interface objects can be moved from display 201 to display 101 of device 100 across a portal indicated by indication 6014-A. In Figure 6J, the selected photo objects 5004-A and 5004-B have been moved toward edge 201-1 of display 201 in accordance with the movement of mouse 202. In Figure 6K, the selected photo objects 5004-A and 5004-B have been moved to the middle portion of display 101 on notes application user interface 602. In Figure 6K, the device further detects a release of the user input (e.g., a lift off of a press-down gesture on mouse 202). In response to the release, photo objects 5004-A and 5004-B are positioned at the position corresponding to the position of cursor 5002 when the user input was released.

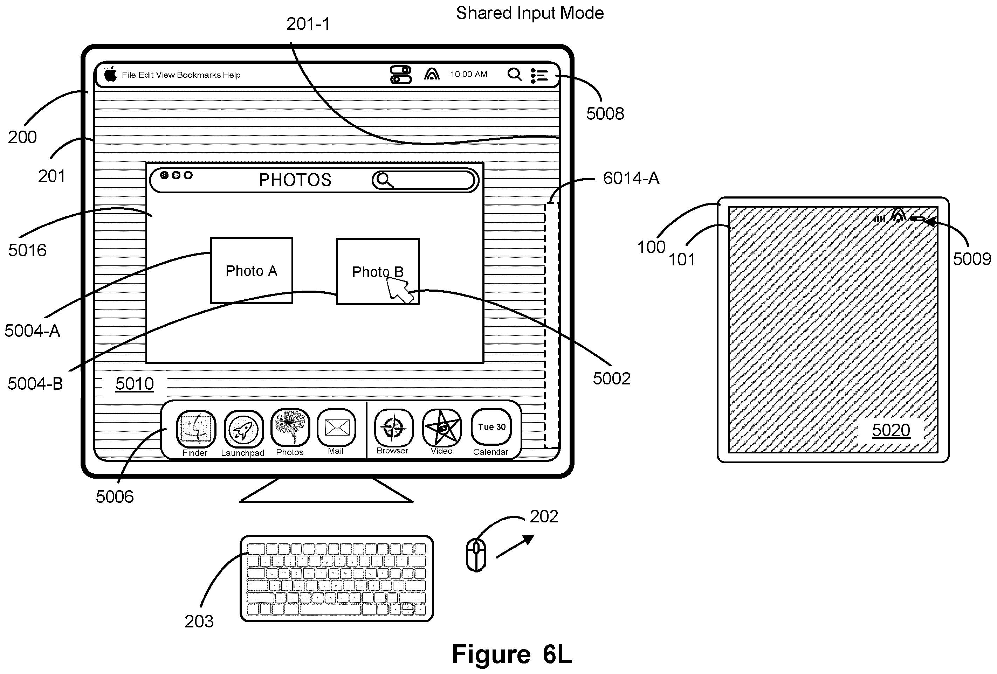

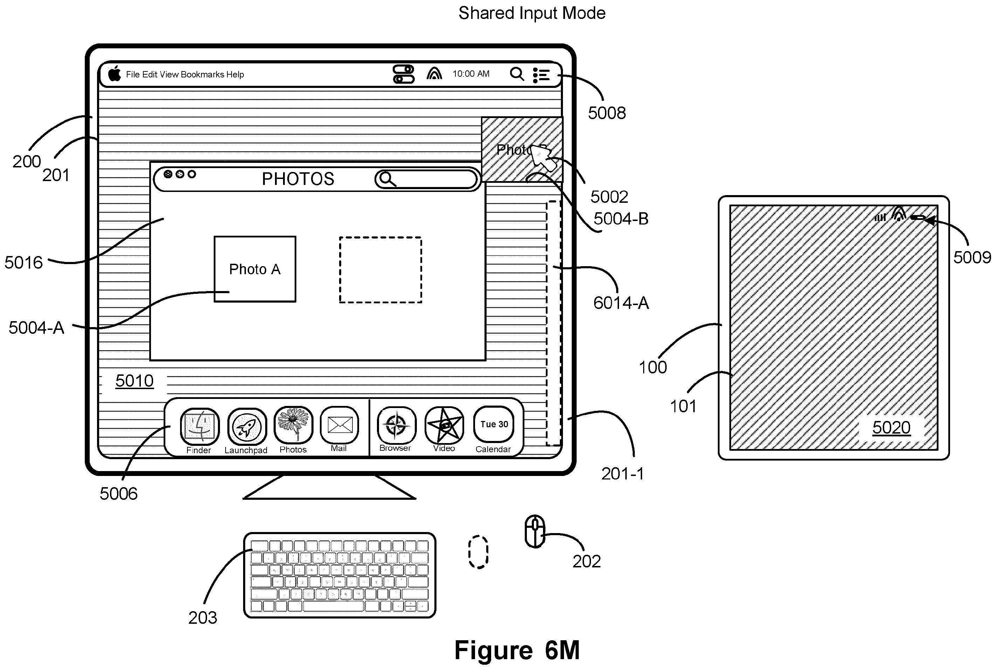

Figures 6L-6M illustrate a user input for attempting to move an object from the first display of the first device to the second display of the second device across a location that is outside a portal indicated by an indication, in accordance with some embodiments. As explained above, in some embodiments, indications such as 6014-A described with respect to Figure 6C, indicate locations of portions of respective edge that allow dragging of user interface objects between displays of different devices. Consequently, in some embodiments user interface objects cannot be dragged between the displays of different devices at locations that are outside these indications. In Figure 6L, display 201 of device 200 displays photo application user interface 5016 including photo objects 5004-A and 5004-B and display 201 of device 100 displays notes application user interface 6020. Devices 200 and 100 are in the shared input mode. In Figure 6I, In Figure 6L, while displaying cursor 5002 over photo object 5004-B, device 200 detects a user input (e.g., a press-down on mouse 202 followed by a movement in the direction indicated by the arrow). In some embodiments, the user input in Figure 6L corresponds to a request to select and move photo object 5004-B in accordance with the movement of mouse 202. In some embodiments, indication 6014-A is displayed along edge 201-1 of display 201 to indicate that user interface objects can be moved from display 201 to display 101 of device 100 across an inter-display portal indicated by indication 6014-A. However, in Figure 6L, the movement of mouse 202 in the direction indicated with the arrow has a projected direction that is toward an edge region of display 201 (e.g., a top region of edge 201-1) that is outside indication 6014-A. In Figure 6M, photo object 5004-B has been moved toward the top region of edge 201-1 of display 201 in accordance with the movement of mouse 202. As shown in Figure 6M, because photo object 5004-B has reached edge 201-1 outside of the inter-display portal indicated by indication 6014-A, photo object 5004-B cannot be dragged across edge 201-1 to display 101 of device 100.

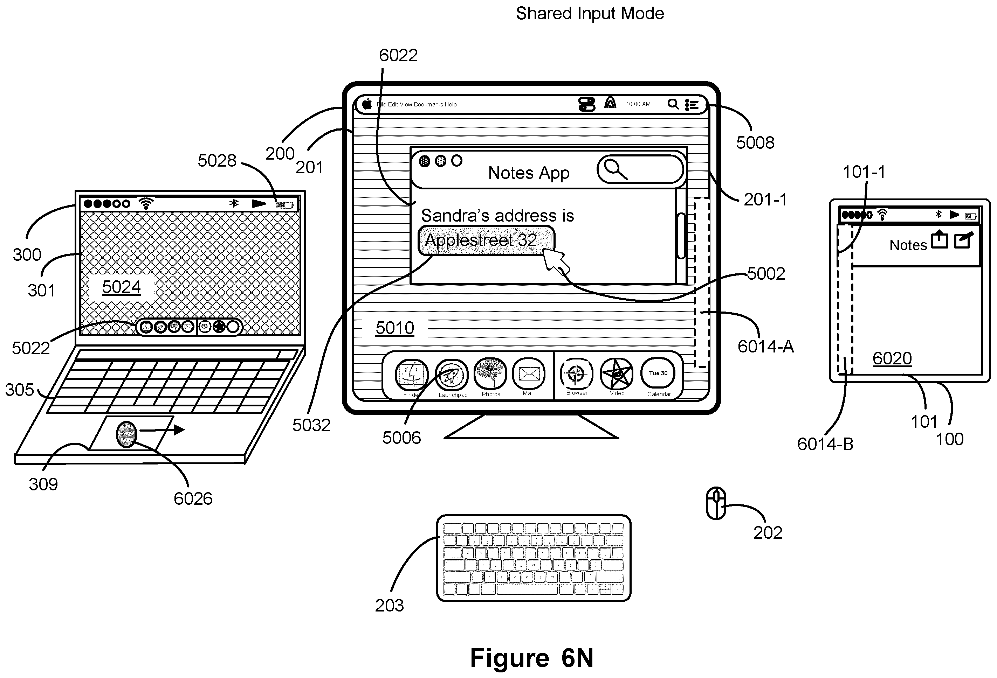

Figures 6N-6O illustrate a user input on a touchpad of the third device causing moving an object from the first display of the first device to the second display of the second device when the first device is in the shared input mode with the second device and the third device, in accordance with some embodiments. As explained above, two or more display devices may be operated in communication with each other (e.g., in the shared input mode or in the companion display mode) while sharing one or more input devices. In some embodiments, the one or more input devices are in communication with a single display device. For example, keyboard 203 and mouse 202 in communication with desktop device 200 are shared between desktop device 200, tablet device 100, and laptop device 300. In some embodiments, the one or more input devices are in communication with two or more display devices. For example, in addition to keyboard 203 and mouse 202, desktop device 200, tablet device 100, and laptop device 300 may also be operated with touchpad 309 and keyboard 305 of laptop device 300, as shown in Figure 6N. In Figure 6N, device 200 is in communication with devices 100 and 300 in the shared input mode. In some embodiments, device 200 is in communication with devices 100 and 300 in the extended display mode (e.g., displays 201, 101, and 301 all display an extended view of user interface provided by device 200). In either of these embodiments, devices 200, 300, and 100 may all of the input devices (e.g., mouse 202, keyboard 203, keyboard 305, and touchpad 309). In some other embodiments, device 200 is in communication with device 100 in the shared input mode and in communication with device 300 in the extended display mode, or *vice versa.*

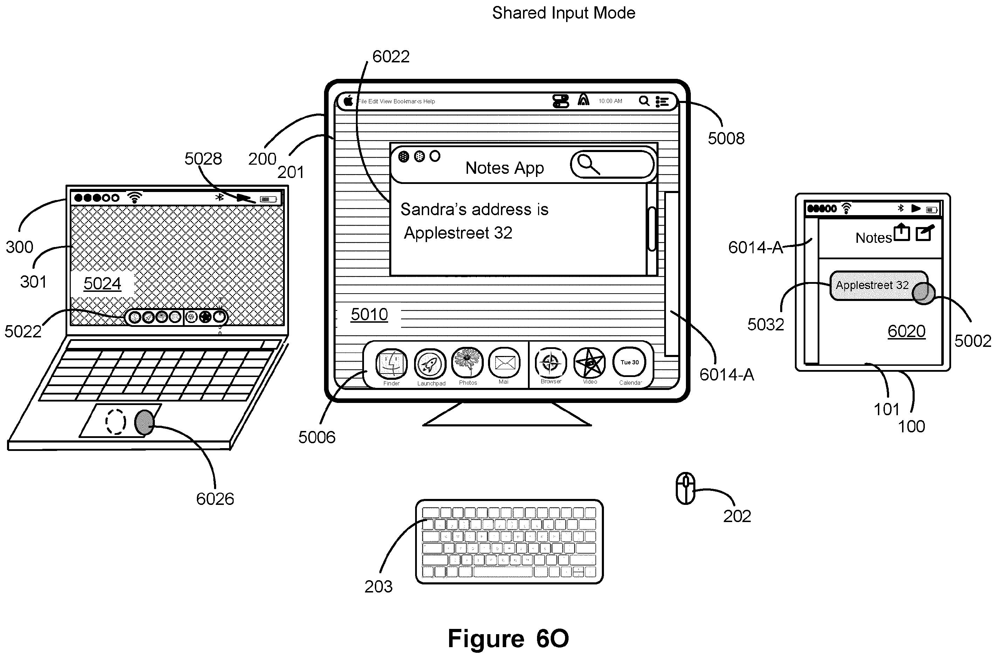

In Figure 6N, device 200 displays notes application user interface 6022 including text arranged in two lines and device 100 displays notes application user interface 6020. As shown, text line 5032 is selected as indicated with highlighting. In Figure 6N, device 300 detects a user input (e.g., contact 6026) on touchpad 309 while cursor 5002 is displayed on the selected text line 5032. For example, the user input corresponds to a press-down of contact 6026 followed by a movement in the direction indicated with the arrow. In some embodiments, the user input corresponds to a request to move (e.g., drag) the selected text line 5032 in accordance with the movement of contact 6026 on touchpad 309 (e.g., in the direction indicated with the arrow). In some embodiments, indication 6014-A is displayed along edge 201-1 of display 201 to indicate that user interface objects can be moved from display 201 to display 101 of device 100 across a portal indicated by indication 6014-A. In some embodiments, device 200 displays indication 6014-A along edge 201-1 in response to device 300 detecting that the movement of contact 6026 for dragging text line 5032 is toward edge 201-1. In some embodiments, concurrently with displaying indication 6014-A, device 100 displays indication 6014-B along edge 101-1. In Figure 6O, text line 5032 is moved in the middle portion of display 101 on notes application 6020 in accordance with the movement of contact 6026. As explained above, in response to detecting an end of the user input (e.g., a lift off of contact 6026) by device 300, text line 5032 is dropped at the location of cursor 5002 at the time the end of the user input was detected.

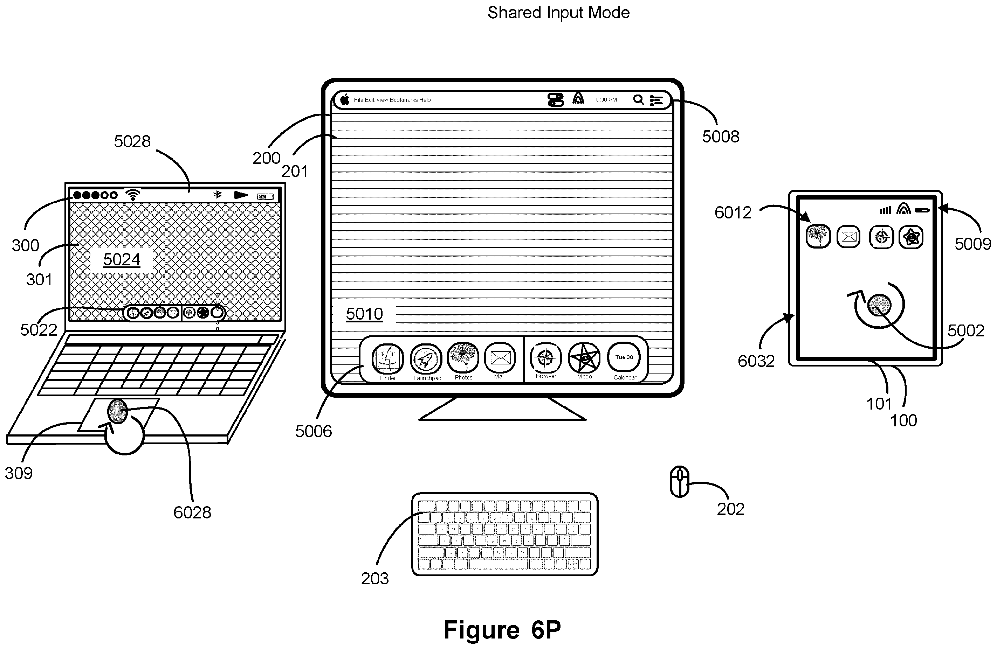

Figure 6P illustrates a user input in a predetermined manner on the touchpad of the third device causing highlighting the second display of the second display when a cursor is displayed on the second display, in accordance with some embodiments. In some instances when operating multiple display devices concurrently, a user may find it difficult to recognize the display that is currently displaying cursor 5002 and a method of providing an indication to the user of such display would be useful. In Figure 6P, device 300 detects a user input (e.g., contact 6028) on touchpad 309. The user input includes moving contact 6028 on touchpad 309 in a predetermined motion. For example, the movement includes circular movement causing cursor 5002 to move in a circular motion (e.g., cursor 5002 is hovering over a region on display 101). In response to identifying that the user input includes movement in the predetermined motion, and that cursor 5002 is displayed on display 101 of device 100, display 101 displays an indication indicating that cursor 5002 is located on that display. In some embodiments, the indication includes increasing brightness of display 101 or a portion of display 101. In Figure 6P, the indication includes brightened rim 6032 of display 101.

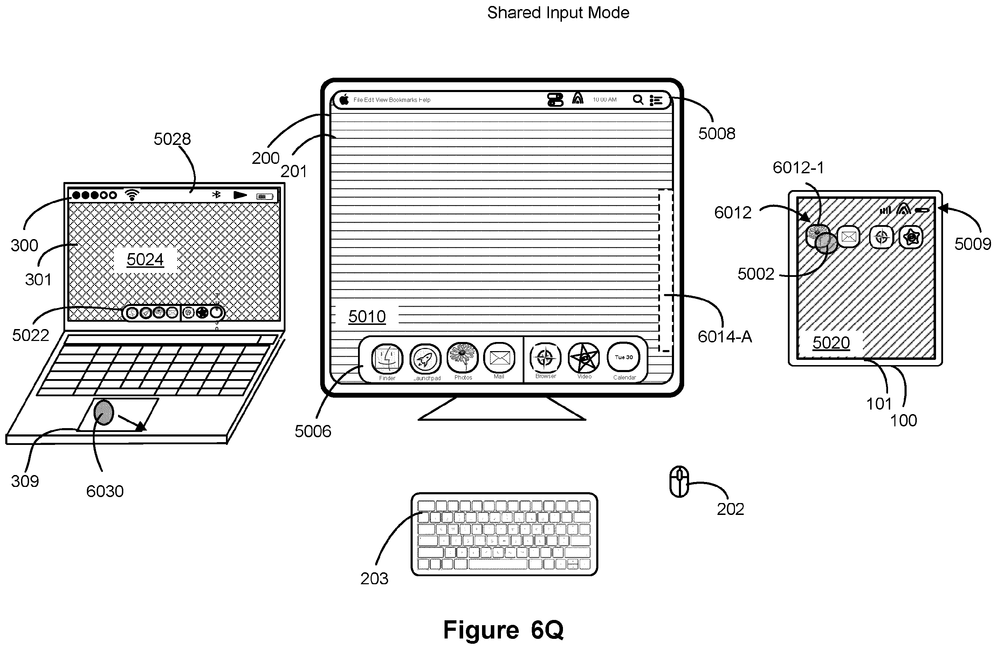

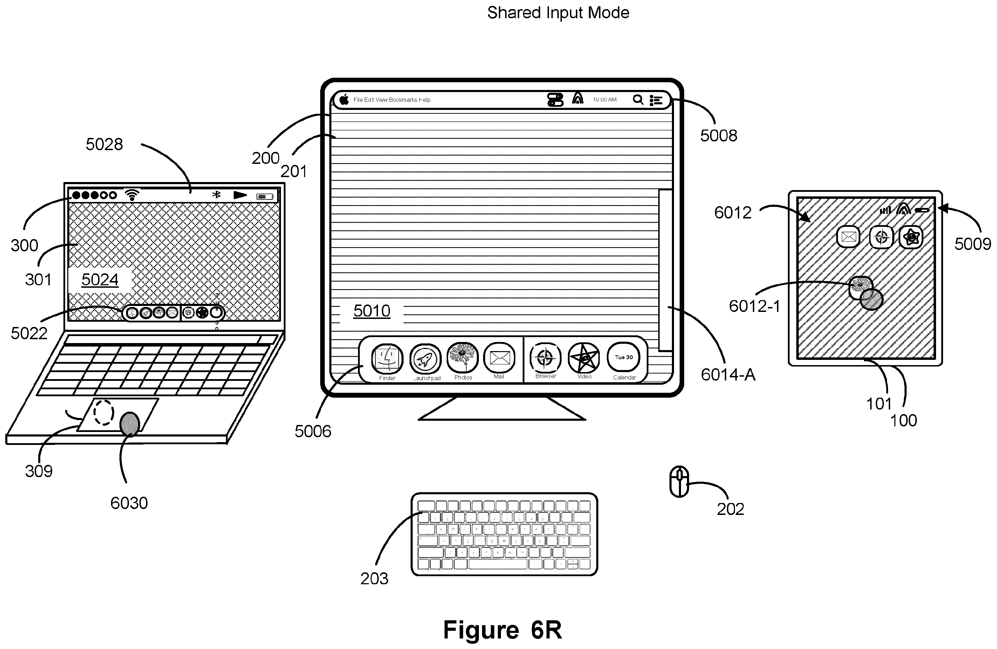

Figures 6Q-6T illustrate a user input on the touchpad of the third device causing an operation on the second display and the first display based on where the cursor is displayed when the user input is received, in accordance with some embodiments. In Figures 6Q-6T, device 300 is in communication with devices 100 and 200 in the shared input mode. In Figure 6Q, device 200 displays home screen user interface 5010 and device 100 displays home screen user interface 5020. In Figure 6Q, device 300 detects a user input (e.g., contact 6030) on touchpad 309 while cursor 5002 is displayed application icon 6012-1 (e.g., photos application icon) of application icons 6012 of home screen 5020 on display 101. For example, the user input corresponds to a press-down of contact 6030 followed by a movement in the direction indicated with the arrow. In some embodiments, the user input corresponds to a request to select and move (e.g., drag) application icon 6012-1 in accordance with the movement of contact 6030 on touchpad 309 (e.g., in the direction indicated with the arrow). In Figure 6R, device 100 has moved application icon 6012-1 to the middle portion of display 101 in accordance with the movement of contact 6030. As explained above, in response to detecting an end of the user input (e.g., a lift off of contact 6030) by device 300, application icon 6012-1 is dropped at the location of cursor 5002 at the time the end of the user input was detected.

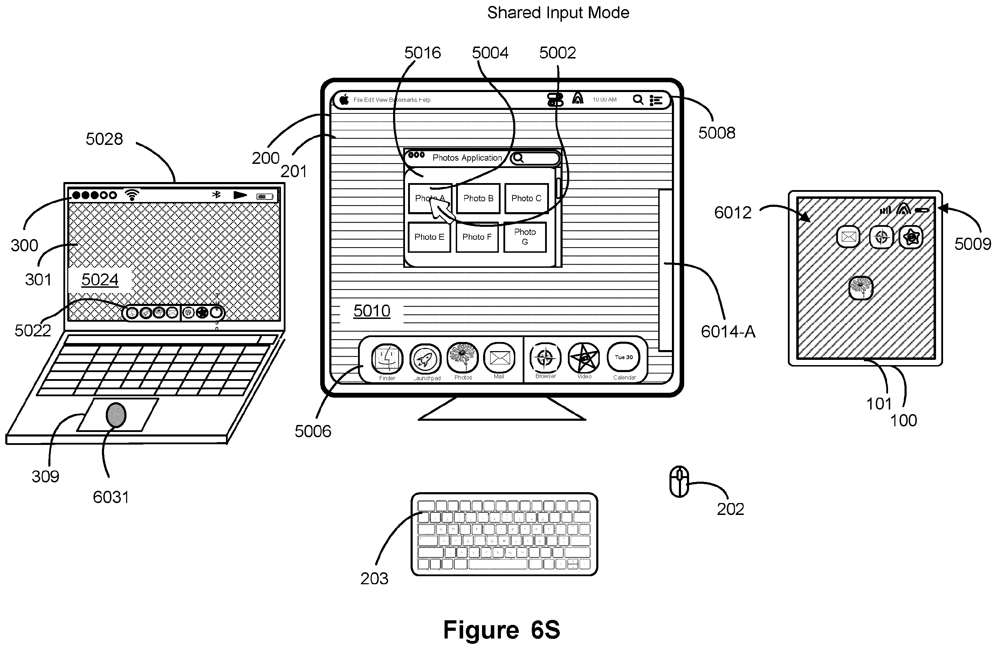

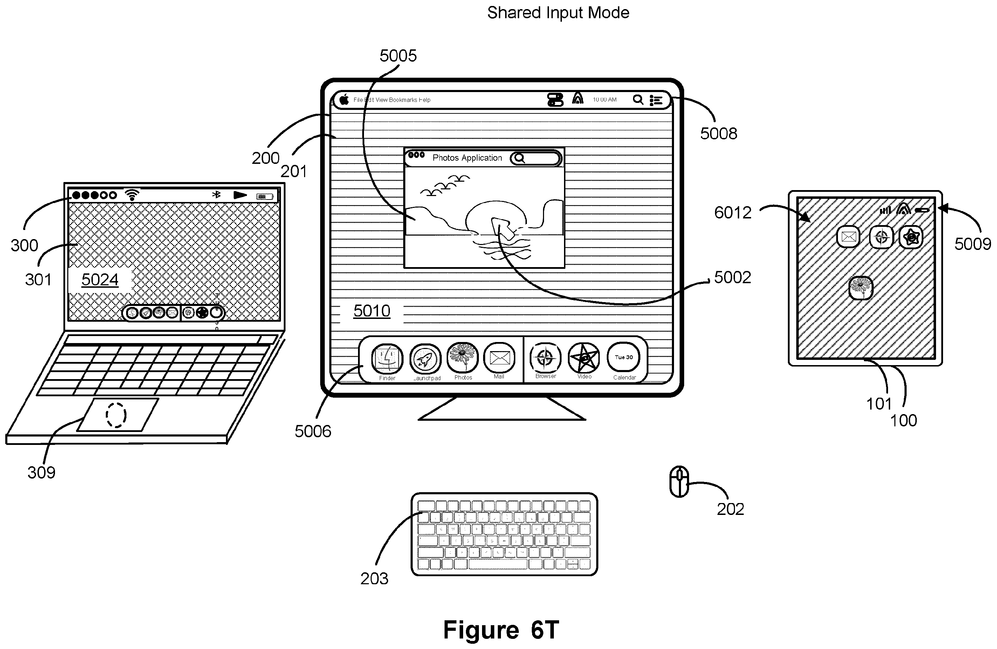

In Figure 6S, device 200 displays photos application user interface 5016 on top of home screen user interface 5010. Photos application user interface 5016 includes a plurality of representations corresponding to photos (e.g., photo object 5004). In Figure 6S, device 300 detects a user input (e.g., contact 6031) on touchpad 309 while cursor 5002 is displayed on photo object 5004 on photos application user interface 5016. For example, the user input corresponds to a tap of contact 6031 (e.g., a quick touch and lift off at a location corresponding to contact 6031). In some embodiments, the tap user input corresponds to a request to select and display (e.g., open) photo object 5004. In Figure 6T, in response to detecting the tap user input, device 200 displays photo 5004 on display 201.

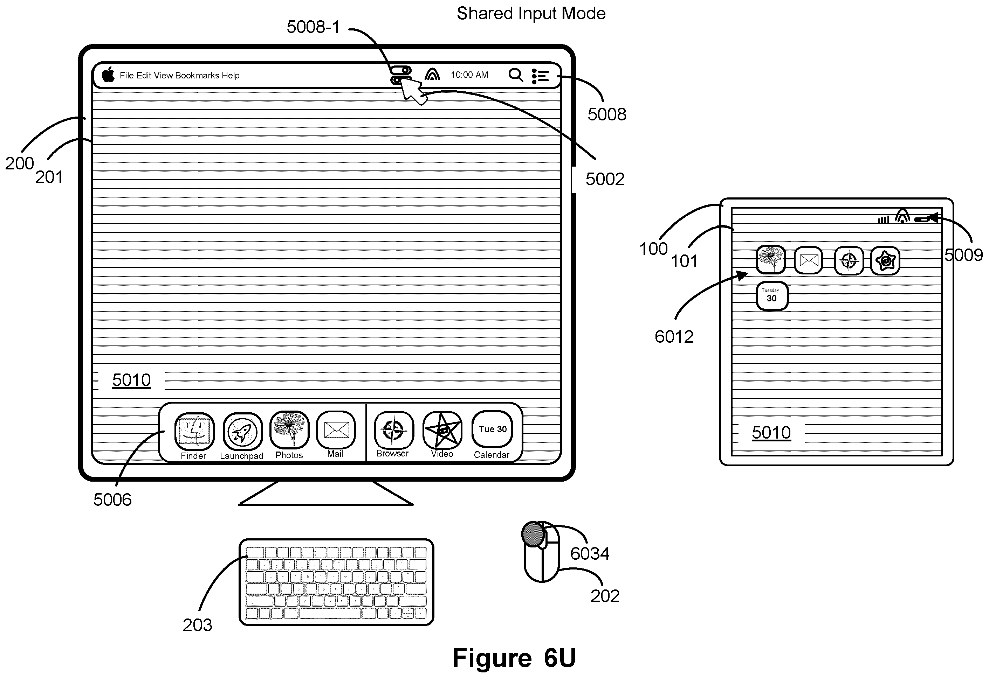

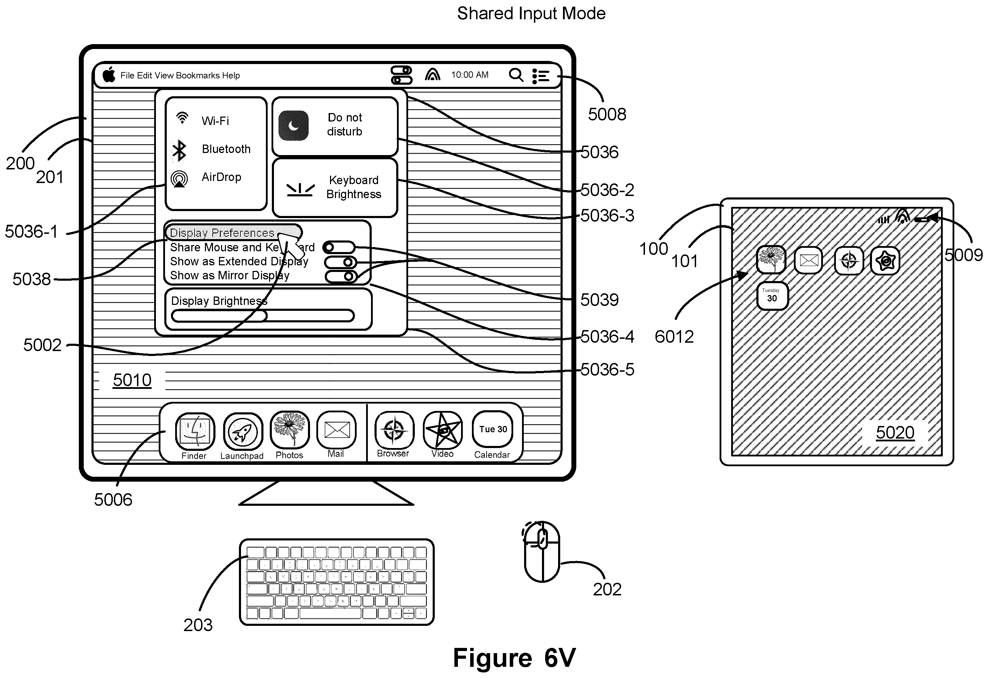

Figures 6U-6V illustrate a user input for displaying a control panel on the first display of the first device, where the control panel includes a plurality of affordances for controlling display settings, in accordance with some embodiments. In Figure 6U, device 200 displays home screen user interface 5010 including menu bar 5008. Menu bar 5008 includes a plurality of indications (e.g., status indications) and a plurality of affordances including affordance 5008-1 for a control panel user interface. As used herein, the control panel user interface (also referred to as control center user interface or control user interface) is used for controlling a plurality of system level operations. The control panel user interface includes a plurality of controls (e.g., affordances) that correspond to a plurality of system functions of the device. In Figure 6U, device 200 detects a user input via mouse 202 (e.g., press-down 6034 on mouse 202) while cursor 5002 is displayed over affordance 5008-1. In some embodiments, the user input corresponds to a request to display the control panel user interface (e.g., control panel user interface 5036 in Figure 6V). In response to detecting the user input via mouse 202, device 200 displays control panel user interface 5036, as shown in Figure 6V. Control panel user interface includes affordance 5036-1 for controlling wireless networks, affordance 5036-2 for controlling call and notification silencing, affordance 5036-3 for controlling keyboard brightness, affordance 5036-4 for display preferences, and affordance 5036-5 for controlling display brightness. It is understood that these affordances are exemplary, and control panel 5036 may include a different set of affordances as well. Affordance 5036-4 for display preferences includes a selectable affordance 5038 for opening display preferences user interface (e.g., as will be described with respect to Figure 7A). Affordance 5036-4 further includes a plurality of sliding affordances (e.g., affordances 5039) for switching different display modes on and off. For example, in Figure 6V, an affordance associated with the shared input mode (e.g., "Share Mouse and Keyboard") is turned on while affordances associated with extended display mode and mirroring display mode (e.g., "Show as Extended Display" and "Show as Mirror Display," respectively) are turned off.

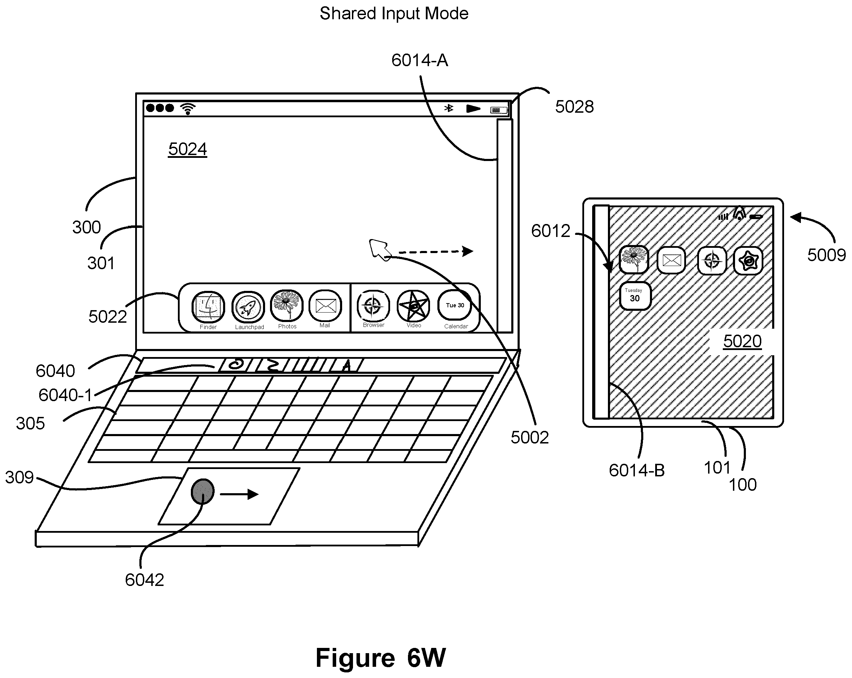

Figures 6W-6X illustrate updating a touch-screen bar of the third device in response to a user input on the touchpad of the third device based on where the cursor is displayed when the user input is received, in accordance with some embodiments. In some embodiments, tablet device 300 includes a touch-screen bar (also called a touch bar) (e.g., touch-screen bar 6040 positioned adjacent to keyboard 305). As referred to herein, a touch-screen bar an input device having the ability to display a plurality of changing affordances for causing operations on device 300 and/or devices 100 and 200 in communication with device 300. User inputs on the plurality of changing affordances can be touch gestures including, e.g., tap, swipe, flick, drag gestures. In some embodiments, the plurality of affordances (e.g., selectable icons) displayed in accordance with a currently active user interface. For example, if the currently active user interface is an application user interface, the touch-screen bar displays a first plurality of affordances for operating the application user interface and if the currently active user interface is a home screen user interface, the touch-screen bar displays a second plurality of affordances different from the first set of affordances for operating the home screen user interface. In some embodiments, a user interface is determined to be active when the cursor is displayed on the user interface.

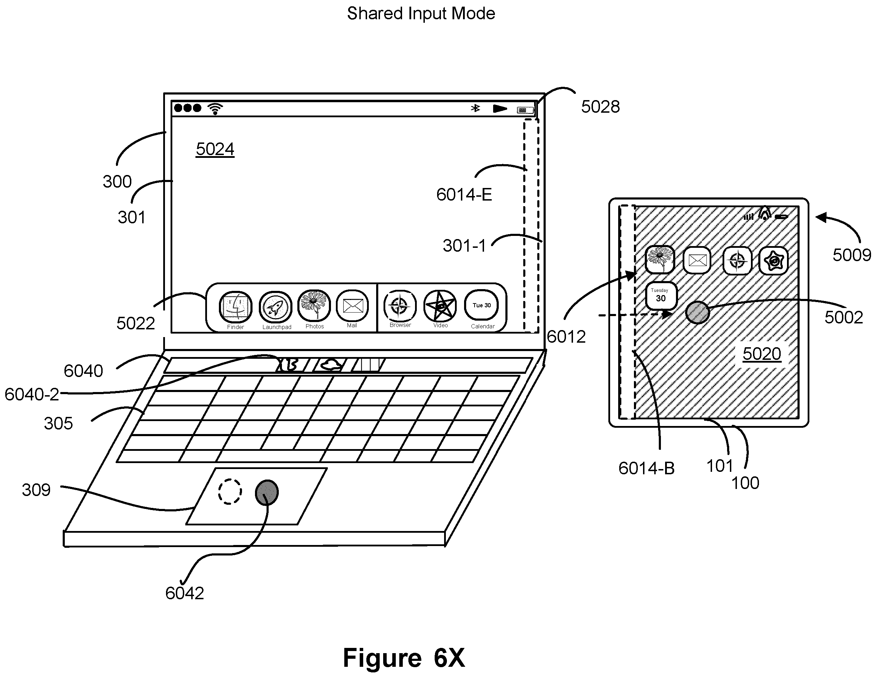

In Figure 6W, cursor 5002 is displayed on home screen user interface 5024 of device 300 and touch-screen bar 6040 displays a first set of one or more affordances (e.g., affordances 6040-1 for performing operations on home screen user interface 5024 of device 300). Device 300 detects a user input (e.g., contact 6042) on touchpad 309. For example, the user input corresponds to a press-down by contact 6042 followed by a movement in a direction indicated with the arrow. In some embodiments, the user input corresponds to a request to move cursor 5002 in accordance with the movement of contact 6042. In Figure 6X, cursor 5002 is moved to home screen user interface 5020 of display 101. In response to moving cursor 5002 to a different user interface, touch-screen bar 6040 has updated to display a second set of one or more affordances (e.g., affordances 6040-2 for performing operations on home screen 5020 of device 100).

Figures 7A-7G illustrate changing display modes of a first device and a second device in communication with each other by changing positions of respective representations of the first device and the second device in a display preferences user interface, in accordance with some embodiments. In Figure 7A, display 201 of desktop device 200 displays a display preferences user interface (e.g., display preferences user interface 7002). In some embodiments, display preferences user interface 7002 is displayed in response to a user input on an affordance in the control panel user interface (e.g., affordance 5038 in control panel user interface 5036 in Figure 6V). Display preferences user interface 7002 provides for affordances for adjusting properties and settings associated with displays. In some embodiments, display preferences user interface 7002 includes multiple tabs for adjusting different aspects of displays. For example, tab 7002-1 is for adjusting different aspects of the respective display, tab 7002-2 is for adjusting the arrangement of displays when the respective display is in communication with one or more displays, and tab 7002-3 for adjusting a color settings of the respective display.

In Figure 7A, the content of tab 7002-2 for adjusting the arrangement of multiple displays is shown. Tab 7002-2 includes representation 7004-A corresponding to desktop device 200 (e.g., named "Joe's desktop computer") and representation 7004-B corresponding to tablet device 100 (e.g., named "Joe's tablet"). In Figure 7A, device 200 is in communication with device 100 in the shared input mode. Representation 7004-A has an emphasized rim to indicate that representation 7004-A corresponds to display 201 that display preferences user interface 7002 is currently displayed on (e.g., display 201 is currently active display). Device 200 displays home screen user interface 5010 while device 100 displays home screen user interface 5020. In display preferences user interface 7002, to indicate that device 200 and device 100 are in the shared input mode, representation 7004-A has a first appearance (e.g., size, shape, a picture, or a pattern) and representation 7004-B has a second appearance distinct from the first appearance. In some embodiments, the sizes of representations 7004-A and 7004-B correspond to relative sizes of displays 200 and 100, respectively. For example, representation 7004-A has a greater size than representation 7004-B because display 201 has a greater size than display 101. In some embodiments, the shapes of representations 7004-A and 7004-B correspond to the respective shapes of displays 200 and 100. For example, representation 7004-B has a rectangular shape in a portrait orientation corresponding to the orientation of display 101 and representation 7004-A has a rectangular shape in a landscape orientation corresponding to the orientation of display 201. In some embodiments, picture or wallpaper of representations 7004-A and 7004-B correspond to the respective pictures or wallpapers of displays 200 and 100. For example, representation 7004-A has a horizontally striped wallpaper corresponding to the horizontally striped wallpaper of home screen user interface 5010 of device 200 and representation 7004-B has a diagonally striped wallpaper corresponding to the diagonally striped wallpaper of home screen user interface 5020 of device 100. When in the shared input mode, representation 7004-B is separated from representation 7004-B by a distance (e.g., a distance that is greater than a threshold distance for changing between the shared input mode and the extended display mode).

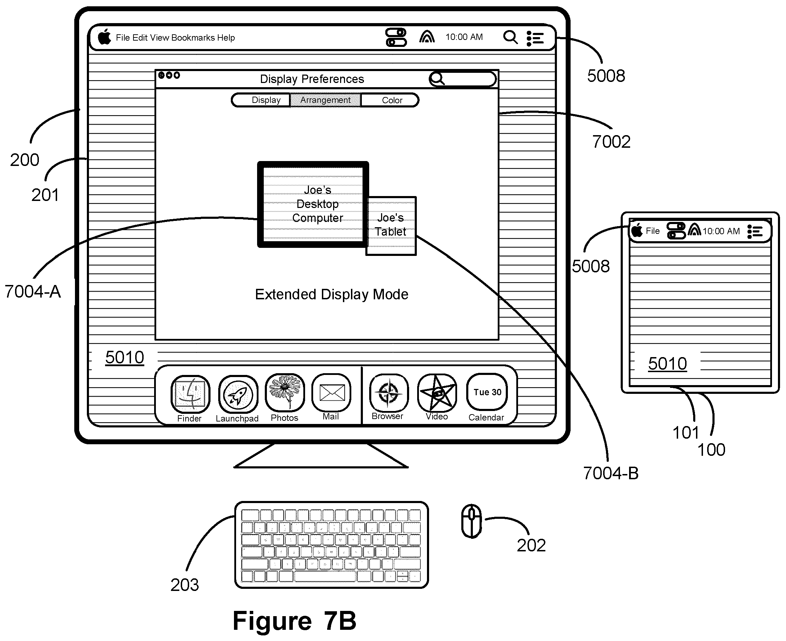

In Figure 7B, device 200 is in communication with device 100 in the extended display mode. In contrast to the shared input mode in Figure 7A, both displays 101 and 201 display home screen user interface 5010 including menu bar 5008 provided by device 200. Consequently, representation 7004-B has changed its appearance to correspond to the wallpaper of home screen user interface 5010. As shown, representation 7004-B has the same horizontally striped wallpaper as representation 7004-A. Furthermore, in Figure 7B representation 7004-B is adjacent to (e.g., in direct contact with) representation 7004-A (e.g., no gap between the representations is shown).

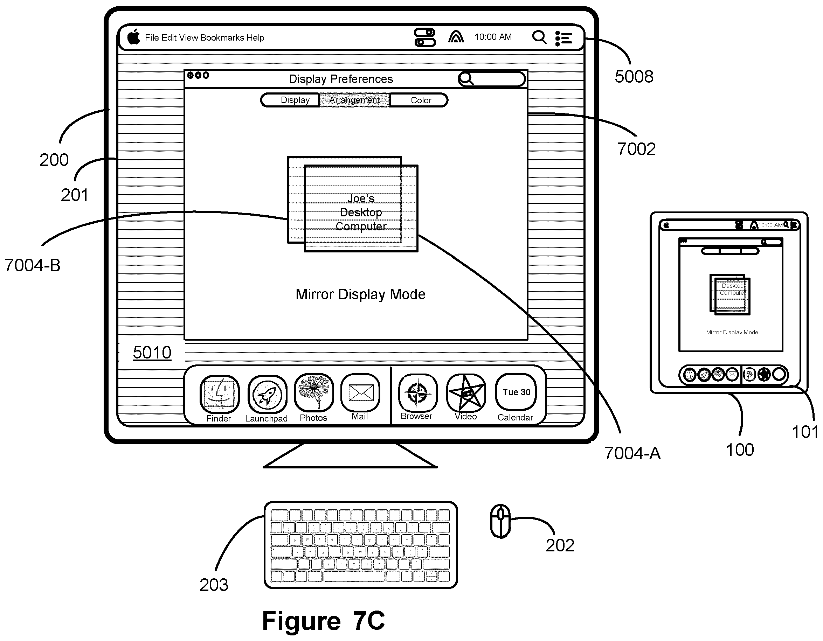

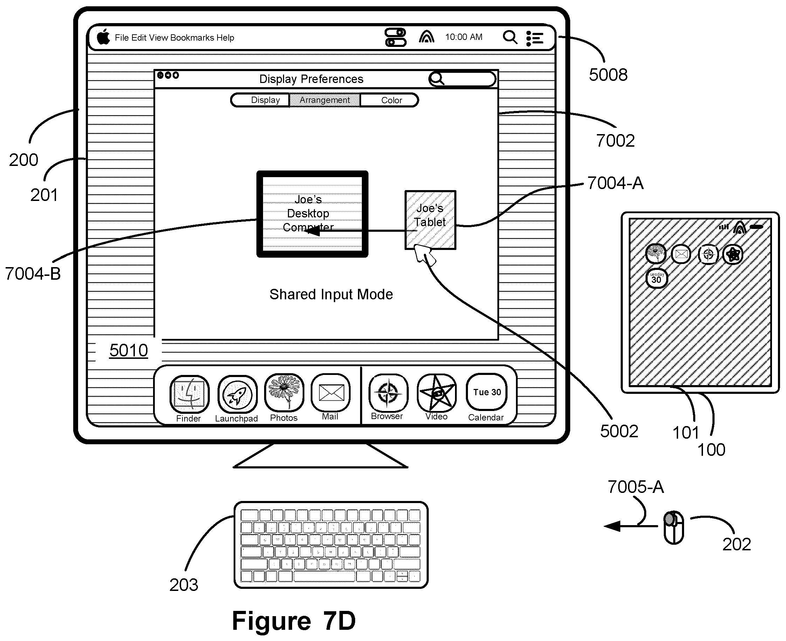

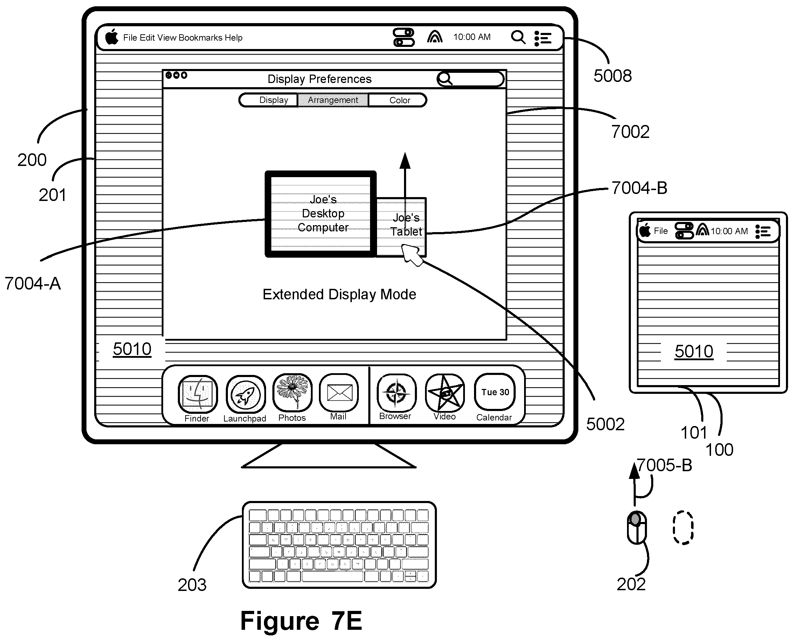

In Figure 7C, device 200 is in communication with device 100 in the mirror display mode. As shown, display 101 of device 100 displays a mirror image, or a replication, of what is displayed on display 201 of device 200. It is understood that some of the affordances and/or features are displayed in a smaller scale or excluded because display 101 has a smaller size than display 201. Consequently, when in the mirror display mode, representations 7004-A and 7004-B are displayed as overlapping (e.g., as a stack) in display preferences user interface 7002 (e.g., representation 7004-B is displayed behind representation 7004-A). Representations 7004-A and 7004-B have corresponding appearances to indicate that representation 7004-B is indeed a mirror image of representation 7004-A. For example, representations 7004-A and 7004-B have the same size, same shape, and include the same horizontally striped wallpaper. Figures 7D-7E illustrate changing the display mode from the shared input mode to the extended display mode by moving (e.g., dragging) representation 7004-A to be adjacent to representation 7004-B. In Figure 7D, device 200 is in communication with device 100 in the shared input mode and the display preferences user interface 7002 is as described above with respect to Figure 7A. In Figure 7D, device 200 detects a user input on mouse 202 while cursor 5002 is displayed over representation 7004-B. In some embodiments, the user input corresponds to a press-down on mouse 202 (e.g., as illustrated with the gray dot on mouse 202) followed by a movement of mouse 202 in the direction indicated by arrow 7005-A. In some embodiments, the user input corresponds to a request to select and move representation 7004-B in accordance with the movement of the mouse. In Figure 7E, device 200 has moved representation 7004-B to be adjacent to (e.g., in direct contact with) representation 7004-A. Consequently, device 200 has changed the display mode from the shared input mode to the extended display mode (e.g., as described with respect to Figure 7B). Additionally, representation 7004-B as well as display 101 have changed their wallpapers to correspond to the horizontally striped wallpaper of home screen user interface 5010 of device 200. In some embodiments, device 200 displays an animation of "snapping" the representations in contact with each other (e.g., representation 7004-B slides to be in contact with representation 7004-A) when the representation 7004-B has moved to a predetermined distance from representation 7004-A. It is understood that the display mode can be changed from the extended display mode back to the shared input mode in accordance with a user input requesting to display representations 7004-A and 7004-B separate from each other (e.g., a user input corresponding to a request to drag representation 7004-B away from representation 7004-A). In Figures 7D-7E, changing the display mode has been demonstrated by moving representation 7004-B with respect to representation 7004-A while representation 7004-B remains in its original position. However, it is understood that the display mode can be changed by moving either or both of the representations 7004-A and 7004-B.

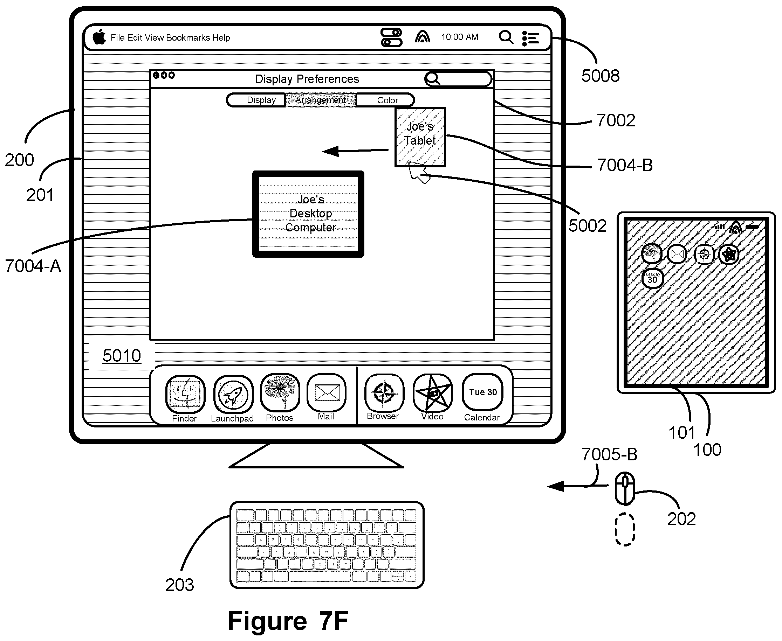

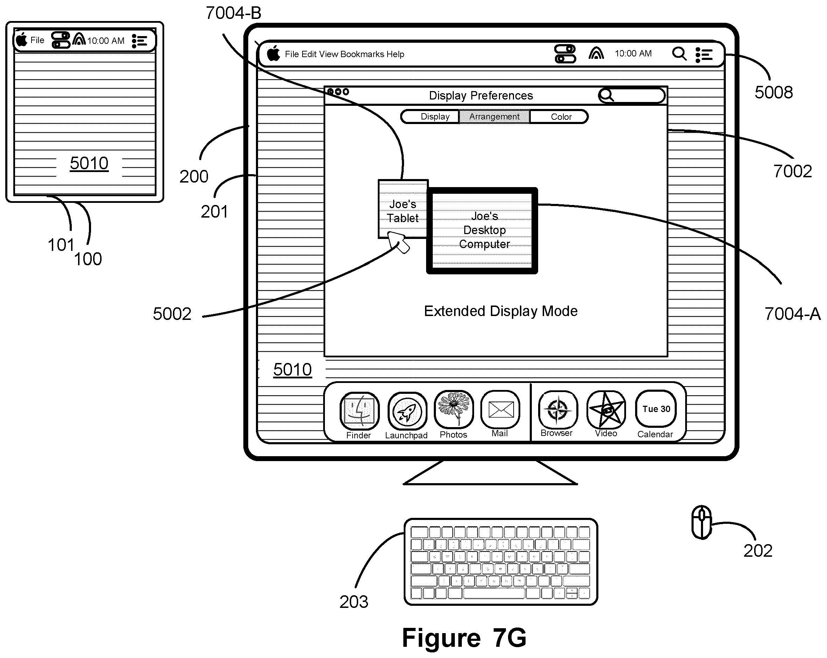

In Figure 7E, device 200 further detects a user input on mouse 202 while cursor 5002 is displayed over representation 7004-B. In some embodiments, the user input corresponds to a press-down on mouse 202 (e.g., as illustrated with the gray dot on mouse 202) followed by a movement of mouse 202 in the direction indicated by arrow 7005-B. In some embodiments, the user input corresponds to a request to select and move representation 7004-B in accordance with the movement of the mouse. In Figure 7F, device 200 continues to detect the user input. In Figure 7F, the user input includes a movement of mouse 202 in the direction indicated by arrow 7005-B. While representation 7004-B is being moved, and not in contact with representation 7004-A, devices 200 and 100 are in the shared input mode (e.g., displaying their respective home screen user interfaces). In Figure 7G, device 200 has moved representation 7004-B to the opposite side of representation 7004-A in accordance with the movement of mouse 202. Additionally, a user has positioned device 100 on the opposite side of device 200. As indicated by the arrangement and appearance of representations 7004-A and 7004-B, device 200 is now in communication with device 100 in the shared input mode.

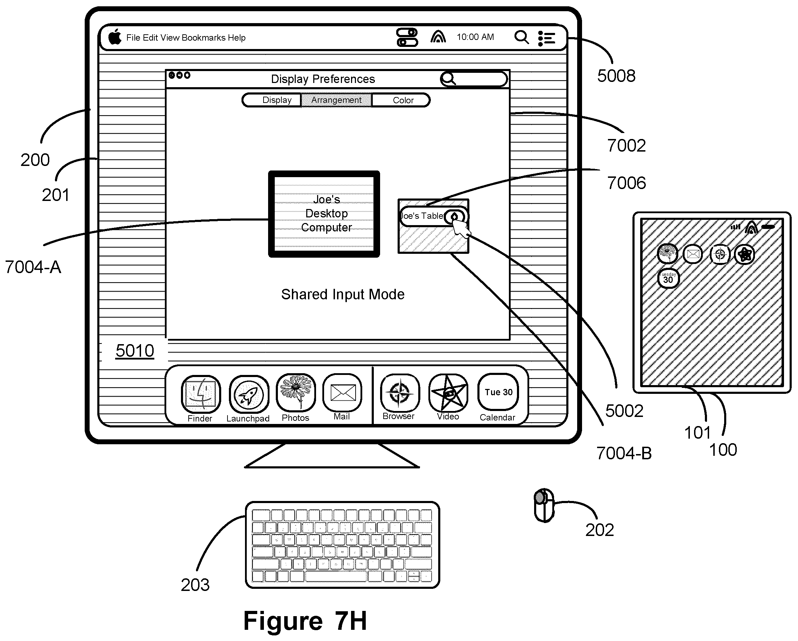

Figures 7H-7I illustrate changing display modes of the first device and the second device in communication with each other using an affordance displayed on the representation of the second device in the display preferences user interface, in accordance with some embodiments. Figures 7H-7I illustrate yet another method for changing the display mode of devices 200 and 100 in communication with each other. In Figure 7H, device 200 displays affordance 7006 for changing the display mode. In Figure 7H, affordance 7006 is displayed over representation 7004-B for adjusting the display preferences corresponding to display 101 of device 100. Similarly, affordance 7006 could be alternatively or additionally displayed over representation 7004-A for adjusting the display preferences corresponding to display 201 of device 100. It is understood that the display mode can be changed by adjusting the display preferences of either of the displays. In Figure 7H, device 200 detects a user input (e.g., a click) on mouse 202 while cursor 5002 is over affordance 7006. In some embodiments, the user input corresponds to a request to display a drop down menu including a set of selectable affordances for choosing the display mode (e.g., "Share mouse and Keyboard," "Use as External Display," and "Use as Mirror Display"). For example, a user input (e.g., a click on mouse 202 while cursor 5002 is over the desired option) on "Share mouse and Keyboard" would change the display mode of devices 200 and 100 to the shared input mode. A user input on "Use as External Display" would change the display mode of devices 200 and 100 to the extended display mode so that display 101 operates as an extended display for displaying user interfaces provided by device 200. A user input on "Use as Mirror Display" would change the display mode of device 200 and 100 to the mirror display mode so that display 101 displays a mirror image of display 201.

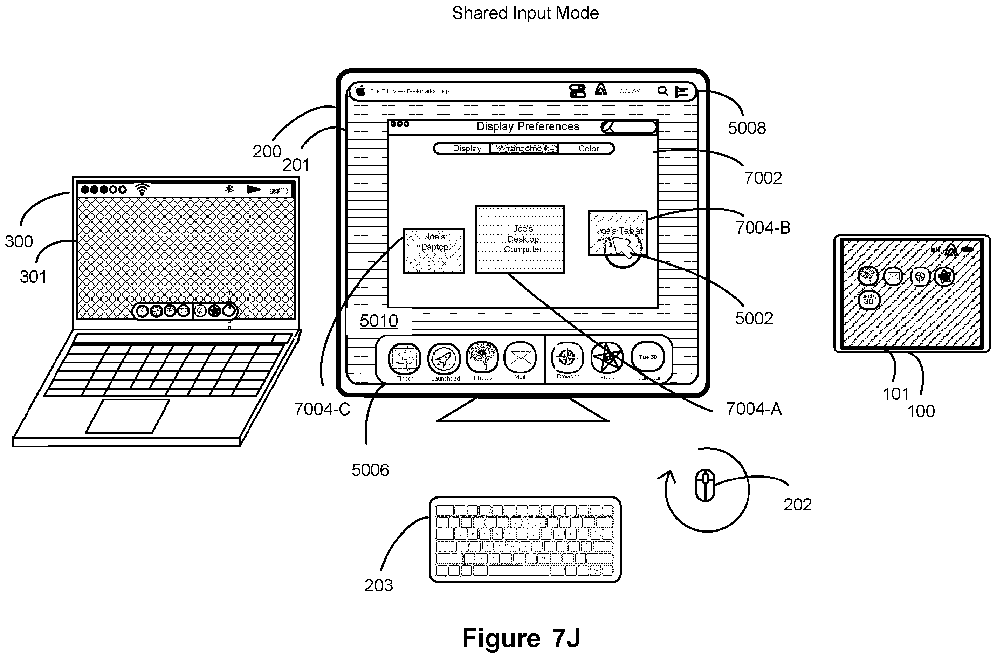

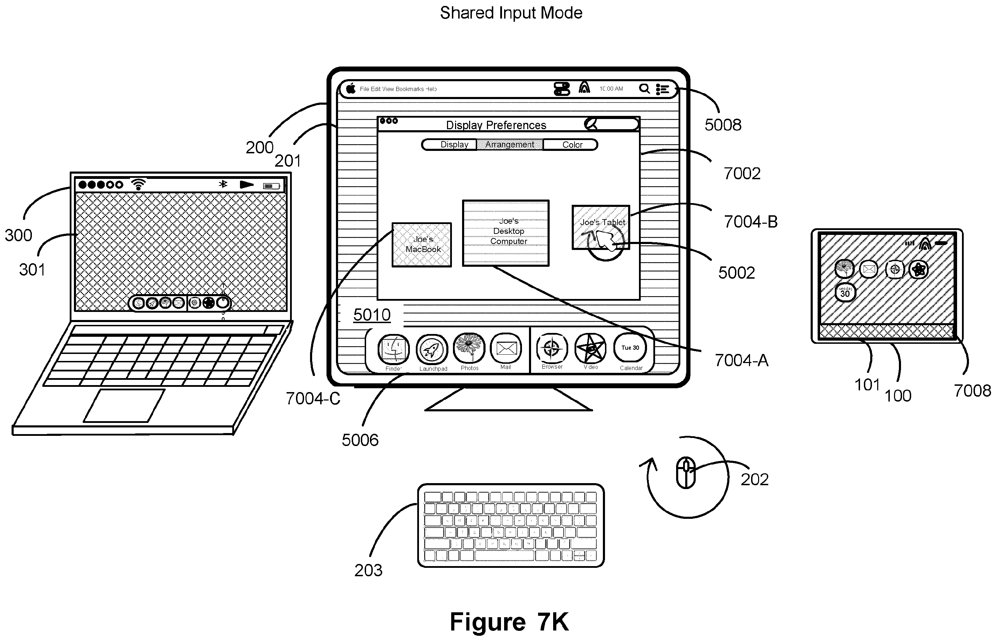

Figures 7J-7K illustrate a user input over a representation of a device in a display preferences user interface causing a display of the respective device to provide an indication, in accordance with some embodiments. In some instances when operating multiple display devices concurrently, a user may find it difficult to recognize the display that is currently displaying cursor 5002 and a method of providing an indication to the user of such display would be useful. In Figure 7J, device 200 is in communication with devices 300 and 200 in the shared input mode. Display preferences user interface 7002 includes representations 7004-A, 7004-B, and 7004-C corresponding to devices 200, 100, and 300, respectively. In Figure 7J, device 200 detects a user input via mouse 202 while cursor 5002 is displayed over representation 7004-B. The user input includes moving mouse 202 on in a predetermined motion. For example, the movement includes circular movement causing cursor 5002 to move in a circular motion (e.g., cursor 5002 is hovering over representation 7004-B). In response to identifying that the user input includes movement in the predetermined motion, and that cursor 5002 is displayed on representation 7004-B, display 101 displays an indication indicating that cursor 5002 is located on display 101. In Figure 7K, the indication includes highlighted bezel region 7008 an of display 101 (e.g., a region of a display that is adjacent to the bezel of device 100). In some embodiments, the indication includes increasing brightness of display 101, a portion of display 101 or a rim of display 101. In some embodiments, the indication is a text notification (e.g., a pop up window).

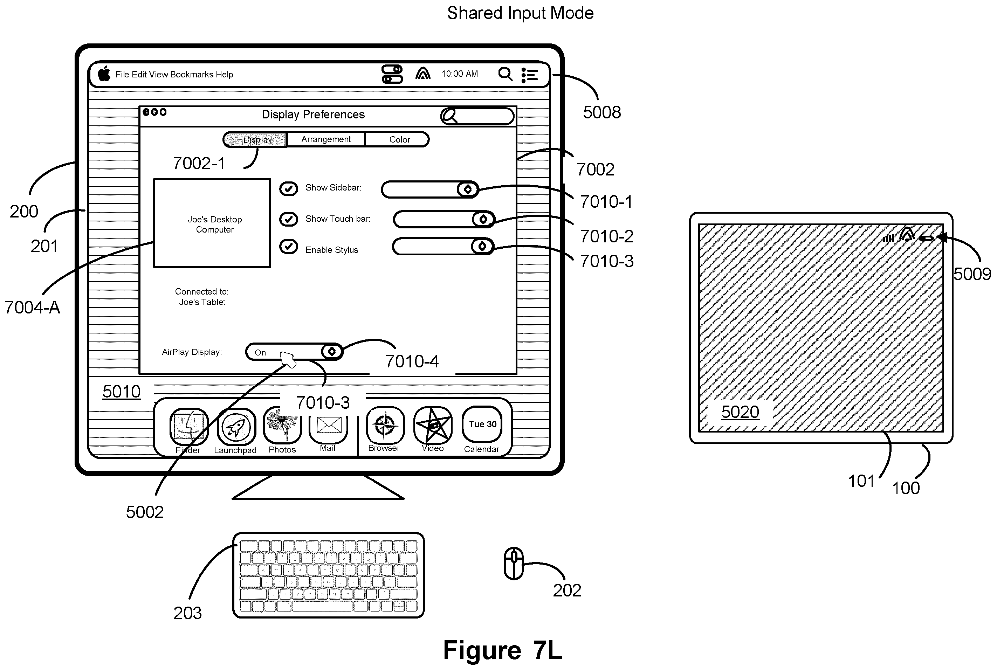

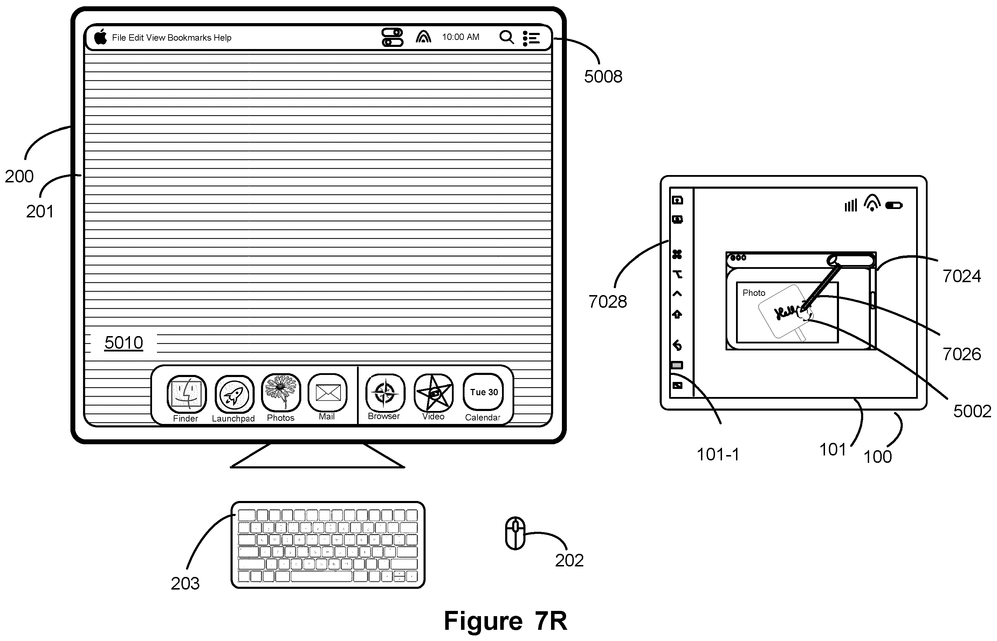

Figure 7L illustrates adjusting display different features of a display in the display preferences user interface, in accordance with some embodiments. In Figure 7L, device 200 display tab 7002-1 of display preferences user interface 7002 for adjusting different aspects of display 201 of device 200. Tab 7002-1 includes a plurality of affordances for disabling and enabling certain operations or features available on device 200, such as affordance 7010-1 for displaying a control strip (e.g., as shown in Figure 7R) for accessing frequently used modifier keys on a touch-screen display, affordance 7010-2 for enabling and disabling a touch-screen bar (e.g., touch-screen bar 6040 shown in Figures 6W-6X), affordance 7010-3 for enabling and disabling using a wireless stylus pen as an input device (e.g., as shown in Figure 7R), and affordance 7010-4 for enabling and disabling content casting (e.g., enabling and disabling a nearby device playing content that is currently playing on the device).

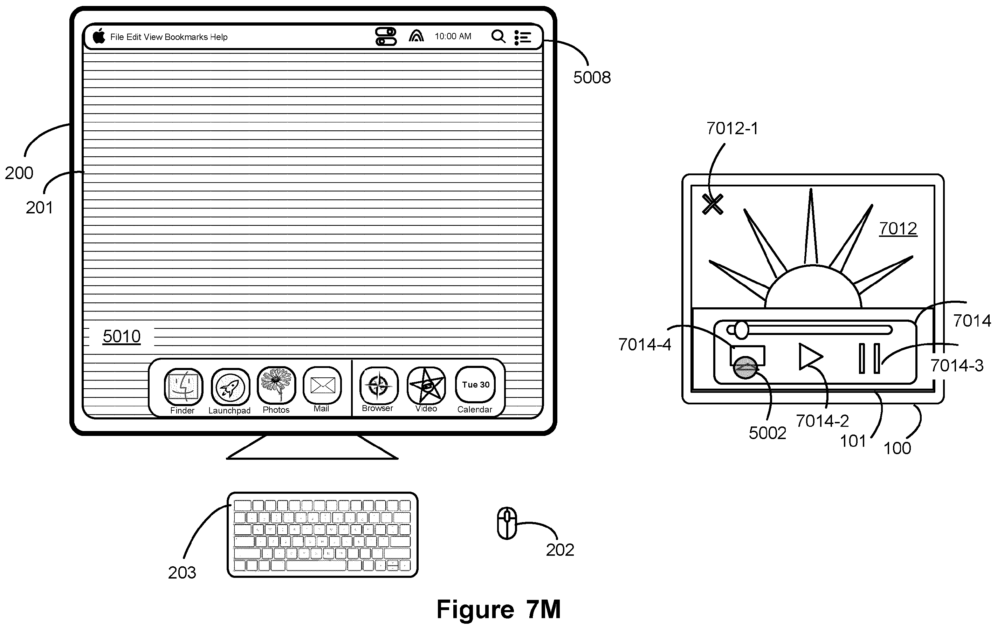

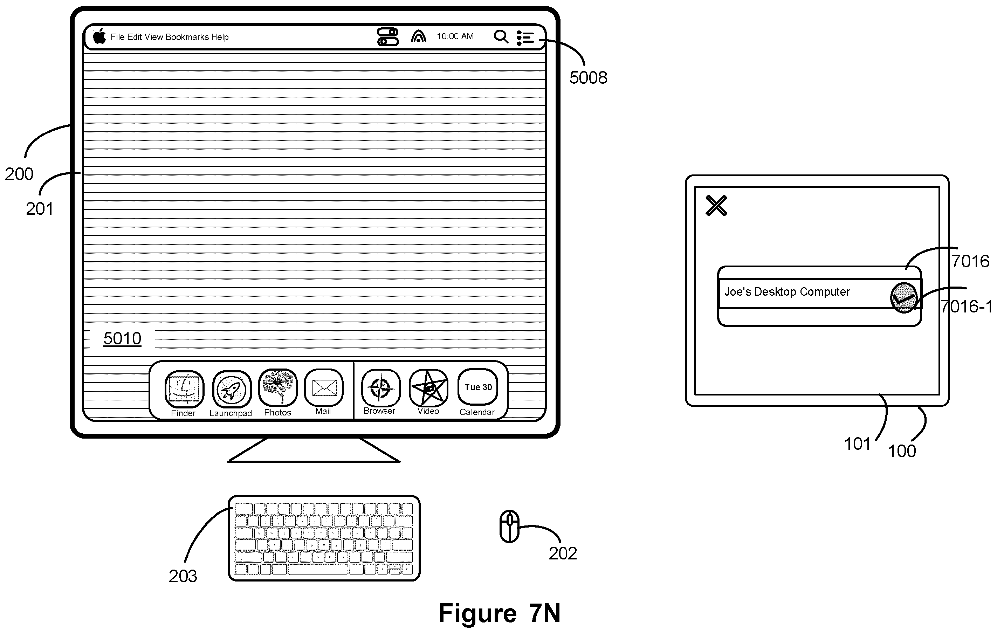

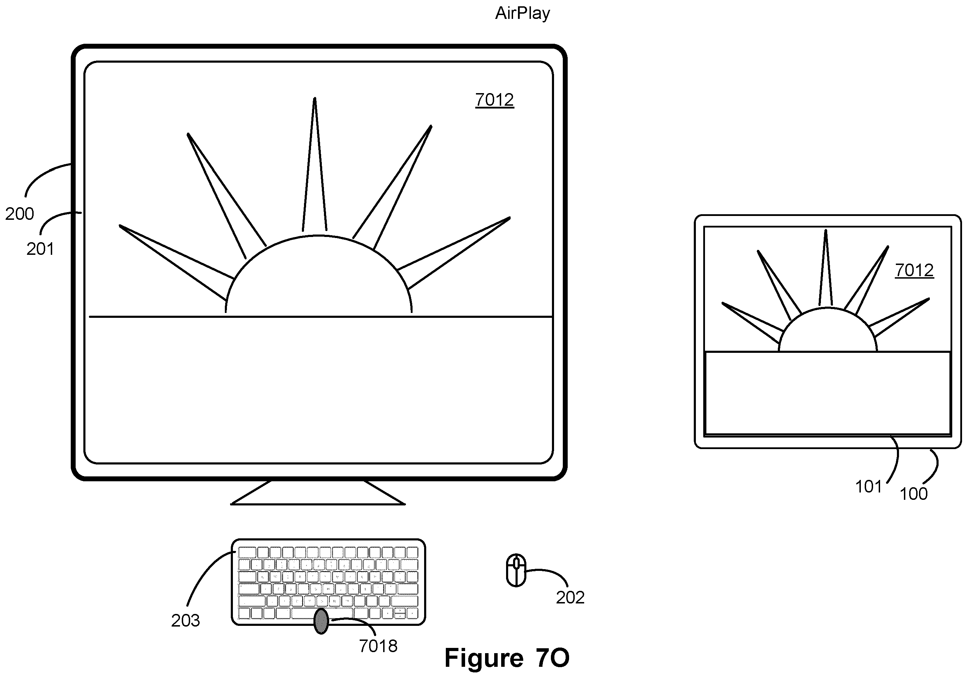

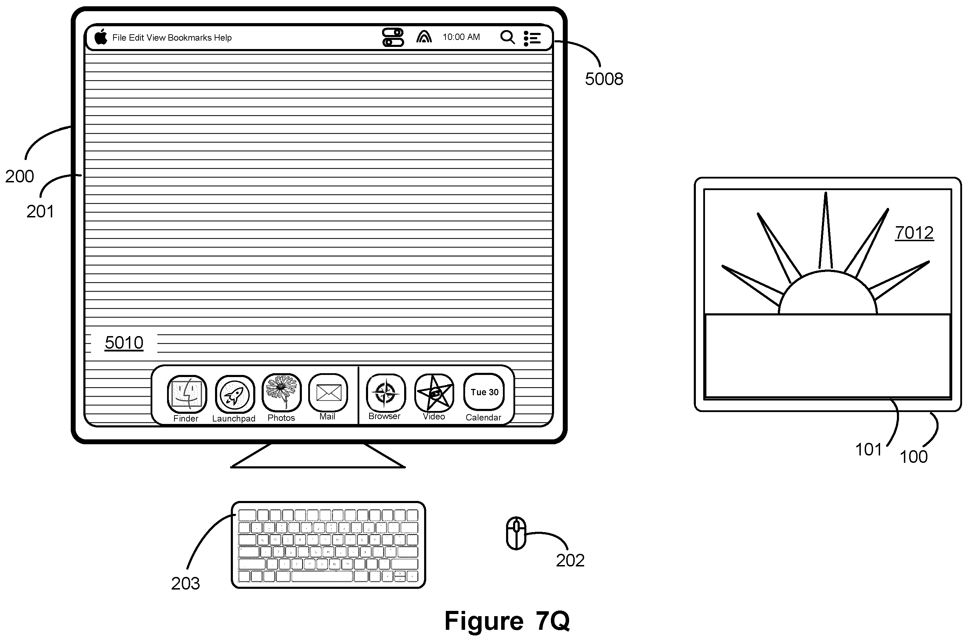

Figures 7M-7Q illustrate streaming content (e.g., displaying video content) from a display of the second device to a display of the first device when the devices are in the shared input mode, in accordance with some embodiments. In Figure 7M, device 200 is in communication with device 200 in the shared input mode. Device 100 is playing video content in video user interface 7012. Video user interface 7012 includes a set of controls, such as affordance 7012-1 for turning off the video content, affordance 7014-2 for playing the video content, affordance 7014-3 for pausing the video content, and affordance 7014-4 for casting the video content that is currently playing to a different device that is in communication with device 100. In Figure 7M, device 100 detects a user input (e.g., a tap gesture) on affordance 7014-4 for enabling casting the video content to a different device. In response to the tap gesture on affordance 7014-4, device 100 displays a user interface including affordance 7016 for selecting the device that the content would be casted to. In Figure 7N, device 100 detects that device 200, identified as "Joe's desktop computer" has been selected. In response to the selection, device 200 streams the video content displayed by device 100 (e.g., displays 101 and 201 play the same video content concurrently). Such streaming allows the user to enjoy viewing the video content from device 100 on a larger sized display of device 200. While device 200 is streaming the video content, other operations of device 200 are set in a locked mode. For example, when in the locked mode, in order to perform any operations on device 200, other than streaming the video content, requires obtaining authentication information (e.g., through passcode entry, or biometric information verification) from the user. In Figure 7O, device 200 detects a user input (e.g., a keystroke by contact 7018) corresponding to a request to unlock device 200. In response to detecting the user input, device 200 ceases to display the video content on video user interface 7012. Instead, device 200 displays a lock screen user interface (e.g., lock screen user interface 7020) including an affordance for entering a passcode (e.g., passcode entry affordance 7022). In some embodiments, the device obtains biometric information from the user for unlocking device 100 (e.g., a fingerprint or a facial recognition). In response to obtaining the passcode (e.g., by entering the passcode via user inputs on keyboard 203), device 200 exits the lock screen user interface 7020 and displays home screen user interface 5010, as shown in Figure 7Q.

Figure 7R illustrates the second display displaying a control strip and receiving input via a stylus input device, in accordance with some embodiments. In some embodiments, the control strip and the stylus input device are enabled using affordances on a display preferences user interface (e.g., as described above with respect to Figure 7L). In Figure 7R, device 100 displays control strip 7028 on display 101. In Figure 7R, control strip 7028 is a bar positioned along edge 101-1 of display 101. In some embodiments, control strip 7028 may be positioned on any other edge of display 101. Control strip 7028 includes a plurality of icons corresponding to frequently used modifier controls (e.g., Command, Option, Control, Shift, Undo, Redo). By displaying these frequently used modifier control on control strip 7029, a user can access such controls without having to navigate buried menus to access these controls when operating multiple displays. In Figure 7R, device 100 also displays photo application user interface 7024 and detects a user input via stylus 7026. In some embodiments, stylus 7026 operates as an input device (e.g., as a wireless pen). When the stylus is physically in contact with display 101, and is dragged along display 101, or moved at a predefined distance above the display (e.g., a hover movement during which the cursor is above the display but does not contact the display) cursor 5002 follows movement of stylus 7026. In some embodiments, stylus 7026 is used to control cursor 5002 movement (e.g., instead of mouse or a touch contact by a user's finger controlling the movement of cursor 5002).

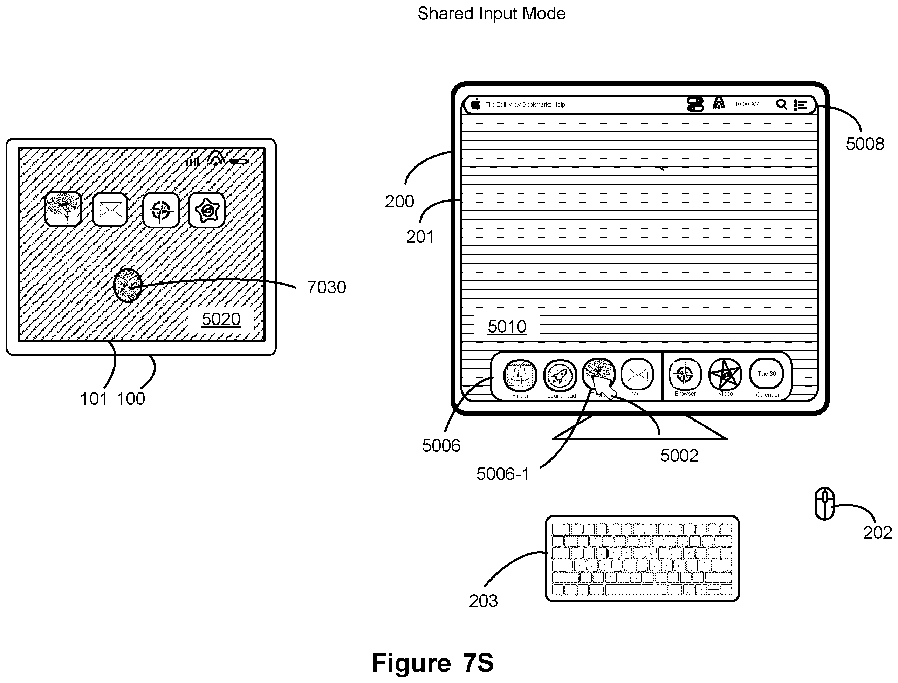

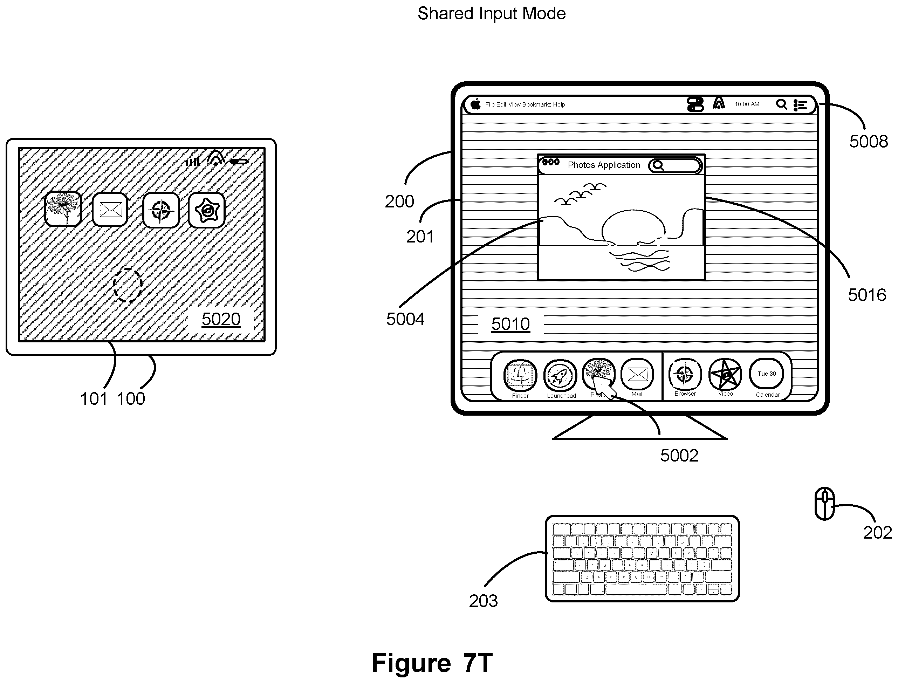

Figures 7S-7T illustrate a user input on the second display (e.g., a touch-screen) of the second device causing an operation on the first display of the first device, in accordance with some embodiments. In some embodiments, operations on a desktop or laptop device can be performed by touch gesture inputs received on a touch-sensitive display of a mobile device (e.g., a tabled device or a mobile phone device), when the mobile device is in communication with the desktop or laptop device in a shared input mode. In Figure 7S, device 200 is in communication with device 100 in the shared input mode. In Figure 7S, cursor 5002 is displayed over an application icon on dock 5006 (e.g., photo application icon 5006-1). While cursor 5002 is displayed over photo application icon 5006-1, device 100 detects a touch input (e.g., contact 7030) on display 101 (e.g., a touch-sensitive display). For example, the touch input of contact 7030 corresponds to a tap gesture. In some embodiments, the touch input of contact 7030 corresponds to a request to select and display the application corresponding to application icon 5006-1 that cursor 5002 is displayed over. In Figure 7T, in response to detection of the touch input on display 101 of device 100, device 200 displays photo application 5016. It is understood that similar to displaying an application user interface in response to a tap gesture while the cursor 5002 is over the respective application icons, also other operations of device 200 can be performed in response to gesture inputs received on display 101 of device 100. For example, gesture inputs received on display 101 of device 100 may be used for providing a selection on affordances or moving user interface objects. The operation to be performed is selected based on the gesture input and the location of the cursor at the time of receiving the gesture input.

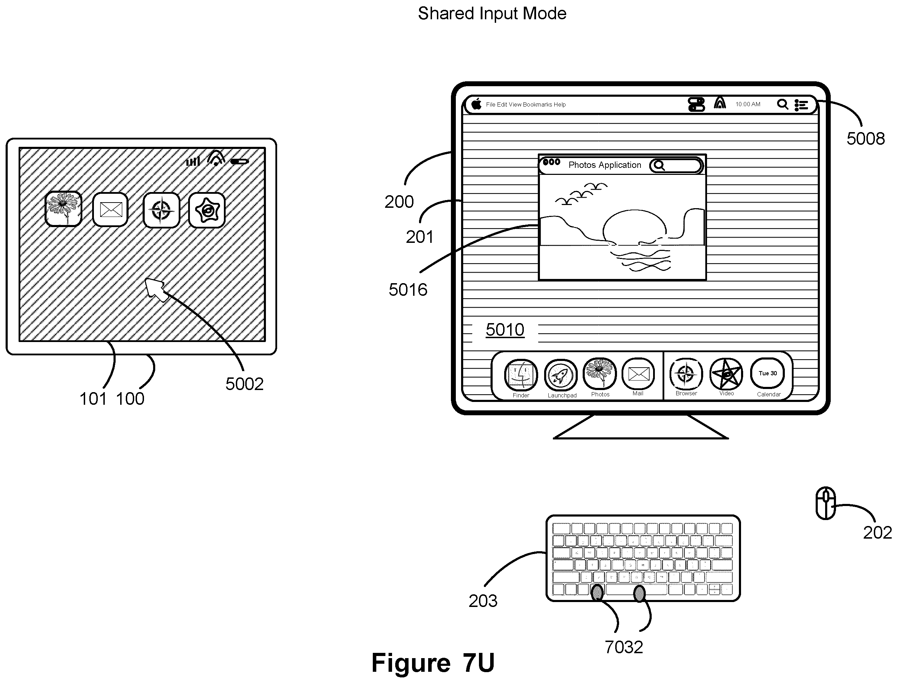

Figures 7U-7Z illustrate a user input on a keyboard causing displaying a search user interface on the first display of the first device or on the second display of the second display based on the position of the cursor when the first device and the second device are in the shared input mode, in accordance with some embodiments. In general, a user may display frequently used user interfaces conveniently by providing user inputs including combinations of keystrokes. When operating multiple devices in the shared input mode, the same user inputs can be used for displaying the same frequently used user interface on a device that is displaying the cursor at the time of receiving a user input. In some embodiments, a keystroke combination (e.g., command + space) causes a device to display a search user interface (e.g., for searching content from the device and/or from a network). In Figure 7U, device 200 is in communication with device 100 in the shared input mode. In Figure 7U, device 200 detects a user input corresponding to a keystroke combination (e.g., contacts 7032 corresponding to press on command and space keystrokes concurrently). The user input is detected while cursor 5002 is displayed on display 101 of device 100. In some embodiments, the user input including contacts 7032 pressing on command and space keystrokes concurrently corresponds to a request to display a search user interface. In response to detecting the user input, device 100 displays corresponding text in

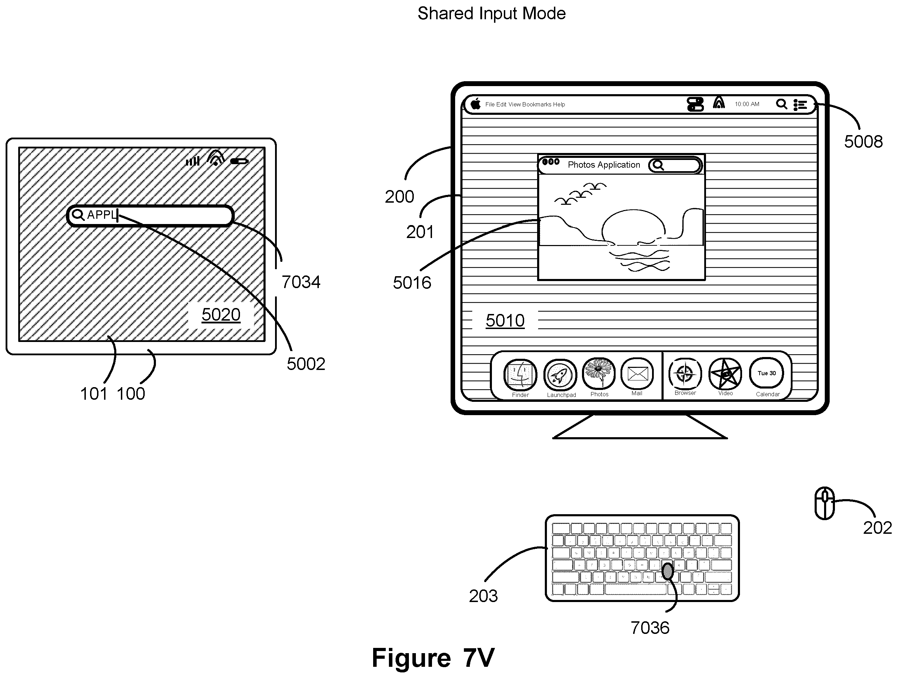

In response to receiving the user input in Figure 7U, device 100 displays search user interface 7034 (e.g., a search input region or a search bar) on top of home screen user interface 5020. While cursor 5002 is displayed on search user interface 7034, device 200 further detects a user input (e.g., textual user input) corresponding to a textual string (e.g., "APPL"). For example, the user input includes a plurality of keystrokes (e.g., press downs on keystrokes by contact 7036) corresponding to a search term "APPL," as shown in Figure 7V. In response to detecting the user input, the corresponding textual string is displayed on the search user interface 7034.

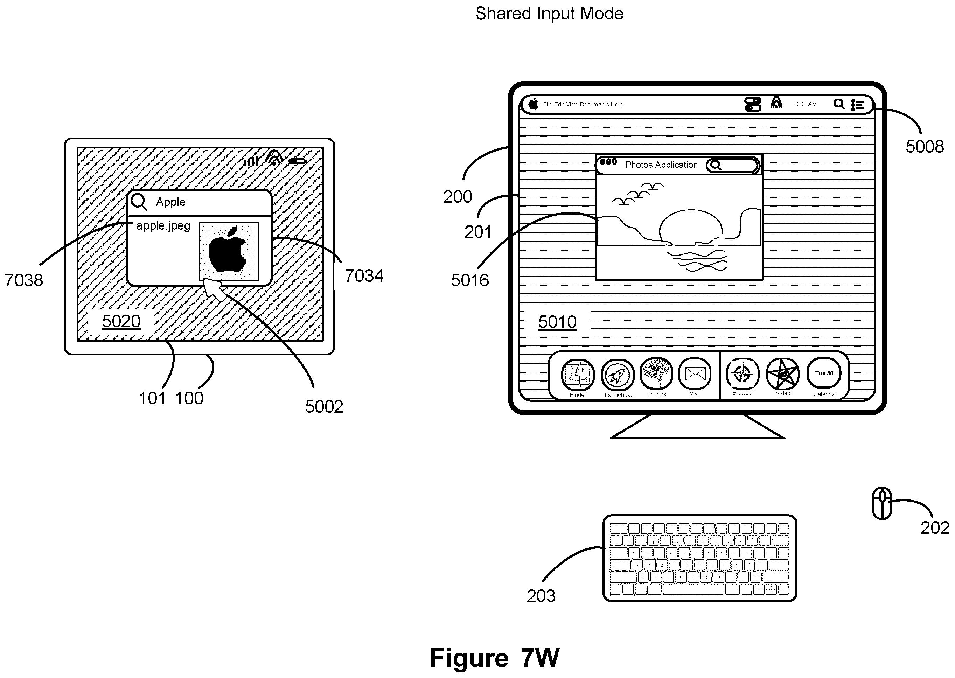

In response to receiving the textual input in search user interface 7034, device 100 (e.g., search module 151 of device 100) performs a search using the textual input as search criteria (e.g., optionally, with other contextual information (e.g., time, location, past searches, past user interactions, etc.) as supplemental search criteria and/or search filters) to identify relevant content corresponding to the search criteria. In some embodiments, the search is performed in search corpora corresponding to different sources of content, including content associated with applications installed on the device (e.g., content and/or data within applications (e.g., files, messages, generated or stored within applications), metadata associated with applications (e.g., application name, application icons, etc.)), content from external sources (e.g., the Internet, on other related devices connected to the device, etc.), files stored on the device and/or stored on a user account associated with the device, etc. In some embodiments, the search is performed in search corpora corresponding to different categories or content types for search results, including images, photos, videos, media files, contacts with contact information (e.g., names, addresses, usernames, aliases, web addresses, social media handles, etc.), applications, actions or operations that can be performed on the device, etc. In some embodiments, the search is updated as the user types the input (e.g., without the user having to select "search" or "return."). In response to detecting the search input (e.g., partial or complete), search user interface 7034 updates (e.g., refreshes or replaces) with search results (e.g., search results 7038) corresponding to the detected search input, as shown in Figure 7W. The search results may include content from a variety of applications on device 100 that are identified as relevant to the search input that was received. In Figure 7W, the search results include a photo object (e.g., search results 7038 including a photo object "apple.jpeg").

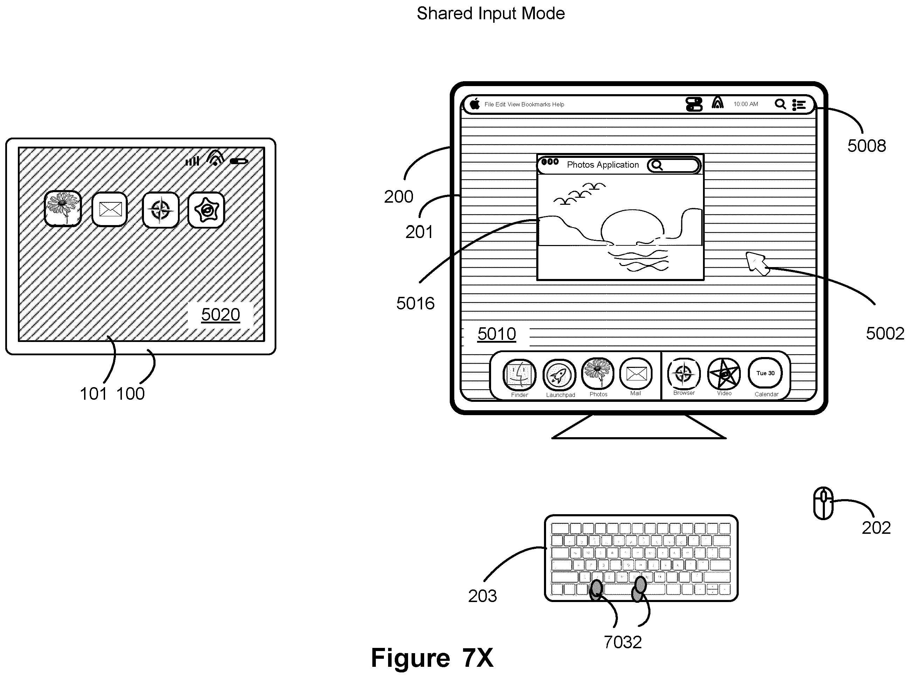

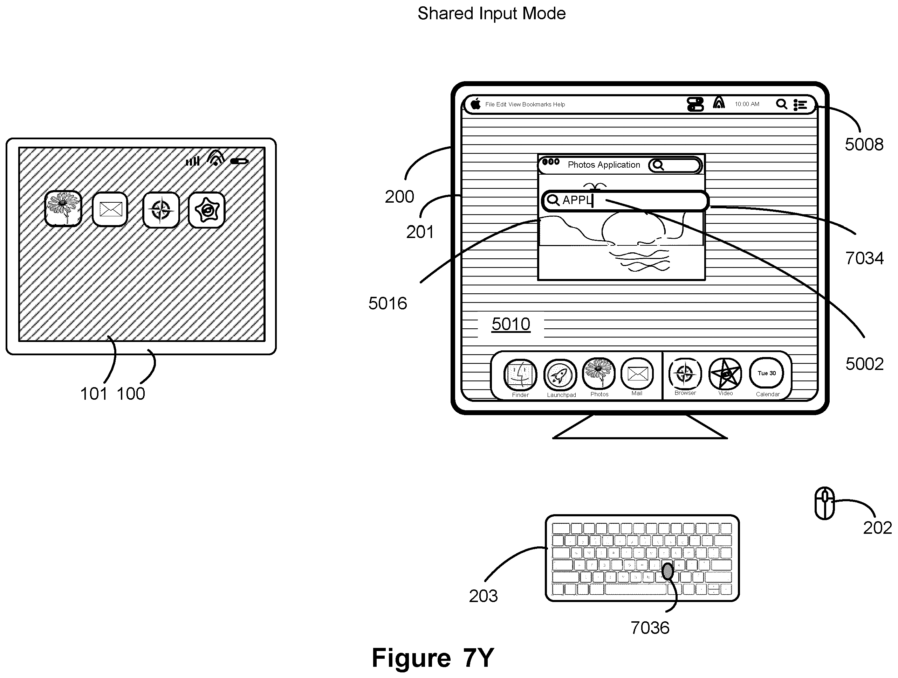

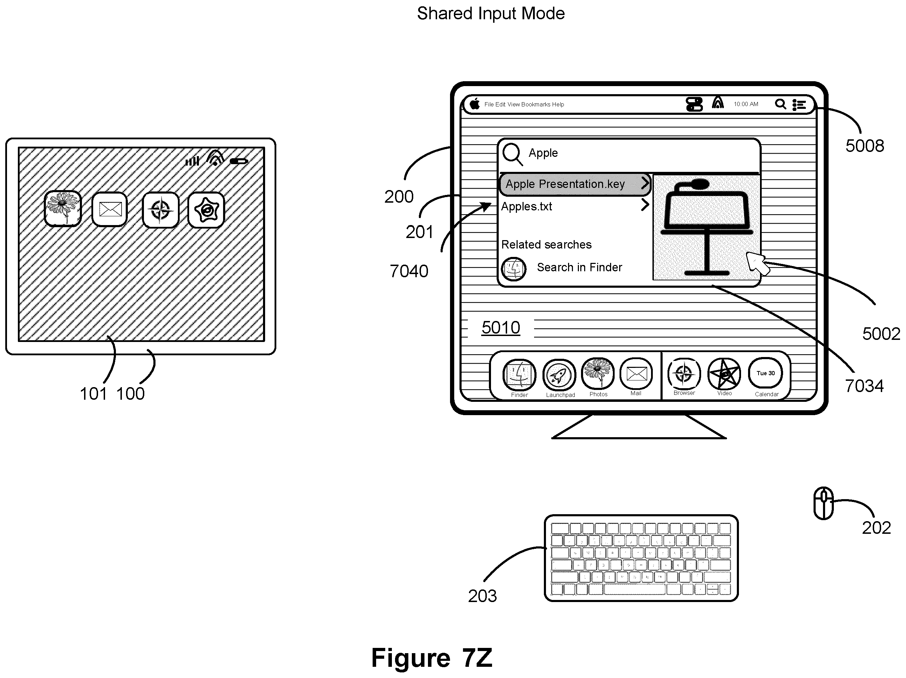

Figures 7X-7Z illustrate similar search operation as described with respect to Figures 7U-7W, but in Figure 7X the user input received vial keyboard 203 (e.g., contacts 7032 corresponding to press on command and space keystrokes concurrently) for displaying the search user interface is detected while cursor 5002 is displayed on display 201 of device 200. In response to the user input detected in Figure 7X, device 200 displays search user interface 7043 (e.g., the search input region) on display 201, as shown in Figure 7Y. In some embodiments, search user interface 7034 is displayed on top of any concurrently displayed user interfaces (e.g., photo application user interface 5016 in Figure 7Y). In Figure 7Y, device 200 detects the same textual user input as in Figure 7V (e.g., the text string "APPL"). In response to receiving the textual input in search user interface 7034, device 200 (e.g., search module 151 of device 200) performs a search using the textual input as search criteria, as described above with respect to the search performed by device 100. In response to detecting the search input, search user interface 7034 updates with search results (e.g., search results 7040) corresponding to the detected search input, as shown in Figure 7Z. In Figure 7Z, the search results include content from a variety of applications on device 200 that are identified as relevant to the search input that was received. In Figure 7Z, the search results include a presentation ("Apple Presentation.key") and a text file ("Apples.txt").

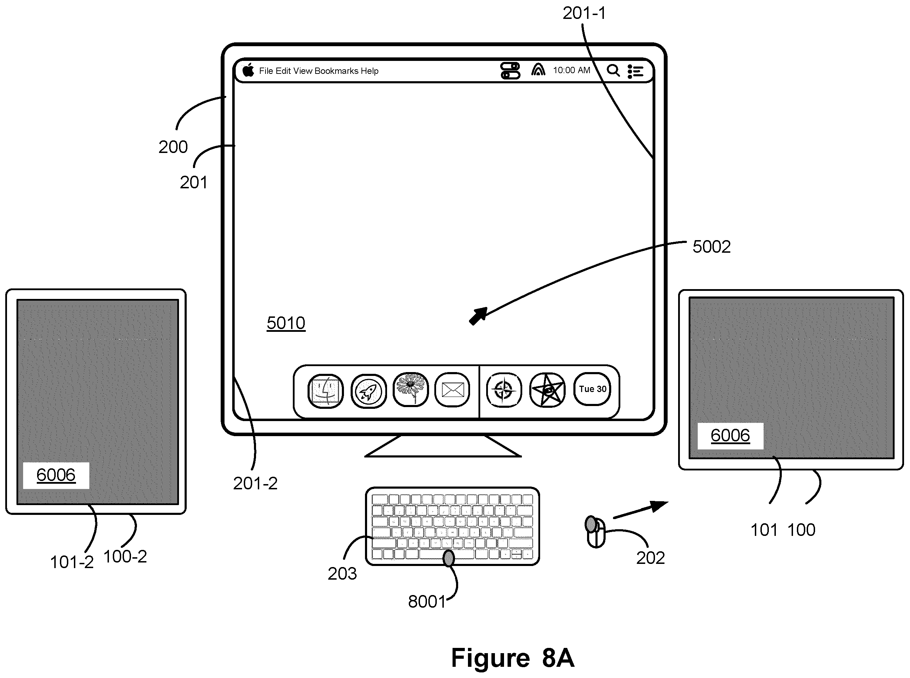

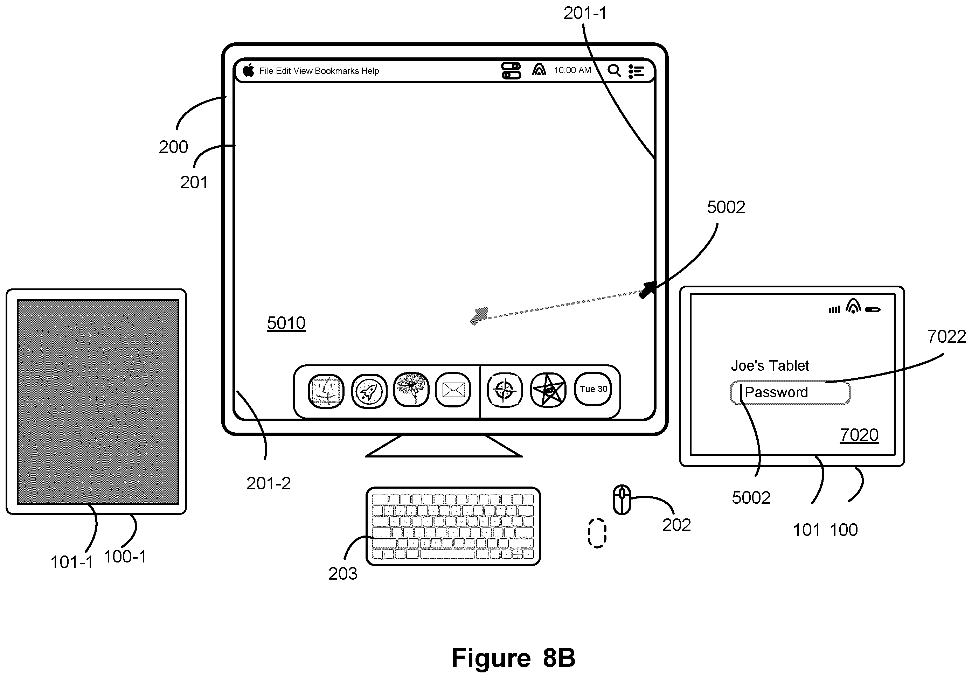

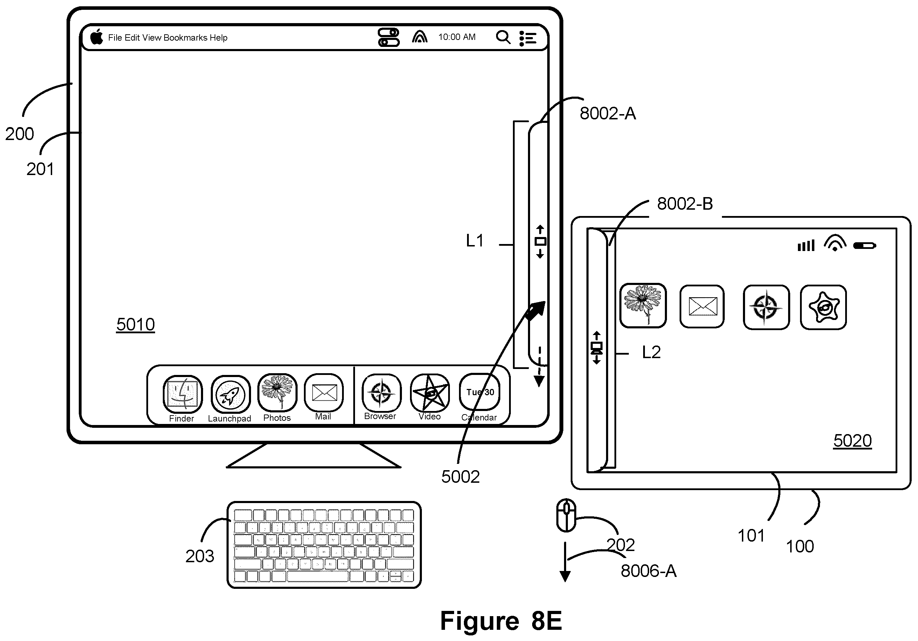

Figures 8A-8C illustrate a user input for displaying moving a cursor from a middle portion of a first display region of a first computer system to an edge region of the first display region and displaying an indication to indicate a location of a portal for moving user interface objects between the first display region and a second display region of a second computer system, in accordance with some embodiments. In Figure 8E, desktop device 200 is in communication with tablet device 100 and tablet device 100-1. Tablet devices 100 and 100-1 are positioned on opposite sides of display 201 (e.g., device 100 is facing edge 201-1 of display 201 and device 100-1 is facing edge 201-2 of display 201). As shown, device 200 is displaying home screen user interface 5010. Devices 200 are in sleep mode 6006 (e.g., a power saving mode or a low-power mode). In some embodiments, when in the sleep mode, the devices have displays turned off (e.g., not lighted) thereby reducing the power consumption of the devices. In Figure 8A, device 200 detects a user input including a movement in the direction indicated with the illustrated arrow (e.g., a press-down and drag on mouse 202). In some embodiments, the user input corresponds to a request to move cursor 5002 in accordance with the movement of mouse 202. In Figure 8B, device 200 has moved cursor 5002 in accordance with the movement of mouse 202 toward edge 201-1 (e.g., an edge region corresponding to a region in the vicinity of edge 201-1). In response to the movement toward edge 201-1, device 200 facilitates waking up one of the devices that device 200 is in communication with from sleep mode 6006 and initiates displaying a lock screen user interface (e.g., lock screen user interface 7020 on display 101) in accordance with a determination that which device is the most recently used device. In some embodiments, in accordance with a determination of the most recently used device, device 200 provides information to that device that causes the most recently used device to wake up from the sleep mode 6006 and display lock screen user interface 7020. In some embodiments, a most recently used device includes a device that has detected inputs from a user most recently or that was displaying the cursor most recently. In some embodiments, the most recently used device is not determined based on receiving notifications or generating (e.g., application related) notifications. In Figure 8B, device 100 has been determined to be the most recently active device out of device 100 and 100-1 but it is understood that the device could have also been device 100-1 (e.g., the relative position of the device is not a determining factor for waking up the most recently used device). In some embodiments, device 100 exits lock screen user interface 7020 in response to detecting a user input and/or in response to receiving authentication information (e.g., a passcode on passcode entry affordance 7022 or biometric information).

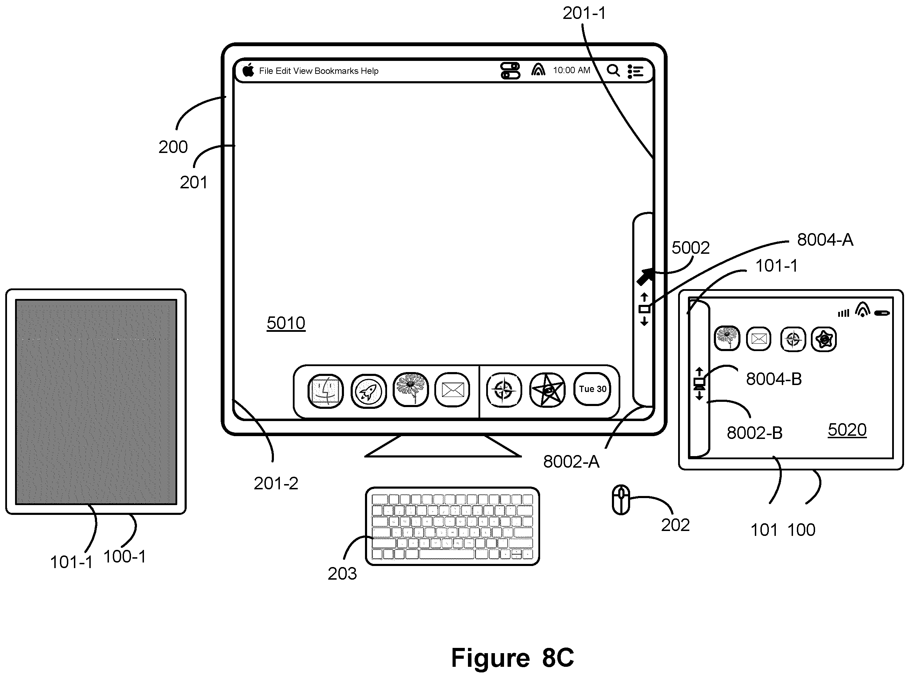

In Figure 8C, device 100 has exited speed mode user interface 6006 and is displaying home screen user interface 5020. As explained above, when device 100 is displaying home screen user interface 5020 and devices 100 and 200 are in communication with each other (e.g., in the shared input mode or the extended display mode), either directly or indirectly, user interface objects can be moved (e.g., dragged) between displays 101 and 201 via a portal on edges of displays 101 and 201. The portal refers to a portion of the respective edges of displays 101 and 201 that allows moving user interface objects between displays 101 and 201 (e.g., any of the operations described above with respect to Figures 5A-5T). In accordance with a determination that user interface objects can be moved between displays 101 and 201 via a portal, device 200 displays an indication (e.g., an indication user interface) that indicates a location of such portal on display 201 and/or display 101. In some embodiments, the indication of the portal includes indication 8002-A (e.g., a first portion of the indication of the portal) displayed along the edge of display 201 that can be crossed for moving user interface objects from display 201 to display 101 (e.g., edge 201-1 in Figure 8C). In some embodiments, indications 8002-A and 8002-B are displayed while device 100 is a locked mode. For example, indication 8002-B is displayed on lock screen user interface 7020 of device 100 in Figure 8B. In some embodiments, indication 8002-A corresponds to indication 5014-A described above with respect to Figures 5A-5C. In In some embodiments, the indication of the portal includes indication 8002-B (e.g., a second portion of the indication of the portal) displayed along the edge of display 101 (e.g., edge 101-1) that can be crossed for moving user interface objects from display 101 to display 101. In some embodiments, indications 8002-A and 8002-B optionally include representations of the devices that the respective portal can be used to drag user interface objects to (e.g., representation 8004-A in indication 8002-A corresponding to a picture representing device 100 and representation 8004-B in indication 8002-B corresponding to a picture representing device 200). In some embodiments, representation 8004-A is displayed in indication 8002-A while representation 8004-B is not displayed. In some embodiments, representation 8004-B is displayed in indication 8002-B while representation 8004-A is not displayed. In some embodiments, indications 8002-A and 8002-B include names of the devices that the respective portal can be used to drag user interface objects to. In some embodiments, indications 8002-A and 8002-B have a length along the edges that correspond to a length of edge 101-1 of display 101 which is the smaller display of the two displays. In some embodiments, indication 8002-A has a first length and indication 8000-B has a second length that is distinct from the first length. For example, indications 8002-A and 8002-B have preset lengths at the time that the communication between the devices is established. In some embodiments, indications 8002-A and 8002-B have preset locations along the respective edges at the time that the communication between the devices is established. However, as seen in Figure 8C, in some instances, the locations and/or sizes of indications 8002-A and 8002-B are not matched (e.g., are not aligned). In such instances, a cursor or a user interface object being dragged between the different displays would not move smoothly as projected by a movement of mouse 202. For example, when the cursor moves from a first location on display 201 to a first location on display 201 in accordance with a linear, continuous movement mouse 202, instead of transitioning linearly from the first location on display 201 to the first location on display 101, the cursor makes a jump between the displays. Such behavior may reduce the user's experience with operating two displays concurrently. The operations described with respect to Figures 8E-8AJ illustrate means for adjusting the positions of the portal for displaying continuous movement of objects between different displays.

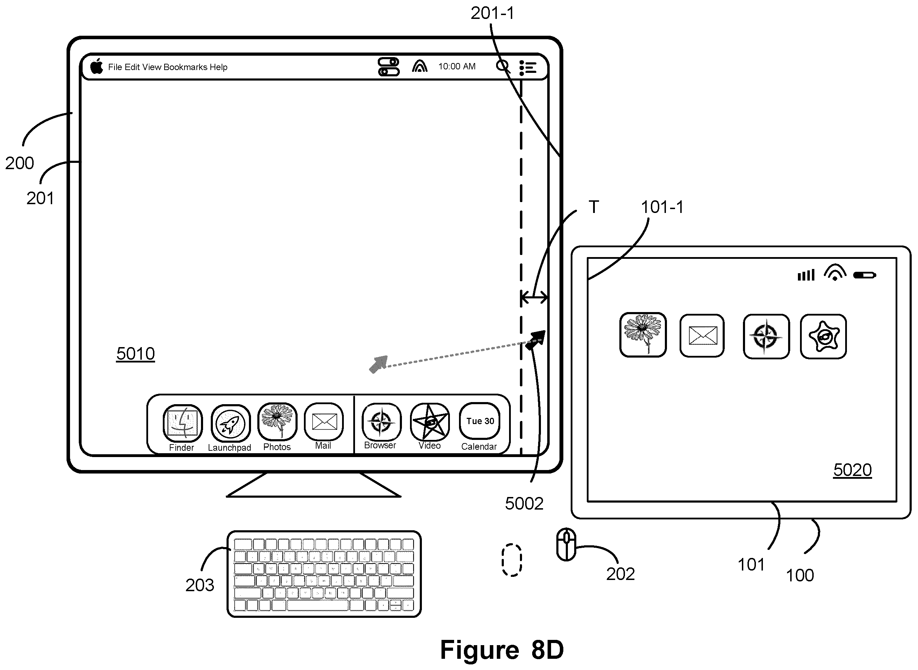

Figure 8D illustrates an edge region that can be reached by the cursor for initiating displaying the indication for the location of the portal, in accordance with some embodiments. In some embodiments, displaying indication 7002-A and/or indication 7002-B is initiated in accordance a determination that cursor 5002 has been moved to an edge region of a display in accordance with a movement of an input. In Figure 8D, device 200 has detected an input on mouse 202 corresponding to a request to move cursor 5002 in accordance with the movement of the mouse. In Figure 8D, cursor 5002 has been moved from a middle portion of display 201 toward edge 201-1 of display 201. In some embodiments, device 200 initiates displaying indication 7002-A in accordance with a determination that cursor 5002 has reached edge 201-1 (e.g., cursor 5002 is displayed adjacent to edge 201-1 or appears to be touching edge 201-1). In some embodiments, device 200 initiates displaying indication 7002-A in accordance with a determination that cursor 5002 has reached a threshold distance (e.g., threshold distance T in Figure 8D) (e.g., cursor 5002 is at least partially displayed within an edge region that extends from edge 201-1 toward the middle of display 201 by distance T). In some embodiments, device 200 initiates displaying indication 7002-A in accordance with a determination that cursor 5002 has reached a location on edge 201-1 (or the edge region extending from edge 201-1) and has remained at that location for a duration of time (e.g., the movement of cursor 5002 has been paused) that is longer than a threshold duration for initiating displaying indication 7002-A. In some embodiments, indication 7002-B is displayed concurrently with indication 7002-A (e.g., displaying indication 7002-B is initiated concurrently with initiating displaying indication 7002-A). In some embodiments, device 200 generates indications 7002-A and 7002-B. In some embodiments, device 200 provides information to device 100 that causes device 100 to display indication 8002-B concurrently with display 201 displaying indication 8002-A.

Figures 8E-8L illustrate user inputs causing changing sizes and/or locations of indications of the portal for moving user interface objects between different displays, in accordance with some embodiments. In Figure 8E, device 200 displays indication 8002-A along edge 201-1 of display 201 and indication 8002-B along edge 101-1 of display 101. In Figure 8E, while displaying cursor 5002 on indication 8002-A, device 200 detects an input on mouse 202. In some embodiments, the input includes movement 8006-A in the direction indicated with the arrow. In some embodiments, the input corresponds to a request to move and/or change a size of indication 5002-A in accordance with the movement of mouse 202. In some embodiments, the input corresponds to a request to move and/or change a size of indication 5002-B in accordance with the movement of mouse 202. In some embodiments, the input corresponds to a request to move and/or changes sizes of indications 5002-A and 5002-B concurrently. In some embodiments, the input corresponds to a request to move and/or change the size of an indication that is displayed on display 201 or display 101 which ever has a larger size (e.g., display 201 of device 200 has a larger size than display 101 of device 100 in Figure 8E). In Figure 8E, indication 8002-A has size L1 (e.g., size L1 referring to a length of indication 8002-A along edge 201-1) and indication 8002-B has size L2 (e.g., size L2 referring to a length of indication 8002-B along edge 101-1). In some embodiments, size L1 corresponds to size L2 (e.g., L2 corresponding to the full length of edge 101-1 of device 100). In some embodiments, size L1 is different from size L2 (e.g., L1 and L2 are based on preset lengths).

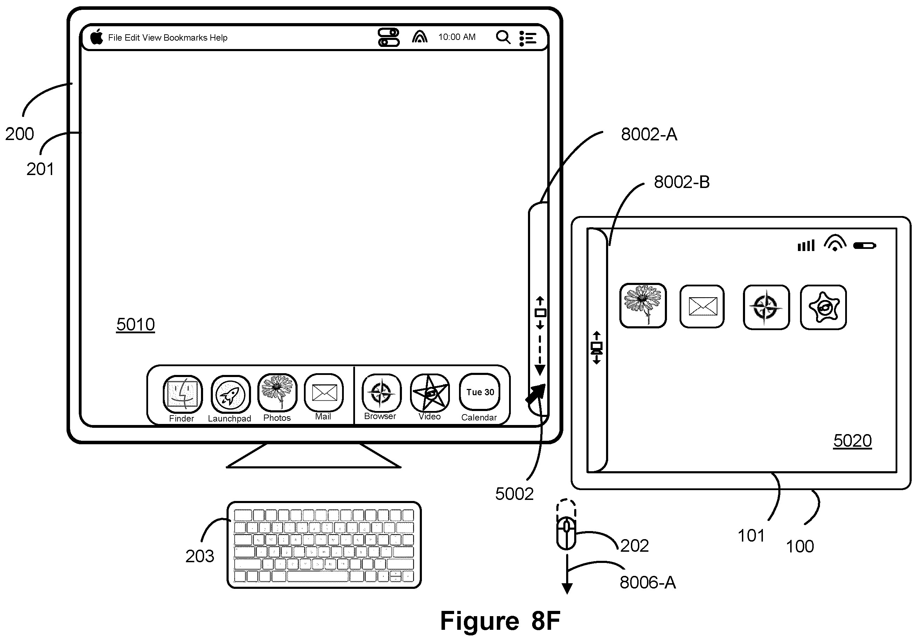

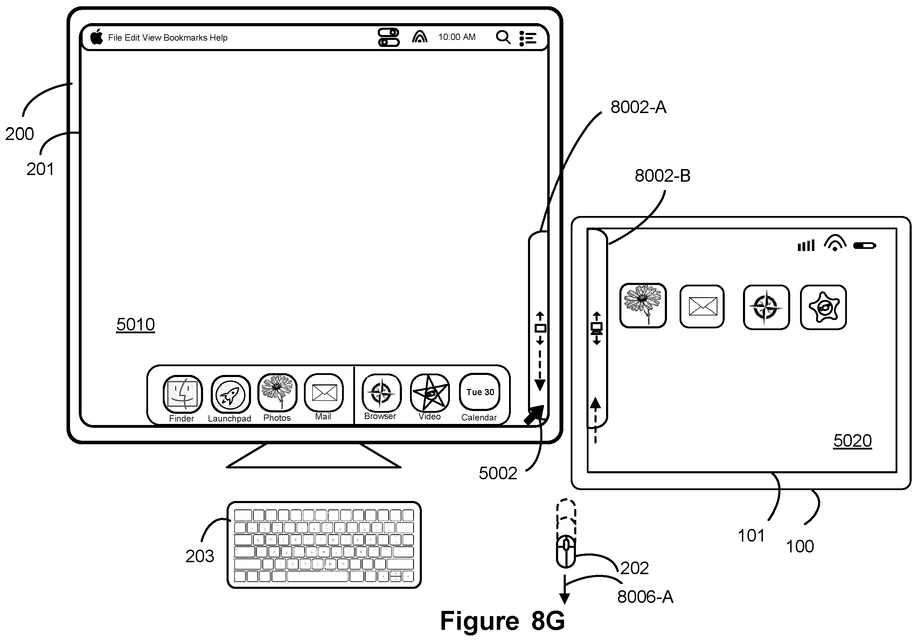

In Figure 8F, device 200 has detected movement 8006-A of mouse 202. In accordance with the movement, cursor 5002 and indication 8002-A have been moved downwards along edge 201-1 (e.g., a relative position of cursor 5002 on indication 8002-A is maintained). In Figure 8G, device 200 has detected further movement 8006-A of mouse. In accordance with the movement, cursor and indication 8002-A have been downwards along edge 201-1. As shown, indication 8002-A has reached the bottom edge of display 201-1. In response to reaching the bottom edge, device 200 has reduced the size (e.g., length along edge 201-1) of indication 8002-A so that size of indication 8002-A in Figure 8G is less than size L1 shown in Figure 8E. In Figure 8G, a top edge of indication 8002-A has reached a location substantially corresponding to a location of a top edge of indication 8002-B in the vertical direction. In some embodiments, in response to a determination that the top edge of indication 8002-A has reached the location of the top edge of indication 8002-B in the vertical direction, device 200 holds the locations of the top edge of indication 8002-A and the top edge of indication 8002-A (e.g., the locations of the top edges are "locked") as long as device 200 does not detect a user input requesting not to hold the locations. For example, device 200 holds the locations of top edges, and continues to move the bottom edges of the respective indications in an instance where device 200 continues to detect movement 8006-A of mouse 202. However, in response to detecting a movement of mouse 202 in the opposite direction of movement 8006-A (e.g., the user wishes to move cursor 5002 upwards), device 200 would release the hold on the locations of the top edges of indications 8002-A and 8002-B.

Even after indication 8002-A has reached the bottom edge of display 201, device 200 detects movement 8006-A (e.g., the user input continues in the direction indicated with the arrow). In response, concurrently with continuing to reduce the size of indication 8002-A, device 200 provides information to device 100 that causes device 100 to reduce a size of indication 8002-B (e.g., a bottom edge of indication 8002-B is moved up in Figure 8G). In some embodiments, device 200 further detects movement of mouse 202 in a direction that is opposite to the direction of movement 8006-A. In accordance with the movement of mouse 202 in the direction opposite to movement 8006-A, device 200 facilitates resizing and/or changing the location of one or both of indications 8002-A and 8002-B. For example, in accordance with the movement of mouse 202 in the direction opposite to movement 8006-A, device 200 facilitates increasing the size of indication 8002-A and/or moving indication 8002-A upwards along edge 201-1. In some embodiments, the device continues to change the sizes and/or locations of one or both of indications 8002-A and 8002-B in accordance with user inputs including movement in a direction corresponding to a movement of cursor 5002 moving up or down within indication 5002-A. In some embodiments, subsequent to a respective indication reaching a top edge or a bottom edge a display and in response to device 200 detecting a continuing movement of mouse 202 toward or beyond the direction of the edge that has been reached, device 200 increases the size of the respective indication. For example, in an instance where indication 8002-A has reached the bottom edge of display 201 as shown in Figure 8G, and device 200 detects continuation of movement 8006-A (e.g., a user is trying to drag indication 8002-A beyond the bottom edge of display 201), device 200 expands the size of indication 8002-A. In some embodiments, displays 201 and 101 display the movements of indications 8002-A and 8002-B, as described with respect to Figures 8D-8G, as an animation. For example, changing the sizes and/or locations of indications 8002-A and 8002-B is displayed as a continuous animation.

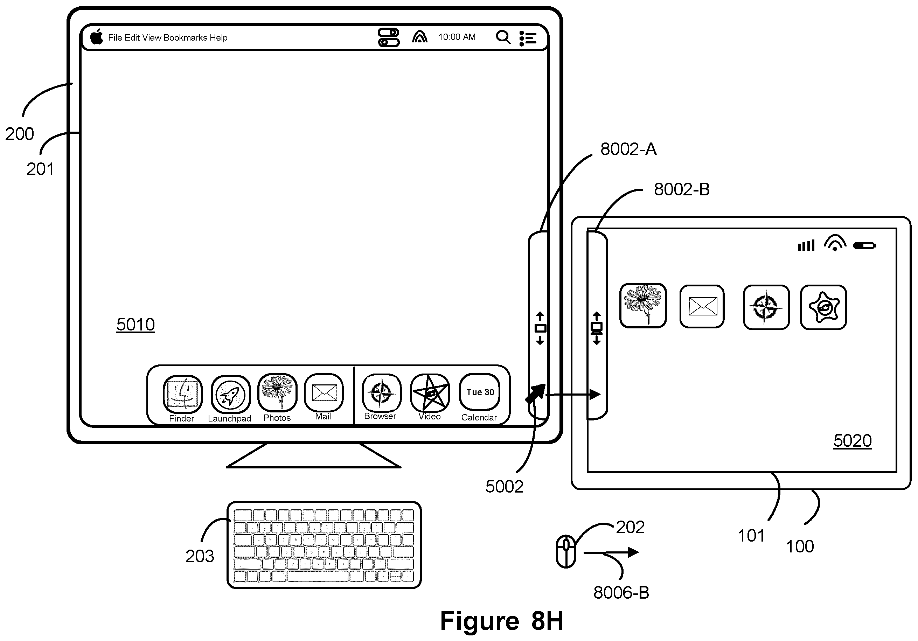

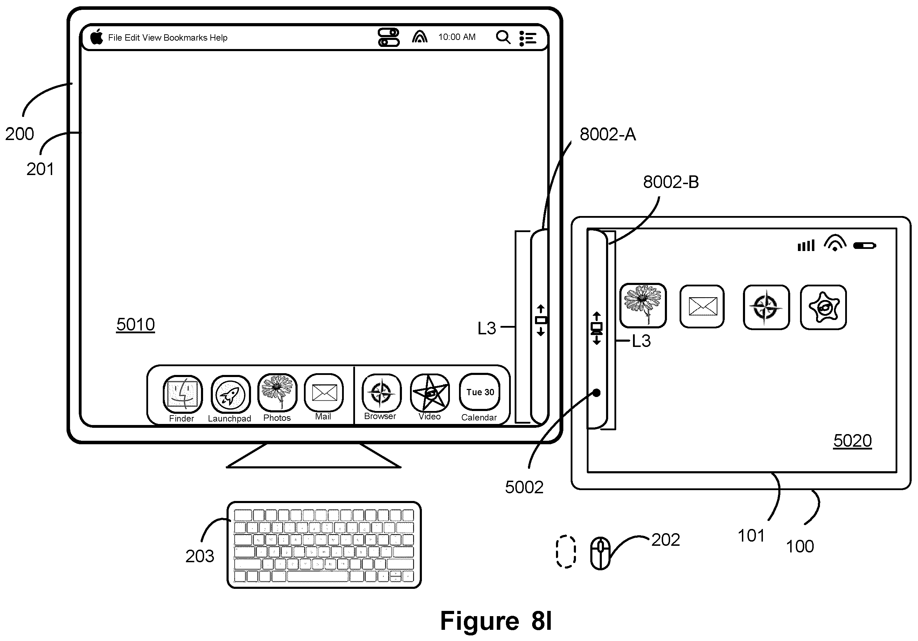

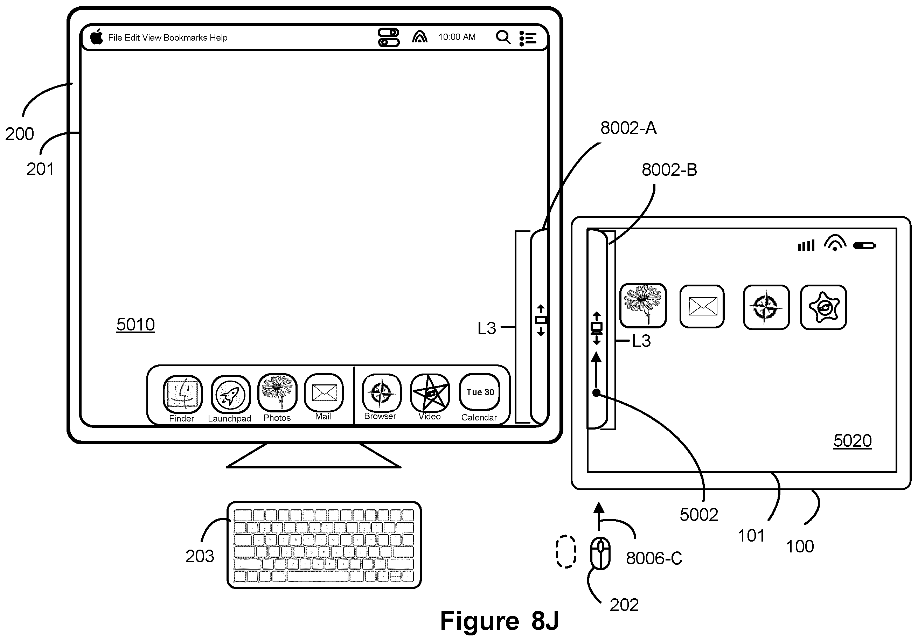

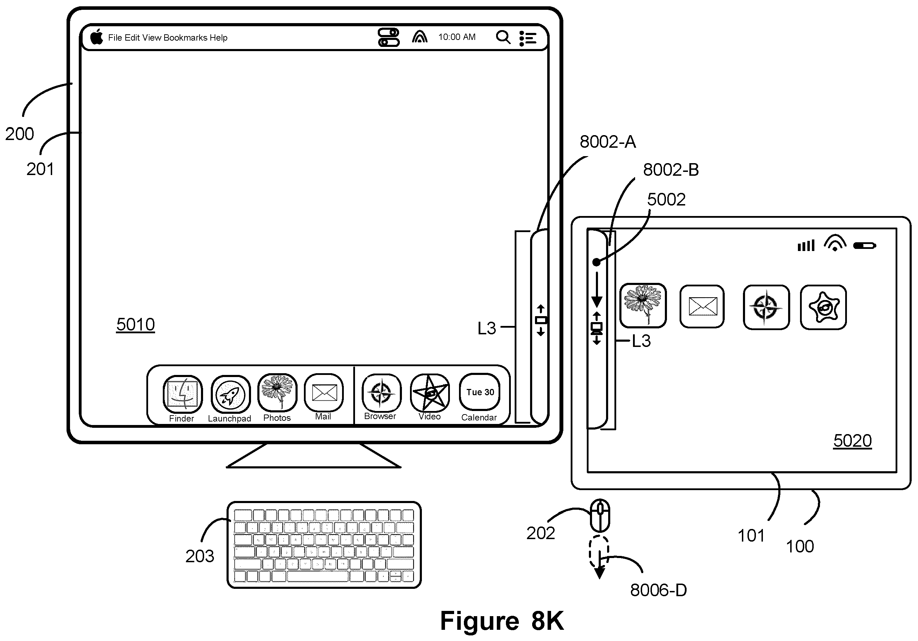

In Figure 8H, indications 8002-A and 8002-B have reached corresponding sizes and locations. For example, indication 8002-A has substantially the same size and substantially the same vertical location (e.g., a vertical location along parallel edges 201-1 and 101-1) as indication 8002-B. In some embodiments, the locations and/or sizes are held by device 200 as longs as no user interface corresponding to a request to not to hold the locations and/or sizes is detected. In Figure 8H, device 200 detects a user input including movement 8006-B having a direction that is substantially perpendicular to the direction of movement 8006-A. In some embodiments, movement 8006-B corresponds to a request to move cursor 5002 from indication 8002-A to indication 8002-B (e.g., crossing the portal between displays 201 and 101). In accordance with movement 8006-B, device 200 facilitates displaying moving cursor 5002 from indication 8002-A to indication 8002-B, as shown in Figure 8I. In some embodiments, cursor 5002 has a first appearance (e.g., cursor 5002 is an arrow in Figure 8H) on display 201 and cursor 5002 has a second appearance (e.g., cursor 5002 is a dot in Figure 8I) on display 101. In Figure 8J, device 100 (or alternatively device 200 detects) a user input including movement 8006-C. In some embodiments, device 200 and device 100 are both in communication with the input devices (e.g., mouse 202 and keyboard 203). In some embodiments, inputs received via the input devices are detected by a respective device that is currently active (e.g., is currently displaying cursor 5002). In some embodiments, inputs received via the input devices are detected by device 200 and device 200 provides information regarding the detected inputs to device 100, when cursor 5002 is displayed on display 101, causing device 100 to perform operations on display 101 in accordance with the detected inputs. In some embodiments, the user input with movement 8006-C corresponds to a request to move cursor 5002 in the direction of movement 8006-C (e.g., upwards along indication 8002-C). In Figure 8K, device 100 detects a user input including movement 8006-D. In some embodiments, the user input with movement 8006-D corresponds to a request to move cursor 5002 in the direction of movement 8006-D (e.g., downwards along indication 8002-C). In some embodiments, moving cursor 5002 up and down within indication 8002-A or indication 8002-B has a first movement resistance (e.g., impeding or slowing of the movement) and moving the cursor from left to right or right to left so that cursor 5002 would exit a respective indication has a second movement resistance. In some embodiments, the second movement resistance is greater than the first movement resistance. In some embodiments, a movement resistance refers to slowing down or impeding the proportional movement of the cursor in response to the movement of the input. For example, the cursor moves proportionally less for a given amount of input movement (e.g., movement of a contact on a touchpad or movement of a mouse) when resistance is higher than when resistance is slow. In some embodiments, with a normal resistance when mouse 202 moves a distance corresponding to distance X, cursor 5002 moves distance Y on the display. With a higher resistance, when mouse 202 moves distance X, cursor 5002 moves distance Z, where distance Z is less than distance Y.

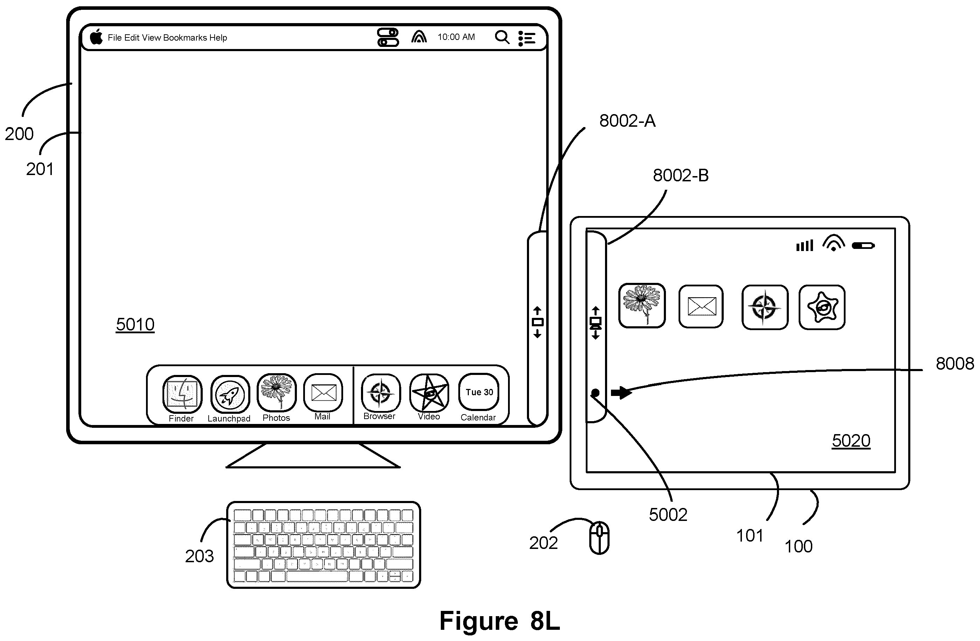

Figure 8L illustrates providing an indication for a location of the cursor while displayed within a respective indication for the portal, in accordance with some embodiments. In Figure 8L, device 100 detects a pause in the movement of mouse for a duration of time that is longer than a threshold duration of time for displaying an indicator (e.g., indicator 8008) for indication a location of cursor 5002. In response to detecting the pause, display 101 is displaying indication 8008.

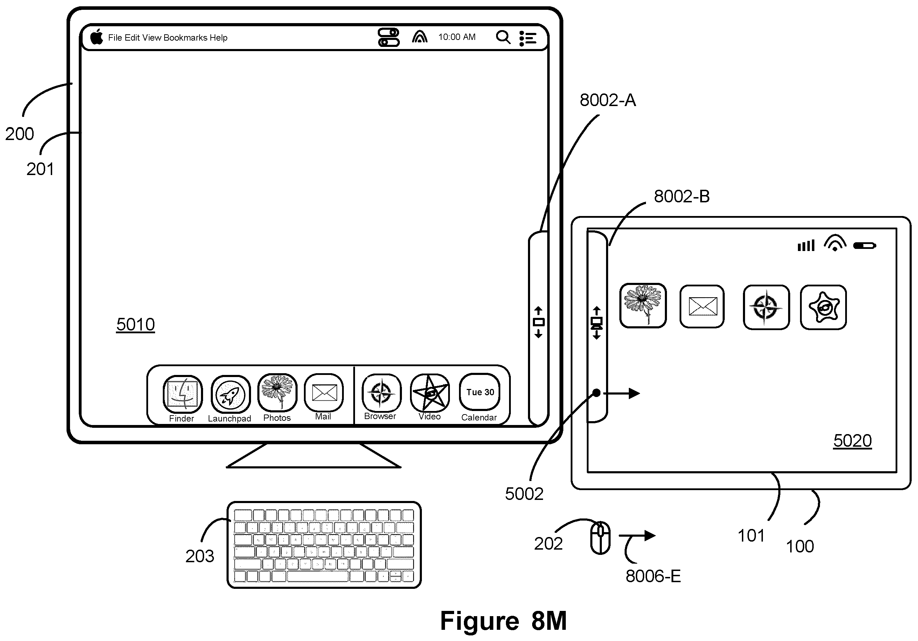

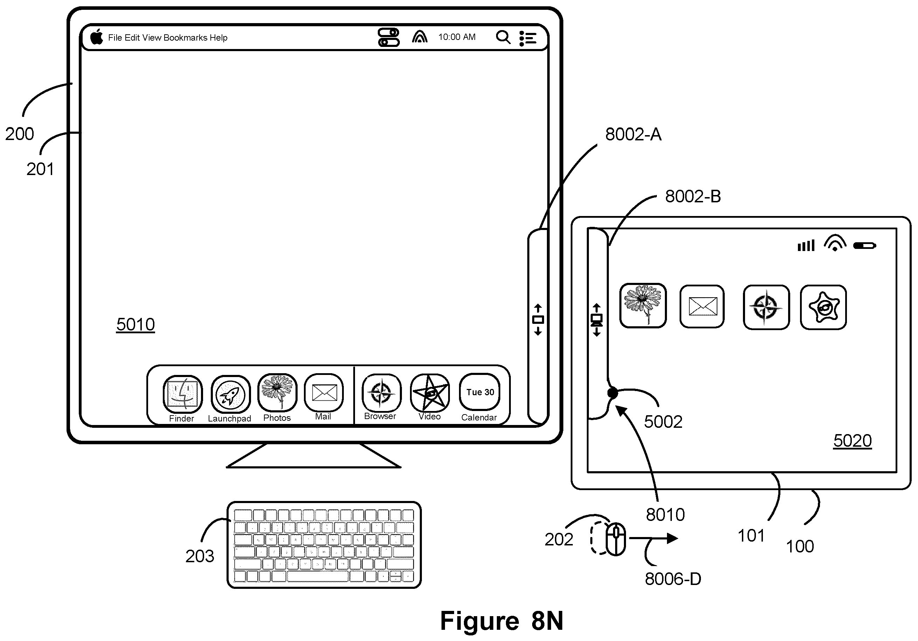

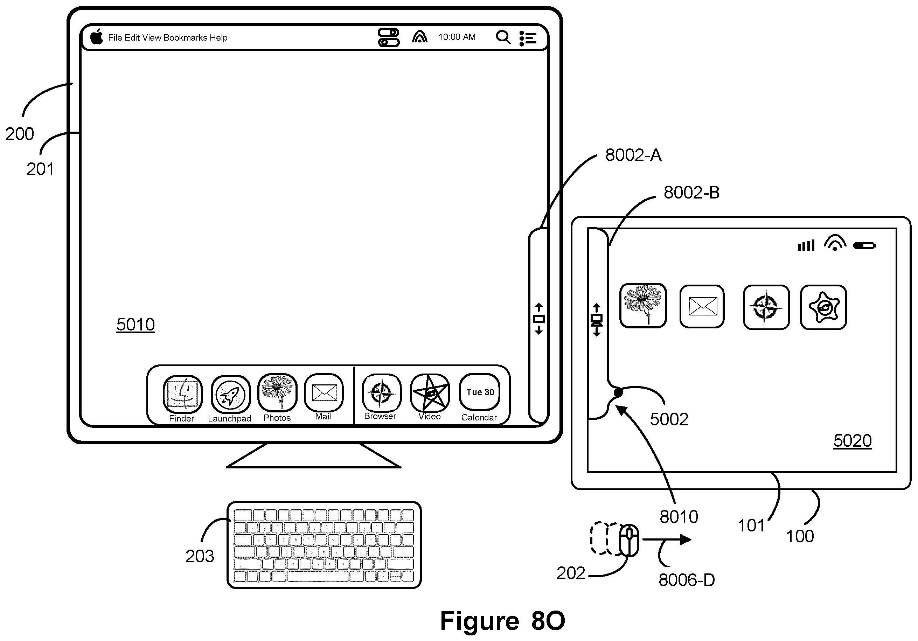

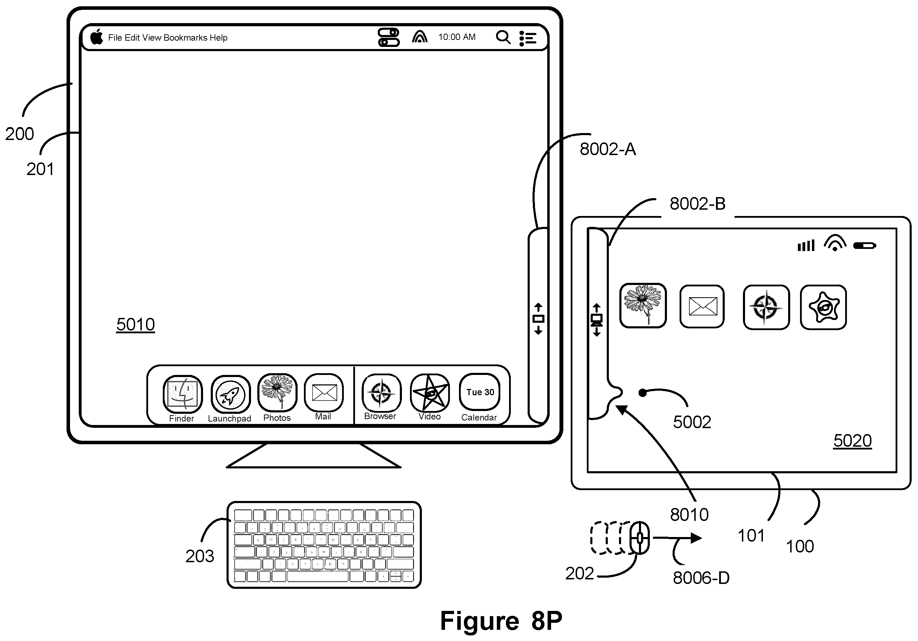

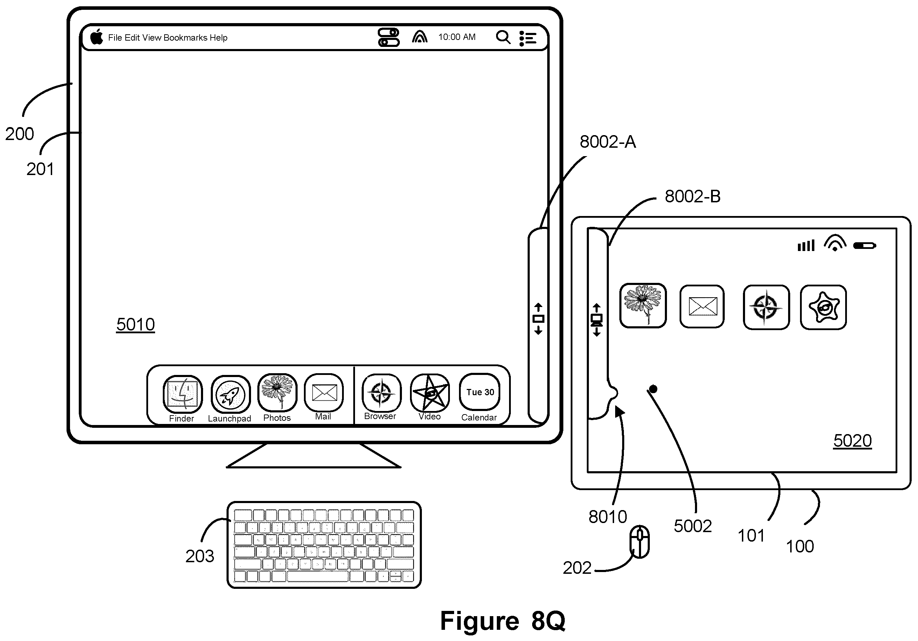

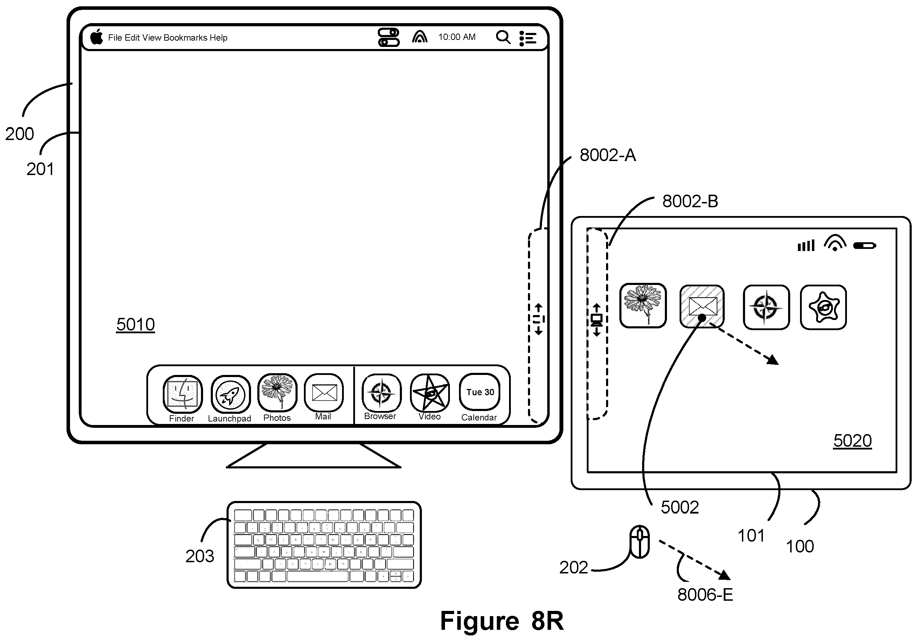

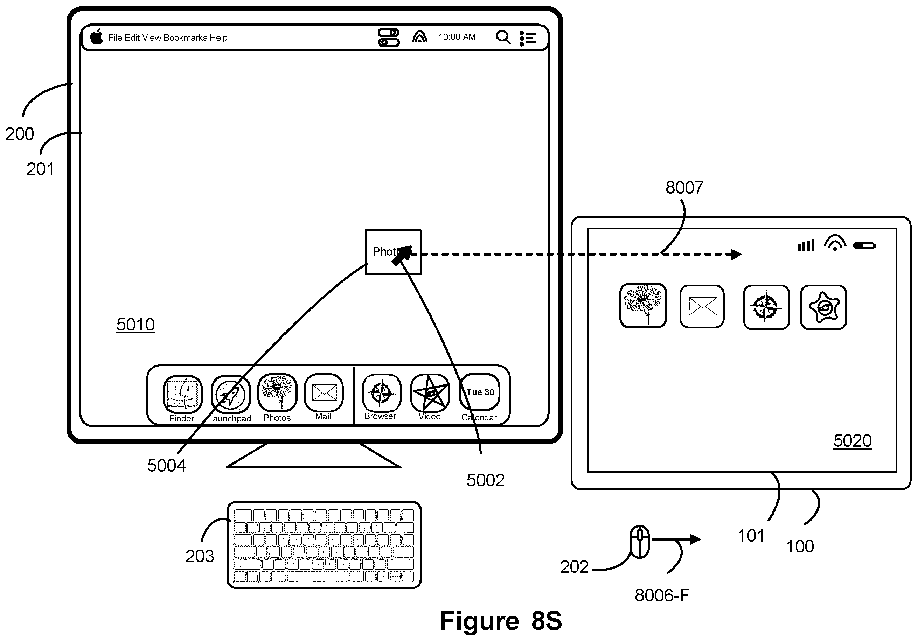

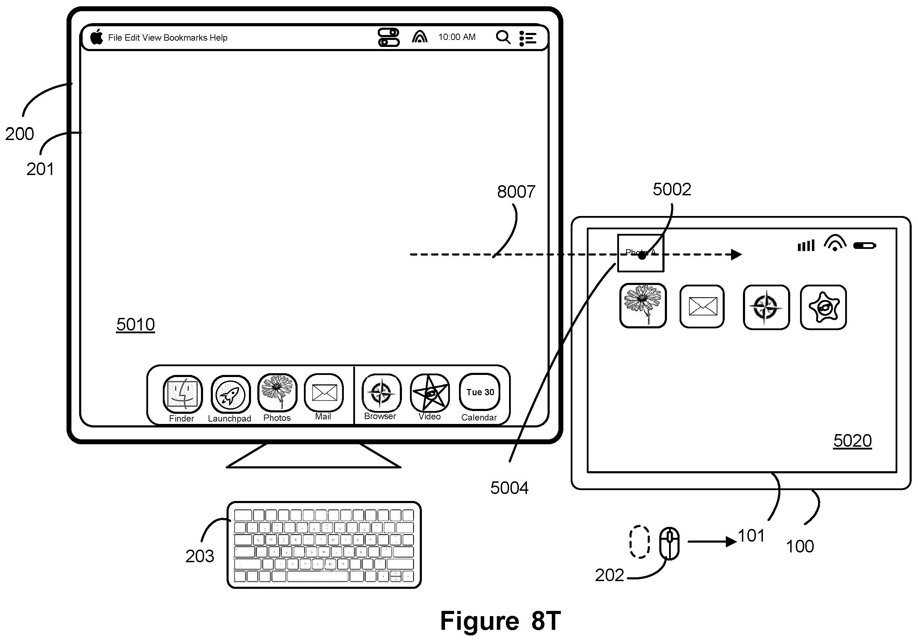

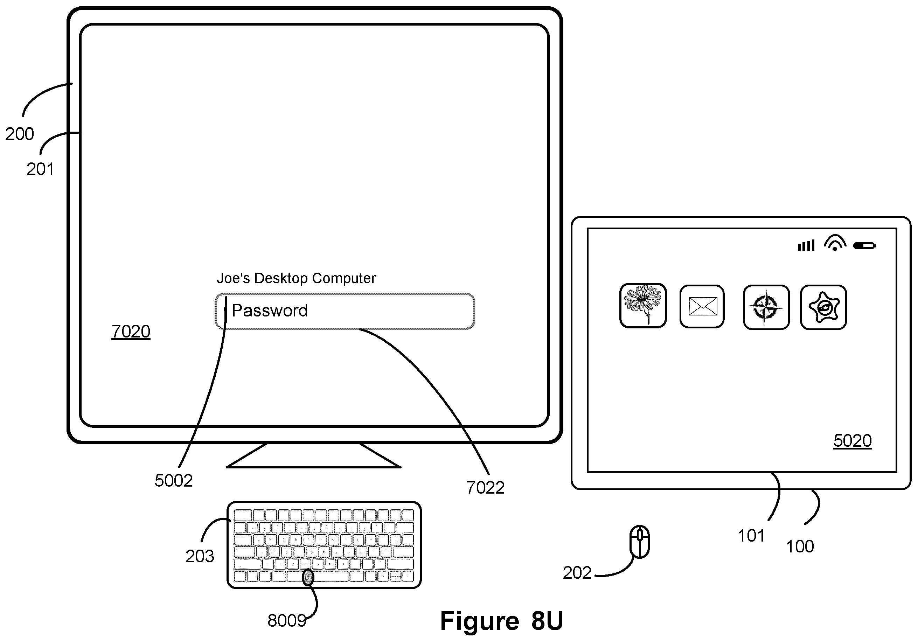

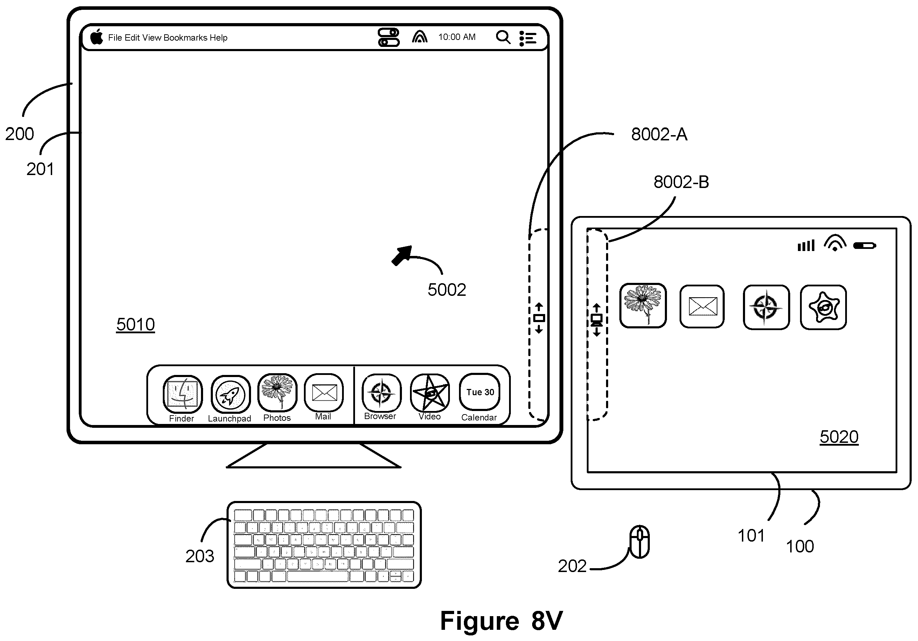

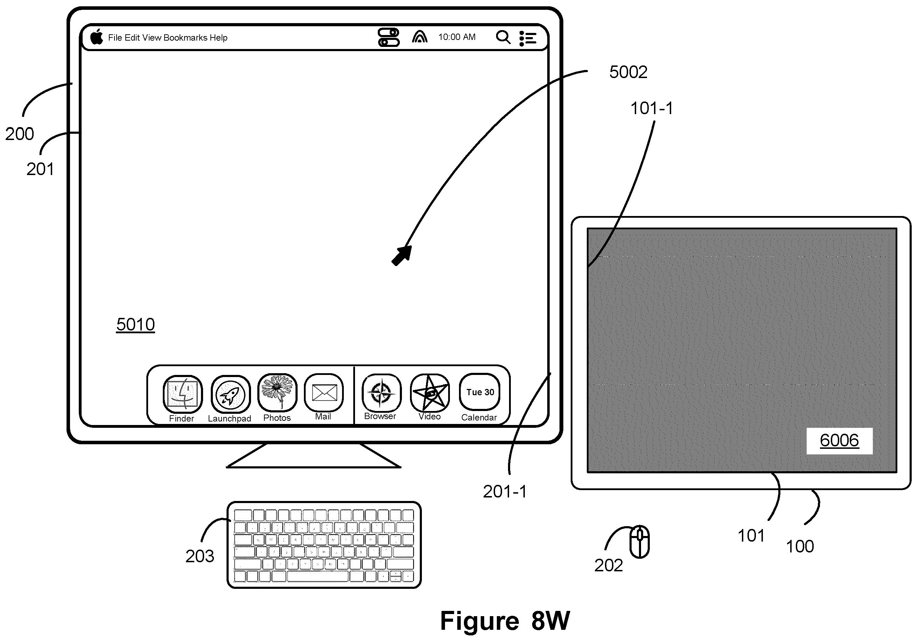

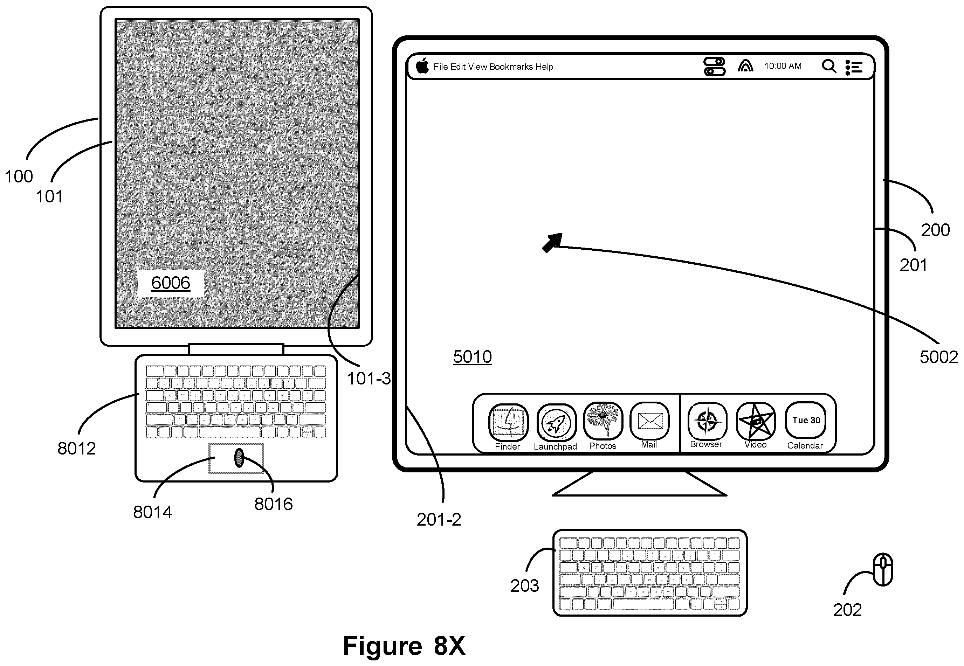

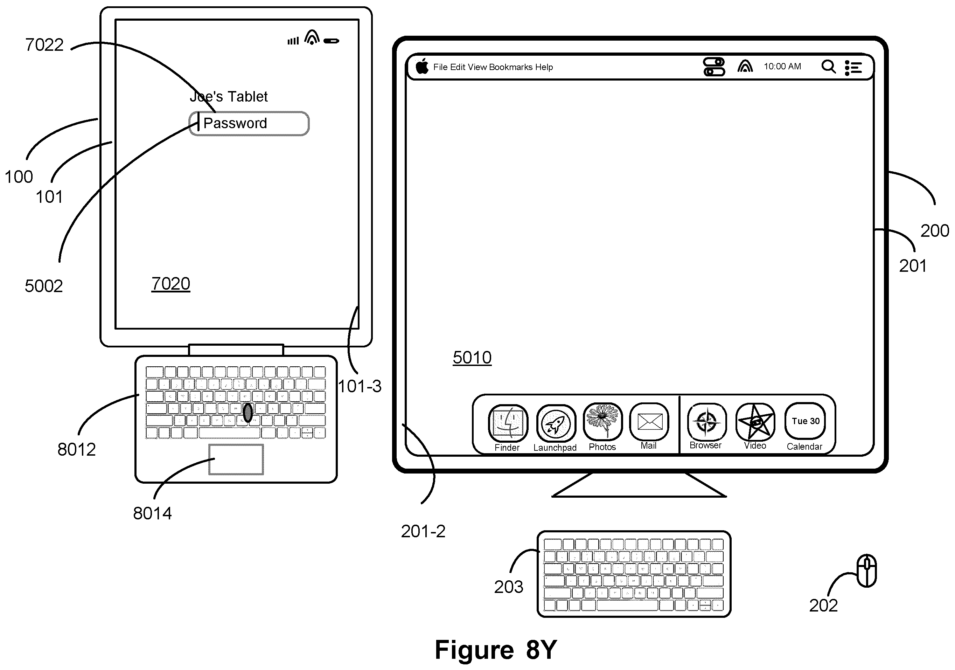

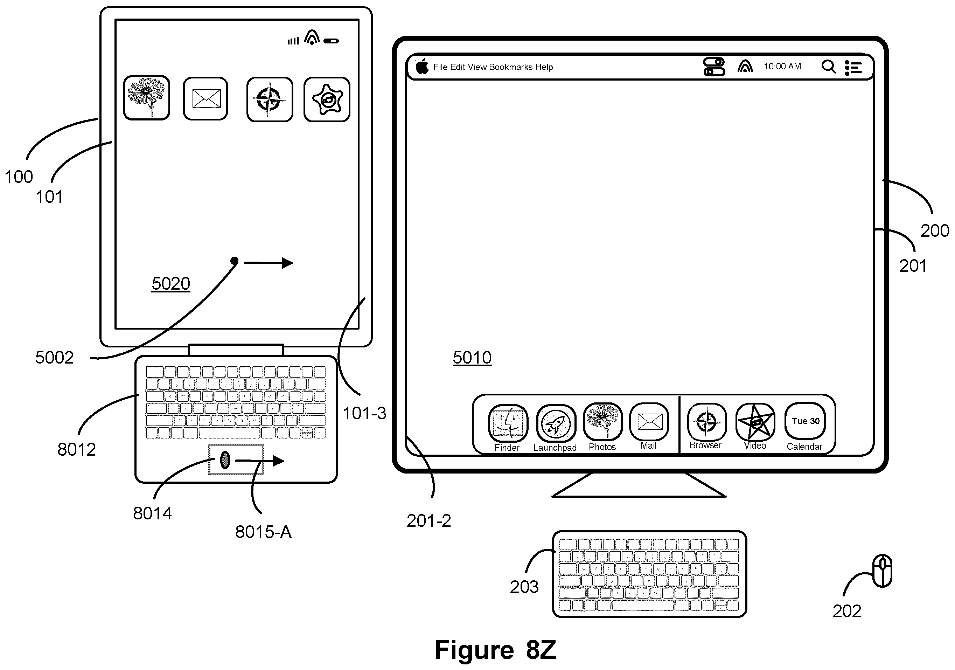

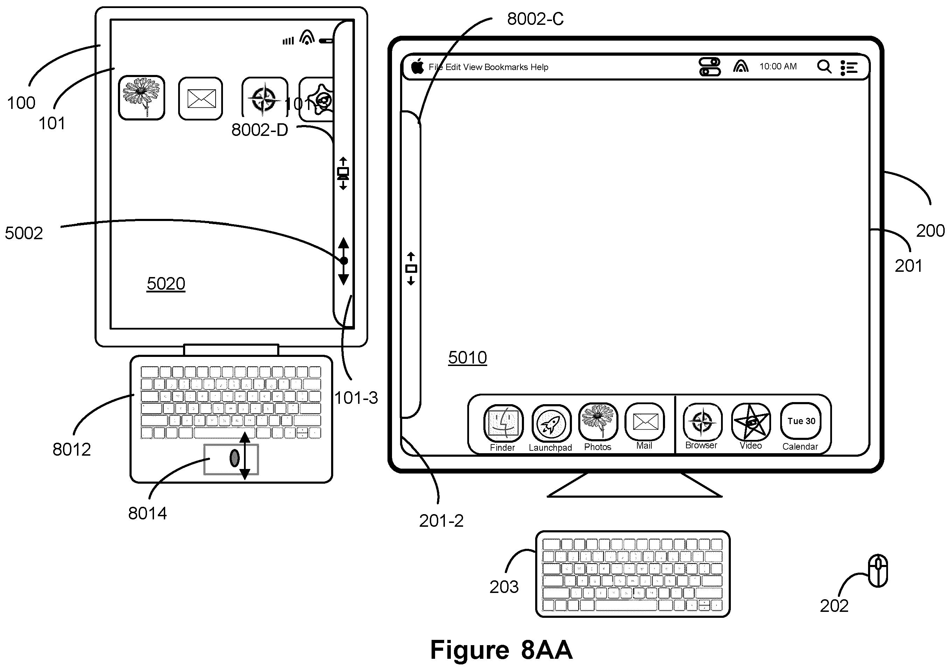

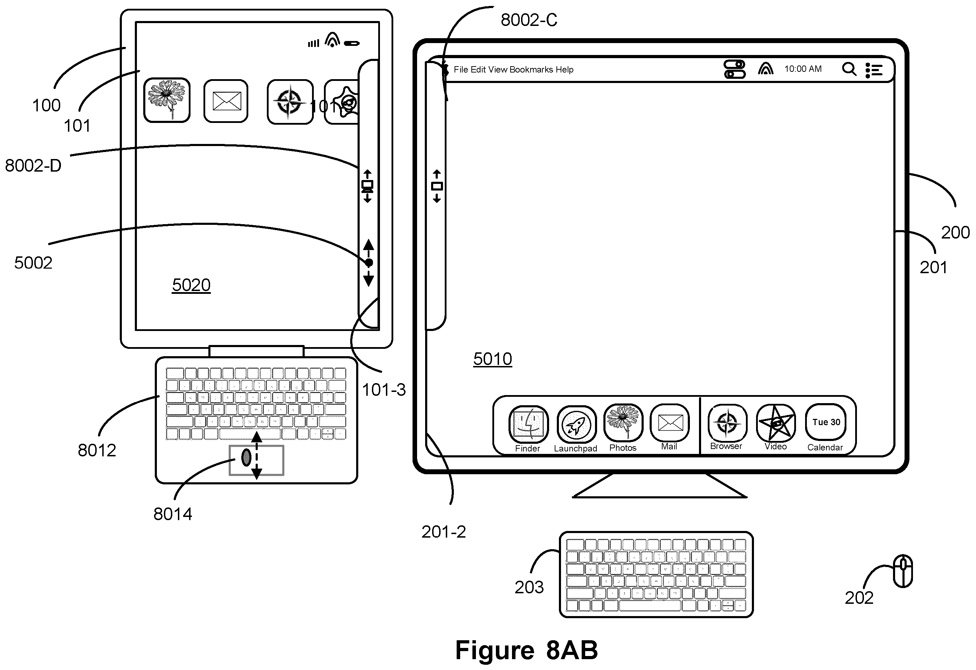

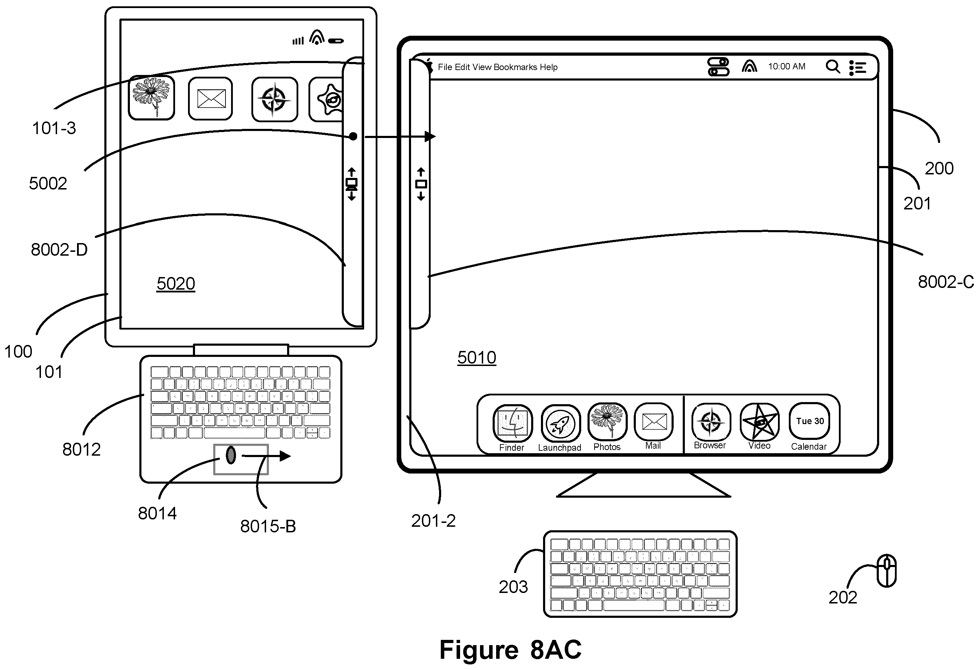

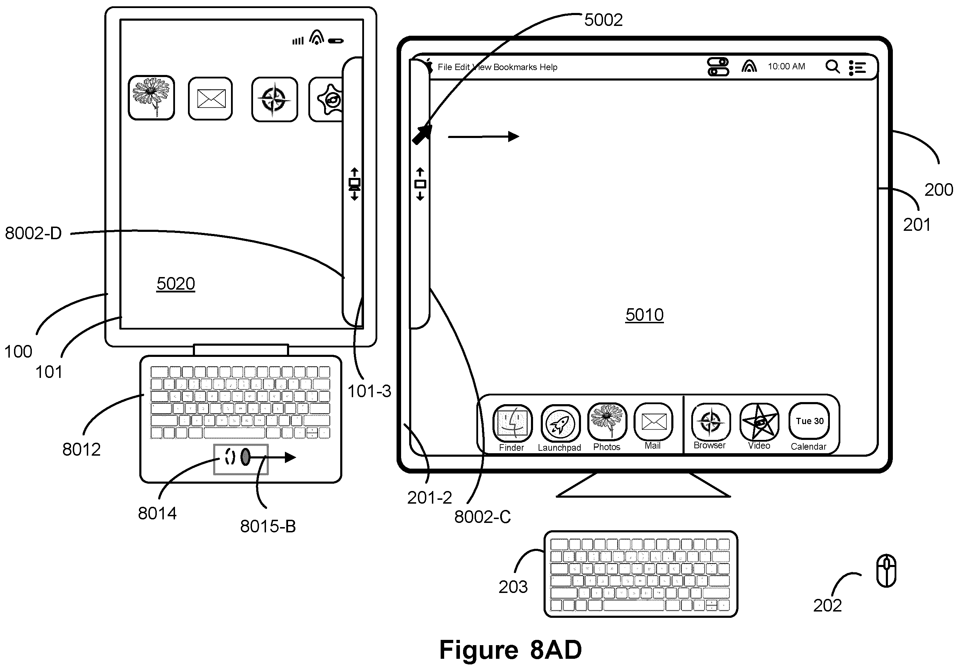

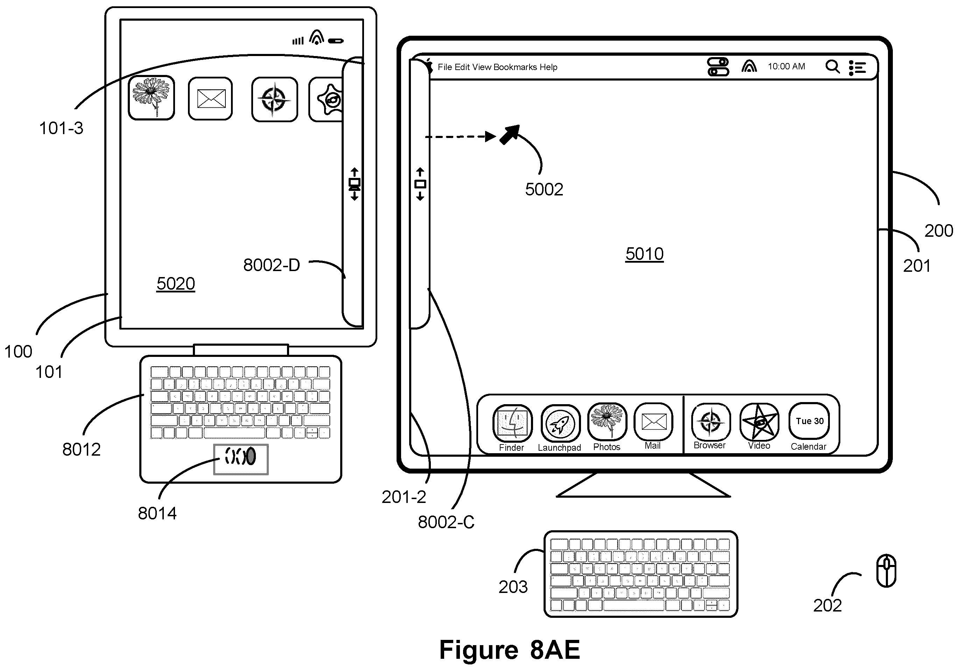

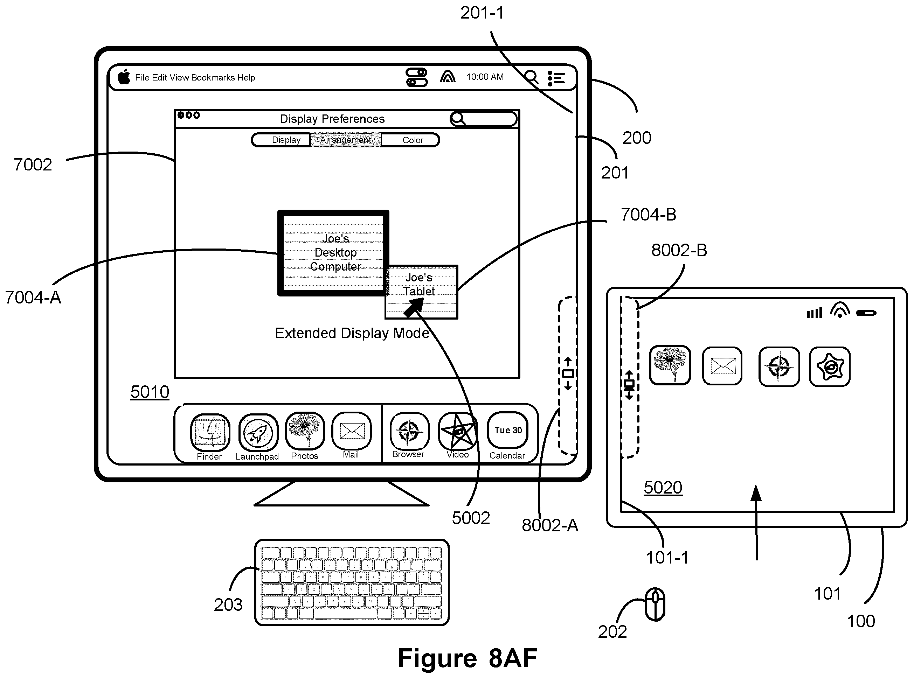

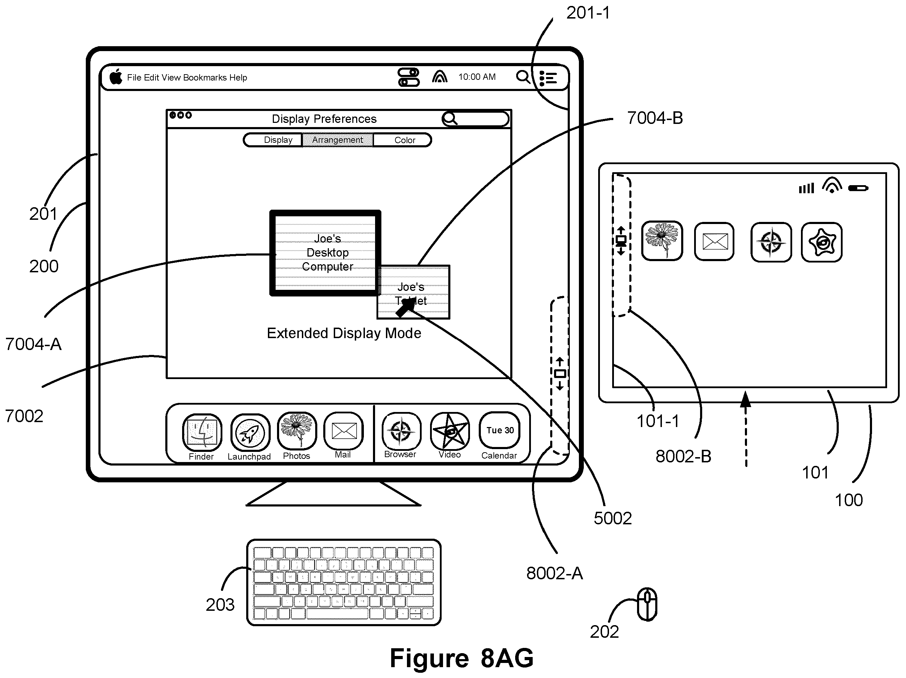

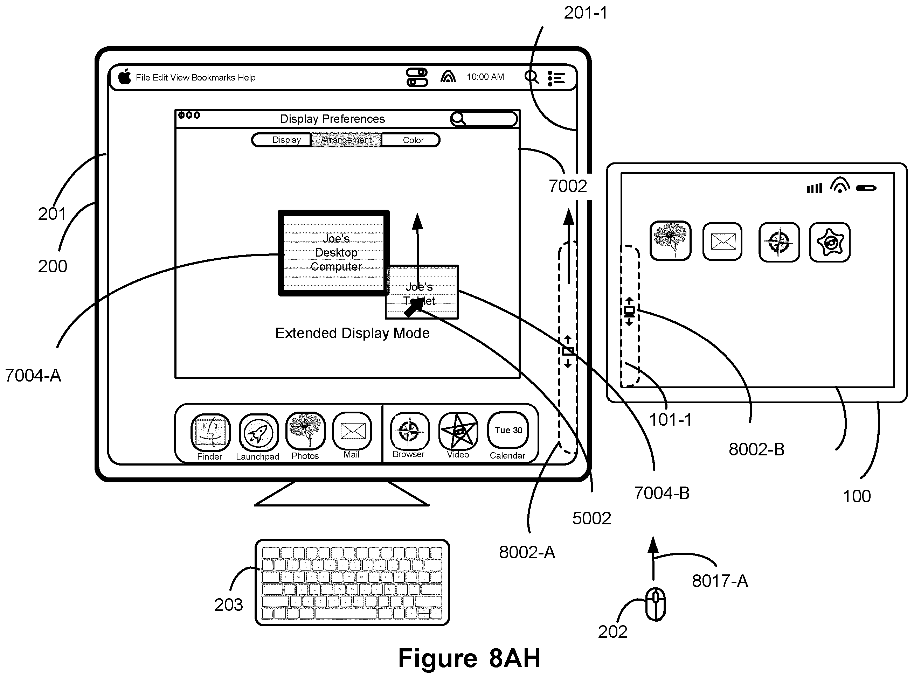

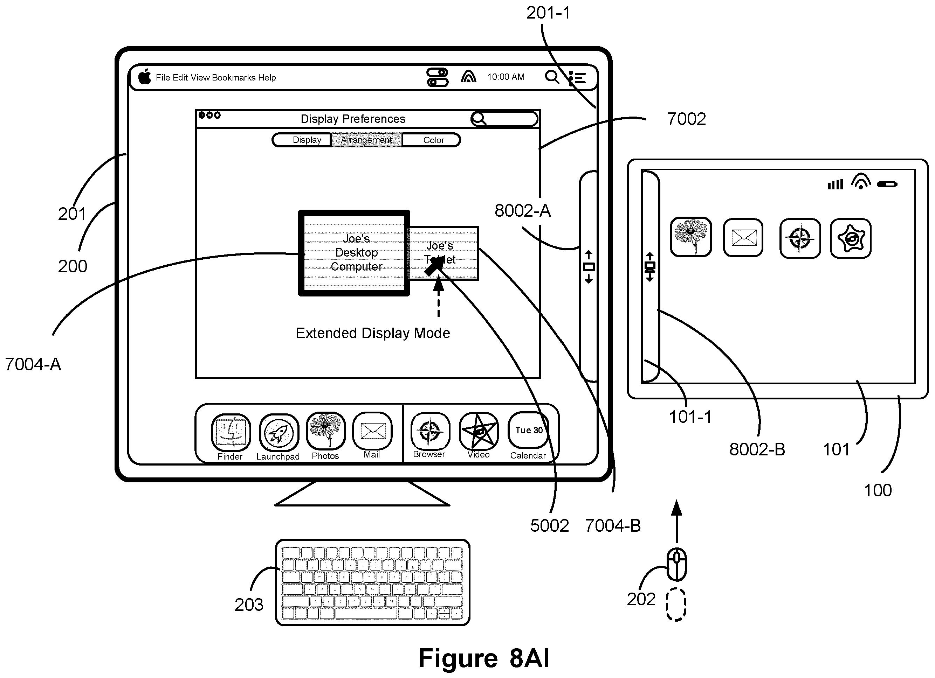

Figures 8M-8Q illustrate a user input causing displaying an animated exit of the cursor from the respective indication for the portal, in accordance with some embodiments. In Figure 8M, device 100 detects a user input including movement of mouse 202 (e.g., movement 8006-E) in a direction indicated with the arrow. In some embodiments, the user input corresponds to a request to move cursor 5002 away from edge 101-1 of display 101 (e.g., toward a middle portion of display 101). In accordance with movement 8006-E of mouse 202, display 101 displays moving cursor 5002 toward the middle portion of display 101 so that cursor 5002 exits indication 8002-B, as shown in Figures 8N-8Q. In some embodiments, display 101 displays an animation including expanding a portion (e.g., portion 8010) upon displaying cursor 5002 exiting indication 8002-B. As shown in Figures 8N and 8O, portion 8010 of indication 8002-B corresponding to the location of cursor 5002 stretches or expands as cursor 5002 moves toward the middle portion of display 101. In Figure 8P, display 101 displays an instance where cursor 5002 has exited indication 8002-B while portion 8010 of indication 8002-B is still stretched out. In Figure 8, portion 8010 of indication 8002-B de-stretches (e.g., begins to return to its original size) while cursor 5002 is displayed on home screen user interface 5020 of device 100 and outside indication 8002-B.

In accordance with cursor 5002 exiting indication 5002-B, devices 100 and 200 maintain the sizes and locations of the portals corresponding to indications 8002-A and 8002-B. In some embodiments, in accordance with a determination that cursor 5002 is no longer displayed on indications 8002-A and 8002-B, displays 201 and 101 cease to display indications 8002-A and 8002-B while maintaining the sizes and locations of the corresponding portals. As shown in Figure 8R, while device 100 detects a user input via mouse 202 corresponding to moving a location of an application icon on home screen user interface 5020 (e.g., selecting by a press-down and dragging in accordance with movement 8006-E in the direction indicated with the arrow), displays 201 and 101 may cease to display indications 8002-A and 8002-B (as indicated with dashed line).

Figures 8S-8T illustrate moving a user interface object in accordance with a movement of an input from the first display region to the second display region after the display regions are aligned, in accordance with some embodiments. In Figure 8S, while devices 100 and 200 maintain the sizes and locations of the portals corresponding to indications 8002-A and 8002-B and while cursor 5002 is displayed on photo object 5004, device 200 detects a user input via mouse 202 including movement 8006-F (e.g., a press-down followed by movement 8006-F of mouse 202 in the direction indicated with the arrow). In some embodiments, the user input corresponds to a request to select and move (e.g., drag) photo object 5004 in accordance with the movement of the device (e.g., as described above with respect to Figures 5A-5J). Arrow 8007 in Figures 8S-8T corresponds to a projected movement of cursor 5002, together with photo object 5004, in an instance where positions of portals on display 101 and display 201 are matching (e.g., aligned)(e.g., the movement of cursor 5002 and photo object 5004 should be continuous in accordance with continuous movement 8006-F). In Figure 8T, displays 201 and 101 have displayed moving cursor 5002 together with photo object 5004 from display 201 to display 101 in accordance with the projected movement illustrated by arrow 8007.

Figures 8U-8V illustrate maintaining the portals after the first display region has been transferred from a locked state to an unlocked state, in accordance with some embodiments. As explained above, devices 200 and 100 maintain the locations of the portals for moving user interface objects between displays 201 and 101 after cursor 5002 has exited indications 5008-A and 5008-B. In some embodiments, devices 200 and 100 maintain the locations of the portal even throughout having device 200 and/or device 100 to change a status. For example, device 200 and/or device 100 may have power turned off and again on, or device 200 and/or device 100 may enter the sleep mode (e.g., the power saving mode) or a lock mode and exit the sleep mode or lock mode by initiating displaying a home screen user interface or an application user interface. In Figure 8U, device 200 has entered a lock screen mode (e.g., device 200 requires obtaining an authentication for unlocking operations of device 200). For example, device 200 may obtain a passcode authentication via a user input (e.g., contact 8009 providing passcode on passcode entry affordance 7022 via keyboard 203). In response to obtaining the passcode, device 200 unlocks and displays home screen user interface 5010 as shown in Figure 8V. In some embodiments, devices 200 and 100 have maintained the positions of the portals for moving user interface objects between displays 201 and 101. In some embodiments, displays 201 and 101 display indications 8002-A and 8002-B to illustrate the locations of the portals (e.g., as illustrated with dashed lined indications 8002-A and 8002-B). In some embodiments, displays 201 and 101 forgo displaying indications 8002-A and 8002-B.

Figures 8W-8AE illustrate changing a position of the second computer system relative to the second computer system and readjusting the indications for the portals after changing the relative position, in accordance with some embodiments. In Figure 8W, device 100 has entered sleep mode 6006. In some embodiments, device 100 enters sleep mode 6006 in accordance with a determination that an event for triggering entering sleep mode 6006 is detected. In some embodiments, the event is a user input (e.g., a gesture or a press on a button corresponding to a request to transfer device 100 to sleep mode 6006). In some embodiment, the event corresponds to a determination that device 100 is not actively used (e.g., based on an orientation of device 100 (e.g., display 101 is facing down or up) or that device 100 has not detected user inputs or operations for a duration of time that is longer than a threshold duration for entering sleep mode 6006). In some embodiments, while device 100 is sleep mode 6006, devices 200 and 100 are no longer in communication with each other either in the shared display mode or in the extended or mirror display modes. In some embodiments, when an even corresponding to the request to transfer device 100 to sleep mode 6006, and display 101 of device is displaying cursor 5002 (e.g., an even corresponding to the request to transfer device 100 to sleep mode 6006 is detected while cursor 5002 is displayed on display 101 as shown in Figure 8T), cursor 5002 is automatically moved on display 201 of device 200 (e.g., as shown in Figure 8W).

In Figure 8X, device 100 has been moved on an opposite side of device 100 and turned about 90 degrees. As shown in Figure 8X, edge 101-3 of display 101 is positioned adjacent to, and substantially parallel to, edge 201-2 of display 201. Also shown in Figure 8X is an input unit including keyboard 8012 and touchpad 8014 that are connected to device 100 (e.g., with a wire or wirelessly). In Figure 8Y, devices 200 and 100 are in the shared input mode so that device 200 and 100 share input devices associated with both of the devices (e.g., touchpad 8014, keyboard 8012, keyboard 203, and mouse 202). In Figure 8Y, device 100 detects an input on touchpad 8014 (e.g., a tap gesture by contact 8016). In some embodiments, the input corresponds to a request to wake up device 100 from sleep mode 6006. In response to detecting the input, device 100 displays lock screen user interface 7020 on display 101. In Figure 8Y, device 100 further detects a user input (e.g., series of keystrokes on keyboard 8012) while cursor 5002 is displayed on passcode entry affordance 7022 for obtaining a passcode required to unlock device 100. In response to receiving the passcode, device 100 displays home screen user interface 5020 on display 101, as shown in Figure 8Z.

In some embodiments, after the moving device 100 to a new position relative to device 200 and/or after the status change of device 100 (e.g., transferring to sleep mode, lock screen mode, and back to displaying home screen user interface 5020), the positions of the portals have changed compared to the set up described in Figures 8E-8K. Accordingly, a user may wish to readjust the locations of the portals by repeating the operations described above with respect to Figures 8E-8L. In Figure 8Z, device 100 detects a user input on touchpad 8014 (e.g., a drag gesture of a contact having movement 8015-A in the direction indicated with the arrow). In some embodiments, the user input corresponds to a request to move cursor 5002 displayed in the middle portion of display 101 of device 100 toward edge 101-3. In Figure 8AA, cursor 5002 has moved to edge 101-3 (e.g., or withing an edge region extending from edge 101-3 by a threshold distance as described with respect to Figure 8E. In some embodiments, cursor 5002 was paused at edge 101-3 for a duration that was longer than a threshold duration for initiating displaying indications for the portals. Accordingly, as shown in Figure 8AA, display 101 displays indication 8002-D and display 201 displays indication 8002-C. In Figure 8AB, device 100 detects an input including movement of a contact (e.g., a press-down and dragging in one or two directions). In some embodiments, the input corresponds to a request to move cursor 5002 inside indication 8002-D. In some embodiments, in accordance with the movement of the contact, displays 101 and 201 change the sizes and/or directions of indications 8002-D and 8002-C, with operations similar to those described above with respect to Figures 8E-8K. In Figure 8AC, device 100 further detects an input on touchpad 8014 (e.g., a contact having movement 8015-B in the direction indicated with the arrow). In some embodiments, the input corresponds to a request to move cursor 5002 in accordance with movement 8015-B. In response to the input, cursor 5002 is moved over to display 201 and on indication 8002-C. It is noted that the sizes and locations of the indications of the portals can be adjusted by user inputs on either of the indications (e.g., indications 8002-A and 8002-B in Figure 8E and indications 8002-C and 8002-D in Figure 8AD). In Figure 8AD, device 100 further detects continuing movement 8015-B of the contact on touchpad 8014. In response to movement 8015-B of contact, cursor 5002 exits indication 8002-C, as shown in Figure 8AE. In some embodiments, an animation similar to that described with respect to Figures 8M-8R is displayed while cursor 5002 exits indication 8002-C.

Figures 8AF-8AI illustrate changing relative positions of representations of the first computer system and the second computer system in a configuration user interface displayed in the first display region and displaying the indications for the portal accordingly, in accordance with some embodiments. In Figure 8AF, display 201 of device 200 displays configuration user interface 7002 including representations 7004-A and 7004-B, as described above with respect to Figures 7A-7C. As shown, display 101 is positioned at the right-hand lower corner of display 201 so that only a portion of display 101 is at a corresponding vertical level with display 201 (e.g., display 101 is positioned lower than display 201). Such relative positioning of displays 201 and 101 may not be preferential for the user. For example, such relative positioning of displays 201 and 101 causes the size of the portals for moving user interface objects between the different displays to be smaller than if display 101 was fully at a corresponding vertical level with display 201. Accordingly, in Figure 8AG, display 101 is moved up in relation to display 201 so that display 101 edge 101-1 is fully at a corresponding vertical level with display 201. However, as shown, indications 8002-A and 8002-B are no longer at corresponding positions along edges 201-1 and 101-1, as was the case in Figure 8AF (e.g., positions of indications 8002-A and 8002-B are not changed even though relative positions of displays 201 and 101 have changed). In Figure 8AH, device 200 detects an input including movement 8017-A of mouse 202 (e.g., upward movement) while cursor 5002 is displayed on representation 7004-B associated with display 101. In some embodiments, the input corresponds to a request to drag representation 7004-B in accordance with movement 8017-A of mouse 202. In response to the user input, device 200 moves representation 7004-B in accordance with movement 8017-A, as shown in Figure 8AI. Concurrently, device 200 moves indication 8002-A in accordance with movement 8017-A. As shown in Figure 8AI, indications 8002-A and 8002-B have substantially the same size and substantially same vertical positions, similar to the instance described above with respect to Figure 8J.

The user interfaces depicted in Figures 5A-8AI are used as examples to illustrate the methods and/or processes described below. One of ordinary skill in the art will appreciate that the following user interfaces are merely examples. Moreover, one of ordinary skill in the art will appreciate that a different layouts with additional or fewer affordances, user interface elements, or graphics can be used in various circumstances.

The user interfaces depicted in Figures 5A-8AI are used as examples to illustrate the methods and/or processes described below. One of ordinary skill in the art will appreciate that the following user interfaces are merely examples. Moreover, one of ordinary skill in the art will appreciate that a different layouts with additional or fewer affordances, user interface elements, or graphics can be used in various circumstances. Additional descriptions regarding Figures 5A-8AI are provided below in reference to methods 9000, 10000, 11000 and 12000. It should be understood that the particular order in which the respective operations in the methods 9000, 10000, 11000 and 12000 have been described are merely examples and are not intended to indicate that the described orders are the only orders in which the operations could be performed. One of ordinary skill in the art would recognize various ways to reorder the operations described herein.

Figures 9A-9D are a flowchart of a method 9000 for moving content between different display devices (e.g., desktop device 200 having display 201 and tablet device 100 having display 101 in Figure 1B) that are in communication between each other either in the shared input mode or in the extended display mode. Some operations in method 9000 are, optionally, combined and/or the order of some operations is, optionally, changed.

Method 9000 is performed at a first computer system (9002) (e.g., a desktop, a laptop, a tablet computer, or a phone) having a first display generation component (e.g., a display, a projector, a heads-up display, or the like), wherein the first computer system is in communication with a first input device (e.g., a mouse, a touch-sensitive surface, etc.) and a second computer system (e.g., a desktop, a laptop, a tablet computer, or a phone) having a second display generation component different from the first display generation component. For example, in Figure 1B desktop device 200 including display 201 is in communication with keyboard 203, mouse 202, and tablet device 100 including display 101. Method 9000 includes displaying (9004), via the first display generation component, a first user interface (e.g., a home screen, an application user interface) (e.g., home screen user interface 5010 in Figure 5A) in a first display region provided by the first display generation component (e.g., display 201), including displaying a first user interface object (e.g., photo object 5004) at a first location in the first display region (e.g., the first display region is in an interior portion of the first display generation component) (e.g., the first display region is separated from edges of the first display generation components). While displaying the first user interface in the first display region provided by the first display generation component, detecting (9006) a first input via the first input device (e.g., an input including a press-down 5011-A on mouse 202 followed by movement 5012-A of mouse 202 in a direction indicated by the arrow in Figure 5A). The first input includes a first movement that corresponds to a request for dragging the first user interface object across the first display region provided by the first display generation component, in accordance with a first portion of the first movement. This is followed by a request for dragging the first user interface object beyond the first display region provided by the first display generation component toward a second display region provided by the second display generation component, in accordance with a second portion of the first movement. In response to detecting the first movement (9008), and in accordance with a determination that the first user interface object is a representation of content (e.g., content that can be displayed by either one of the first or second computer systems) and the first input is detected while the second display generation component is in communication with the first computer system in a first mode (9010) (e.g., the second computer system serves as an extended display device for the first computer system, or as a peripheral device of the first computer system, etc.), method 9000 includes moving (9012) the first user interface object across the first display region provided by the first display generation component from the first location to a second location (e.g., the second location is an edge region of the display generation component, the second location is near a portal region between the first display generation component and the second display generation component the portal region indicating a region that allows dragging of objects between the first display generation component and the second display generation component) in the first display region in accordance with the first portion of the first movement. These features are illustrated, for example, in Figures 5A-5C where photo object 5004 is dragged in accordance with a first portion of the movement of mouse 202 from the position of photo object 5004 in Figure 5A (e.g., the middle portion of display 201) toward edge 201-1 of display 201 in Figure 5B. The input further continues by a second portion of the movement of mouse 202 corresponding to a request to drag photo object 5004 across edge 201-1 to display 101, as shown in Figure 5C. In some embodiments, moving the first user interface object across the first display region is done in accordance with a determination that the second display generation component is in communication with the first computer system in the first mode. In some embodiments, moving the first user interface object across the first user region is done without such determination.

Method 9000 also includes, in accordance with the determination that the first user interface object is the representation of content (e.g., photo object 5004 is a representation of a photo that can be displayed by device 200 and device 100) and the first input is detected while the second display generation component is in communication with the first computer system in the first mode (e.g., devices 200 and 100 are in communication with each other in the extended display mode) (e.g., the second computer system serves as an extended display device for the first computer system, or as a peripheral device of the first computer system, etc.), moving (9014) the first user interface object across the second display region provided by the second display generation component in accordance with the second portion of the first movement. These features are illustrated, for example, in Figures 5C-5D where photo object 5004 (e.g., a representation of an image content item) is dragged from display 201 of device 200 to display 101 of device 100. As shown in Figure 5A-5C, display 101 of device 100 display home screen user interface 5010 of device 200 including menu bar 5008. For example, display 101 displays the horizontally striped virtual wallpaper corresponding to the virtual wallpaper displayed on device 200. Method 9000 includes, in accordance with a determination that the first user interface object is a representation of content (e.g., photo object 5004-A in Figure 5F) (e.g., content that can be displayed by either one of the first or second computer systems) (e.g., without regard to whether) and the first input is detected while the second display generation component is in communication with the first computer system in a second mode (9016) (e.g., the second computer system serves as an independent device that shares the first input device with the first computer system, also called the shared input mode) different from the first mode, moving (9018) the first user interface object across the first display region provided by the first display generation component from the first location to a second location in the first display region (e.g., the second location is an edge region of the display generation component, the second location is near a portal region between the first display generation component and the second display generation component) in accordance with the first portion of the first movement. These features are illustrated, for example, in Figures 5F-5I where photo object 5004-A is dragged across edges 201-1 and 101-1 of devices 201 and 101, respectively, onto user interface 5010. As shown in Figure 5F-5I, display 201 of device 200 displays home screen user interface 5010 whereas display 101 of device 100 displays an application user interface (e.g., mail user interface 5018) indicating that devices 200 and 100 operate their own operating system while sharing mouse 202 and keyboard 203. Method 9000 also includes, in accordance with the determination that the first user interface object is the representation of content and the first input is detected while the (e.g., content that can be displayed by either one of the first or second computer systems) (e.g., without regard to whether) the second display generation component is in communication with the first computer system in the second mode, moving (9020) the first user interface object across the second display region provided by the second display generation component in accordance with the second portion of the first movement (e.g., the content is moved on the second display generation component without regard to whether or not the second display generation component is in the first mode or the second mode, as shown in Figures 5A-5J).

Method 9000 includes, in accordance with a determination that the first user interface object is an application window (e.g., a window for an application running on the first computer system, but not on the second computer system) (e.g., photo user interface 5016 in Figure 5K) and the first input is detected while the second display generation component is in communication with the first computer system in the first mode (9022), moving (9024) the first user interface object across the first display region provided by the first display generation component from the first location to a second location in the first display region (e.g., the second location is an edge region of the display generation component, the second location is near a portal region between the first display generation component and the second display generation component) in accordance with the first portion of the movement. This feature is illustrated, for example, in Figures 5K-5L, where application user interface 5016 is dragged from the middle portion of display 201 toward edge 201-1 of display 201 in accordance with the movement of mouse 202. Method 9000 also includes, in accordance with the determination that the first user interface object is the application window and the first input is detected while the second display generation component is in communication with the first computer system in the first mode, moving (9026) the first user interface object across the second display region provided by the second display generation component in accordance with the second portion of the movement (e.g., as shown in Figures 5L-5N). Method 9000 includes, in accordance with a determination that the first user interface object is an application window (e.g., a window for an application running on the first computer system, but not on the second computer system) and the first input is detected while the second display generation component is in communication with the first computer system in the second mode (e.g., the second computer system serves as an independent device that shares the first input device with the first computer system), preventing (9028) movement of the first user interface object into the second display region provided by the second display generation component. These features are illustrated, for example, in Figures 5O-5P, where device 200 prevents dragging application window 5016 across edge 201-1 onto display 101.

Moving a user interface object corresponding to a representation of content from a first display region of a first computer system to a second display region of a second computer system by dragging, regardless of whether the first computer system and the second computer system are in communication with each other in a first mode or in a second mode (e.g., a shared input mode or an extended display mode). Moving a user interface object corresponding to an application window from the first display region of the first computer system to the second display region of the second computer system by dragging only if the first computer system and the second computer system are in communication with each other in a first mode (e.g., the extended display mode), provides additional control options for sharing user interface objects between different computer systems in communication with each other. Providing additional control options without cluttering the UI with additional displayed controls enhances the operability of the device, which, additionally, reduces power usage and improves battery life of the device by enabling the user to use the device more quickly and efficiently.

In some embodiments, moving the first user interface object across the second display region includes moving (9030) the first user interface object from a first location on the second display region to a second location on the second display region. For example, the first location is on an edge region of the first display generation component, the first location is near a portal region between the first display generation component and the second display generation component, the portal region indicating a region that allows dragging of objects between the first display generation component and the second display generation component. This feature is illustrated, for example, in Figures 5C-5D where device 200 drags photo object 5004 from edge 101-1 of display 101 toward the middle portion of display 101 in accordance with movement 5012-B of mouse 202. Method 9000 includes detecting a second input via the first input device (e.g., a release of the contact, lift-off on a contact as shown in Figure 5D), the second input corresponding to a request (e.g., or a command or instruction) to position (e.g., to drop or fix) the first user interface object at the second location (e.g., photo object 5004 is dropped to the middle portion of display 101 in Figures 5D-5E), where the second location on the second display region is determined in accordance with a determination of a location of receiving the second input (e.g., location of cursor 5002 in Figure 5D). Moving the user interface object from the first display region of the first computer system to a location on the second display region on the second computer system, where the second location is determined by the location of a second input corresponding to a request to position (e.g., to drop or fix) the user interface object at that location, provides a manner for moving the user interface object to a desired position. Performing an operation when a set of conditions has been met without requiring further user input enhances the operability of the device, which, additionally, reduces power usage and improves battery life of the device by enabling the user to use the device more quickly and efficiently.

In some embodiments, when the first user interface object is a representation of content (e.g., text, photos, files, folders), method 9000 includes maintaining (9032) displaying of the first user interface object while the first user interface object is being moved across the first display region and the second display region (e.g., photo object 5004 is displayed while being dragged in Figures 5A-5J). By maintaining the display of the first user interface object while the object is being moved across the first display region and the second display region of different computer systems provides the user with continuous feedback regarding the type of user interface object being moved. Providing improved feedback enhances the operability of the device, which, additionally, reduces power usage and improves battery life of the device by enabling the user to use the device more quickly and efficiently.

In some embodiments, when the first user interface object is an application window, maintaining (9034) display of the application window as an open application window (e.g., the open mode status of the application window is maintained while dragging)(e.g., the application window is displayed while dragging) while moving the application window (e.g., photo application user interface 5016 is displayed while being dragged in Figures 5K-5M). By maintaining the display of the application window while the window is being moved across the first display region and the second display region of different computer systems provides the user with continuous feedback regarding the type of user interface object being moved. Providing improved feedback enhances the operability of the device, which, additionally, reduces power usage and improves battery life of the device by enabling the user to use the device more quickly and efficiently.

In some embodiments, preventing the movement of the first user interface object into the second display region (e.g., preventing the movement of photo application user interface 5016 in Figure 5P across edge 201-1 of display 201), includes automatically moving (9036) the first user interface object across the first display region provided by the first display generation component from the second location back to the first location (e.g., the application window is automatically moved (e.g., bounces back) to its original location (e.g., the first location)). In some embodiments, the application window is automatically moved away from the edge of the first display region by a preset distance (e.g., the application window appears to bounce while by a short distance while remaining in the vicinity of the edge). Bouncing back the user interface object from an edge of the display region (e.g., moving the user interface object back toward the direction where it was dragged from) when preventing the movement of the user interface object into the second display region provides the user visual feedback that the user interface object cannot be moved into the second display region. Providing improved feedback enhances the operability of the device, which, additionally, reduces power usage and improves battery life of the device by enabling the user to use the device more quickly and efficiently. In some embodiments, the bouncing back occurs while displaying continuing movement of cursor 5002 toward display 101 of device 100.

In some embodiments, preventing the movement of the first user interface object into the second display region (e.g., preventing the movement of photo application user interface 5016 in Figure 5P across edge 201-1 of display 201) includes pausing (9038) (e.g., halting or stopping) the movement of the first user interface object at the second location (e.g., the movement of the first user interface object is halted or prevented at the second location (e.g., at a portal region) even when there is continued movement from the user input in the direction that the window was moving). Pausing (e.g., resisting dragging) of the user interface object when preventing the movement of the user interface object into the second display region provides the user visual feedback about the prevention to move the user interface object into the second display region. Providing improved feedback enhances the operability of the device, which, additionally, reduces power usage and improves battery life of the device by enabling the user to use the device more quickly and efficiently.

In some embodiments, the first computer system is (9040) in communication with the second computer system via a wired connection (e.g., device 200 and device 100 in Figure 5B are in a wired communication). Moving user interface objects between different computer systems when the different computer systems are in communication via a wired connection provides additional control options for sharing user interface objects between different computer systems in communication with each other. Providing additional control options without cluttering the UI with additional displayed controls enhances the operability of the device, which, additionally, reduces power usage and improves battery life of the device by enabling the user to use the device more quickly and efficiently.

In some embodiments, the first computer system is (9042) in communication with the second computer system via a wireless connection (e.g., Bluetooth or Wi-Fi) (e.g., device 200 and device 100 in Figure 5B are in a wireless communication).Moving user interface objects between different computer systems when the different computer systems are in communication via a wired connection provides additional control options for sharing user interface objects between different computer systems in communication with each other. Providing additional control options without cluttering the UI with additional displayed controls enhances the operability of the device, which, additionally, reduces power usage and improves battery life of the device by enabling the user to use the device more quickly and efficiently.

In some embodiments, the first computer system having the first display generation component (e.g., device 200 including display 201 in Figure 5Q) is (9044) further in communication with a third computer system (e.g., a desktop, a laptop, a tablet computer, or a phone) the third computer system having a third display generation component that is different from the first display generation component and the second display generation component (e.g., device 300 including display 301).Moving user interface objects between three different computer systems when the different computer systems are in communication with each other provides additional control options for sharing user interface objects between the different computer systems in communication with each other. Providing additional control options without cluttering the UI with additional displayed controls enhances the operability of the device, which, additionally, reduces power usage and improves battery life of the device by enabling the user to use the device more quickly and efficiently.

In some embodiments, including, while moving the first user interface object across the first display region provided by the first display generation component, in accordance with a determination that the first user interface object can be moved from the first display region onto the second display region, displaying (9046) a first visual indication (e.g., the first visual indication is displayed in the first region provided by the first display generation component and/or in the second region provided by the second display generation component)(e.g., the first visual indication corresponds to a highlighted area (e.g., a bar) on an edge of a respective display region)(e.g., the first visual indication is displayed corresponding to, or in the vicinity of, the second location where the first user interface object is being moved to in accordance with the first portion of the first movement). These features are illustrated, for example, in Figure 5B where indication 5014-A (e.g., a bar having a certain color, pattern, brightness, etc., that is distinguishable for the background of user interface 5010) is displayed along edge 201-1 of display 201. Providing a visual indication in accordance with a determination that the user interface object can be moved from the first display region onto the second display region provides the user feedback about the option to move the user interface object onto the second display region. Providing improved feedback enhances the operability of the device, which, additionally, reduces power usage and improves battery life of the device by enabling the user to use the device more quickly and efficiently.

In some embodiments, in accordance with a determination that the first user interface object cannot be moved from the first display region onto the second display region, displaying (9048) a second visual indication distinct from the first indication (e.g., the device forgoes displaying the first visual indication and displays the second visual indication (e.g., a text box or a highlighted area having different features than the highlighted area associated with the first visual indication)). These features are illustrated, for example, in Figure 5P where device 200 displays indication 5014-B along edge 201-1 of display 201. Indication 5014-B has an appearance that is different from the appearance of indication 5014-A. Providing a visual indication in accordance with a determination that the user interface object cannot be moved from the first display region onto the second display region provides the user feedback about an inability to perform the move that the user is attempting to perform. Providing improved feedback enhances the operability of the device, which, additionally, reduces power usage and improves battery life of the device by enabling the user to use the device more quickly and efficiently.

In some embodiments, in accordance with a determination that first criteria for moving the first user interface object onto the second display region provided by the second display generation component and/or a third display region provided by the third display generation component are met, while moving the first user interface object across the first display region in accordance with the first portion of the first movement, displaying (9050) a visual indication in a first position of the first display region. The visual indication indicates that the first user interface object is capable of being moved onto the second display region or the third display region. For example, in Figure 5P indication 5014-B is displayed along edge 201-1 to indicate that user interface objects can be moved to display 101 of device 100 via a portion of edge 201-1 and indication 5014-C is displayed along edge 201-2 in Figure 5R to indicate that user interface objects can be moved to display 301 of device 300 via a portion of edge 201-2.Providing a visual indication in accordance with a determination that the user interface object can be moved from the first display region onto the second display region provides the user feedback about the option to move the user interface object onto the second display region. Providing improved feedback enhances the operability of the device, which, additionally, reduces power usage and improves battery life of the device by enabling the user to use the device more quickly and efficiently.

In some embodiments, in accordance with a determination that the first user interface object has a location at a respective time during the first portion of the first movement that is spatially closer to the second display region provided by the second display generation component than to the third display region provided by the third display generation component, displaying (9052) the third visual indication in the first position of the first display region. The third visual indication indicates that the first user interface object can be moved onto the second display region and forgoing displaying the fourth visual indication in the second position of the first display region. These features are illustrated, for example, in Figure 5W where text line 5032 has a location at the time when a user input is detected corresponding to a request to select and move text line 5034 that is closer to display 301 than display 101. Accordingly, device 200 displays indication 5014-C along edge 201-2 facing display 301 of device 300, as shown in Figure 5R. Device 200 forgoes displaying an indication along edge 201-1 facing display 101. Providing a visual indication in accordance with a determination that the user interface object can be moved from the first display region onto the second display region which is closer to the location of user interface object provides the user feedback about the option to move the user interface object onto the second display region. Providing improved feedback enhances the operability of the device, which, additionally, reduces power usage and improves battery life of the device by enabling the user to use the device more quickly and efficiently.

In some embodiments, the first computer system and the second computer system (e.g., device 200 and device 100 in Figure 5A) further include respective processors and memory and are selected from the group consisting of a desktop computer, a laptop computer, a tablet computer, or a mobile phone.

In some embodiments, moving the first user interface object across the second display region provided by the second display generation component, in accordance with the determination that the second display generation component is in communication with the first computer system in the second mode, includes moving (9054) the first user interface object to a location on a native user interface (e.g., a home screen user interface or application user interface) of the second computer system. For example, in Figure 5I photo object 5004 is moved to mail application user interface 5018 displayed by device 100 on display 101. In some embodiments, the native user interface of the second computer system displays a cursor, a status bar, and a set of one or more user interface objects (e.g., application icons, representations of content, etc.) that are different from the corresponding items displayed on a native user interface of the first computer system. Moving the user interface object to a native user interface (e.g., a home screen user interface or an application user interface) of the second computer system from the first computer system provides an additional control option for moving user interface objects to a desired location on the second display region of the second computer system (e.g., without a need for display a particular user interface window on the second display region of the second computer system). Providing additional control options without cluttering the UI with additional displayed controls enhances the operability of the device, which, additionally, reduces power usage and improves battery life of the device by enabling the user to use the device more quickly and efficiently.

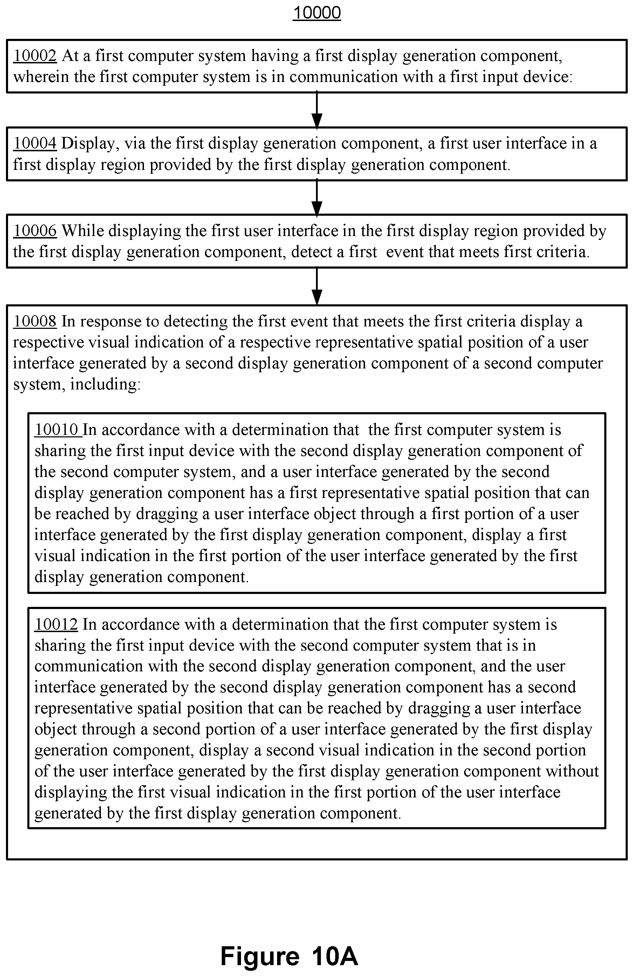

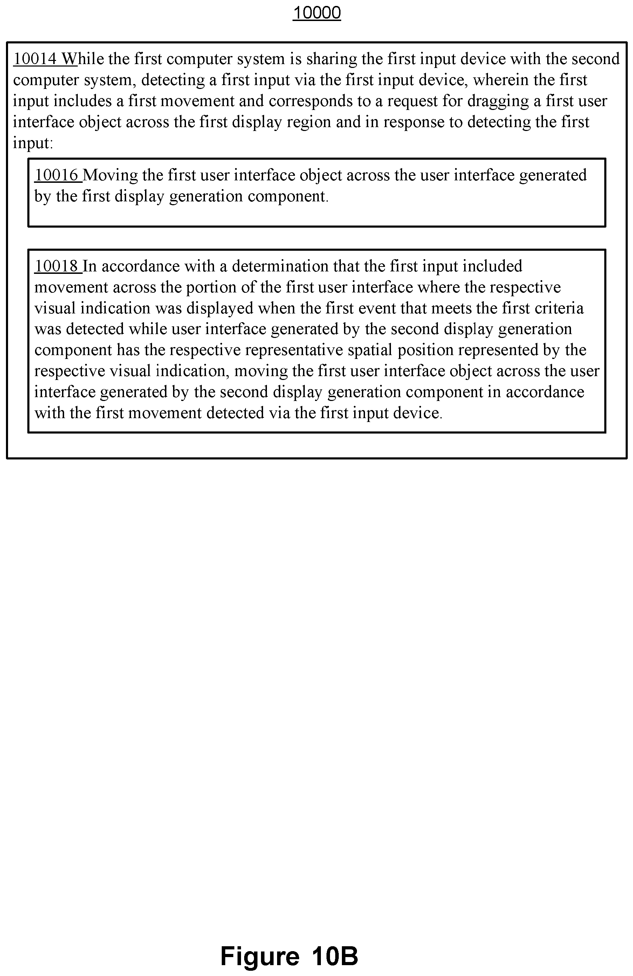

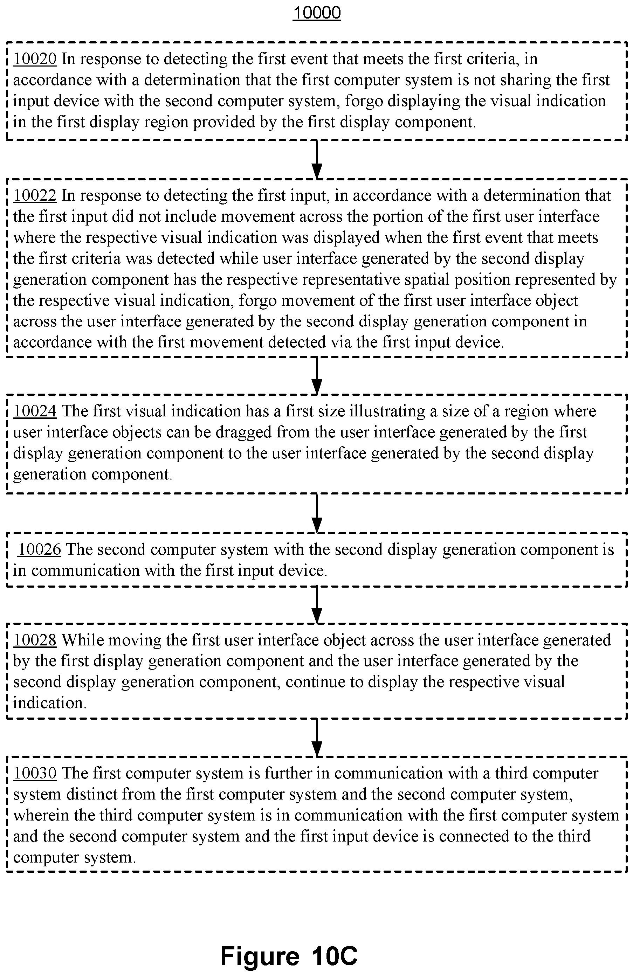

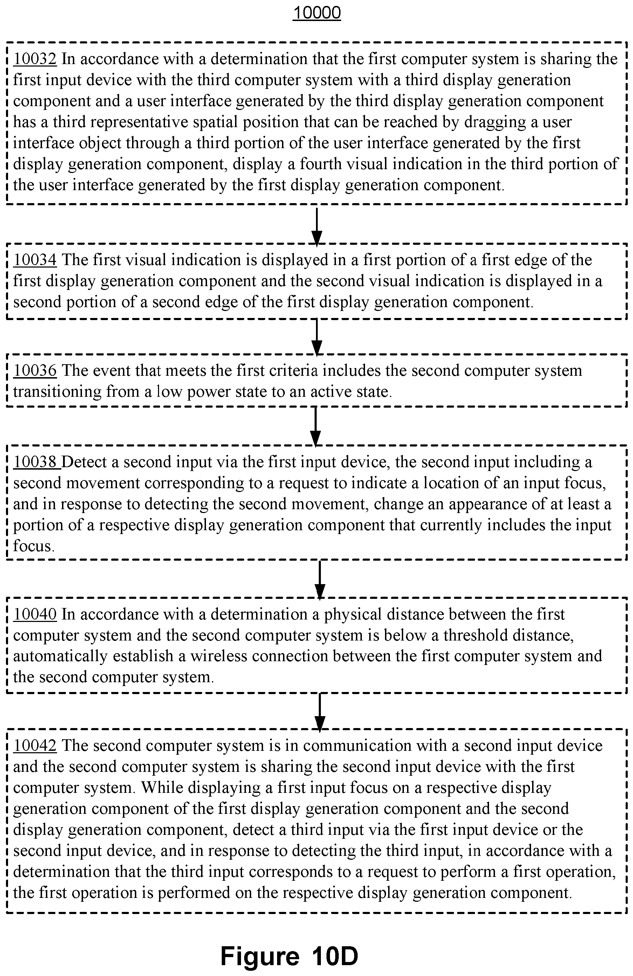

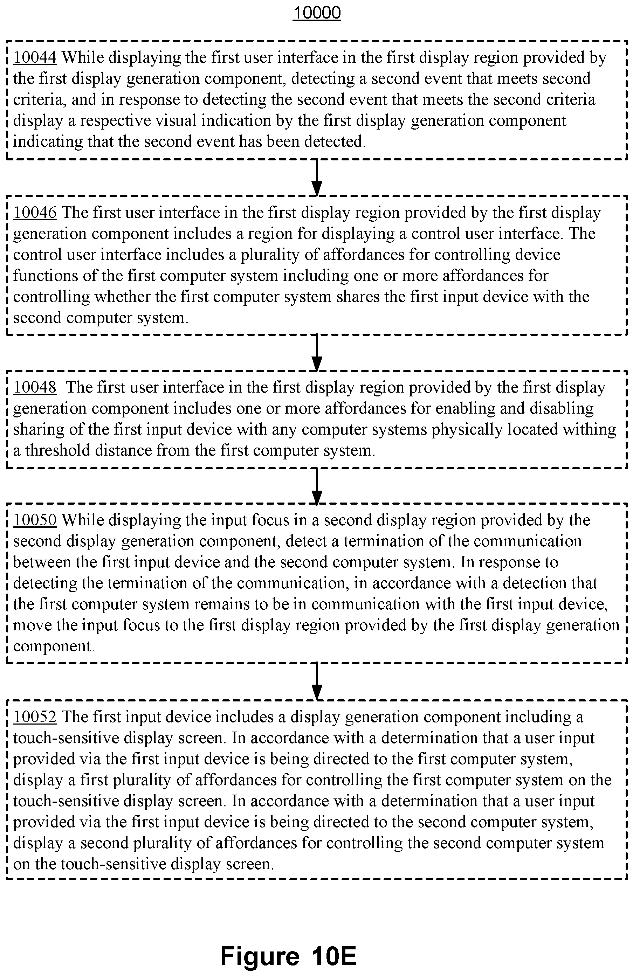

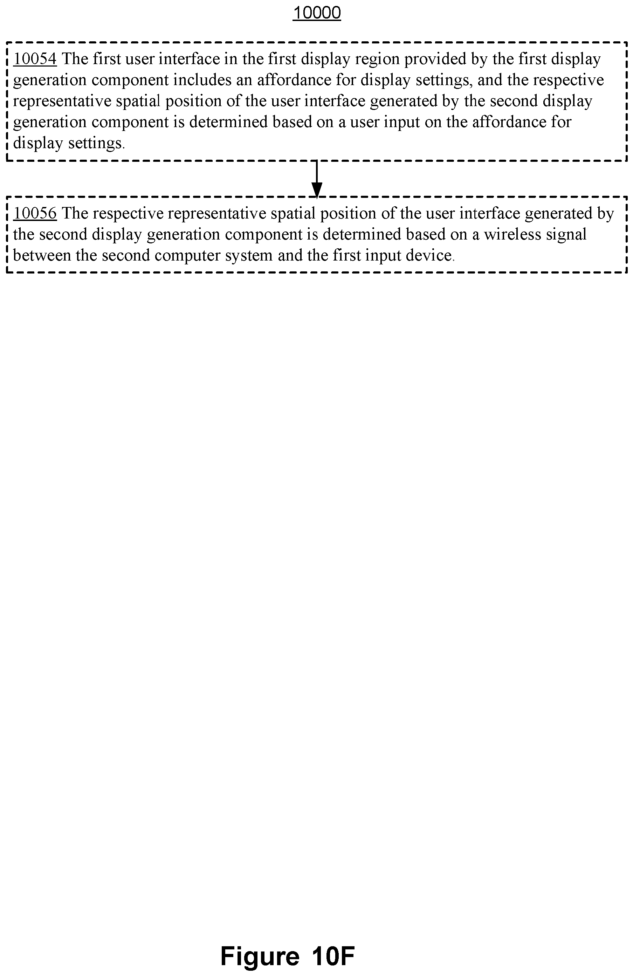

Figures 10A-10F are a flowchart of a method 10000 for displaying a visual indication when a first computer system is sharing a first input device with a second display generation component of the second computer system, and a user interface generated by the second display generation component can be reached by dragging a user interface object through a first portion of a user interface generated by the first display generation component. Some operations in method 10000 are, optionally, combined and/or the order of some operations is, optionally, changed.

Method 10000 is performed at a first computer system (10002) having a first display generation component (e.g., a display, a projector, a heads-up display, or the like) (e.g., device 200 including display 201 in Figure 6A). The first computer system is in communication with a first input device (e.g., a mouse, a touch-sensitive surface, etc.) (e.g., mouse 202). Method 10000 includes displaying (10004), via the first display generation component, a first user interface (e.g., home screen user interface of device 200 in Figure 6A) in a first display region provided by the first display generation component. While displaying the first user interface in the first display region provided by the first display generation component, detecting (10006) a first event that meets first criteria (e.g., detecting movement of a mouse, movement of a contact on a touch-sensitive surface, a keyboard event, startup of a second computer system, the second computer system moving within range, the second computer is woken up from a sleep mode, battery saving mode, and/or a lock screen mode, etc.). In some embodiments, the first event that meets the first criteria is exiting a sleep mode or a battery saving mode and displaying a home screen user interface. These features are illustrated in Figures 6A-6C where the first even corresponds to transferring device 100 from a sleep mode (e.g., sleep mode 6006 in Figure 6A), in response to a user input (e.g., tap gesture by contact 6002-2) to a wake mode (e.g., displaying wake screen or lock screen 6008 in Figure 6B). In response receiving a gesture corresponding to a request to display a home screen user interface (or an application user interface) (e.g., a tap or a swipe gesture by contact 6002-3 on the touch sensitive display 101 shown in Figure 6B or a user input on a button), display 101 of device 100 displays home screen user interface 5020, as shown in Figure 6C. In response to detecting the first event that meets the first criteria displaying (10008) a respective visual indication of a respective representative spatial position of a user interface generated by a second display generation component of a second computer system. This feature is illustrated, for example, in Figure 6C where display 201 of device 200 displays indication 6014-A along edge 201-1 facing display 101 of device 100 that has transferred from sleep mode 6006 (e.g., Figure 6A) to displaying home screen user interface 5020 (e.g., Figure 6C). The displaying includes, in accordance with a determination that the first computer system is sharing the first input device with the second display generation component of the second computer system, and a user interface generated by the second display generation component has a first representative spatial position that can be reached (e.g., or accessed) by dragging (e.g., or moving) a user interface object through a first portion of a user interface generated by the first display generation component, displaying ( 10010) a first visual indication in the first portion of the user interface generated by the first display generation component. For example, display 101 displaying home screen user interface 5020, while display 101 is positioned near display 201, allows dragging user interface objects across a portal from display 201 to display 101 and, in response to such determination, indication 6014-A is displayed along edge 201-1. In contrast, when display 101 was in the sleep mode 6006 in Figure 6A, display 101 was not available to receive user interface objects to be dragged from display 201 to display 101 and therefore in Figure 6A, display 201 forgoes displaying indication 6014-A. The displaying includes displaying (10012) a second visual indication in the second portion of the user interface generated by the first display generation component without displaying the first visual indication in the first portion of the user interface generated by the first display generation component. Displaying the second visual indication is performed in accordance with a determination that the first computer system is sharing the first input device with the second computer system that is in communication with the second display generation component, and the user interface generated by the second display generation component has a second representative spatial position (e.g., different from the first representative spatial position) that can be reached by dragging a user interface object through a second portion (e.g., other side of the first display generation component) of a user interface generated by the first display generation component. For example, in Figure 6D, indication 6014-D is displayed along edge 201-2 facing display 101 of device 100. In some embodiments, when the first computer system is sharing the first input device with the second computer system with the second display generation component and the user interface generated by the second display generation component has the first representative spatial position that can be reached by dragging a user interface object through the first portion of a user interface generated by the first display generation component, the visual indication in the first portion of the user interface generated by the first display generation component is displayed without displaying the visual indication in the second portion of the user interface generated by the first display generation component.

Method 10000 includes, while the first computer system is sharing the first input device with the second computer system, detecting (10014) a first input via the first input device, wherein the first input includes a first movement and corresponds to a request for dragging (e.g., or moving) a first user interface object across the first display region. In response to detecting the first input, moving (10016) the first user interface object across the user interface generated by the first display generation component. In accordance with a determination that the first input included movement across the portion of the first user interface where the respective visual indication was displayed when the first event that meets the first criteria was detected while the user interface generated by the second display generation component has the respective representative spatial position represented by the respective visual indication, method 10000 includes moving (10018) the first user interface object across the user interface generated by the second display generation component in accordance with the first movement detected via the first input device. These features are illustrated in Figures 6I-6K where photo objects 5004-A and 5004-B are moved from display 201 of device 200 to display 101 of device 100 in accordance with the user input including movement of mouse 202. Photo objects 5004-A and 5004-B cross edge 201-1 in a portion of edge 201-1 indicated by indication 6014-A. In some embodiments, the first input via the first input device (e.g., mouse 202) is received by the first computer system (e.g., device 200) and the first computer transfers the received input event to the second computer system (e.g., device 100). In some embodiments, the first input device (e.g., mouse 202) is connected to or in communication with (e.g., wirelessly via Bluetooth or Wi-Fi) both the first computer system (e.g., device 200) and the second computer system (e.g., device 100), and receiving the first input is exchanged between the first computer system and the second computer system. In some embodiments, the first input device (e.g., mouse 202 or keyboard 203) is independently in communication with the first computer system (e.g., device 200) and with the second computer system (e.g., device 100). An operation is performed either on device 200 or device 100 based on a determination of which display of displays 201 or 101 is currently active. For example, the determination of which display of displays 201 or 101 is currently active is made in accordance with a determination of where cursor 5002 is displayed at the time of detecting the input. For example, when device 200 detects an input on mouse 202 and determines that cursor 5002 is currently displayed on display 201, device 200 performs an operation on display 201 in response to the detected input. Displaying a visual indication in accordance with a determination that the first computer system is sharing the first input device with the second display generation component of the second computer system and the user interface generated by the second display generation component has a position that can be reached by dragging a user interface object through a first portion of the user interface generated by the first display generation component, provides the user feedback that the user interface object can be dragged to the user interface generated by the second computer generation component. Providing improved feedback enhances the operability of the device, which, additionally, reduces power usage and improves battery life of the device by enabling the user to use the device more quickly and efficiently.

In some embodiments, method 10000 includes, in response to detecting the first event that meets the first criteria, in accordance with a determination that the first computer system is not sharing the first input device with the second computer system, forgoing (10020) displaying the visual indication in the first display region provided by the first display component (e.g., when device 100 is sleep mode 6006 in Figure 6A, device 100 is not in the shared input mode with device 200 and device 200 forgoes displaying indication 6014-A shown in Figure 6C).Forgoing displaying the visual indication in response to detecting that the first computer system is not sharing the first input device with the second computer system, provides the user visual feedback indicating that the first input device cannot be used for operating the second computer system. Providing improved feedback enhances the operability of the device, which, additionally, reduces power usage and improves battery life of the device by enabling the user to use the device more quickly and efficiently.

In some embodiments, in response to detecting the first input and in accordance with a determination that the first input did not include movement across the portion of the first user interface where the respective visual indication was displayed, method 10000 includes forgoing (10022) movement of the first user interface object across the user interface generated by the second display generation component in accordance with the first movement detected via the first input device. The determination includes that the first input did not include across the portion of the first user interface when the first event that meets the first criteria was detected while the user interface generated by the second display generation component has the respective representative spatial position represented by the respective visual indication. For example, method 100000 includes ceasing to move the user interface object or moving the user interface object to a user interface generated by a second display generation component when the first input did not include movement across the portion of the first user interface where the respective visual indication was displayed. These features are illustrated, for example, in Figures 6L-6M where device 200 moves photo object 5004-B in accordance with an input including movement of mouse 202. As shown in Figure 6M, in response to the direction of the input, photo-object 5004-B is moved to a location of edge 201-1 of display 201 that is outside indication 6014-A. Photo object 5004-B cannot be dragged from display 201 to display 101 via such location, as shown in Figure 6M.Forgoing movement of the first user interface object in accordance with the first movement detected via the first input device when the first input does not include movement across the portion of the first user interface where the visual indication was displayed, provides the user feedback the user interface object cannot be moved across to the second user interface. Providing improved feedback enhances the operability of the device, which, additionally, reduces power usage and improves battery life of the device by enabling the user to use the device more quickly and efficiently.

In some embodiments, the first visual indication has (10024) a first size illustrating a size of a region where user interface objects can be dragged from the user interface generated by the first display generation component to the user interface generated by the second display generation component (e.g., the first visual indication is a bar having a length that corresponds to a size of a portal for dragging the object from the first display generation component to the second display generation component). For example, indication 6014-A in Figure 6C has a first size illustrating the size of a portion of edge 201-1 corresponding to the size of the portal for dragging user interface objects between displays 201 and 101. Displaying the first visual indication having a size illustrating the size of the region where the user interface object can be dragged to the user interface generated by the second display generation component, provides the user visual feedback of the region (e.g., an edge of a display) where the user interface object can be dragged across different computer systems. Providing improved feedback enhances the operability of the device, which, additionally, reduces power usage and improves battery life of the device by enabling the user to use the device more quickly and efficiently.

In some embodiments, the second computer system with the second display generation component (e.g., device 100 in Figure 6C) is (10026) in communication (e.g., wireless communication such as Bluetooth or Wi-Fi) with the first input device (e.g., keyboard 203 and/or mouse 202). Moving user interface objects between display regions provided by display generation components of different computer systems, where the different computer systems are in communication with the first input device, allows operating the different computer systems via the first input device (e.g., without a need to swap between input devices connected to different computer systems). Reducing the number of inputs (e.g., inputs needed to swap between different input devices) needed to perform an operation enhances the operability of the device, which, additionally, reduces power usage and improves battery life of the device by enabling the user to use the device more quickly and efficiently.

In some embodiments, while moving the first user interface object across the user interface generated by the first display generation component and the user interface generated by the second display generation component, method 10000 includes continuing (10028) to display the respective visual indication (e.g., indication 6014-A is displayed while dragging photo objects 5004-A and 5004-B in Figures 6I-6K from display 201 to display 101).Continuing to display the respective visual indication while moving the user interface object provides the user feedback that the user interface object can be dragged to the user interface generated by the second computer generation component. Providing improved feedback enhances the operability of the device, which, additionally, reduces power usage and improves battery life of the device by enabling the user to use the device more quickly and efficiently.

In some embodiments, the first computer system is (10030) (e.g., device 200 in Figure 6H) further in communication with a third computer system (e.g., device 300) distinct from the first computer system and the second computer system (e.g., device 100), wherein the third computer system is in communication with the first computer system and the second computer system and the first input device (e.g., touchpad 309 or keyboard 305) is connected to the third computer system (e.g., a phone, a laptop, or a tablet computer) distinct from the first computer system and the second computer system. The third computer system is in communication with the first computer system and the second computer system and the first input device is connected (e.g., mechanically) to the third computer system (e.g., the first input device is part of the third computer system while in communication with the first computer system and the second computer system). Moving user interface objects between three different computer systems when the different computer systems are in communication with each other provides additional control options for sharing user interface objects between the different computer systems in communication with each other by using a shared input device. Providing additional control options without cluttering the UI with additional displayed controls enhances the operability of the device, which, additionally, reduces power usage and improves battery life of the device by enabling the user to use the device more quickly and efficiently.

In some embodiments, method 10000 includes, in accordance with a determination that the first computer system is sharing the first input device with the third computer system (e.g., device 200 is sharing mouse 202 or keyboard 203 in Figure 6H) with a third display generation component (e.g., display 301 of device 300) and a user interface generated by the third display generation component has a third representative spatial position that can be reached by dragging a user interface object through a third portion of the user interface generated by the first display generation component, displaying (10032) a fourth visual indication (e.g., indication 6014-D along edge 201-2 of display 201) in the third portion of the user interface generated by the first display generation component. In some embodiments, the fourth visual indication (e.g., indication 5014-D in Figure 6H) is displayed concurrently with the first visual indication or the second visual indication (e.g., indications 5014-A and 5014-B in Figure 6C) therefore indicating that the first computer system is sharing the first input device with the second computer system and the third computer system concurrently, and that a user interface object can be dragged from the first display generation component to the second and third display generation components. Displaying a visual indication in accordance with a determination that the first computer system is sharing the first input device with the third computer system with a third display generation component and a user interface generated by the third display generation component has a third representative spatial position that can be reached by dragging a user interface object through a third portion of the user interface generated by the first display generation component provides the user feedback that the user interface object can be dragged to the user interface generated by the third computer generation component. Providing improved feedback enhances the operability of the device, which, additionally, reduces power usage and improves battery life of the device by enabling the user to use the device more quickly and efficiently.

In some embodiment, the first visual indication is (10034) displayed in a first portion of a first edge of the first display generation component and the second visual indication is displayed in a second portion of a second edge of the first display generation component (e.g., indication 5014-A in Figure 6C and indication 5014-D in Figure 6H). In some embodiments, the second edge is distinct from the first edge (e.g., the first edge is a left-side edge and the second edge is a right-side edge or a top edge of the first display generation component. In some embodiments, the second edge corresponds to the first edge so that the first portion and the second portion are distinct portions of the first edge). Displaying visual indications on edges of respective display regions that can be reached by dragging a user interface object through provides the user feedback of the location that can be used to drag the user interface object across the respective display regions. Providing improved feedback enhances the operability of the device, which, additionally, reduces power usage and improves battery life of the device by enabling the user to use the device more quickly and efficiently.

In some embodiments, the event that meets the first criteria includes (10036) the second computer system transitioning from a low power state to an active state (e.g., Figures 6A-6C). In some embodiments, the second computer system is woken up from a battery saving mode or a sleep mode or turning on from an off state. Providing a visual indication that a display region provided by a second display generation component of a second computer system is available to have content dragged onto provides the user feedback of the location that can be used to drag the user interface object across the respective display regions. Providing improved feedback enhances the operability of the device, which, additionally, reduces power usage and improves battery life of the device by enabling the user to use the device more quickly and efficiently.

In some embodiments, method 10000 includes detecting (10038) a second input via the first input device, the second input including a second movement corresponding to a request to indicate a location of an input focus (e.g., where the cursor is located). In response to detecting the second movement, changing an appearance (e.g., highlight) of at least a portion of a respective display generation component that currently includes the input focus. These features are illustrated, for example, in Figure 6P where a user input (e.g., contact 6028) is detected on touchpad 309 having a predetermined motion (e.g., circular motion or hovering). In response to the user input, and in accordance with a determination that cursor 5002 is currently displayed on display 101 of device 100, device 100 displays and indication (e.g., highlighted rim 6032 in Figure 6P) to indicate cursor 5002 is displayed on display 101. In some embodiments, the appearance of the display generation component including the input focus is changed only in accordance with a determination that there are multiple display generation components in communication with the first computer system. Changing an appearance of at least a portion of a respective display generation component that currently includes the input focus (e.g., a cursor) when detecting an input corresponding a request to indicate the location of the input focus, provides the user feedback of the location of the input focus when operating multiple computer systems. Providing improved feedback enhances the operability of the device, which, additionally, reduces power usage and improves battery life of the device by enabling the user to use the device more quickly and efficiently.

In some embodiments, in accordance with a determination that a physical distance between the first computer system and the second computer system is below a threshold distance (e.g., below distance D in Figure 6H), method 10000 includes automatically establishing (10040) a wireless connection between the first computer system and the second computer system. In some embodiments, automatically creating the communication between the first computer system and the second communication system corresponds to the first event. In some embodiments, the communication is via wireless communication. In some embodiments, establishing the wireless connection between the first computer system and the second computer system enables the shared input mode. Automatically establishing a wireless connection between the first computer system and the second computer system when a physical distance between the first computer system and the second computer system is below a threshold distance, allows a fast and convenient establishment of the connection (e.g., without a need for several user inputs for establishing the connection. Performing an operation when a set of conditions has been met without requiring further user input enhances the operability of the device, which, additionally, reduces power usage and improves battery life of the device by enabling the user to use the device more quickly and efficiently.

In some embodiments, the second computer system is (10042) in communication with a second input device and the second computer system is sharing the second input device with the first computer system. While displaying a first input focus (e.g., a cursor) on a respective display generation component of the first display generation component and the second display generation component, method 10000 includes detecting a third input via the first input device or the second input device. In response to detecting the third input, in accordance with a determination that the third input corresponds to a request to perform a first operation, the first operation is performed on the respective display generation component. These features are illustrated, for example, in Figures 6Q-6T. In Figures 6Q-6R, device 300 detects a user input (e.g., a gesture including movement of contact 6030) on touchpad 309 while cursor 5002 is displayed over application icon 6012-1 on display 101. In response to the user input, device 100 displays moving application icon 6012-1 in accordance with the movement of contact 6030. In Figure 6S-6R, device 300 detects a user input (e.g. a tap gesture of contact 6031) on touchpad 309 while cursor 5002 is displayed over photo object 5004 (e.g., a representation of a photo item) on display 201. In response to the user input, device 200 displays (e.g., opens) the photo object 5004, as shown in Figure 6T. By performing an operation, in response to detecting a user input, on a respective display generation component of the first display generation component and the second display generation component that is displaying the input focus allows a user to perform operations on different computer systems with the shared input device. Performing an operation when a set of conditions has been met without requiring further user input e.g., inputs needed to swap between different input devices) enhances the operability of the device, which, additionally, reduces power usage and improves battery life of the device by enabling the user to use the device more quickly and efficiently.

In some embodiments, while displaying the first user interface in the first display region provided by the first display generation component, detecting (10044) a second event that meets second criteria. In response to detecting the second event that meets the second criteria, displaying a respective visual indication by the first display generation component indicating that the second event has been detected. In some embodiments, the second event corresponds to ceasing to share the first input device by the second computer system. In some embodiments, in response to ceasing to share the second input device by the second computer system, the first display generation component ceases to display the first visual indication and/or the second visual indication (e.g., as shown in Figure 6A, when device 100 is sleep mode 6006, display 201 of device 200 does not display any indications of possible portals between displays 201 and 101 (e.g., indication 2014-A in Figure 6C)). In an instance that the first computer system maintains sharing the first input device with the third computer system, the first display generation system continues to display the fourth visual indication (e.g., indication 6014-D is displayed on edge 201-2 of display 201 while no indication is displayed on edge 201-1 facing display 101 in Figure 6H) in accordance with the determination the first computer system is sharing the first input device with the third computer system with the third display generation component and the user interface generated by the third display generation component has the third representative spatial position that can be reached by dragging the user interface object through the third portion of the user interface generated by the first display generation component. In some embodiments, the second event corresponds to an event that the second computer system and/or the third computer system has changed a status from a wake mode to a low power or off mode (e.g., device 100 could be in a sleep mode, a low power mode, or turned off in Figure 6H). In some embodiments, the second event corresponds to an event that an additional computer system is added to be in communication with the first computer system (e.g., Figures 6G-6H)(e.g., the additional computer system is in communication with the first computer system and/or is sharing the first input device). Displaying a respective visual indication by the first display generation component indicating that the second event meeting the second criteria is detected (e.g., a state of the second computer system having the second display region provided by the second display generation component has changed and the second display region may or may not be reached by dragging content ) provides the user feedback on whether a user interface object can be dragged through the first portion of the user interface generated by the first display generation component. Providing improved feedback enhances the operability of the device, which, additionally, reduces power usage and improves battery life of the device by enabling the user to use the device more quickly and efficiently.

In some embodiments, the first user interface in the first display region provided by the first display generation component includes (10046) a region for displaying a control user interface (e.g., control panel user interface 5036 in Figure 6V), wherein the control user interface includes a plurality of affordances for controlling device functions of the first computer system (e.g., affordances 5036-1 through 5036-5) including one or more affordances for controlling whether the first computer system shares the first input device with the second computer system (e.g., affordance 5036-4 including a plurality of sliding affordances 5039) for switching different display modes on and off. In some embodiments, the one or more affordances for controlling whether the first computer system shares the first input device with the second computer system are included in a display options sub-region of the control center. In some embodiments, the control center includes one or more affordances for controlling whether the first computer system the one or more affordances for controlling whether the second display generation component operates as an extended display (e.g., the second display generation component displays an extended view of the first display generation component) or as a mirroring display (e.g., the second display generation component displays a mirror view of the first display generation component. In some embodiments, the one or more affordances for controlling whether the second display generation component operates as an extended display or as a mirroring display are displayed in a screen mirroring sub-region of the control center). Displaying a control user interface including one or more affordances for controlling whether the first computer system shares the first input device with the second computer system reduces a number of inputs required to control sharing the first input device. Reducing the number of inputs needed to perform an operation enhances the operability of the device, which, additionally, reduces power usage and improves battery life of the device by enabling the user to use the device more quickly and efficiently.

In some embodiments, the first user interface in the first display region provided by the first display generation component includes (10048) one or more affordances (e.g., the sliding affordance labeled "Share Mouse and Keyboard" in Figure 6V) for enabling and disabling sharing of the first input device with any computer systems (e.g., the second computer system and the third computer system) physically located within a threshold distance from the first computer system. In some embodiments, the one or more affordances for enabling and disabling sharing of the first input device with any computer systems are included in the control center. In some embodiments, enabling sharing of the first input device with a respective computer system includes initiating a communication between the first input device and the respective computer system and disabling sharing of the first input device with the respective computer system includes halting the communication between the first input device and the respective computer system. Displaying one or more affordances in the first display region provided by the first display generation component for enabling and disabling sharing of the first input device with any computer systems physically located within a threshold distance from the first computer system reduces a number of inputs required to control sharing the first input device. Reducing the number of inputs needed to perform an operation enhances the operability of the device, which, additionally, reduces power usage and improves battery life of the device by enabling the user to use the device more quickly and efficiently.

In some embodiments, while displaying the input focus in a second display region provided by the second display generation component, detecting (10050) a termination of the communication between the first input device and the second computer system. For example, in Figure 6G status of device 100 may have changed (e.g., device may be turned off or may have entered a sleep mode or a power saving mode). If cursor 5002 was on display 101 when the status of device 100 was changed, and in accordance with a determination that mouse 202 is still in communication with device 200, cursor 5002 is displayed by display 201 of device 200, as shown in Figure 6G. In response to detecting the termination of the communication, in accordance with a detection that the first computer system remains to be in communication with the first input device, moving the input focus to the first display region provided by the first display generation component (e.g., as described with respect to Figure 8W). In some embodiments, the first computer system is directly connected to the first input device (e.g., the first computer system is a laptop (e.g., device 300) or desktop computer (e.g., device 200) and the first input device is a touchpad, or a mouse directly connected to the laptop computer.) Moving the input focus to the first display region provided by the first display generation component in response to detecting the termination of the communication between different computer systems, reduces a number of inputs needed to move the input focus to a location where it is available to be used to perform operations in the first display region. Reducing the number of inputs needed to perform an operation enhances the operability of the device, which, additionally, reduces power usage and improves battery life of the device by enabling the user to use the device more quickly and efficiently.

In some embodiments, the first input device includes (10052) a display generation component including a touch-sensitive display screen (e.g., device 300 includes touch-screen bar 6040 in Figure 6W). In accordance with a determination that a user input provided via the first input device is being directed to the first computer system (e.g., device 300) (e.g., a cursor is displayed on the first display generation component or the first display generation component is in an active mode), method 10000 includes displaying a first plurality of affordances (e.g., affordances 6040-1) for controlling the first computer system on the touch-sensitive display screen. In accordance with a determination that a user input provided via the first input device is being directed to the second computer system (e.g., device 100) (e.g., a cursor is displayed on the second display generation component or the second display generation component is in an active mode), method 10000 includes displaying a second plurality of affordances (e.g., affordances 6040-2) for controlling the second computer system on the touch-sensitive display screen. Displaying different pluralities of affordances on a touch-sensitive display screen (e.g., control strip) in response to a determination of the respective computer system that the detected user input is being directed to provides the user with improved means for providing user inputs when operating multiple computer systems. Performing an operation when a set of conditions has been met without requiring further user input enhances the operability of the device, which, additionally, reduces power usage and improves battery life of the device by enabling the user to use the device more quickly and efficiently.

In some embodiments, the first user interface (e.g., display settings user interface 6016) in the first display region provided by the first display generation component includes (10054) an affordance for display settings (e.g., affordances that are representations of device 200 (e.g., representation 6018-A) and device 100 (e.g., representation 6018-B)), and the respective representative spatial position of the user interface generated by the second display generation component is determined based on a user input on the affordance for display settings. These features are illustrated, for example, in Figures 6E-6F, where device 200 detects a user input (e.g., a press-down on mouse 202 followed up by movement of mouse 202 in the direction indicated with the arrow in Figure 6E), while devices 200 and 100 are in the shared input mode, corresponding to a request to select and move representation 6018-B in the display settings user interface 6016. In response to the input, device 200 moves representation 6018-B to be adjacent to (e.g., in contact with) representation 6018-A and concurrently changes the shared input mode to the extended display mode. Displaying an affordance for display settings for determining a respective representative spatial position of the user interface generated by the second display generation component based on a user input on the affordance for display settings reduces a number of inputs needed to determine the respective representative spatial position of the user interface generated by the second display generation component. Reducing the number of inputs needed to perform an operation enhances the operability of the device, which, additionally, reduces power usage and improves battery life of the device by enabling the user to use the device more quickly and efficiently.

In some embodiments, the respective representative spatial position of the user interface generated by the second display generation component is (10056) determined based on a wireless signal between the second computer system and the first input device (e.g., Bluetooth range, ultra-wideband (UWB) positioning technology, etc.) (e.g., Figures 6G-6H). Determining the respective spatial position of the user interface generated by the second display generation component based on a wireless signal between the second computer system and the first input device reduces a number of inputs needed for providing the respective spatial position of the user interface generated by the second display generation component. Reducing the number of inputs needed to perform an operation enhances the operability of the device, which, additionally, reduces power usage and improves battery life of the device by enabling the user to use the device more quickly and efficiently.

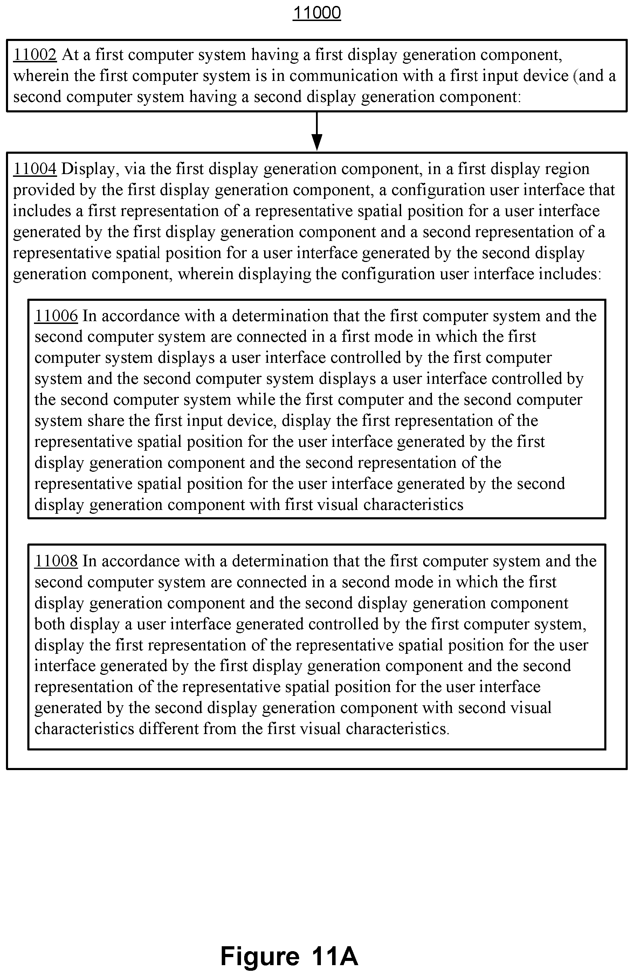

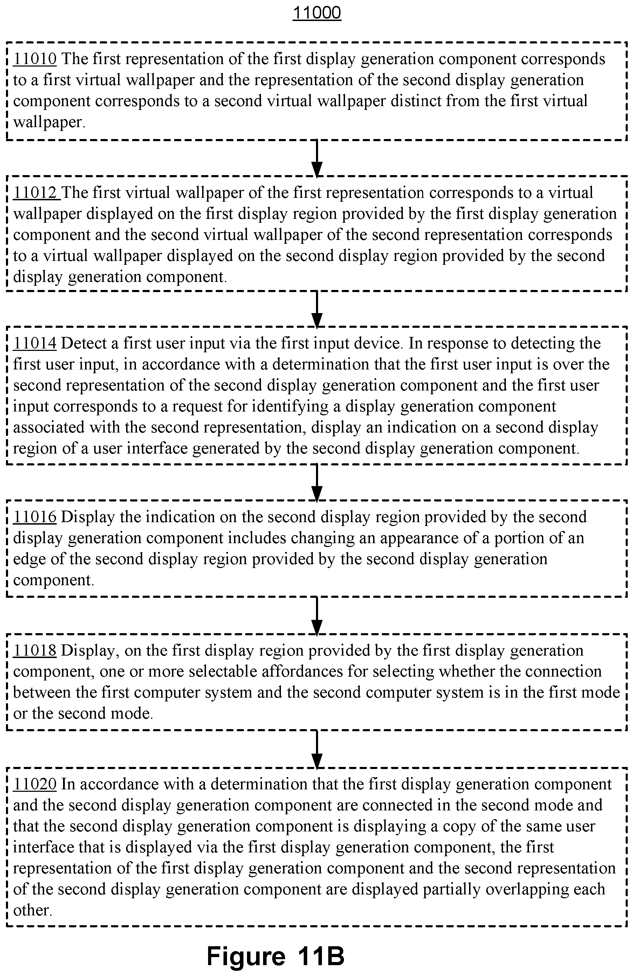

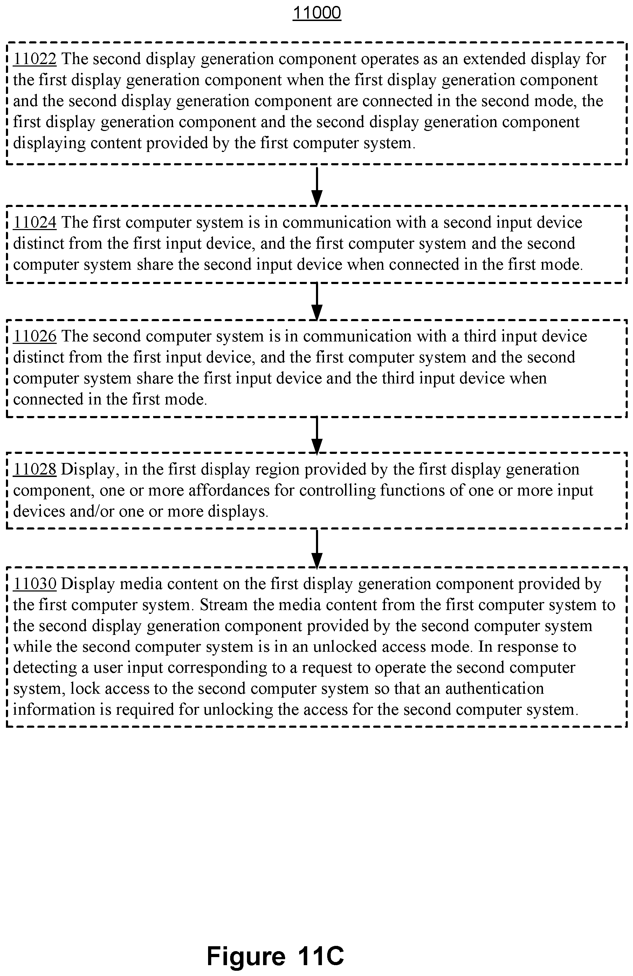

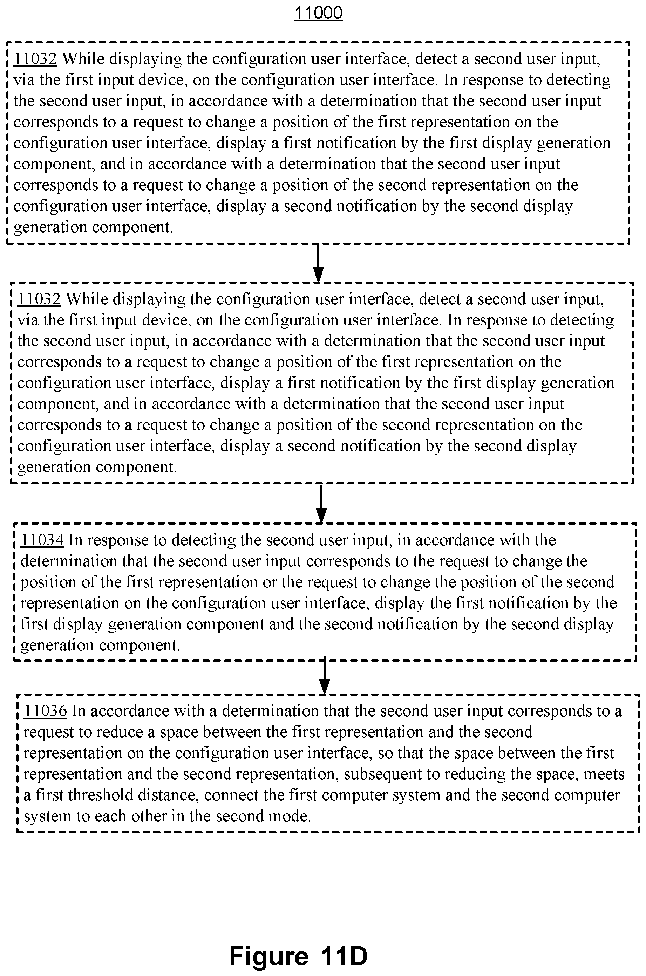

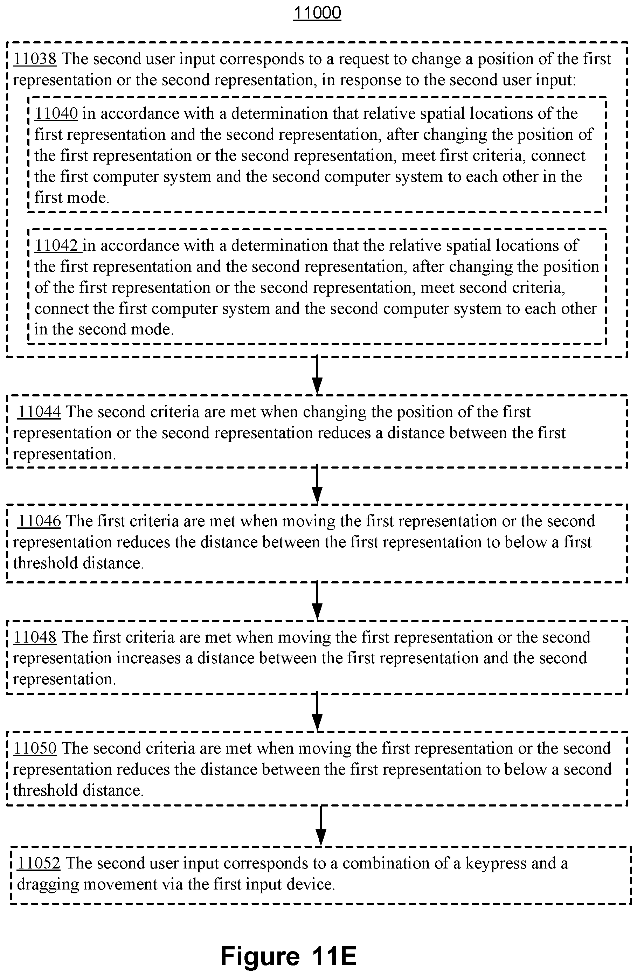

Figures 11A-11E are a flowchart of a method 11000 for displaying representations of display regions associated with different computer systems in a configuration user interface. Some operations in method 11000 are, optionally, combined and/or the order of some operations is, optionally, changed.

Method 11002 is performed at a first computer system (11002) having a first display generation component (e.g., device 200 including display 201 in Figure 7A) (e.g., a display, a projector, a heads-up display, or the like), wherein the first computer system is in communication with a first input device (e.g., a mouse, a touch-sensitive surface, a keyboard, etc.)(e.g., mouse 202) and a second computer system having a second display generation component (e.g., device 100 including display 101). Method 11000 includes displaying (11004), via the first display generation component, in a first display region provided by the first display generation component, a configuration user interface (e.g., configuration user interface 7002) that includes a first representation (e.g., representation 7004-A) of a representative spatial position for a user interface generated by the first display generation component and a second representation (e.g., representation 7004-B) of a representative spatial position for a user interface generated by the second display generation component (e.g., a relative positioning of the first and second representations in the configuration user interface correspond to relative positions of the first and second display generation components)(e.g., a configuration where the second representation is positioned on the right side of the first representation corresponds to an instance where the second display generation component is positioned on the right side of the first display generation component). Displaying the configuration user interface includes displaying (11006) the first representation (e.g., representation 7004-A) of the representative spatial position for the user interface generated by the first display generation component and the second representation (e.g., representation 7004-B) of the representative spatial position for the user interface generated by the second display generation component with first visual characteristics. For example, the characteristics include a size, color, pattern, brightness, relative positioning of the first and second representation, such as a gap between the first and second representations or no gap between the first and second representations. Displaying the first representation and the second representation with the first visual characteristics is performed in accordance with a determination that the first computer system and the second computer system are connected in a first mode (e.g., the shared input mode) in which the first computer system displays a user interface controlled by the first computer system (e.g., display 201 displays configuration user interface 7002 on top of home screen user interface 5010) and the second computer system displays a user interface controlled by the second computer system (e.g., display 101 displays home screen user interface 5020) while the first computer and the second computer system share the first input device (e.g., mouse 202 and/or keyboard 203). For example, the first input device is in connection with the first computer system and in connection, either directly or indirectly, with the second computer system so that the first input device provides user inputs on both of the first and second computer systems). Displaying the configuration user interface includes, in accordance with a determination that the first computer system and the second computer system are connected in a second mode in which the first display generation component and the second display generation component both display a user interface generated by the first computer system (e.g., the second display generation component is being used as a peripheral display for the first computer system (e.g., an extended display, or a mirror display)), displaying (11008) the first representation (e.g., representation 7004-A) of the representative spatial position for the user interface generated by the first display generation component and the second representation (e.g., representation 7004-B) of the representative spatial position for the user interface generated by the second display generation component with second visual characteristics different from the first visual characteristics. For example, the appearance of the first and second representations is an indication of the mode in which the first computer system and the second computer system are connected by. These features are illustrated, for example, in Figures 7A-7B. In Figure 7A, devices 200 and 100 are in the shared input mode and representations 7004-A and 7004-B have different visual appearances. Representation 7004-A includes the horizontally striped background corresponding to the horizontally striped virtual wallpaper of home screen user interface 5010 of device 200 and representation 7004-B includes the diagonally striped background corresponding to the diagonally striped virtual wallpaper of home screen user interface 5020 of device 100. In Figure 7B, devices 200 and 100 are in the extended display mode and representations 7004-A and 7004-B have similar visual appearances. Representations 7004-A and 7004-B both include the horizontally striped background corresponding to the horizontally striped virtual wallpaper of home screen user interface 5010 of device 200, also displayed on display 101 of device 100. In some embodiments, the virtual wallpaper corresponds to a background pattern or a picture against which display menus, application icons, and/or other elements are displayed. Displaying, in the configuration user interface, the first representation of the representative spatial position for the user interface generated by the first display generation component and the second representation of the representative spatial position for the user interface generated by the second display generation component with first visual characteristics in accordance with a determination that the first computer system and the second computer system are connected in a first mode and displaying the first representation of the representative spatial position for the user interface generated by the first display generation component and the second representation of the representative spatial position for the user interface generated by the second display generation component with second visual characteristics different from the first visual characteristics in accordance with a determination that the first computer system and the second computer system are connected in a second mode provides the user feedback on whether the first computer system and the second computer system are in the first mode or the second mode. Providing improved feedback enhances the operability of the device, which, additionally, reduces power usage and improves battery life of the device by enabling the user to use the device more quickly and efficiently.

In some embodiments, the first representation of the first display generation component corresponds (11010) to a first virtual wallpaper and the representation of the second display generation component corresponds to a second virtual wallpaper distinct from the first virtual wallpaper (e.g., Figure 7A). Using different virtual wallpapers to indicate whether the first computer system and the second computer system are in the first mode or the second mode provides the user with visual feedback of the different modes (e.g., the virtual wallpapers corresponding to a respective user interface displayed by the different computer generation components of the different computer systems). Providing improved feedback enhances the operability of the device, which, additionally, reduces power usage and improves battery life of the device by enabling the user to use the device more quickly and efficiently.

In some embodiments, the first virtual wallpaper of the first representation (e.g., the horizontally striped wallpaper of representation 7004-A) corresponds (11012) to a virtual wallpaper (e.g., user interface 5010) displayed on the first display region provided by the first display generation component and the second virtual wallpaper of the second representation (e.g., the diagonally striped wallpaper of representation 7004-B) corresponds to a virtual wallpaper (e.g., user interface 5020) displayed on a second display region provided by the second display generation component (e.g., the virtual wallpaper corresponding to a background pattern or a picture against which display menus, application icons, and/or other elements are displayed). Displaying the first virtual wallpaper of the first representation corresponding to a virtual wallpaper displayed on the first display region provided by the first display generation component and displaying the second virtual wallpaper of the second representation corresponding to a virtual wallpaper displayed on the second display region provided by the second display generation component provide the user immediate visual feedback of which representation corresponds to which display region. Providing improved feedback enhances the operability of the device, which, additionally, reduces power usage and improves battery life of the device by enabling the user to use the device more quickly and efficiently.

In some embodiments, method 11000 includes detecting (11014) a first user input (e.g., hovering a cursor) via the first input device. In response to detecting the first user input, in accordance with a determination that the first user input is over the second representation of the second display generation component and the first user input corresponds to a request for identifying (or distinguishing) a display generation component associated with the second representation, display an indication (e.g., an image or symbol indication, a text indication, a change in an appearance, etc.) on the second display region of a user interface generated by the second display generation component. These features are illustrated, for example, in Figures 7J-7K, where bezel region 7008 of display 101 of device 100 is highlighted in response to detecting the hovering (e.g., circular) movement of mouse 202 and in accordance with a determination that cursor 5002 is displayed over representation 7004-B corresponding to display 101. Displaying an indication on the second display region generated by the second display generation component, in response to the user input requesting to identify a display generation component associated with the second representation, provides the user an indication that which display region is associated with the second representation. Providing improved feedback enhances the operability of the device, which, additionally, reduces power usage and improves battery life of the device by enabling the user to use the device more quickly and efficiently.

In some embodiments, displaying the indication on the second display region provided by the second display generation component includes changing (11016) an appearance (e.g., increasing brightness, changing color, or changing of an appearance) of a portion of an edge of the second display region (e.g., bezel region 7008 of display 101 in Figure 7K) provided by the second display generation component. Displaying an indication on the second display region generated by the second display generation component (e.g., changing an appearance of a portion of an edge of the second display region provided by the second display generation component), in response to the user input requesting to identify a display generation component associated with the second representation, provides the user an indication that which display region is associated with the second representation. Providing improved feedback enhances the operability of the device, which, additionally, reduces power usage and improves battery life of the device by enabling the user to use the device more quickly and efficiently.

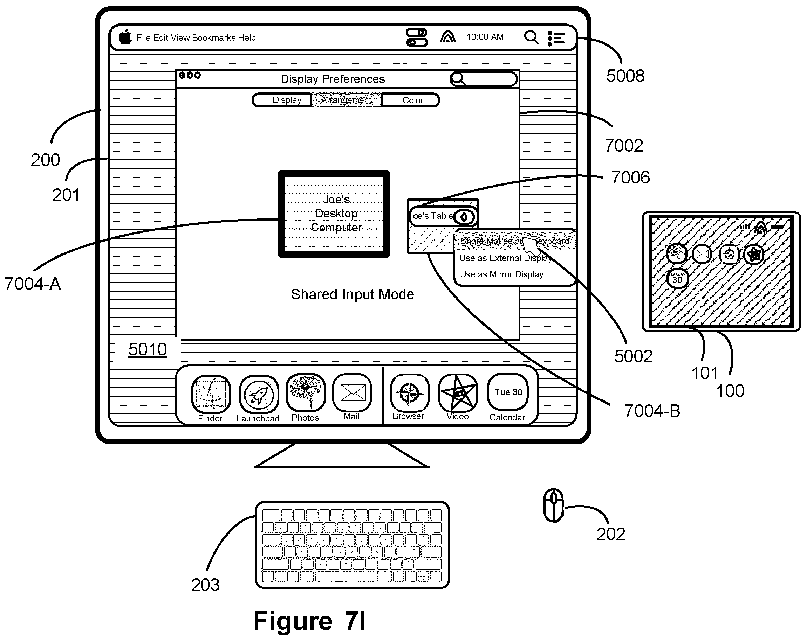

In some embodiments, method 11000 includes displaying (11018), on the first display region provided by the first display generation component, one or more selectable affordances for selecting whether the connection between the first computer system and the second computer system is in the first mode or the second mode. These features are shown, for example, in Figure 7I where the dropdown menu of affordance 7006 includes options for selecting different display modes. Displaying selectable affordances for selecting whether the connection between the first computer system and the second computer system is in the first mode or the second mode reduces a number of inputs for selecting the first mode or the second mode (e.g., without a need for providing a string of inputs for navigating through menus). Reducing the number of inputs needed to perform an operation enhances the operability of the device, which, additionally, reduces power usage and improves battery life of the device by enabling the user to use the device more quickly and efficiently.

In some embodiments, in accordance with a determination that the first display generation component and the second display generation component are connected in the second mode and that the second display generation component is displaying a copy of the same user interface that is displayed via the first display generation component, the first representation of the first display generation component and the second representation of the second display generation component are (11020) displayed partially overlapping each other (e.g., illustrated as a stack of representations) (e.g., representations 7004-A and 7004-B are partially overlapping in Figure 7C). Displaying the first representation of the first display generation component and the second representation of the second display generation component partially overlapping provides the user visual indication that the second display generation component is displaying a copy of the same user interface that is displayed via the first display generation component. Providing improved feedback enhances the operability of the device, which, additionally, reduces power usage and improves battery life of the device by enabling the user to use the device more quickly and efficiently.

In some embodiments, the second display generation component operates (11022) as an extended display for the first display generation component when the first display generation component and the second display generation component are connected in the second mode. The first display generation component and the second display generation component display content provided by the first computer system. These features are shown, for example, in Figures 7B-7C, where displays 201 and 101 display content provided by device 200 when in the extended display mode and in the mirror display mode. Displaying, in the configuration user interface, the first representation of the representative spatial position for the user interface generated by the first display generation component and the second representation of the representative spatial position for the user interface generated by the second display generation component with different visual characteristics when the second display generation component operates as an extended display for the first display generation component provides the user an indication that the second display generation component operates as the extended display for the first display generation component. Providing improved feedback enhances the operability of the device, which, additionally, reduces power usage and improves battery life of the device by enabling the user to use the device more quickly and efficiently.

In some embodiments, first computer system (e.g., device 200 in Figure 7A) is (11024) in communication with a second input device (e.g., a mouse, a touch-sensitive surface, a keyboard, etc.) (e.g., keyboard 203) distinct from the first input device, and the first computer system (e.g., device 200) and the second computer system (e.g., device 100) share the second input device when connected in the first mode. Displaying, in the configuration user interface, the first representation of the representative spatial position for the user interface generated by the first display generation component and the second representation of the representative spatial position for the user interface generated by the second display generation component with corresponding visual characteristics when the first computer system and the second computer system share the second input device provides the user an indication that the first computer system and the second computer system share the second input device. Providing improved feedback enhances the operability of the device, which, additionally, reduces power usage and improves battery life of the device by enabling the user to use the device more quickly and efficiently.

In some embodiments, the second computer system is (11026) in communication with a third input device (e.g., a mouse, a touch-sensitive surface, a keyboard, etc.) distinct from the first input device, and the first computer system and the second computer system share the first input device and the third input device when connected in the first mode. For example, the second computer system performs an operation, when the cursor is displayed on the second display generation component, in response to a user input received on an input device in communication with the first computer system. As another example, the first computer system performs an operation, when the cursor is displayed on the first display generation component, in response to a user input received on an input device in communication with the second computer system. These features are illustrated, for example, in Figures 6Q-6T. In Figures 6Q-6R, device 300 detects a user input (e.g., a gesture including movement of contact 6030) on touchpad 309 while cursor 5002 is displayed over application icon 6012-1 on display 101. In response to the user input, device 100 displays moving application icon 6012-1 in accordance with the movement of contact 6030. In Figure 6S-6R, device 300 detects a user input (e.g., a tap gesture of contact 6031) on touchpad 309 while cursor 5002 is displayed over photo object 5004 (e.g., a representation of a photo item) on display 201. In response to the user input, device 200 displays (e.g., opens) the photo object 5004, as shown in Figure 6T. Sharing by the first computer system and the second computer system the first input device and the third input device when connected in the first mode reduces a number of inputs needed to operate multiple computer systems concurrently (e.g., without a need of swapping between input devices when operating the different computer systems). Reducing the number of inputs needed to perform an operation enhances the operability of the device, which, additionally, reduces power usage and improves battery life of the device by enabling the user to use the device more quickly and efficiently.

In some embodiments, method 11000 includes displaying (11028), in the first display region provided by the first display generation component, one or more affordances for controlling functions of one or more input devices and/or one or more displays. (In some embodiments, the one or more affordances include an affordance for controlling (e.g., enabling and disabling) communication with a stylus (e.g., an active stylus with wireless communication capabilities). For example, display preferences user interface 7002 in Figure 7L includes affordances 7010-1, 7010-2, and 7010-3 for disabling and enabling sidebar, touch bar and a stylus. In some embodiments, the one or more affordances include an affordance for controlling displaying a control strip user interface (e.g., control strip 7028 in Figure 7R) for adjusting the first computer system and/or the second computer system (e.g., a sidebar). In some embodiments, the one or more affordances (e.g., affordance 7010-2 in Figure 7L for touch-screen bar 6040 shown in Figures 6W-6X) include an affordance for controlling a display generation component including a touch-sensitive display screen integrated into a housing that includes a keyboard. Displaying, in the first display region provided by the first display generation component, one or more affordances for controlling functions of one or more input devices and/or one or more displays reduces a number of user inputs needed for controlling functions of the one or more input devices (e.g., without a need for a string of inputs for navigating through various menus). Reducing the number of inputs needed to perform an operation enhances the operability of the device, which, additionally, reduces power usage and improves battery life of the device by enabling the user to use the device more quickly and efficiently.

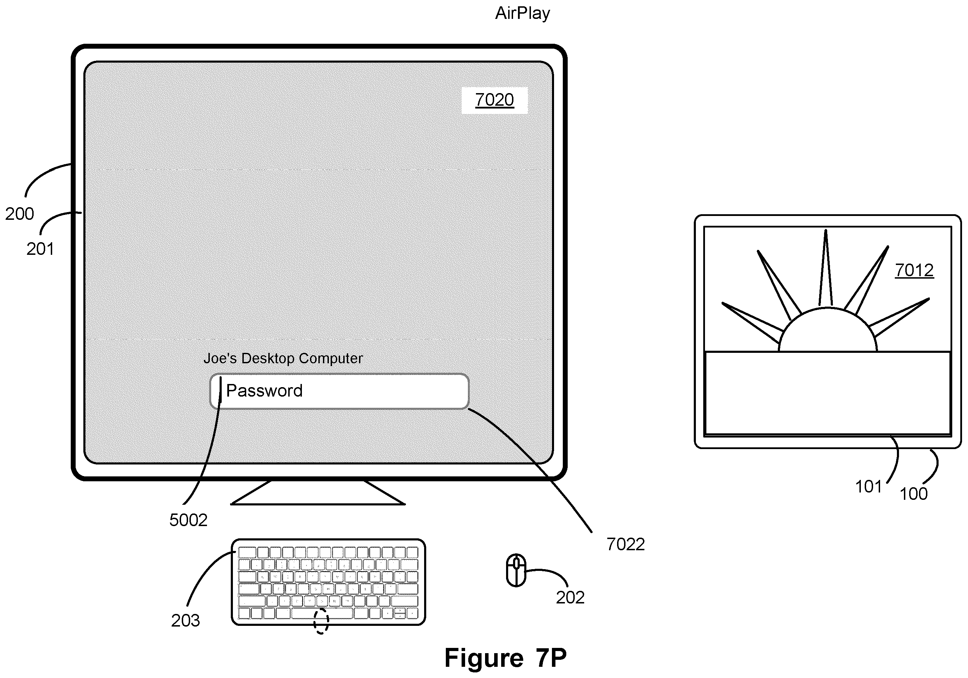

In some embodiments, method 11000 includes displaying (11030) media content (e.g., audio or video content) on the first display generation component provided by the first computer system. Method 11000 includes streaming the media content (e.g., audio or video content) from the first computer system to the second display generation component provided by the second computer system while the second computer system is in an unlocked access mode (e.g., the second computer system is accessible without authentication from a user). These features are illustrated, for example, in Figures 7M-7O, where display 101 of device 100 displays video content 7012 and streams video content 7012 to be displayed on display 201 of device 200. In response to detecting a user input corresponding to a request to operate the second computer system (e.g., input including keystroke by contact 7018 on keyboard 203 in Figure 7O), method 11000 includes locking access to the second computer system (e.g., display 201 is displaying lock screen user interface 7020 in Figure 7P) so that an authentication information (e.g., a passcode, a facial recognition, or fingerprint recognition) (e.g., passcode entry affordance 7022) is required for unlocking the access for the second computer system. Locking access to the second computer system in response to detecting the user input while streaming media content from the first computer increases safety without a need for the user to provide user inputs to lock access to the second computer system. Performing an operation when a set of conditions has been met without requiring further user input enhances the operability of the device, which, additionally, reduces power usage and improves battery life of the device by enabling the user to use the device more quickly and efficiently.

In some embodiments, while displaying the configuration user interface, detect (11032) a second user input (e.g., a click and drag), via the first input device, on the configuration user interface. In response to detecting the second user input, in accordance with a determination that the second user input corresponds to a request to change a position of the first representation on the configuration user interface, method 11000 includes displaying a first notification by the first display generation component and in accordance with a determination that the second user input corresponds to a request to change a position of the second representation on the configuration user interface, method 11000 includes displaying a second notification by the second display generation component. These features are illustrated, for example, in Figures 6E-6F where, in accordance with moving representation 6018-B being away from representation 6018-A in Figure 6E to be in contact with representation 6018-B in Figure 6F, indication 6014-D and/or indication 6014-C are displayed by device 200 and/or device 100, respectively. In Figures 6E-6F, these features are illustrated in display settings user interface 6016 but similar operations can be performed on display preferences user interface 7002. Displaying the first notification by the first display generation component and displaying the second notification by the second display generation component, in accordance with the determination that the second user input corresponds to a request to change a position of the first representation or the second representation, respectively, provides the user feedback on which representation corresponds to which display generation component. Providing improved feedback enhances the operability of the device, which, additionally, reduces power usage and improves battery life of the device by enabling the user to use the device more quickly and efficiently.

In some embodiments, in response to detecting the second user input, in accordance with the determination that the second user input corresponds to the request to change the position of the first representation or the request to change the position of the second representation on the configuration user interface, method 11000 includes displaying (11034) the first notification by the first display generation component and the second notification by the second display generation component. These features are illustrated, for example, in Figures 6E-6F where, in accordance with moving representation 6018-B being away from representation 6018-A in Figure 6E to be in contact with representation 6018-B in Figure 6F, indication 6014-D and indication 6014-C are displayed by device 200 and device 100, respectively. Displaying the first notification by the first display generation component and displaying the second notification by the second display generation component, in accordance with the determination that the second user input corresponds to a request to change a position of the first representation or the second representation, respectively, provides the user feedback indicating the relative positions of the representations are changed. Providing improved feedback enhances the operability of the device, which, additionally, reduces power usage and improves battery life of the device by enabling the user to use the device more quickly and efficiently.

In some embodiments, in accordance with a determination that the second user input corresponds to a request to reduce a space between the first representation and the second representation on the configuration user interface (e.g., Figure 7D-7E), so that the space between the first representation and the second representation, subsequent to reducing the space, meets a first threshold distance (e.g., the first threshold distance being substantially zero so that the first and second representations are adjacent to each other), method 11000 includes connecting the first computer system and the second computer system to each other in the second mode. These features are illustrated, for example, in Figures 7D-7E, where moving representation 7004-B from being away from representation 7004-A to being in contact with representation 7004-B changes the display mode from shared input mode to the extended display mode. Connecting the first computer system and the second computer system to each other in the second mode in response to detecting the second user input corresponding to a request to reduce a space between the first representation and the second representation provides user a fast and convenient method for connecting the first computer system and the second computer system to each other in the second mode (e.g., without a need for providing a string of inputs for navigating through a variety of menus). Reducing the number of inputs needed to perform an operation enhances the operability of the device, which, additionally, reduces power usage and improves battery life of the device by enabling the user to use the device more quickly and efficiently.

In some embodiments, the second user input corresponds (11038) to a request to change a position of the first representation or the second representation (e.g., dragging the first or second representation to a new position so that relative positions of the first and second representations change) (e.g., dragging representation 7004-B in Figures 7D-7E). In response to the second user input, in accordance with a determination that relative spatial locations of the first representation and the second representation, after changing the position of the first representation or the second representation, meet first criteria (e.g., a distance between representations 7004-A and 7004-B is above a predetermined threshold distance), method 11000 includes connecting (11040) the first computer system and the second computer system to each other in the first mode (e.g., the shared display mode). In accordance with a determination that the relative spatial locations of the first representation and the second representation, after changing the position of the first representation or the second representation, meet second criteria (e.g., a distance between representations 7004-A and 7004-B is below the predetermined threshold distance), method 11000 includes connecting the first computer system and the second computer system to each other in the second mode (e.g., the extended display mode). Connecting the first computer system and the second computer system to each other in the first mode or in the second mode in response to detecting the second user input for changing the relative spatial locations of the first representation and the second representation provides the user a fast and convenient method for changing between the first mode and the second mode (e.g., without a need for providing a string of inputs for navigating through a variety of menus). Reducing the number of inputs needed to perform an operation enhances the operability of the device, which, additionally, reduces power usage and improves battery life of the device by enabling the user to use the device more quickly and efficiently.

In some embodiments, the second criteria are met (11044) when changing the position of the first representation or the second representation reduces a distance between the first representation (e.g., Figures 7D-7E). Connecting the first computer system and the second computer system to each other in the second mode by reducing the distance between the representations provides the user a fast and convenient method for connecting the first computer system and the second computer system to each other in the second mode (e.g., without a need for providing a string of inputs for navigating through a variety of menus). Reducing the number of inputs needed to perform an operation enhances the operability of the device, which, additionally, reduces power usage and improves battery life of the device by enabling the user to use the device more quickly and efficiently.

In some embodiments, the first criteria are met (11046) when moving the first representation or the second representation reduces the distance between the first representation to below a first threshold distance (e.g., Figure 7D-7E). Connecting the first computer system and the second computer system to each other in the first mode by reducing the distance between the representations provides the user a fast and convenient method for connecting the first computer system and the second computer system to each other in the second mode (e.g., without a need for providing a string of inputs for navigating through a variety of menus). Reducing the number of inputs needed to perform an operation enhances the operability of the device, which, additionally, reduces power usage and improves battery life of the device by enabling the user to use the device more quickly and efficiently.

In some embodiments, the first criteria are met (11048) when moving the first representation or the second representation increases a distance between the first representation and the second representation (e.g., Figures 7E-7F). Connecting the first computer system and the second computer system to each other in the first mode by increasing the distance between the representations provides the user a fast and convenient method for connecting the first computer system and the second computer system to each other in the first mode (e.g., without a need for providing a string of inputs for navigating through a variety of menus). Reducing the number of inputs needed to perform an operation enhances the operability of the device, which, additionally, reduces power usage and improves battery life of the device by enabling the user to use the device more quickly and efficiently.

In some embodiments, the second criteria are met (11050) when moving the first representation or the second representation reduces the distance between the first representation to below a second threshold distance (e.g., Figure 7D-7E). Connecting the first computer system and the second computer system to each other in the first mode by increasing the distance between the representations provides the user a fast and convenient method for connecting the first computer system and the second computer system to each other in the first mode (e.g., without a need for providing a string of inputs for navigating through a variety of menus). Reducing the number of inputs needed to perform an operation enhances the operability of the device, which, additionally, reduces power usage and improves battery life of the device by enabling the user to use the device more quickly and efficiently.

In some embodiments, the second user input corresponds (11052) to a combination of a keypress and a dragging movement via the first input device (e.g., a click and drag on a mouse) (e.g., a press-down and drag movement on mouse 202 causes device 200 to select and drag representation 7004-B in Figures 7D-7E). Changing a position of the first representation or the second representation in response to detecting a combination of the keypress and the dragging movement provides the user a fast and convenient method for changing the position of the first representation or the second representation (e.g., without a need for any additional user inputs). Reducing the number of inputs needed to perform an operation enhances the operability of the device, which, additionally, reduces power usage and improves battery life of the device by enabling the user to use the device more quickly and efficiently.

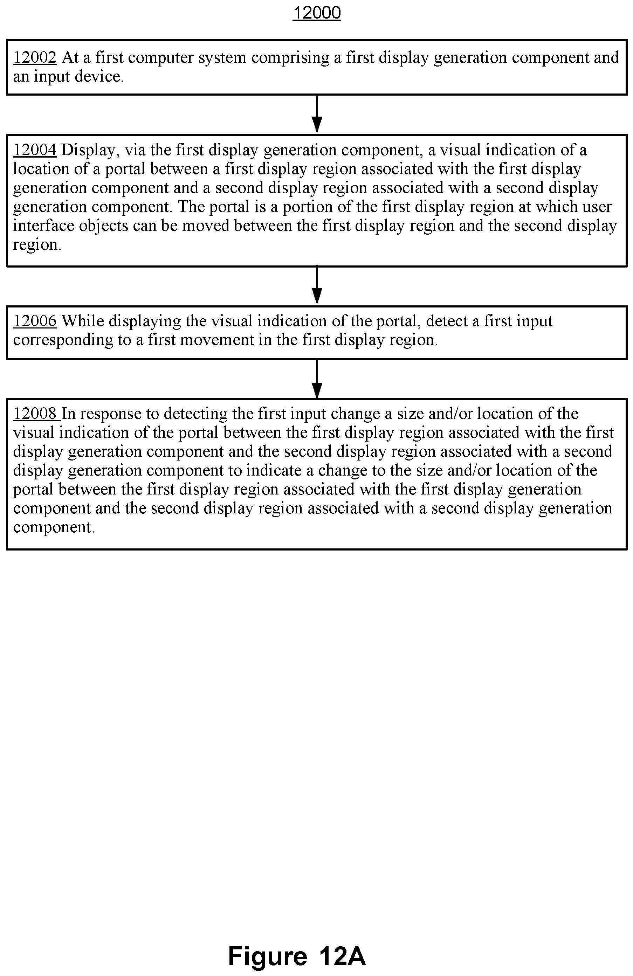

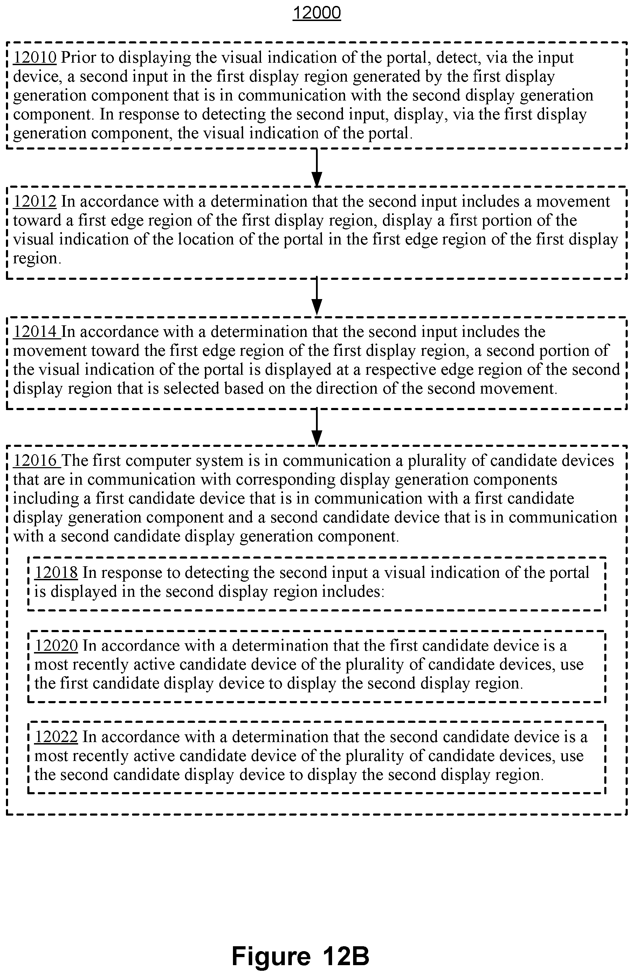

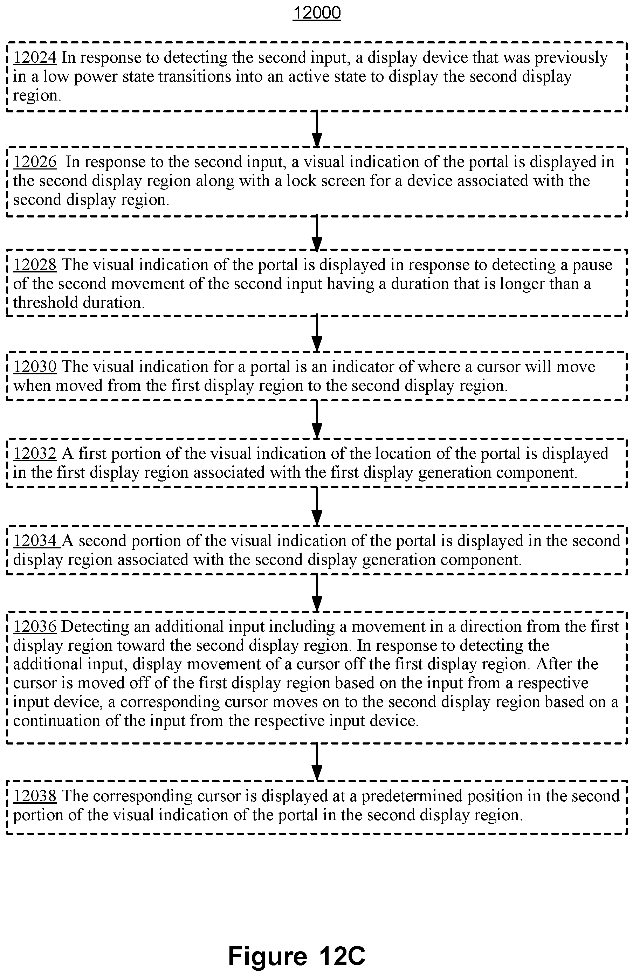

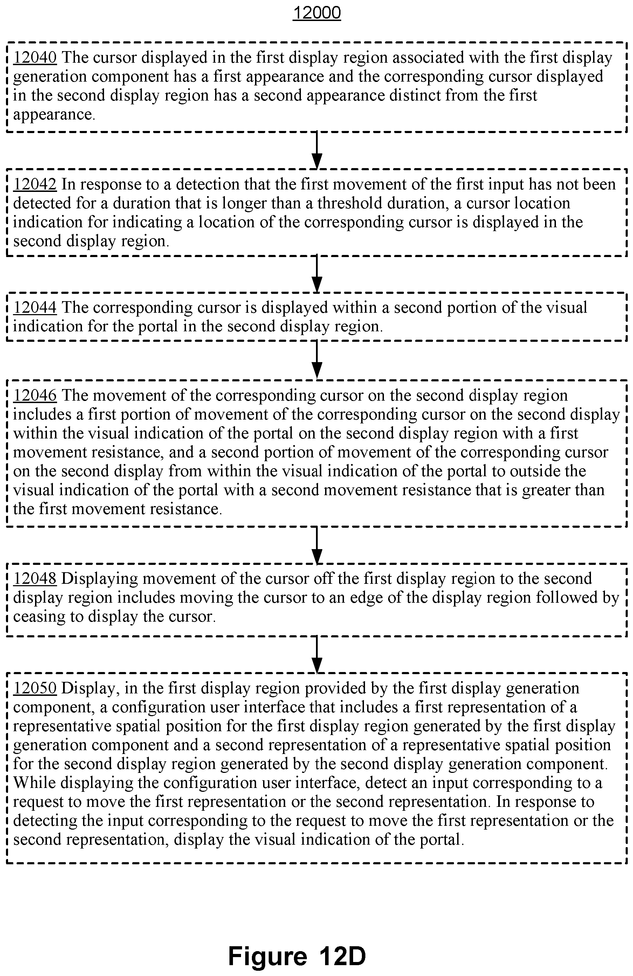

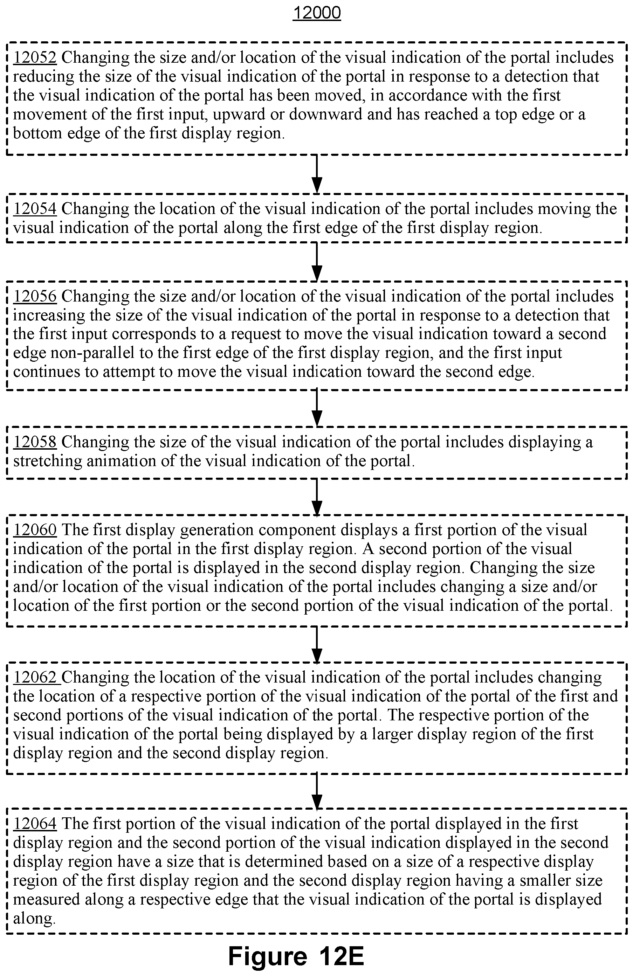

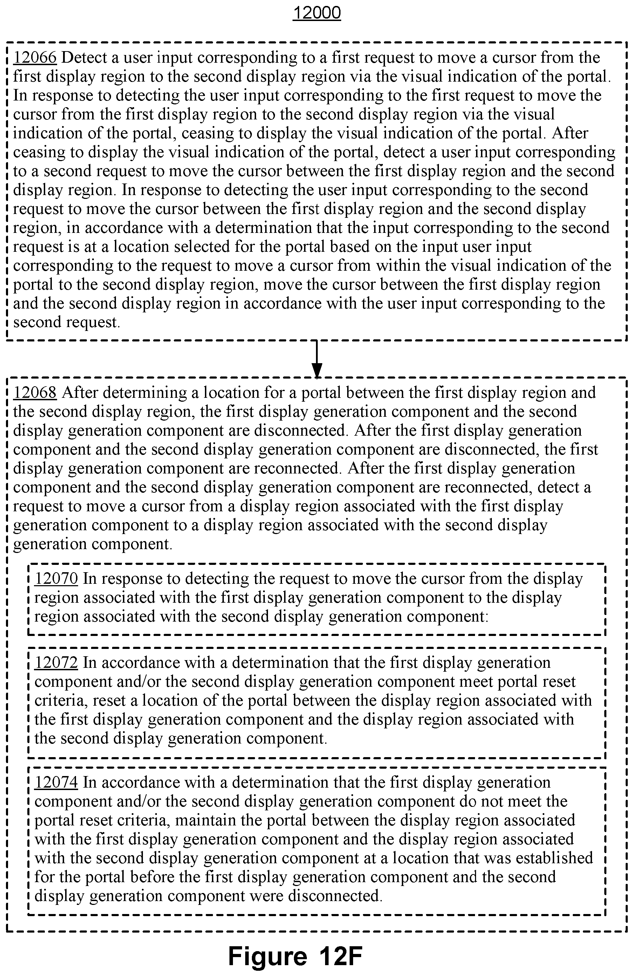

Figures 12A-12F are a flowchart of a method 12000 for displaying a visual indication of a portal at which user interface objects can be moved between displays of different devices and changing a size and/or location of the portal by changing the size and/or location of the visual indication of the porta. Some operations in method 12000 are, optionally, combined and/or the order of some operations is, optionally, changed.

Method 12000 is performed at a first computer system (12002) including a first display generation component (e.g., a display, a projector, a heads-up display, or the like)(e.g., device 200 including display 201 in Figure 8A) and an input device (e.g., a mouse, a touch-sensitive surface, etc.)(e.g., mouse 2020. Method 12000 includes displaying (12004), via the first display generation component, a visual indication of a location of a portal (e.g., indication 8002-A and/or indication 8002-B in Figure 8C) between a first display region associated with the first display generation component and a second display region associated with a second display generation component (e.g., display 101 of device 100)(e.g., the first computer system provides information to the second computer system that causes the second display generation component to display the visual indication in the second display region)(e.g., the first display region displays a first portion of the visual indication and the second display region displays a second portion of the visual indication). The portal is a portion (e.g., a first edge) of the first display region at which user interface objects can be moved (e.g., dragged) between the first display region and the second display region. This feature is illustrated, for example, in Figures 5A-5C where indication 5014-A is displayed to indicate a position of a portal for moving user interface objects (e.g., photo object 5004) between display 201 and display 101. In some embodiments, indication 5014-A corresponds to indication 8002-A. In some embodiments, a user interface object cannot be moved (e.g., dragged) between the first display region and the second display region through locations of the first display region (e.g., locations along the first edge) that are outside the portal. While displaying the visual indication of the portal, method 12000 includes detecting (12006) a first input corresponding to a first movement in the first display region (e.g., movement of a cursor near the first edge of the first display region). In response to detecting the first input, method 12000 includes changing (12008) a size and/or location of the visual indication of the portal between the first display region associated with the first display generation component and the second display region associated with a second display generation component to indicate a change to the size and/or location of the portal between the first display region associated with the first display generation component and the second display region associated with a second display generation component. These features are illustrated, for example, in Figures 8E-8G where device 200 detects a user input including movement 8006-A of mouse 202 and in response to the input, changes the size and location of indications 8002-A and 8002-B. Displaying a visual indication of a location of a portal between a first display region associated with a first display generation component of a first computer system and a second display region associated with a second display generation component of a second computer system, where the portal is a portion of the first display region at which objects can be moved between the first and second display regions, and changing a size and/or location of the visual indication of the portal to indicate a change of the size and/or location of the portal, thereby providing improved visual feedback to the user (e.g., of the size and/or location of the portal).

In some embodiments, prior to displaying the visual indication of the portal, method 12000 includes detecting (12010), via the input device, a second input (e.g., a drag towards an edge) (e.g., the second input and the first input are portions of a single continuous input) in the first display region generated by the first display generation component that is in communication with the second display generation component. In response to detecting the second input, method 12000 includes displaying, via the first display generation component, the visual indication of the portal. These features are illustrated, for example, in Figures 8A-8C where device 200 has detected an input including movement of mouse 202 corresponding to a request to move cursor 5002 from the middle portion of display 201 toward (e.g., near or in contact with) edge 201-1 of display 201, as shown in Figure 8C. In response cursor 5002 reaching edge 201-1 (or to an edge region extending from edge 201-1 by a threshold distance T shown in Figure 8D), display 201 and display 101 display respective indications 8002-A and 8002-B, as shown in Figure 8C. Displaying the visual indication of the portal in response to detecting a second input, thereby providing improved visual feedback to the user (e.g., of the size and/or location of the portal).

In some embodiments, method 12000 includes, in accordance with a determination that the second input includes a movement toward a first edge region of the first display region (e.g., edge 201-1 in Figure 8C), displaying (12012) a first portion of the visual indication (e.g., indication 8002-A) of the location of the portal in the first edge region of the first display region. In some embodiments, in accordance with a determination that the second input includes the second movement toward a second edge region of the first display region, displaying the visual indication of the location of the portal at the second edge region of the first display region. Displaying the visual indication of the portal in accordance with a determination that the second input includes a movement toward a first edge of the first display region, thereby providing improved visual feedback to the user (e.g., of the size and/or location of the portal).

In some embodiments, in accordance with a determination that the second input includes the movement toward the first edge region of the first display region, a second portion of the visual indication of the portal is displayed (12014) at a respective edge region of the second display region that is selected based on the direction of the second movement. In some embodiments, the respective edge region of the second display region is selected based on the direction of the movement. These features are illustrated, for example, in Figure 8C where indication 8002-B is displayed at edge 101-1 of display 101. Edge 101-1 of display 101 is positioned adjacent to edge 201-1 of display 201 and the movement of mouse 202 is detected toward edge 201-1 of display 201. For example, the top of the second display region if the cursor is at or moved toward the bottom of the first display region, the bottom of the second display region if the cursor is at or moved toward the top of the first display region, the right side of the second display region if the cursor is at or moved toward the left side of the first display region, the left side of the second display region if the cursor is at or moved toward the right side of the first display region). In some embodiments, certain alignment configurations are excluded, such as a top edge or a bottom edge of the first and/or second display region (e.g., to avoid conflicts with gestures when a cursor moves between devices). For example, a tablet device can only have a portal, and display a respective visual indication of the portal, on the side edges of the display. The side edges would change in accordance with an orientation of the device (e.g., a horizontal and vertical orientation. Displaying a second portion of the visual indication of the portal at a respective edge region of the second display region, thereby providing improved visual feedback to the user (e.g., indicating the location of the portal when moving objects from the second display region to the first display region).

In some embodiments, the first computer system (e.g., device 200 in Figure 8A) is (12016) in communication a plurality of candidate devices (e.g., device 100 including display 101 and device 100-2 including display 101-2) that are in communication with corresponding display generation components including a first candidate device that is in communication with a first candidate display generation component and a second candidate device that is in communication with a second candidate display generation component. In response to detecting (12018) the second input (e.g., the input of dragging mouse 202 to edge 201-1 of display 201 in Figures 8A-8C) a visual indication of the portal is displayed in the second display region including, in accordance with a determination that the first candidate device is a most recently active candidate device of the plurality of candidate devices (e.g., when the cursor is moved to the edge of the first display region), using (12020) the first candidate display device to display the second display region. This feature is illustrated, for example, in Figures 8A-8C where in accordance with a determination that device 100 was the most recently active device out of devices 100 and 100-1, indication 8002-B is displayed on display 101 of device 100. In accordance with a determination that the second candidate device is a most recently active candidate device of the plurality of candidate devices (e.g., when the cursor is moved to the edge of the first display region), using (12022) the second candidate display device to display the second display region. For example, in accordance with a determination that device 100-1 was the most recently active device out of device 100 and 100-1, an indication would be displayed on edge 101-1 of device 100-1. In some embodiments, the most recently used display region is determined based on a user input such as pressing a button, touching the display. In some embodiments, the most recently used display region is not determined based on a notification being displayed. In some embodiments, the availability based on device display meeting visibility criteria. In some embodiments, the visibility criteria include a state of lid/cover (e.g., lid/cover is not closed) or based on an orientation of display region (e.g., the device is not flipped face down). Displaying the second display region on a display of a candidate device that was a most recently active of the candidate devices in communication with the first computer system, thereby performing an operation when a set of conditions has been met without requiring further user input.

In some embodiments, in response to detecting the second input, a display device that was previously in a low power state (e.g., an off state or a state in which the display displays limited information or is updated infrequently) transitions (12024) into an active state to display the second display region (e.g., the respective display region is lighted up or invoked to transfer from the sleep mode or the power saving mode to display a wake screen or lock screen user interface). For example, device 100 transfers from sleep mode 6006 in Figure 8A to displaying home screen user interface 5020 in Figure 8C, in response to dragging mouse 202 to edge 201-1 of device 200. Transitioning a display device that was previously in a low power state into an active state in response to the second input, thereby performing an operation when a set of conditions has been met without requiring further user input.

In some embodiments, in response to the second input, a visual indication of the portal is displayed (12026) in the second display region along with a lock screen for a device associated with the second display region (e.g., a device that is in communication with the second display region). In some embodiments, the device associated with the second display region requires authentication in order to unlock the device (e.g., in order to replace the lock screen user interface with a home screen user interface or an application user interface). For example, indication 8002-B shown in Figure 8C can be displayed on lock screen 7020 of device 100 in Figure 8B. In some embodiments, while displaying the lock screen, the device receives one or more authentication inputs, and in response to receiving the one or more authentication inputs, in accordance with a determination that the one or more authentication inputs meet authentication criteria (e.g., a biometric input that matches an enrolled biometric feature, a correct password or passcode or other authentication (e.g., shown in Figure 8B)), unlocking the device and displaying an unlocked user interface (e.g., a home screen or desktop user interface and/or one or more application user interfaces) and in accordance with a determination that that the one or more authentication inputs do not meet authentication criteria, forgoing unlocking the device and maintaining the device in the locked state In some embodiments, a user can unlock the second display region or the third display region by providing the authentication inputs via the first input device (e.g., a mouse or a keyboard of the first computer system), when the second display region is locked (e.g., by selecting buttons with cursor or typing in passcode). Displaying a visual indication of the portal in the second display region with a lock screen in response to the second input, thereby providing improved visual feedback to the user.

In some embodiments, the visual indication of the portal is displayed (12028) in response to detecting a pause of the second movement of the second input having a duration that is longer than a threshold duration (e.g., in Figure 8D, cursor 5002 has paused in accordance with a pause in the movement of mouse 202 and in response to detecting the pause, indications 8002-A and 8002-B are displayed in Figure 8E). Displaying the visual indication of the portal in response to detecting a pause of the second movement, thereby providing improved visual feedback to the user.

In some embodiments, the visual indication for a portal is (12030) an indicator of where a cursor will move when moved from the first display region to the second display region. This feature is illustrated, for example, in Figures 8S-8T where cursor 5002 together with photo object 5004 is moved from display 201 to display 101, after indications 5002-A and 5002-B have been adjusted in Figures 8E-8R. When indications 5002-A and 5002-B have corresponding sizes and locations, cursor 5002 moves in accordance with a movement of mouse 202. When indications 5002-A and 5002-B do not have corresponding sizes and/or locations, cursor 5002 would have a discontinuity (e.g., a jump) between displays 201 and 101. Displaying the visual indication for a portal that is an indicator of where a cursor will move when moved from the first display region to the second display region, thereby providing improved visual feedback to the user.

In some embodiments, a first portion of the visual indication of the location of the portal is displayed (12032) in the first display region associated with the first display generation component (e.g., indication 8002-A is displayed on display 201 of device 200 in Figure 8C). Displaying a first portion the visual indication of the location of the portal in the first display region associated with the first display generation component, thereby providing improved visual feedback to the user (e.g., indicating the location of the portal when moving objects from the first display region to the second display region).

In some embodiments, a second portion of the visual indication of the portal is displayed (12034) in the second display region associated with the second display generation component (e.g., indication 8002-B is displayed on display 101 of device 100 in Figure 8C). In some embodiments, the method further includes displaying, by the second display generation component, a second portion of the visual indication in the second display region associated with the second display generation component. Displaying a second portion the visual indication of the location of the portal in the second display region associated with the second display generation component, thereby providing improved visual feedback to the user (e.g., indicating the location of the portal when moving objects from the second display region to the first display region).

In some embodiments, method 12000 includes detecting (12036) an additional input including a movement (e.g., a drag) in a direction from the first display region toward the second display region (e.g., the cursor moves from the first portion of the visual indication to the second portion of the visual indication of the portal). In response to detecting the additional input, displaying movement of a cursor off the first display region. After the cursor is moved off of the first display region based on the input from a respective input device, a corresponding cursor moves on to the second display region based on a continuation of the input from the respective input device. These features are illustrated, for example, in Figures 8H-8I, where device 200 detects movement 8006-B of mouse 202 causing cursor 5002 having an appearance of an arrow to move from indication 8002-A to indication 8002-B (e.g., across from display 201 to display 101). In response to the movement, display 201 ceases to display cursor 5002 and cursor 5002 having an appearance of a dot is displayed on display 101. In some embodiments input at input device in a direction from the first display region towards the second display region moves a cursor to an edge of first region, ceases to display the cursor, and continued movement of the input at the input device in the direction results in a corresponding cursor being displayed in the second display region. Displaying movement of a cursor off the first display region and displaying a corresponding cursor moving on to the second display region based on a continuation of the input from the respective input device, thereby providing improved visual feedback to the user.

In some embodiments, the corresponding cursor is displayed (12038) at a predetermined position (e.g., a center) in the second portion of the visual indication of the portal in the second display region. For example, in some instances, cursor 5002 in Figure 8I is displayed in a predetermined position in indication 8002-B after being dragged off of display 201 onto display 101. Displaying the corresponding cursor at a predetermined position in the second portion of the visual indication of the portal, thereby providing improved visual feedback to the user (e.g., visual feedback that the locations of the portals on different display regions do not have corresponding sizes and/or locations).

In some embodiments, the cursor displayed in the first display region associated with the first display generation component has (12040) a first appearance (e.g., cursor 5002 in Figure 8H having an appearance of an arrow) and the corresponding cursor displayed in the second display region has a second appearance distinct from the first appearance (e.g., cursor 5002 in Figure 8I having an appearance of a dot) (e.g., the appearance corresponding to an arrow or a dot). Displaying the cursor in the first display region with a first appearance and the corresponding cursor in the second display region with a second appearance, thereby providing improved visual feedback to the user (e.g., that the cursor has moved from the first display region to the second display region).

In some embodiments, in response to a detection that the first movement of the first input has not been detected for a duration that is longer than a threshold duration, a cursor location indication (e.g., indicator 8008 in Figure 8L is displayed after no movement of cursor 5002 on indication 8002-B is detected for a duration that is longer than a threshold duration) for indicating a location of the corresponding cursor is displayed (12042) in the second display region. In some embodiments, when an input location within the visual indication of the portal has not moved for a predetermined amount of time, an input indication suggesting a follow-on/subsequent input is displayed. In some embodiments, the input indication is displayed adjacent the visual indication of the portal. Displaying a cursor location indication in response to a detection that the first movement of the first input has not been detected for a duration that is longer than a threshold duration, thereby providing improved visual feedback to the user (e.g., of a location of the cursor while cursor has not been moved for a duration of time).

In some embodiments, the corresponding cursor is displayed (12044) within a second portion of the visual indication for the portal in the second display region (e.g., cursor 5002 on display 101 having an appearance of the dot in Figure 8I corresponding to cursor 5002 on display 201 having an appearance of the arrow in Figure 8H). Displaying the corresponding cursor within the second portion of the visual indication of the portal in the second display region (e.g., to indicate which portion of the visual indication will be moved with the cursor), thereby providing improved visual feedback to the user.

In some embodiments, movement of the corresponding cursor on the second display region includes (12046) a first portion of movement of the corresponding cursor on the second display within the visual indication of the portal on the second display region (e.g., cursor 5002 moving up and down in Figures 8J-8K) with a first movement resistance (e.g., impeding or slowing of the motion), and a second portion of movement of the corresponding cursor on the second display from within the visual indication of the portal to outside the visual indication of the portal (e.g., cursor 5002 exiting indication 8002-B in Figures 8M-8P) with a second movement resistance that is greater than the first movement resistance. For example, the first portion and the second portion of the first movement may be two separate, discontinuous movements or a single continuous movement. In some embodiments, a movement resistance refers to slowing down or impeding the proportional movement of the cursor in response to the movement of the input. For example, the cursor moves proportionally less for a given amount of input movement (e.g., movement of a contact on a touchpad or movement of a mouse) when resistance is higher than when resistance is slow. In some embodiments, normal resistance = input device movement X results in cursor movement Y; higher resistance = input device movement X results in cursor movement <Y. Providing different movement resistance when moving the cursor within the visual indication of the portal and from the visual indication of the portal to the outside of the visual indication, thereby providing improved visual feedback to the user (e.g., indicating that moving the cursor out of the visual indication of the portal will maintain the location and/or size of the visual indication of the portal).

In some embodiments, displaying movement of the cursor off the first display region to the second display region includes (12048) moving the cursor to an edge of the display region followed by ceasing to display the cursor. This feature is illustrated, for example, in Figure 8H-8I where cursor 5002 is moved from display 201 to display 201 by moving cursor 5002 to edge 201-1, ceasing to display cursor 5002 on display 201 and concurrently with ceasing to display cursor 5002 on display 201, initiating displaying cursor 5002 (with a different appearance) on display 101. In some embodiments, displaying movement of the cursor off the first display region to the second display region includes, subsequent to displaying the corresponding cursor on the second display region, ceasing to display the cursor on the first display region. In some embodiments, ceasing to display the cursor on the first display region includes displaying the cursor on the first display gradually fading until the cursor is no longer visible. Displaying moving the cursor to an edge of the display region followed by ceasing to display the cursor (and displaying a corresponding cursor on the second display region), thereby providing improved visual feedback to the user (e.g., that the cursor is no longer on the first display region).

In some embodiments, method 12000 includes displaying (12050), in the first display region provided by the first display generation component, a configuration user interface (e.g., configuration user interface 7002 in Figure 8AF) that includes a first representation (e.g., representation 7004-A) of a representative spatial position for the first display region generated by the first display generation component and a second representation (e.g., representation 7004-B) of a representative spatial position for the second display region generated by the second display generation component. While displaying the configuration user interface, method 12000 includes detecting an input corresponding to a request to move the first representation or the second representation (e.g., an input including movement 8017-A of mouse 202 for moving representation 7004-B upwards). In response to detecting the input corresponding to the request to move the first representation or the second representation, method 12000 includes displaying the visual indication of the portal (e.g., indications 8002-A and 8002-B in Figure 8AH). Displaying a configuration user interface including representation of respective spatial positions of different display regions and in response to an input corresponding to a request to move the first representation or the second representation, displaying the visual indication of the portal (e.g., to indicate how the position of the portal changes in response to moving the first representation or the second representation), thereby providing improved visual feedback to the user.

In some embodiments, changing the size and/or location of the visual indication of the portal (e.g., the visual indication including the first portion displayed in the first display region and the second portion displayed in the second display region) includes (12052) reducing the size of the visual indication of the portal in response to a detection that the visual indication of the portal has been moved, in accordance with the first movement of the first input, upward or downward and has reached a top edge or a bottom edge of the first display region. This feature is illustrated, for example, in Figures 8F-8G, where device 200, in accordance with dragging indication 8002-A downwards in accordance with movement 8006-A of mouse 202 and after indication 8002-A has reached the bottom edge of display 201, causes indication 8002-A to reduce in size (e.g., length of indication 8002-A along edge 201-1). Reducing the size of the visual indication of the portal in response to a detection that the visual indication of the portal has been moved, in accordance with the first movement of the first input, upward or downward and has reached a top edge or a bottom edge of the first display region, thereby providing improved visual feedback to the user.

In some embodiments, changing the location of the visual indication of the portal includes (12054) moving the visual indication of the portal along the first edge of the first display region (e.g., up/down or right/left) (e.g., as shown in Figures 8E-8G). Displaying moving the visual indication of the portal along the first edge (e.g., the first edge corresponding to the edge having the portion that can be used for moving objects between the different display regions), thereby providing improved visual feedback to the user.

In some embodiments, changing the size and/or location of the visual indication of the portal (e.g., the visual indication including the first portion displayed in the first display region and the second portion displayed in the second display region) includes (12056) increasing the size of the visual indication of the portal in response to a detection that the first input corresponds to a request to move the visual indication toward a second edge non-parallel to the first edge of the first display region, and the first input continues to attempt to move the visual indication toward the second edge. As shown in Figures 8E-8G, the size (e.g., a length along a respective edge) of indication 8002-A and/or 8002-B is increased or decreased in accordance with dragging cursor 5002 up and down along an indication. For example, if continuing to drag cursor 5002 downwards as an indication has already reached a bottom of the display, the dragging of cursor 5002 may cause the indication to increase in size. Displaying increasing the size of the visual indication of the portal in response to a detection that the first input corresponds to a request to move the visual indication toward a second edge non-parallel to the first edge of the first display region, thereby providing improved visual feedback to the user (e.g., of the size and/or location of the portal).

In some embodiments, changing the size of the visual indication of the portal includes (12058) displaying a stretching animation of the visual indication of the portal (e.g., the operations described in Figures 8E-8G may be displayed as an animation). Displaying an animation of changing the size of the visual indication of the portal, thereby providing improved visual feedback to the user.

In some embodiments, the first display generation component displays (12060) a first portion of the visual indication of the portal in the first display region, a second portion of the visual indication of the portal is displayed in the second display region, and changing the size and/or location of the visual indication of the portal includes changing a size and/or location of the first portion or the second portion of the visual indication of the portal (e.g., as shown in Figures 8E-8G and Figures 8AA-8AB). Displaying a first portion of the visual indication of the portal in the first display region and a second portion of the visual indication of the portal in the second display region, and displaying changing a size and/or location of the first portion or the second portion of the visual indication of the portal, thereby providing improved visual feedback to the user.

In some embodiments, changing the location of the visual indication of the portal includes (12062) changing the location of a respective portion of the visual indication of the portal of the first and second portions of the visual indication of the portal, the respective portion of the visual indication of the portal being displayed by a larger display region of the first display region and the second display region. For example, in Figures 8AA-8AB, the location of indication 8002-C displayed on display 201, which is larger than display 101, is changed. In some embodiments, depending on the relative positions and relative sizes of the displays, only the location (or size) of indication displayed on the larger display is changed. For example, in response to the first input, the respective portion of the visual indication of the portal that is displayed on a larger display region of the first and second display regions is moved. Displaying changing the location of a respective portion of the visual indication of the portal on a larger display region, thereby providing improved visual feedback to the user.

In some embodiments, the first portion of the visual indication of the portal displayed (12064) in the first display region and the second portion of the visual indication displayed in the second display region have a size that is determined based on a size of a respective display region of the first display region and the second display region having a smaller size measured along a respective edge that the visual indication of the portal is displayed along (e.g., the indications of the portal are no larger than the smaller of the two displays). This feature is illustrated, for example, in Figure 8C where indications 8002-A and 8002-B have a size that is substantially corresponding to the length of edge 101-1 of display 101 which is smaller than display 201. Displaying the first and second portions of the visual indication with a size determined based on a size of a respective display region that is smaller, thereby providing improved visual feedback to the user.

In some embodiments, method 12000 includes detecting (12066) a user input corresponding to a first request to move a cursor from the first display region to the second display region via the visual indication of the portal (e.g., moving cursor 5002 from display 201 to display 101 via indicators 8002-A and 8002-B as shown in Figures 8E-8R). In response to detecting the user input corresponding to the first request to move the cursor from the first display region to the second display region via the visual indication of the portal, method 12000 includes ceasing to display the visual indication of the portal (e.g., in Figure 8R indications 8002-A and 8002-B are illustrated with dashed line indicating that displaying indications 8002-A and 8002-B is optional). After ceasing to display the visual indication of the portal, method 12000 includes detecting a user input corresponding to a second request to move the cursor between the first display region and the second display region. In response to detecting the user input corresponding to the second request to move the cursor between the first display region and the second display region, in accordance with a determination that the input corresponding to the second request is at a location selected for the portal based on the input user input corresponding to the request to move a cursor from within the visual indication of the portal to the second display region, method 12000 includes moving the cursor between the first display region and the second display region in accordance with the user input corresponding to the second request (e.g., cursor 5002 together with photo object 5004 is moved from display 201 to display 101 while indications 8002-A and 8002-B are not displayed in Figures 8S-8T)(e.g., without displaying a visual indication of a portal between the first display region). Ceasing to display the visual indication of the portal after detecting a user input corresponding to a first request to move a cursor from the first display region to the second display region via the visual indication of the portal, and displaying moving the cursor between the first display region and the second display region in accordance with the user input corresponding to the second request to move the cursor from the first display region to the second display region (while not displaying the visual indication of the portal), thereby providing improved visual feedback to the user (e.g., that the location and/or size of the portal is fixed.)

In some embodiments, after determining a location for a portal between the first display region and the second display region (e.g., in response to the first and/or second inputs), the first display generation component and the second display generation component are disconnected (e.g., devices 200 and 100 are disconnected in Figure 8W when device 100 is in sleep mode 6006). After the first display generation component and the second display generation component are disconnected, the first display generation component are reconnected (e.g., in Figure 8Z location of device 100 has changed compared to Figure 8W and device 100 has transferred from sleep mode 6006 to displaying home screen user interface 5020). After the first display generation component and the second display generation component are reconnected, method 12000 includes detecting (12068) a request to move a cursor from a display region associated with the first display generation component to a display region associated with the second display generation component. In response to detecting the request to move the cursor from the display region associated with the first display generation component to the display region associated with the second display generation component (12070), in accordance with a determination that the first display generation component and/or the second display generation component meet portal reset criteria (e.g., a relative position of devices or a relative orientation of at least one device has changed), method 12000 includes resetting (12072) a location of the portal between the display region associated with the first display generation component and the display region associated with the second display generation component. This feature is illustrated, for example, in Figures 8W-8Z where after the relative positions of devices 200 and 100 have changed and device 100 has transferred from sleep mode 6006 to an active mode (e.g., displaying home screen user interface 5020 in Figure 8Z), the reset criteria are met. Accordingly, in response to dragging cursor 5002 to edge 101-3 of device 100 in accordance with movement 8015-A of a contact on touchpad 8014, indications 8002-D and 8002-C are displayed, as shown in Figure 8AA. In accordance with a determination that the first display generation component and/or the second display generation component do not meet the portal reset criteria, method 12000 includes maintaining (12074) the portal between the display region associated with the first display generation component and the display region associated with the second display generation component at a location that was established for the portal before the first display generation component and the second display generation component were disconnected. This feature is illustrated, for example, in Figures 8U-8V where the reset criteria are not met when the relative positions of device 200 and 100 have not changed since the last adjustment of indications 8002-A and 8002-B. Accordingly, the locations of the portals are maintained, as shown with dashed lined indications 8002-A and 8002-B in Figure 8V. In some embodiments, the method includes maintaining the portal between the first display region associated with the first display generation component and the second display region associated with the second display generation component until the first computer system detects an event meeting first criteria for resetting the portal between the first display region associated with the first display generation component and the second display region associated with the second display generation component. In some embodiments, the first criteria include a requirement that the first display region or the second display region is in a locked mode. In some embodiments, the first criteria include a requirement that the first display region and/or the second display region is moved so that the relative spatial positions of the first display region and the second display region has changed. In some embodiments, the first criteria includes one or more requirements based on a type of computer system associated with the respective display regions (e.g., different for a laptop/tablet than for a desktop/monitor). Displaying the visual indication of a portal in accordance with a determination that portal reset criteria is met (e.g., resetting of the location and/or size of the portal is required), thereby providing improved visual feedback to the user.

Figures 13A-13AO illustrate various user interfaces depicting split-screen configurations for displaying multiple user interfaces, in accordance with some embodiments. As referred herein, a split-screen configuration describes the positioning of two or more user interfaces corresponding to respective applications on a single display screen, such that the user interfaces are organized (e.g., horizontally and/or vertically aligned) and optimized for screen space (e.g., leaving little or no unused desktop space). The user interfaces in Figures 13A-13AO are implemented at a desktop display device 300 (also referred to as a display generation component). The user interfaces in Figures 13A-13AO may additionally or alternatively be implemented on the display of a laptop device 200, or on a display of any other electronic computing device.

Figures 13A-13C illustrate a user input that causes a first user interface to be displayed in a split-screen configuration, in accordance with some embodiments. In Figure 13A, a full-screen user interface 1350 (also referred to as a home screen interface or a desktop interface) is displayed in a region 1300 that includes the whole display screen. Full-screen user interface 1350 includes a menu bar 1301 and a dock 1330. As referred to herein, a menu bar includes a plurality of affordances for invoking commands, performing system level or application level tasks, and/or status indications (e.g., time, signal strength). As referred herein, a dock includes a plurality of application icons (e.g., icons, affordances, or any other user interface elements that, upon selection, launch or select applications). In some embodiments, at least some application icons in the dock correspond to recently viewed applications, frequently used applications, and/or applications based on a user's preference or selection.

Full-screen user interface 1350 further includes a plurality of desktop objects such as unselected (background) windows 1302a - 1302d, folder 1303, and a selected (foreground) window 1304. The windows are user interfaces corresponding to respective applications that have previously been opened. The windows, when displayed in full-screen user interface 1350, are bounded by borders that are optionally configurable (e.g., expandable, collapsible, movable, and so forth). Full-screen user interface 1350 further includes a cursor (e.g., depicted as user input 1380a in Figure 13A). Movements of the cursor are controlled by an input device (e.g., mouse 202 and/or keyboard 203 in communication with device 200, or touchpad 309 and/or keyboard 305 in communication with device 300). For embodiments in which the display 300 is touch-sensitive, movements of the cursor are optionally controlled by touch-sensitive user inputs directly on the display of device 200 or 300.

Each window 1302, 1304 includes window control affordances (e.g., 1304a) corresponding to functions that manipulate the size, position, and/or state of the windows on which the affordances are located. Examples of such functions (also referred to as display configuration options) include a closing function in which the window is closed, a minimizing function in which the window is minimized to an icon in the dock, a full-screen function in which the window is resized and repositioned to fill the screen (e.g., so that the window is adjacent to, or abuts, all four edges of the screen), and a split-screen configuration function (also referred to as a tiling function) in which the window is resized and repositioned to fill a selectable region (also referred to as a tile) of the screen (e.g., the left half of the screen, the right half of the screen, a region having a size that is less than half of the screen (e.g., one third of the screen), or a region having a size that is greater than half of the screen (e.g., two thirds of the screen)). In some embodiments, the selectable region is adjacent to, or abuts, greater than one and less than four edges of the screen (e.g., adjacent to or abutting two edges of the screen, or adjacent to or abutting three edges of the screen). The tiling function is sometimes referred to as a split-screen configuration function, a split-screen configuration option, or a split-screen configuration.

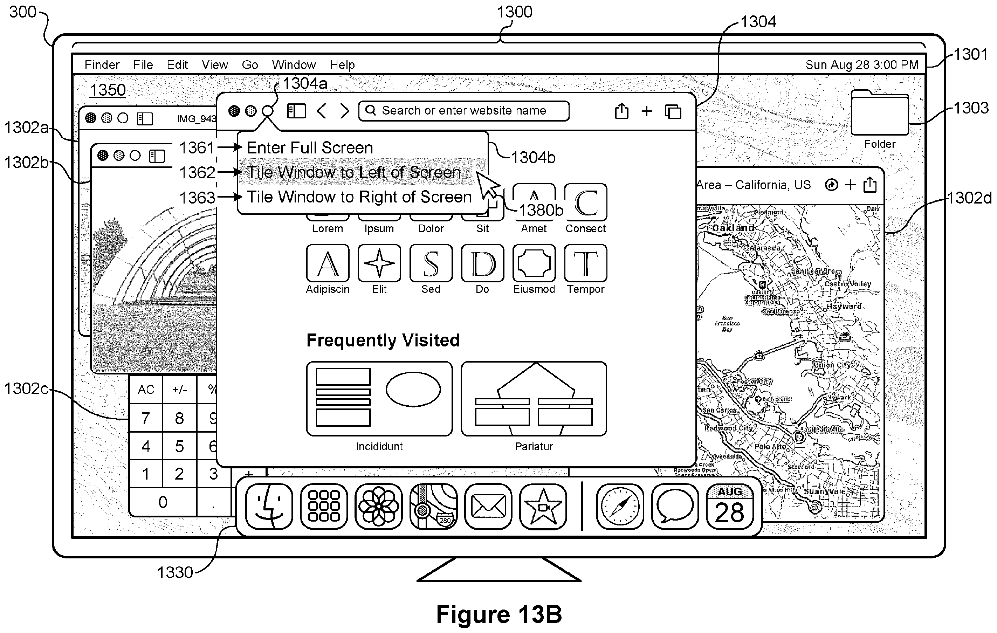

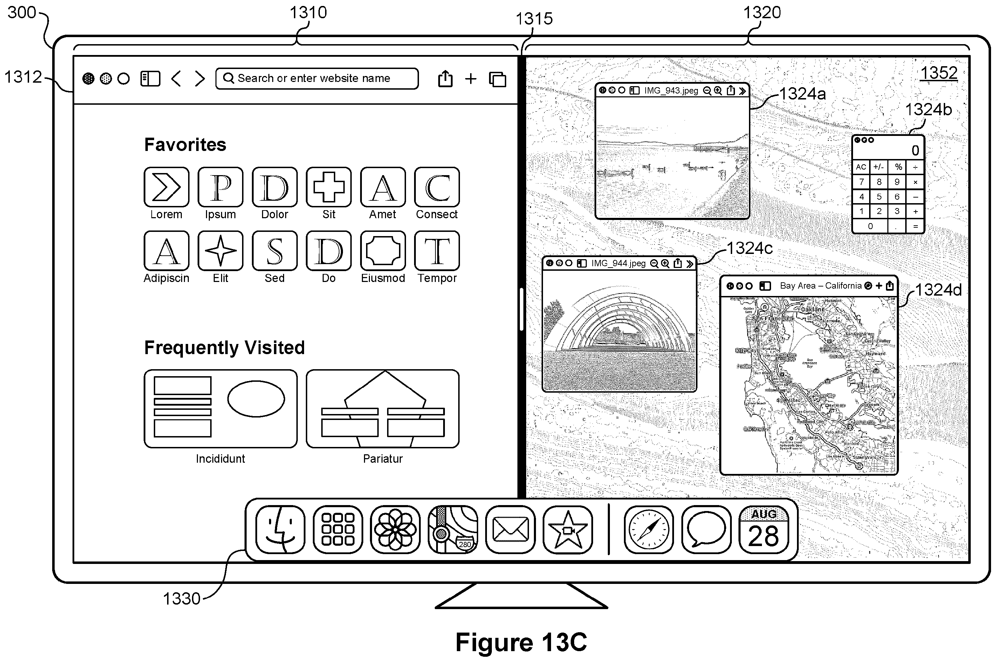

In Figure 13A, device 300 detects a user input 1380a (e.g., a mouse click) on window control affordance 1304a. The selection of window control affordance 1304a opens a menu 1304b including a plurality of display configuration options (also referred to as display configuration option affordances), including a full-screen configuration option 1361 (labeled "Enter Full Screen") and two split-screen configuration options 1362 and 1363 (respectively labeled "Tile Window to Left of Screen" and "Tile Window to Right of Screen") as shown in Figure 13B. The labels for these options are illustrative examples. Further, in some embodiments, the menu includes only one split-screen configuration option (e.g., an option to tile the window to the side of the screen that the window is closest to), more than two split-screen configuration options (e.g., options to tile the window into a third, a quarter, or any other configurable region of the screen), no full-screen configuration option, and/or one or more additional display configuration options. In some embodiments, the tiling function corresponds to the window control affordance itself, rather than an option presented in a menu associated with the window control affordance. In Figure 13B, user input 1380b selects a first split-screen configuration option 1362 (labeled "Tile Window to Left of Screen"). In response to this selection, (i) the user interface of the application associated with window 1304 (e.g., a browser application) is resized and/or repositioned on the screen to be displayed in a region of the left portion of the screen (e.g., a "left tile"), depicted as user interface 1312 in first region 1310 in Figure 13C, and (ii) a placeholder interface is displayed in a region of the right portion of the screen (e.g., a "right tile"), depicted as user interface 1352 in second region 1320 in Figure 13C.

In Figure 13C, user interface 1312 in first region 1310 and user interface 1352 in second region 1320 are displayed in a split-screen configuration, with a divider 1315 in the middle of the user interface. In some embodiments, displaying first region 1310 and second region 1320 in a split-screen configuration includes dividing the display into a first portion and a second portion separated by a divider 1315, wherein the first region 1310 fills the first portion on a first side of the divider and the second region 1320 fills the second portion on a second side of the divider. In some embodiments, the divider 1315 is configurable in that a user input (e.g., a mouse click-and-drag input) may drag or otherwise reposition the divider (e.g., to the left or to the right), thereby changing the sizes of the first and second regions. For example, dragging the divider 1315 to the left causes the first region to decrease in size and the second region to increase in size, while dragging the divider 1316 to the right causes the first region to increase in size and the second region to decrease in size. In some embodiments, displaying two user interfaces (e.g., 1312 and 1352) in a split-screen configuration includes filling the first region 1310 with a first of the two user interfaces (e.g., 1312) and filling the second region 1320 with a second of the two user interfaces (e.g., 1352). In some embodiments, a user input (e.g., a mouse click and drag gesture) may move the divider 1315 (e.g., left or right). In such scenarios, user interfaces displayed in regions 1310 and 1320 may be resized to continue to fill the respective regions. In some embodiments, dock 1330 overlays regions 1310 and 1320 and divider 1315. In some embodiments, dock 1330 is hidden behind regions 1310 and 1320 and divider 1315 upon selection of a user interface to fill the placeholder interface 1352 (described in more detail below). In scenarios in which dock 1330 is hidden, a user input (e.g., moving a mouse cursor to the region of the screen associated with display of dock 1330, or a keystroke command on the keyboard) causes dock 1330 to reappear, allowing, for example, additional applications to be selected for subsequent display in the split-screen configuration.

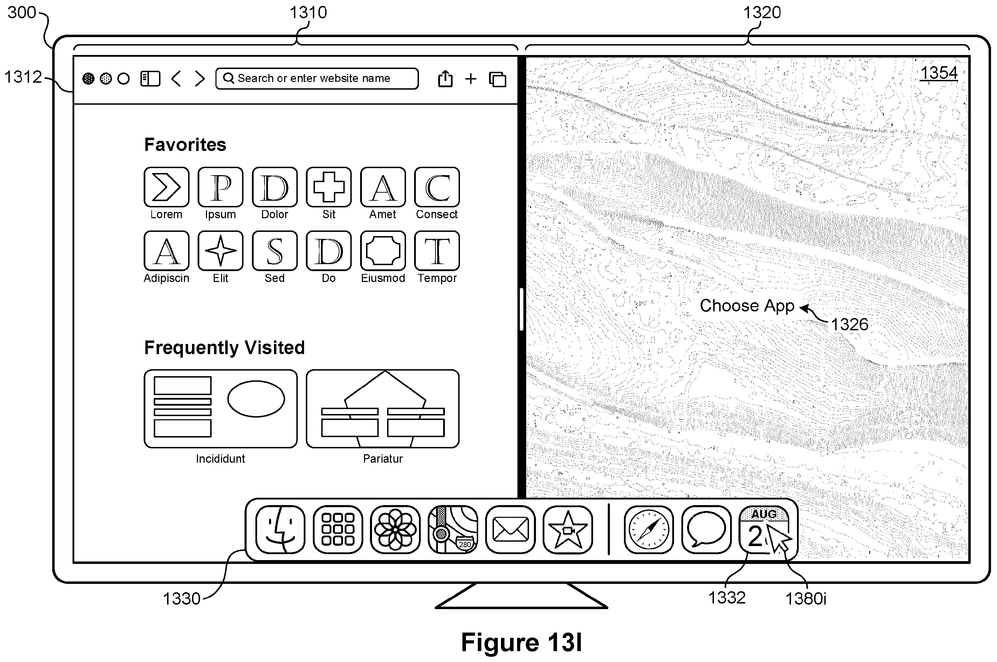

In some embodiments, placeholder interface 1352 includes one or more representations 1324a-d (sometimes referred to as "thumbnails") of user interfaces of applications other than the application displayed in user interface 1312 in first region 1310, as depicted in Figure 13C. In some embodiments, the applications corresponding to thumbnails 1324a-d are currently open in the background or are otherwise in a saved state. In some embodiments, user selection (e.g., via mouse click) of a thumbnail 1324 causes the application corresponding to the selected thumbnail to be displayed in second region 1320 in the split-screen configuration with user interface 1312 in first region 1310. In some embodiments, the placeholder interface does not include any thumbnails 1324, and instead includes an instruction 1326 for a user to select an application for display in region 1320 in the split-screen configuration with user interface 1312 in region 1310, as depicted in placeholder interface 1354 in Figure 13I. In some embodiments, the placeholder interface does not include thumbnails 1324 or instructions 1326, but rather includes one or more desktop elements (e.g., 1303, Figure 13A), or does not include any elements other than a representation of an empty desktop (e.g., including only desktop wallpaper or a blank color).

In some embodiments, placeholder interface 1352 is displayed until device 300 detects a user input (e.g., a mouse click) selecting: (i) an application to display in region 1320 in the split-screen configuration with application 1312, thereby replacing the placeholder interface 1352, (ii) the first application 1312 to display in a full-screen configuration, thereby replacing the placeholder interface 1352, or (iii) any other user interface element causing the placeholder interface 1352 to be replaced with another user interface. As such, placeholder interface 1352 serves as a placeholder for a subsequently selected interface to be displayed in its place, providing the user with options for selecting applications for display in the region occupied by the placeholder interface 1352 (e.g., region 1320). Placeholder interface 1352 may also be referred to as an application picker or a split screen picker. When entering a split-screen configuration having two tiles (e.g., regions 1310 and 1320), after a first application is opened into the first tile, the split screen picker (placeholder interface 1352) provides the user with options for selecting applications to open into the second tile.

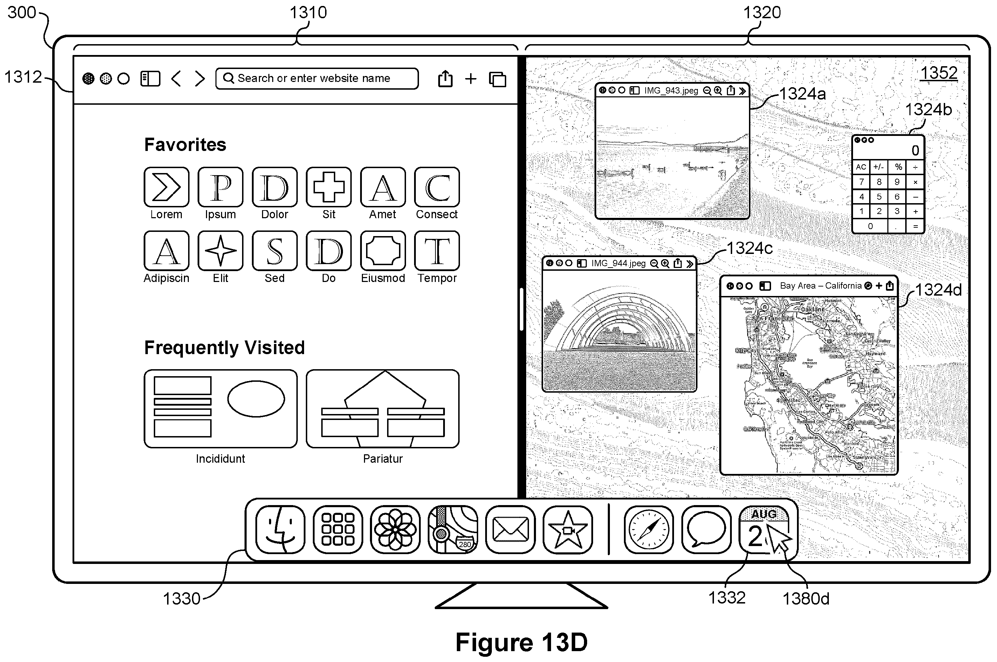

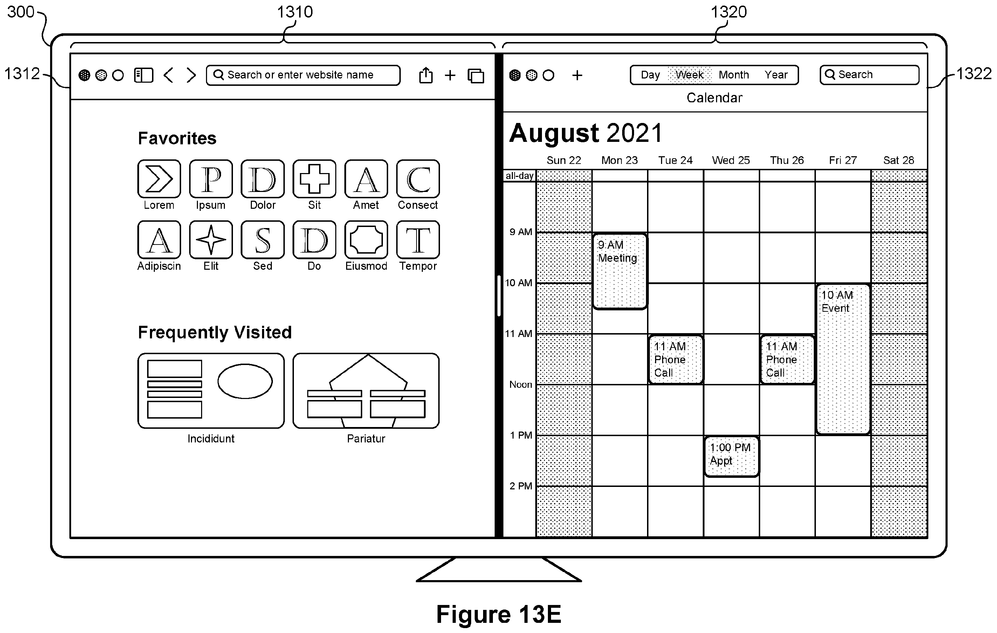

Figures 13D-13E illustrate a first user input that causes a second user interface (corresponding to a second application) to be displayed in the split-screen configuration, in accordance with some embodiments. In Figure 13D, display device 300 displays user interface 1312 corresponding to a first application (e.g., a browser application) in first region 1310, and placeholder interface 1352 in second region 1320 in a split-screen configuration. While placeholder interface 1352 is displayed, dock 1330 is also displayed, providing additional options to the user for selecting an application to open into second region 1320 alongside user interface 1312 in the split-screen configuration. Device 300 detects a user input 1380d (e.g., a mouse click) corresponding to selection of an icon 1332 in dock 1330 that corresponds to a second application (e.g., a calendar application). In response to detecting user input 1380d, device 300 displays a second user interface 1322 of the second application (e.g., a calendar user interface) in second region 1320, as depicted in Figure 13E, thereby replacing the placeholder interface 1352. As such, the first and second user interfaces 1312 and 1322 are displayed in the split-screen configuration in regions 1310 and 1320, respectively.

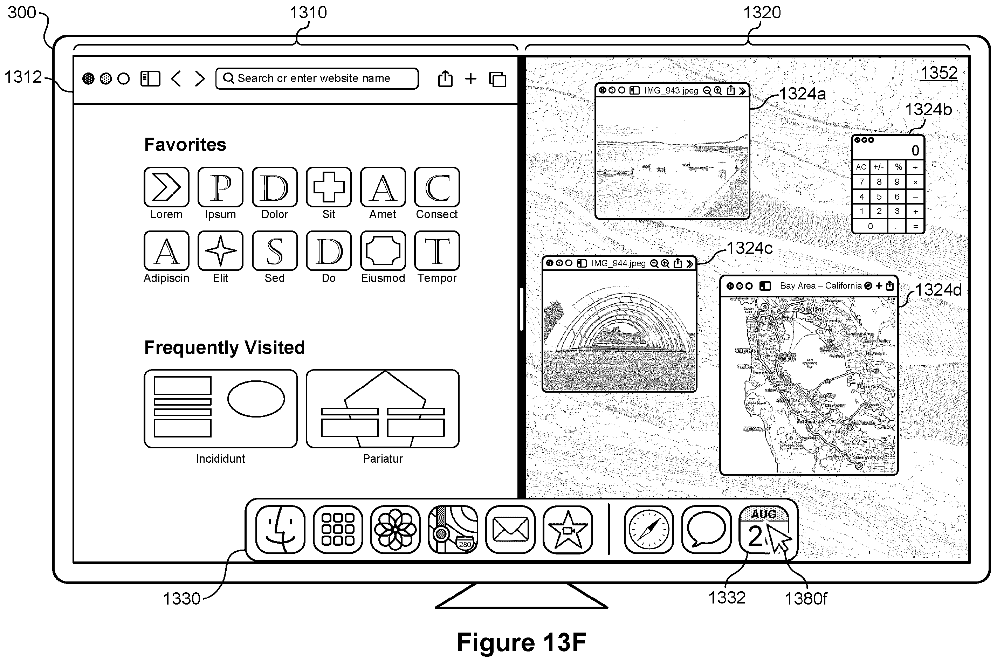

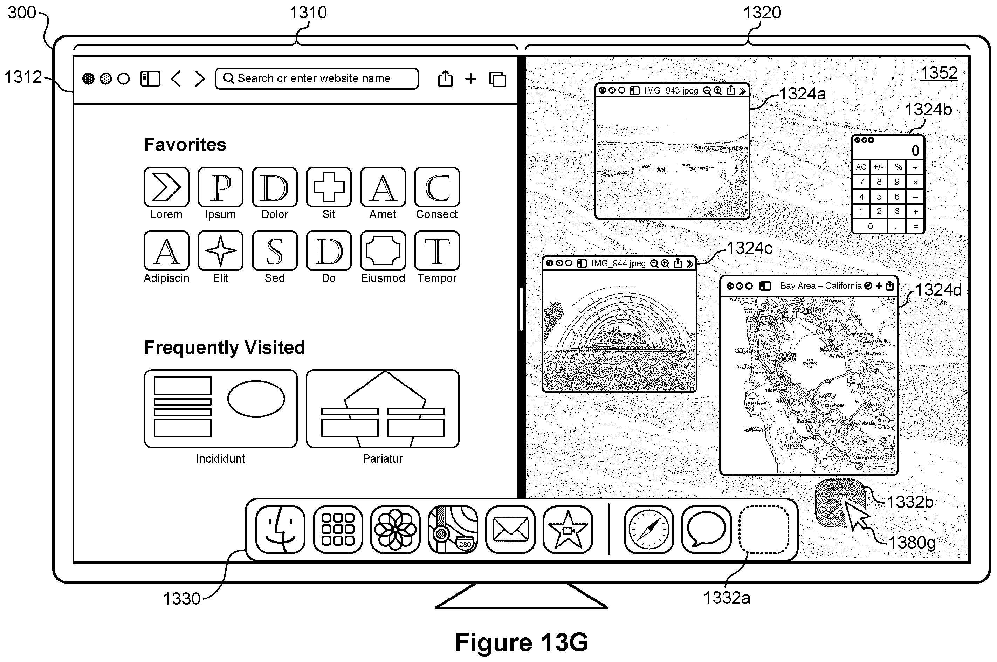

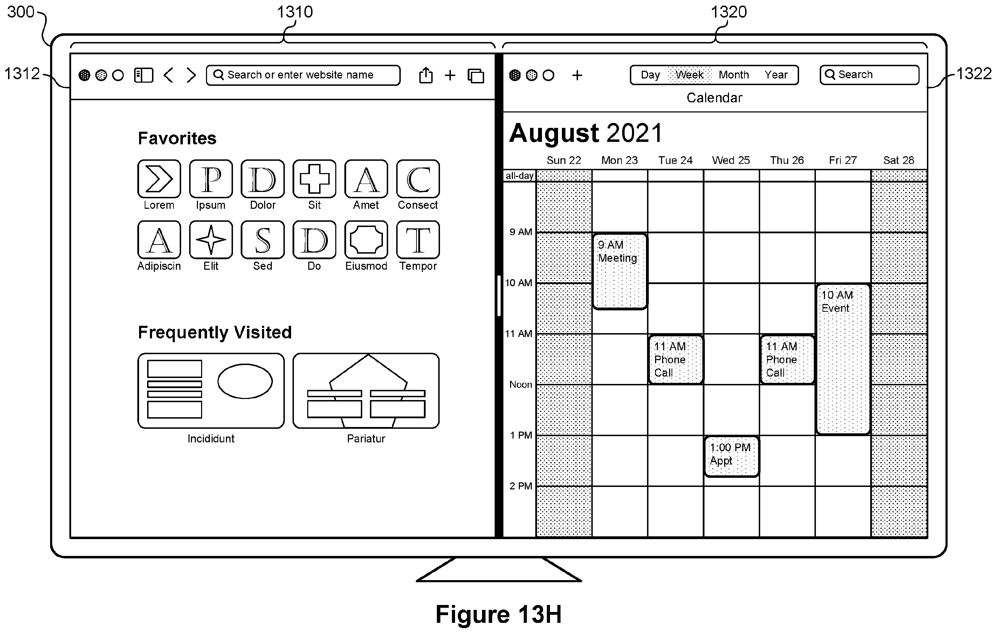

Figures 13F-13H illustrate a second user input that causes a second user interface (corresponding to a second application) to be displayed in the split-screen configuration, in accordance with some embodiments. The second user input described with reference to Figures 13F-13H may be an alternative to the first user input described above with reference to Figures 13D-13E. In Figure 13F, display device 300 displays user interface 1312 corresponding to a first application (e.g., a browser application) in first region 1310, and placeholder interface 1352 in second region 1320 in a split-screen configuration. While placeholder interface 1352 is displayed, dock 1330 is also displayed, providing additional options to the user for selecting an application to open into second region 1320 alongside user interface 1312 in the split-screen configuration. Device 300 detects a click-and-drag user input 1380f-g. Specifically, as shown in Figure 13F, a user input 1380f (e.g., a mouse click-and-hold gesture) selects icon 1332 in dock 1330 corresponding to a second application (e.g., a calendar application). Then, as shown in Figure 13G, a user input 1380g (e.g., a mouse movement gesture while icon 1332 remains selected) drags icon 1332 to region 1320. In some embodiments, during user input 1380g, icon 1332 disappears from dock 1330 or its appearance is otherwise altered to depict that the icon is no longer present in dock 1330 (e.g., depicted as 1332a, Figure 13G). In some embodiments, during user input 1380g, the appearance of icon 1332 is altered to depict that it is being dragged by the user input 1380g (e.g., depicted as 1332b, Figure 13G). User deselection (e.g., release of the mouse hold) of icon 1332 while the icon 1332 is located anywhere within region 1320 triggers display of second user interface 1322 of the second application (corresponding to icon 1332) in second region 1320, as depicted in Figure 13H. As such, the first and second user interfaces 1312 and 1322 are displayed in the split-screen configuration in regions 1310 and 1320, respectively. In some embodiments, dragging icon 1332 and releasing it in first region 1310 triggers display of user interface 1322 in region 1310, whereas dragging icon 1332 and releasing it in second region 1320 triggers display of user interface 1322 in region 1320. In some embodiments, if a user interface of a first application (e.g., user interface 1312) is displayed in first region 1310 and placeholder interface 1352 is displayed in second region 1320, and user input 1380f-g places an icon corresponding to a second application (e.g., icon 1332) in first region 1310, then the user interface associated with the second application (e.g., 1322) is displayed in first region 1310 while placeholder interface 1352 remains displayed in second region 1320.

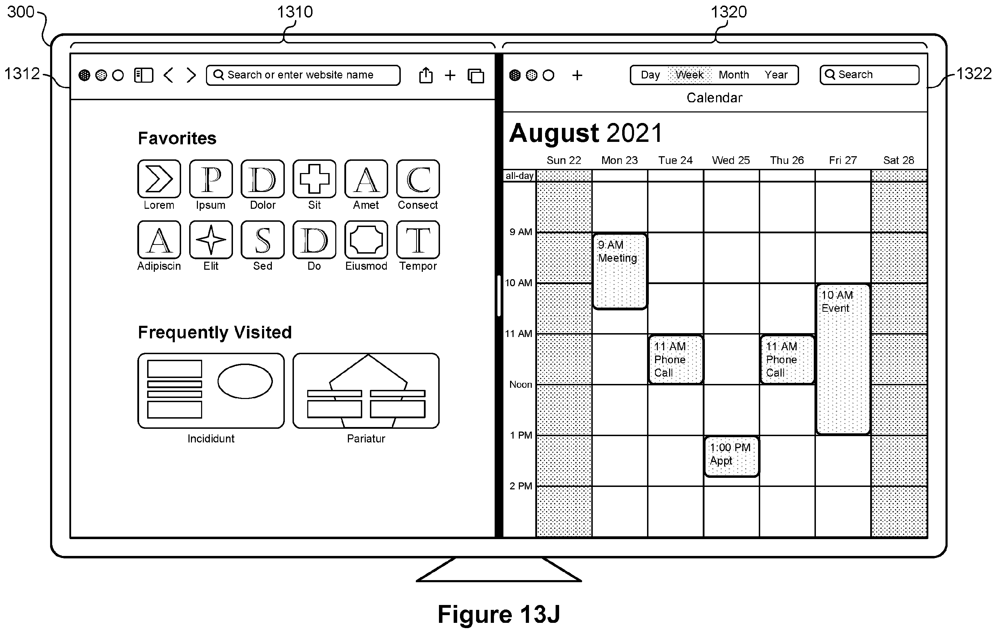

Figures 13I-13J illustrate the first user input that causes the second user interface (corresponding to a second application) to be displayed in the split-screen configuration, with an alternative placeholder interface, in accordance with some embodiments. In Figure 13I, alternative placeholder interface 1354 includes an instruction 1326 for the user to select an application for display in the split-screen configuration in region 1320 (as described above). In Figure 13I, display device 300 displays user interface 1312 corresponding to a first application (e.g., a browser application) in first region 1310, and placeholder interface 1354 in second region 1320 in a split-screen configuration. While placeholder interface 1352 is displayed, dock 1330 is also displayed, providing additional options to the user for selecting an application to open into second region 1320 alongside user interface 1312 in the split-screen configuration. Device 300 detects a user input 1380i (e.g., a mouse click) corresponding to selection of an icon 1332 in dock 1330 that corresponds to a second application (e.g., a calendar application). In response to detecting user input 1380i, device 300 displays a second user interface 1322 of the second application (e.g., a calendar user interface) in second region 1320, as depicted in Figure 13J, thereby replacing the placeholder interface 1354. As such, the first and second user interfaces 1312 and 1322 are displayed in the split-screen configuration in regions 1310 and 1320, respectively.

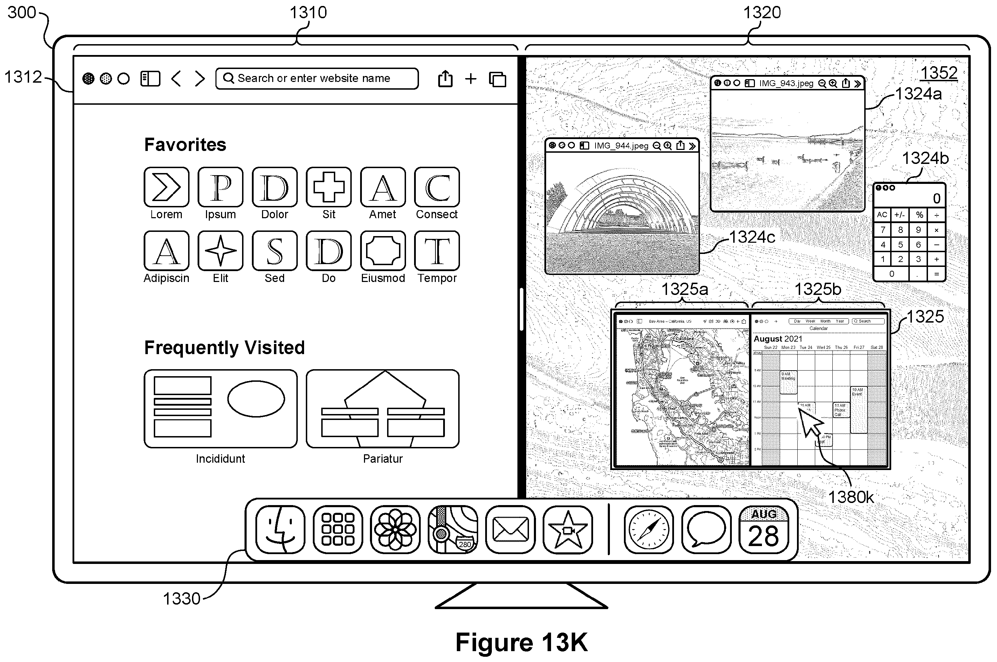

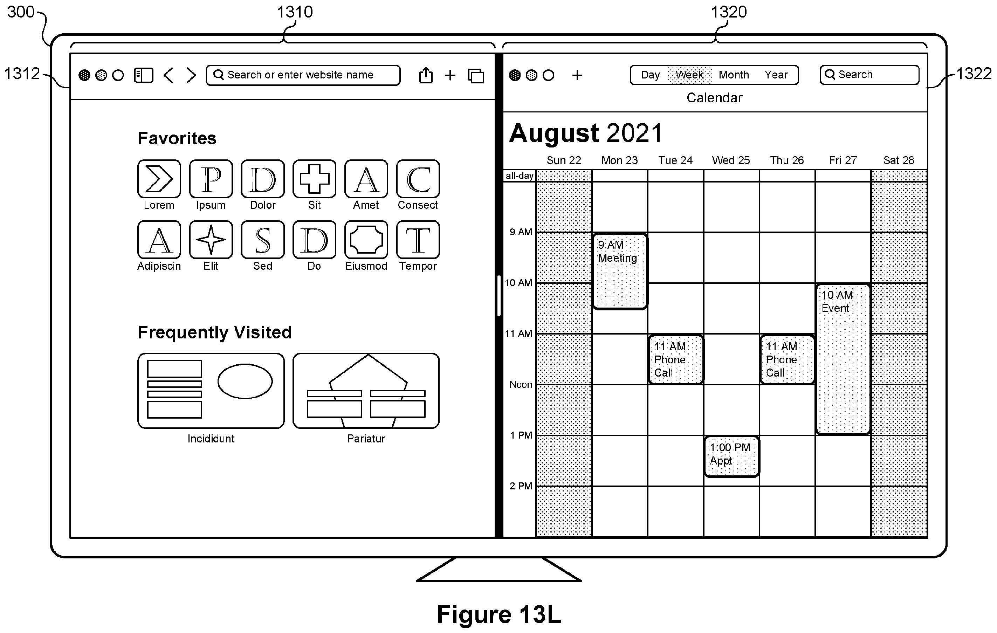

Figures 13K-13L illustrate a user input that causes the second user interface (corresponding to a second application) to be displayed in the split-screen configuration, with a placeholder interface 1352 including a split-screen thumbnail 1325, in accordance with some embodiments. In Figure 13K, the placeholder interface 1352 in the second region 1320 includes a representation (thumbnail) 1325 of two user interfaces including a user interface 1325a of one application (e.g., a map application) and a user interface 1325b of another application (e.g., a calendar application). Both user interfaces 1325a and 1325b are displayed adjacent to each other in a split-view arrangement within the representation (thumbnail) 1325. In some embodiments, such a thumbnail may be the result of a two user interfaces in a split-screen configuration (e.g., user interfaces 1312 and 1322 in Figure 13J) being open in a virtual desktop or workspace. In such a scenario, placeholder 1352 may display the virtual desktop or workspace as a representation 1325. In general, each representation 1324, 1325 may corresponding to a user interface of one or more applications that are open in a current desktop or workspace (e.g., in full-screen interface 1350, Figure 13A), and/or in other (virtual) desktops or workspaces. As shown in Figure 13K, device 300 concurrently displays user interface 1310 of a first application in first region 1310, placeholder interface 1352 including split-view thumbnail 1325 in second region 1320, and dock 1330. Device 1330 detects a user input 1380k (e.g., a mouse click) corresponding to selection of a portion of the split-view thumbnail 1325. The selected portion corresponds to one of the two user interfaces included in the split-view thumbnail 1325 (calendar user interface 1325b). In response to detecting user input 1380k, second region 1320 displays a split-screen version of the calendar user interface (user interface 1322), which replaces placeholder interface 1352, as depicted in Figure 13L. As such, user interfaces 1312 and 1322 are displayed in the split-screen configuration in regions 1310 and 1320, respectively.

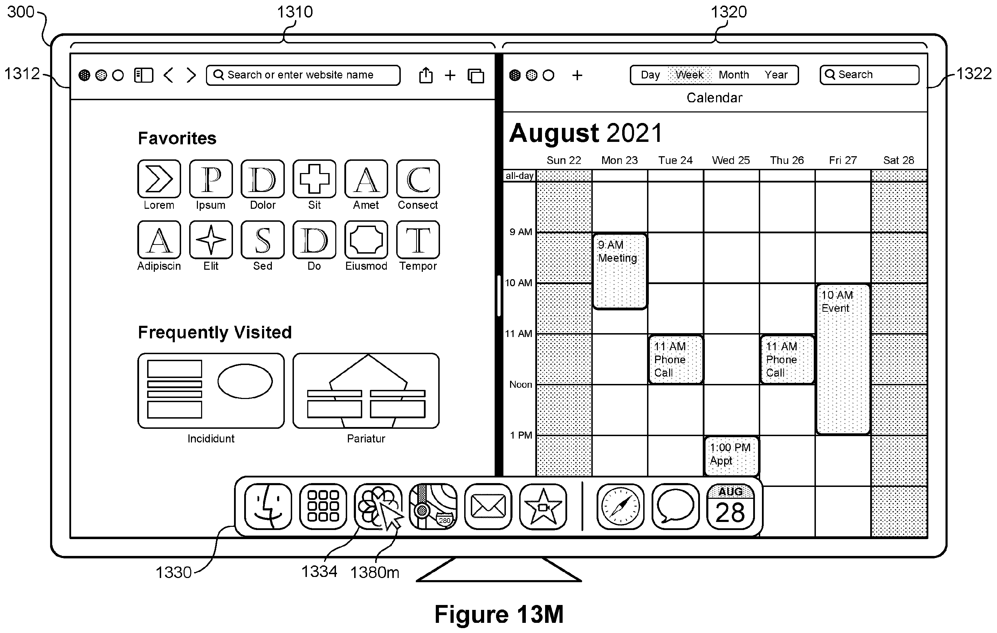

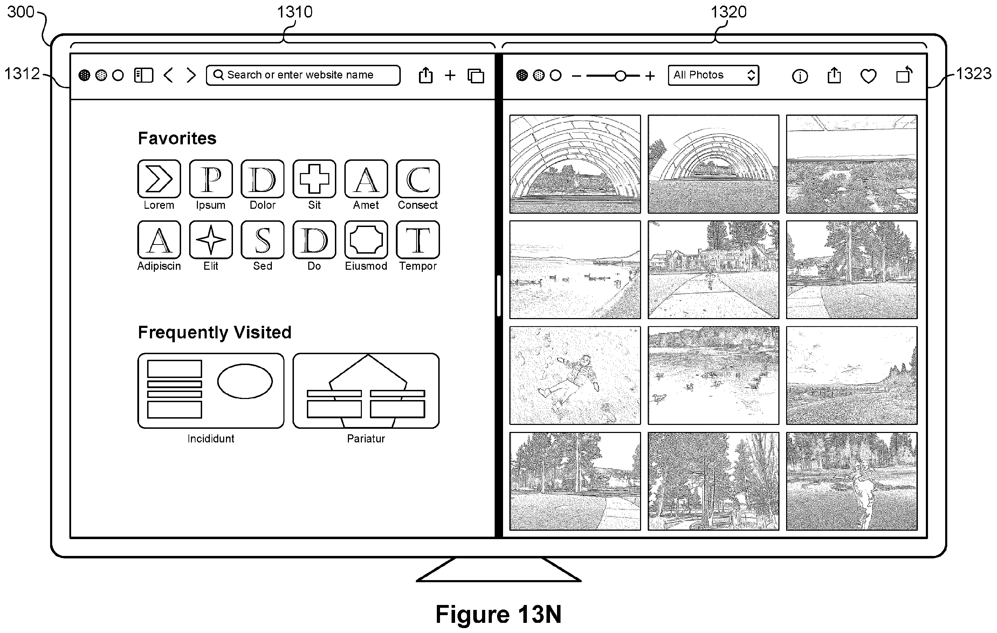

Figures 13M-13N illustrate a user input that causes a user interface to replace one of the user interfaces displayed in the split-screen configuration, in accordance with some embodiments. Stated another way, while device 300 displays two user interfaces in the split-screen configuration, a user may select a different user interface to replace one of the two user interfaces already displayed without having to first close one of the two user interfaces in the split-screen configuration. In Figure 13M, display 300 concurrently displays a first user interface 1312 of a first application (e.g., a browser application) in first region 1310, a second user interface 1322 of a second application (e.g., a calendar application) in second region 1320, and dock 1330. This configuration may be the result of the user setting the first user interface 1312 in the split-screen configuration as described above with reference to Figures 13A-13C, and subsequently setting the second user interface 1322 in the split-screen configuration as described above with reference to any of the examples depicted in Figures 13D-13L. Device 300 detects a user input 1380m (e.g., a mouse click) corresponding to selection of an icon 1334 in dock 1330 corresponding to a third application (e.g., a photos application). Alternatively, the user input 1380m may be a mouse click-and-drag gesture as described above with reference to Figures 13F-13H. In response to detecting user input 1380m, device 300 replaces user interface 1322 of the second application (e.g., the calendar application) with user interface 1323 of the third application (e.g., the photos application) in second region 1320, as depicted in Figure 13N. As such, user interface 1323 of the third application is displayed with first user interface 1310 of the first application in the split-screen configuration. In some embodiments, the applications corresponding to the second user interface 1322 and/or the third user interface 1323 are opened from a closed state (e.g., from a state in which the applications are not running or being executed in the foreground or in the background) at the time of their selection for display in the split-screen configuration as described above. In some embodiments, the applications corresponding to the second user interface 1322 and/or the third user interface 1323 are opened from an open state (e.g., from a state in which the applications are already running or being executed in the foreground or in the background) at the time of their selection for display in the split-screen configuration as described above.

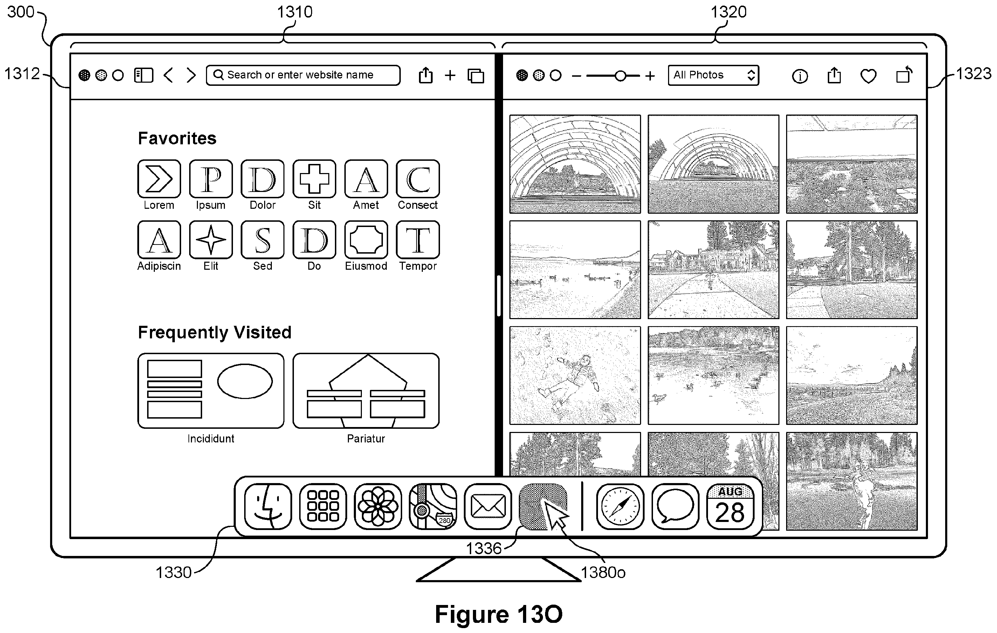

Figure 13O illustrates a user input that selects a user interface for display in the split-screen configuration, where the selected user interface corresponds to an application that is not supported for display in a split-screen configuration, in accordance with some embodiments. In Figure 13O, device 300 concurrently displays first user interface 1312 of a first application in first region 1310, either placeholder interface 1352 or second user interface 1323 of a second application in second region 1320, and dock 1330. Device 300 may detect a user input 1380o (e.g., a mouse click) corresponding to selection of an icon 1336 in dock 1330 that corresponds to an application that is not supported for display in the split-screen configuration. Alternatively, user input 1380o may correspond to a request to select icon 1336 (e.g., due to the user causing the mouse cursor to hover over the icon but not selecting it). Alternatively, there may be no user input 1380o. In accordance with a determination that the application corresponding to icon 1336 (e.g., a movies application) cannot be displayed in the split-screen configuration, device 300 changes the appearance of icon 1336 to indicate that the application corresponding to icon 1336 cannot be displayed in the split-screen configuration. The appearance of icon 1336 may be changed as soon as dock 1330 appears, before any user request to select icon 1336, indicating to the user that icon 1336 cannot be opened in the split-screen view prior to the user attempting to select icon 1336. In some embodiments, changing the appearance of icon 1336 includes preventing the application corresponding to icon 1336 from opening. In some embodiments, changing the appearance of icon 1336 includes altering a visual feature of the icon (e.g., dimming, blurring, graying out, or patterning), as depicted in Figure 13O.

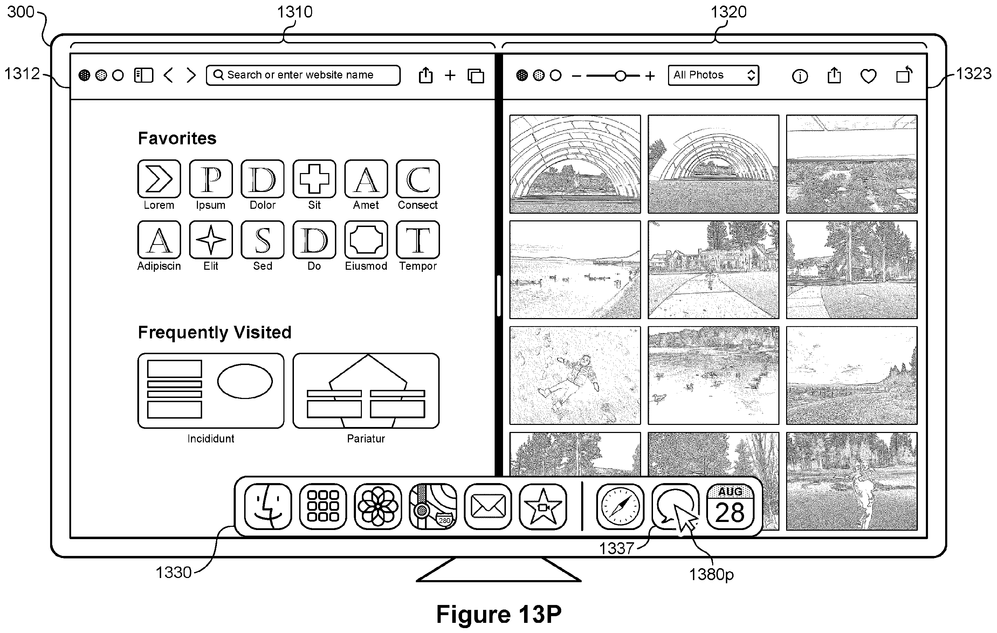

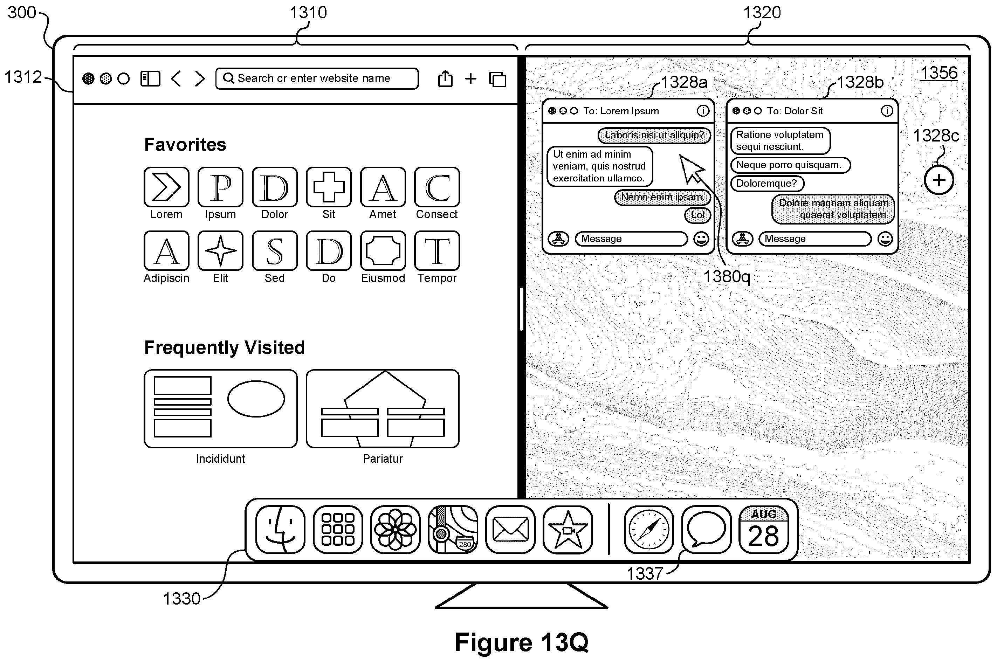

Figures 13P-13T illustrate a user input that selects a user interface for display in the split-screen configuration, where the application corresponding to the user interface is associated with a plurality of windows, in accordance with some embodiments. In Figure 13P, device 300 concurrently displays first user interface 1312 of a first application in first region 1310, either placeholder interface 1352 or second user interface 1323 of a second application in second region 1320, and dock 1330. Device 300 detects a user input 1380p (e.g., a mouse click) corresponding to selection of an icon 1337 in dock 1330 that corresponds to an application (e.g., a messages application) associated with a plurality of windows. In response to detecting user input 1380p, device 300 displays a user interface 1356 including a plurality of windows 1328a-1328b (also referred to as thumbnails) of the second application (e.g., corresponding to separate message conversations) in second region 1320, as depicted in Figure 13Q, thereby replacing the user interface that was previously displayed in region 1320 (here, user interface 1323). As such, user interfaces 1312 and 1356 are displayed in the split-screen configuration in regions 1310 and 1320, respectively.

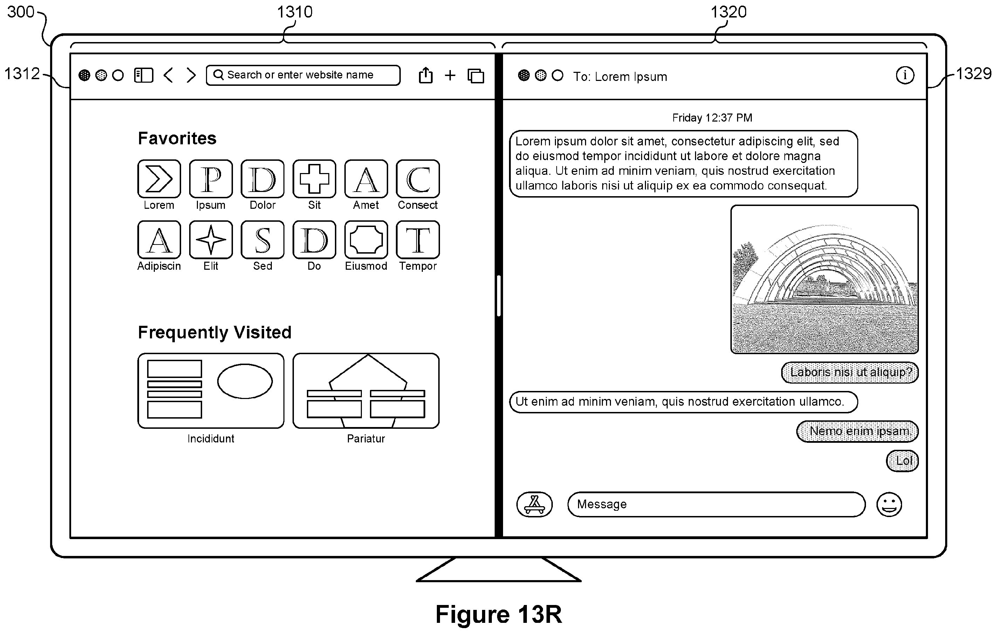

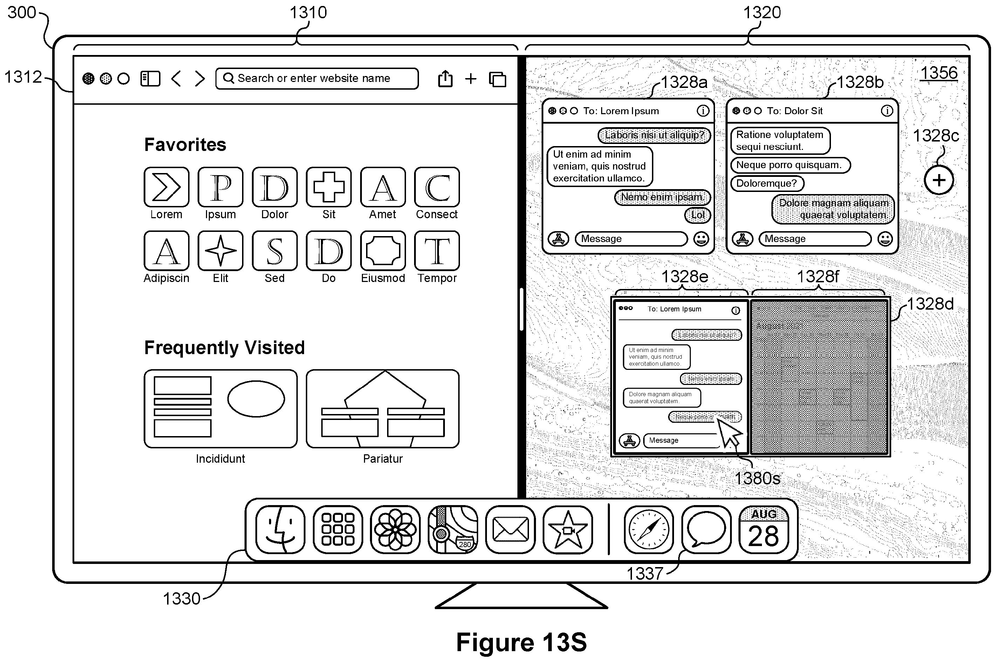

Figure 13Q is one embodiment of user interface 1356, including two or more windows 1328-1328b associated with the application corresponding to the selected icon 1337, wherein each of the two or more windows respectively corresponds to a distinct user interface of the application corresponding to the selected icon 1337. In some embodiments, the two or more windows are user interfaces for the application corresponding to the selected icon 1337, wherein the application is in a saved state. Stated another way, a first window 1328a of the two or more windows associated with the second application corresponds to a first user interface for the second application and a second window 1328b of the two or more windows associated with the second application corresponds to a second user interface for the second application, wherein the second user interface for the second application is different from the first user interface for the first application. In some embodiments, the two or more windows are arranged separately from each other (e.g., in one or more rows and/or columns, as depicted in Figure 13Q). In some embodiments, the two or more windows are arranged partially overlapping with each other (e.g., in a stack, as depicted in Figure 13S). In some embodiments, user interface 1356 further includes an affordance 1328c corresponding to display of an additional window associated with the application corresponding to selected icon 1337, in addition to the two or more windows 1328a-1328b already displayed. Referring to Figure 13Q, while displaying the two or more windows 1328a-1328b of user interface 1356, device 300 detects a user input 1380q (e.g., a mouse click) corresponding to selection of a first of the two windows 1328a. In response to detecting user input 1380q, device 300 displays user interface 1329 in second region 1320, as depicted in Figure 13R, thereby replacing user interface 1356. As such, user interfaces 1312 and 1329 are displayed in the split-screen configuration.

Figure 13S is another embodiment of user interface 1356 described above with reference to Figure 13Q. In Figure 13S, representation 1328d is displayed in addition to windows 1328a-1328b. Representation 1328d includes two representations 1328e and 1328f corresponding to user interfaces open in a split-screen view of another virtual workspace. Representation 1328e corresponds to a user interface of a first application (e.g., a messages application), and representation 1328f corresponds to a user interface of a second application (e.g., a calendar application). Having previously selected icon 1337 with user input 1380p (Figure 13P), all windows and representations associated with the application corresponding to icon 1337 are displayed in user interface 1356. If the virtual workspace represented by representation 1328d includes a user interface associated with the application corresponding to icon 1337 (the messages application), then representation 1328d displays the representation of that application (1328e) and changes an appearance of the representation of the other application (1328f) (e.g., alters a visual feature by dimming, blurring, graying out, or patterning) to indicate that the application associated with representation 1328f is not associated with the application corresponding to icon 1337. Stated another way, upon selecting the messages icon 1337, user interface 1356 displays all of the windows and representations associated with the messaging app across all virtual desktops. One virtual desktop, represented by representation 1328d includes a split-screen view of a messaging user interface 1328e and a non-messaging user interface 1328f. As such, the appearance of the non-messaging user interface 1328f is changed to indicate that it is not associated with the selected messaging application.

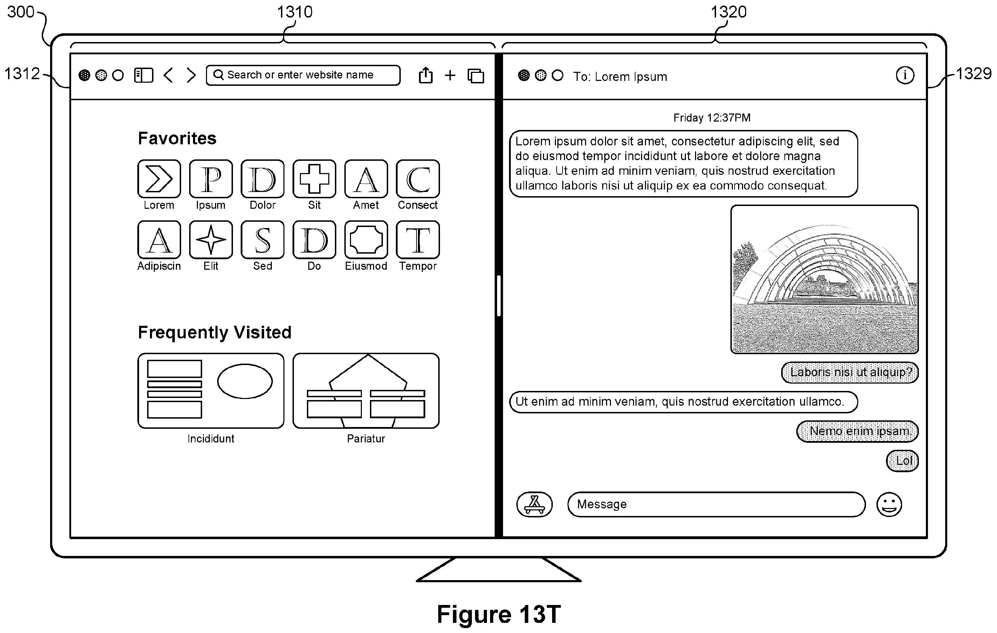

While displaying windows 1328a-1328b and representations 1328d corresponding to the selected icon 1337, device 300 detects a user input 1380s (e.g., a mouse click) corresponding to selection of representation 1328e. In response to detecting user input 1380s, device 300 displays user interface 1329 in second region 1320, as depicted in Figure 13T, thereby replacing the windows 1328a-1328b and representations 1328d.

In some embodiments, the plurality of windows (1328a-1328b in Figure 13Q and 1328a-1328b in Figure 13S) associated with the application corresponding to selected icon 1337 are associated with two or more workspaces or virtual desktops. In some embodiments, each workspace and/or virtual desktop includes multiple windows of an application, wherein each of the multiple windows can be opened and/or closed collectively. Stated another way, the plurality of windows associated with the application corresponding to selected icon 1337 include at least one window (e.g., 1328a) from a first virtual workspace and at least one window (e.g., 1328b) from a second virtual workspace different from the first virtual workspace.

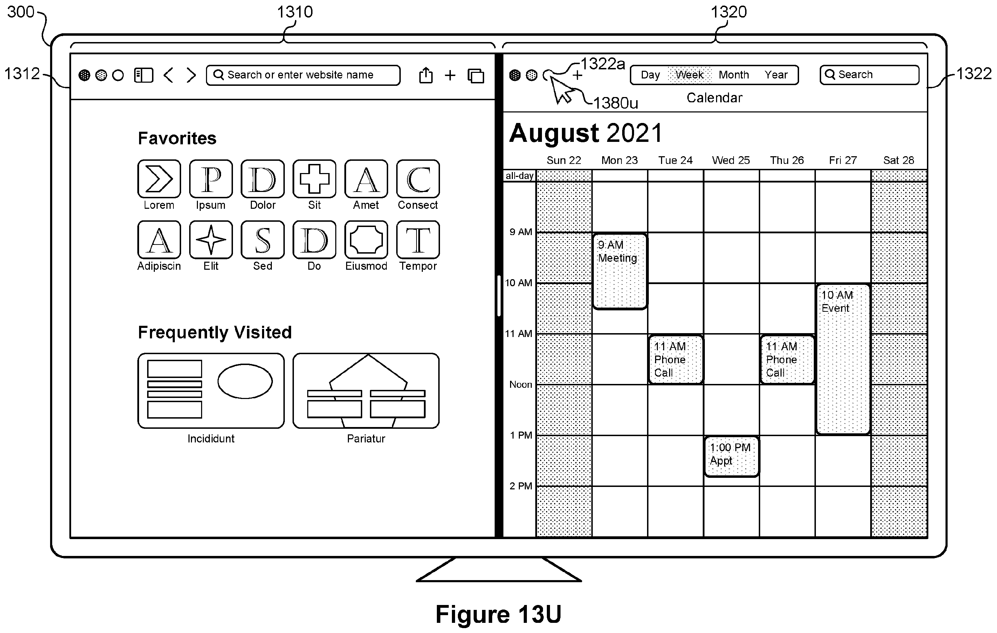

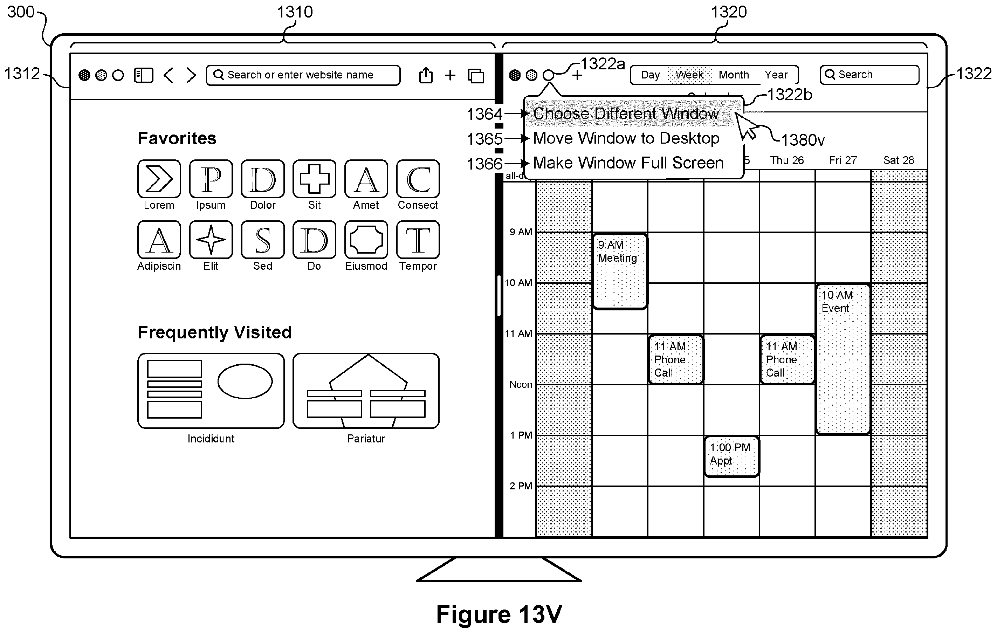

Figures 13U-13AA illustrate user inputs that cause one of the user interfaces in the split-screen configuration to be displayed in a configuration other than the split-screen configuration (thereby exiting the split-screen configuration), in accordance with some embodiments. In Figure 13U, device 300 displays user interfaces 1312 and 1322 in regions 1310 and 1320, respectively, in the split-screen configuration. Device 300 detects user input 1380u (e.g., a mouse click) corresponding to selection of window control affordance 1322a of user interface 1322. In response to detecting user input 1380a, user interface 1322 displays a menu 1322b of display configuration options (also referred to as display configuration option affordances) 1364-1366 corresponding to display of a user interface of the second application (associated with user interface 1322) in a configuration other than the split-screen configuration, as depicted in Figure 13V.

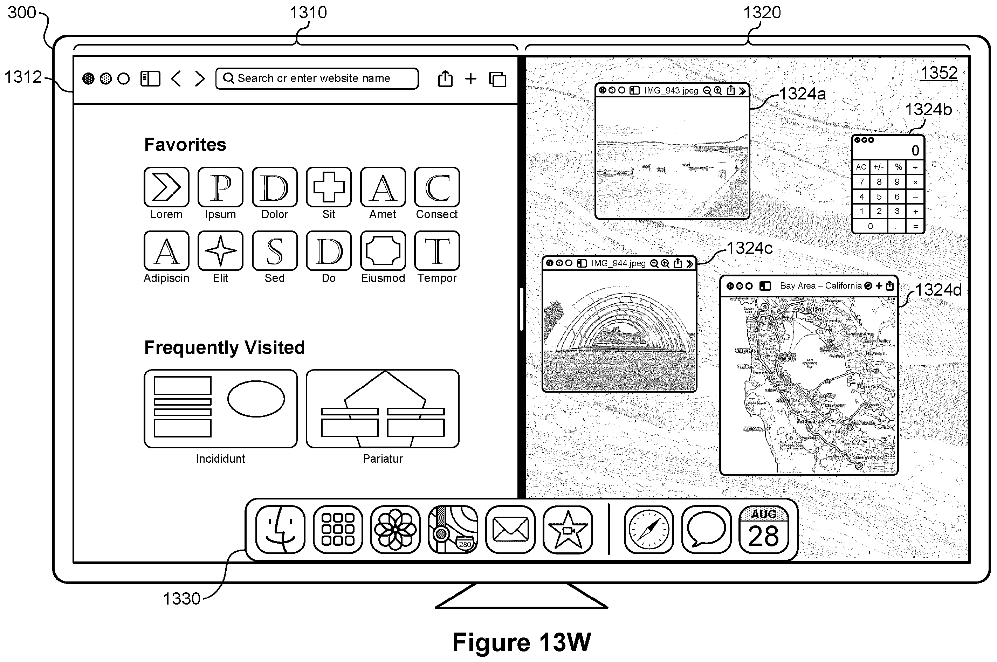

Figure 13V illustrates user selection 1380v of a first display configuration option 1364 of menu 1322b (labeled, e.g., "Choose Different Window") following user selection 1380u in Figure 13U. Device 300 detects user input 1380v (e.g., a mouse click) corresponding to selection of display configuration option 1364. In response to detecting user input 1380v, device 300 replaces user interface 1322 in region 1320 with placeholder interface 1352, as depicted in Figure 13W. From there, a subsequent user input may select a different application to open into the split-screen configuration using any of the methods described above with reference to Figures 13D-13T.

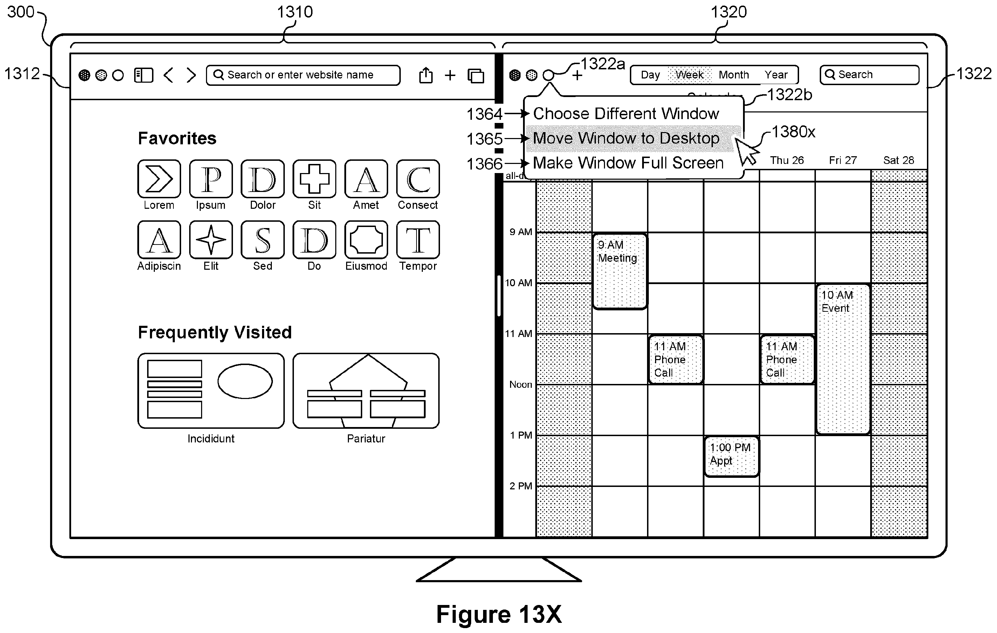

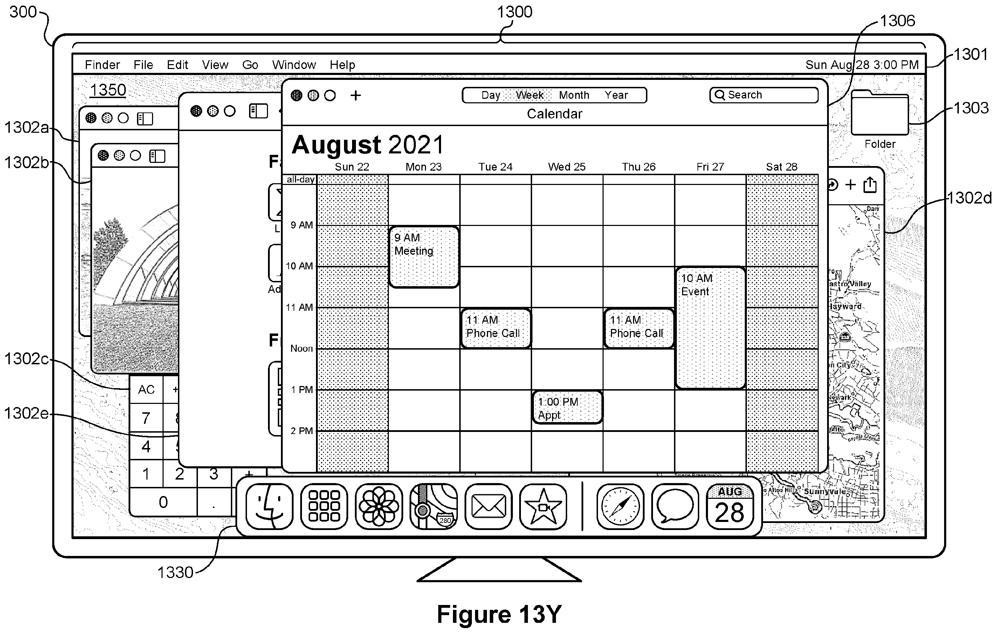

Figure 13X illustrates user selection 1380x of a second display configuration option 1365 of menu 1322b (labeled, e.g., "Move Window to Desktop") following user selection 1380u in Figure 13U. Device 300 detects user input 1380x (e.g., a mouse click) corresponding to selection of display configuration option 1365. In response to detecting user input 1380x, device 300 displays a window 1306 of the application corresponding to user interface 1322 in a portion of a user interface (e.g., the desktop) displayed in at least a portion of the first region and at least a portion of the second region (e.g., in full-screen user interface 1350), as depicted in Figure 13Y. From there, a subsequent user input may select an application for viewing in the split-screen configuration using any of the methods described above with reference to Figures 13A-13C (e.g., user inputs 1380a and 1380b). Additionally or alternatively, subsequent user inputs may interact with any of the applications displayed in interface 1350, or open other applications not displayed in interface 1350 (e.g., by selecting an icon in dock 1330) (e.g., user input 1380d or user inputs 1380f and 1380g).

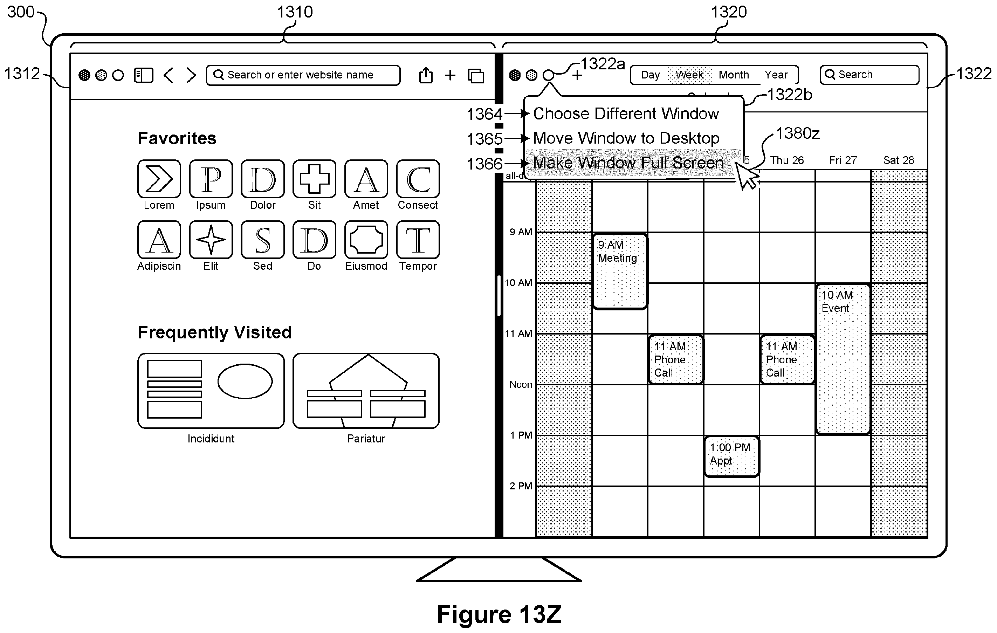

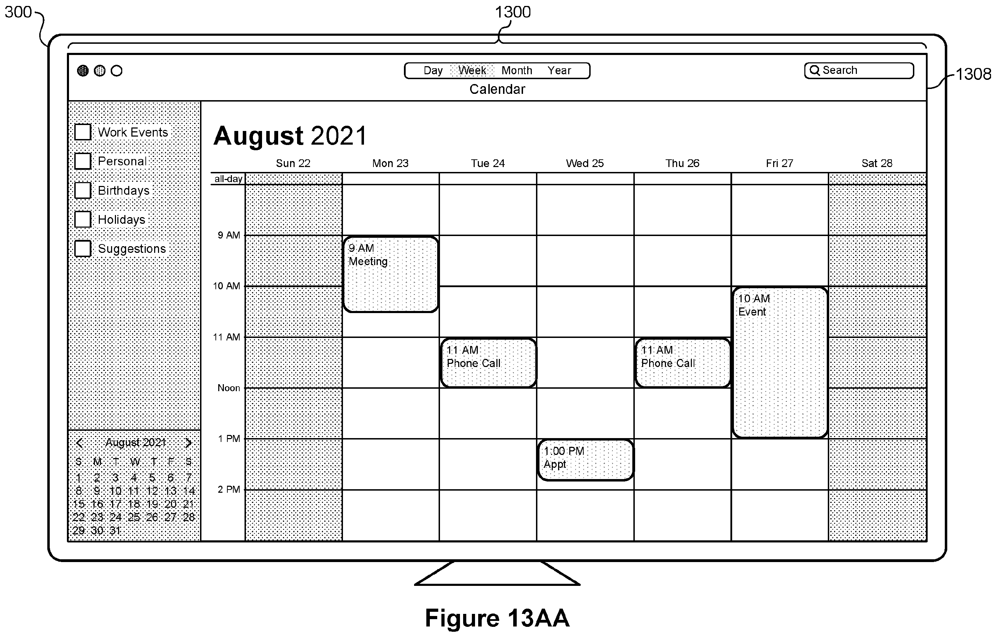

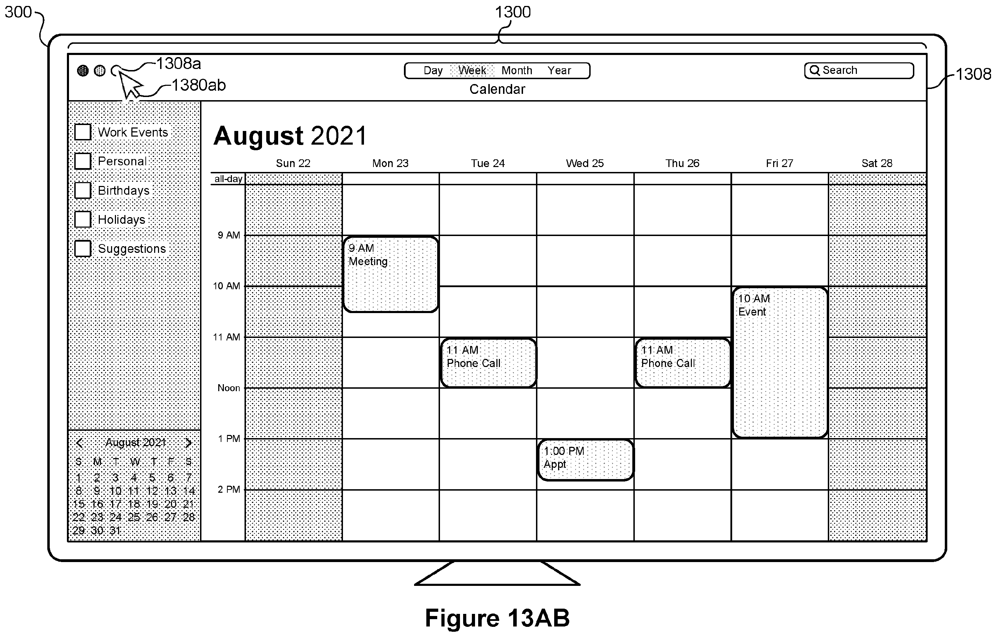

Figure 13Z illustrates user selection 1380z of a third display configuration option 1366 of menu 1322b (labeled, e.g., "Make Window Full Screen") following user selection 1380u in Figure 13U. Device 300 detects user input 1380z (e.g., a mouse click) corresponding to selection of display configuration option 1366. In response to detecting user input 1380z, device 300 displays full-screen user interface 1308 of the application associated with user interface 1322 in the full-screen configuration displayed in at least a portion of region 1300, as depicted in Figure 13AA. From there, subsequent user inputs may interact with display configuration options of user interface 1308 as described below with reference to Figures 13AB-13AE. In some embodiments, full-screen user interface 1300 in Figure 13AA is displayed as a result of a user input (e.g., a mouse click) corresponding to selection of a full-screen display configuration option (e.g., display configuration option 1361 as depicted in Figure 13B).

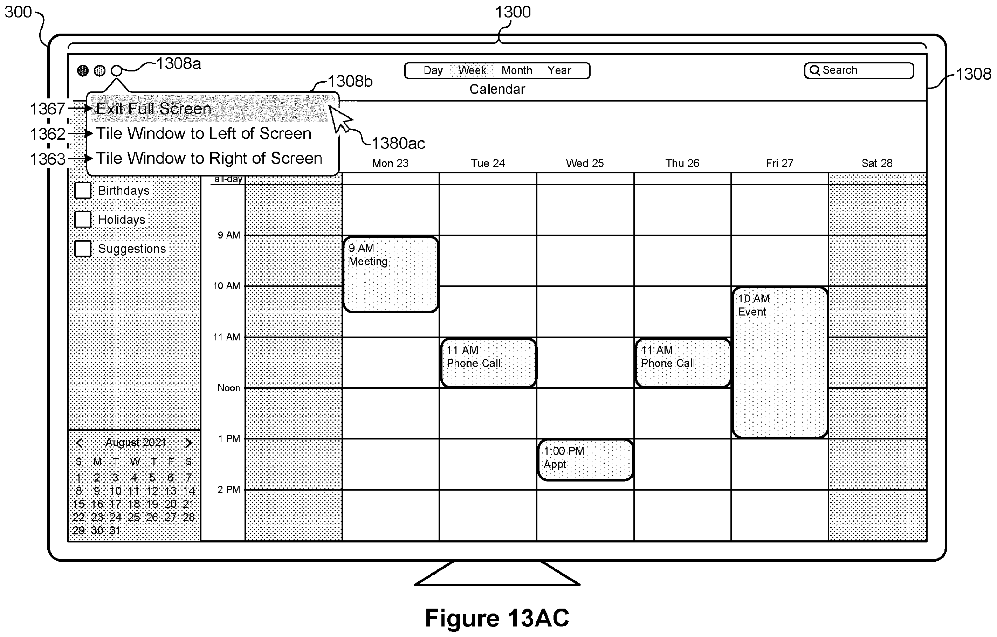

Figures 13AB-13AF illustrate user inputs that cause a user interface in the full-screen configuration to be displayed in the split-screen configuration, in accordance with some embodiments. In Figure 13AB, device 300 displays user interface 1308 in region 1300 in the full-screen configuration. Device 300 detects user input 1380ab (e.g., a mouse click) corresponding to selection of window control affordance 1308a of user interface 1308. In response to detecting user input 1380ab, user interface 1308 displays a menu 1308b of display configuration options 1367, 1362, and 1363 corresponding to display of a user interface of the application associated with user interface 1308 in a configuration other than the full-screen configuration, as depicted in Figure 13AC.

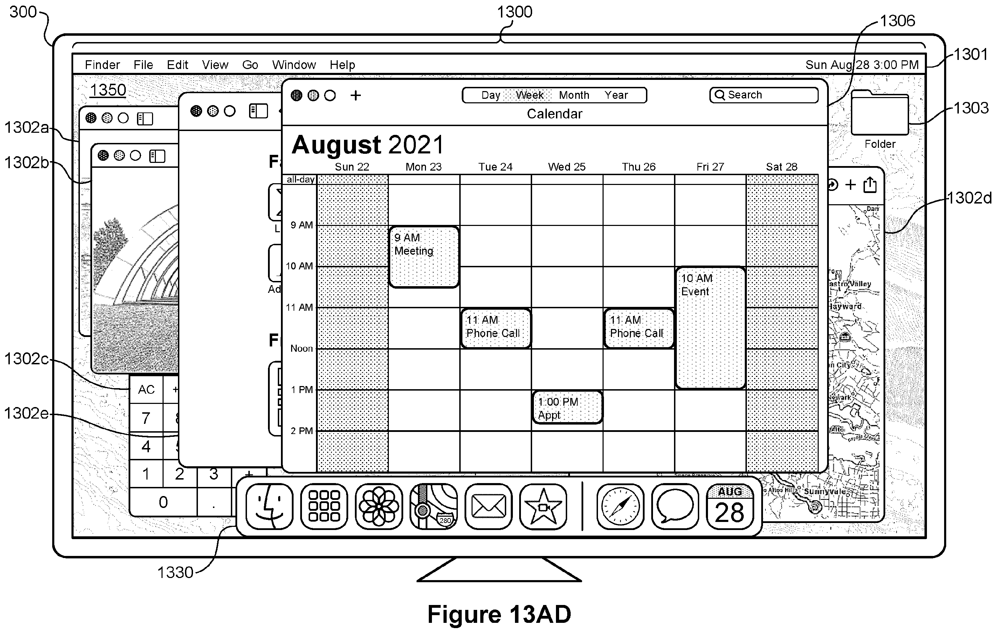

Figure 13AC illustrates user selection 1380ac of a first display configuration option 1367 of menu 1308b (labeled, e.g., "Exit Full Screen") following user selection 1380ab in Figure 13AB. Device 300 detects user input 1380ac (e.g., a mouse click) corresponding to selection of display configuration option 1367. In response to detecting user input 1380ac, device 300 replaces full-screen user interface 1308 in region 1300 with window 1306 in desktop interface 1350, as depicted in Figure 13AD. From there, a subsequent user input may select an application for viewing in the split-screen configuration using any of the methods described above with reference to Figures 13A-13C. Additionally or alternatively, subsequent user inputs may interact with any of the applications displayed in interface 1350, or open other applications not displayed in interface 1350 (e.g., by selecting an icon in dock 1330).

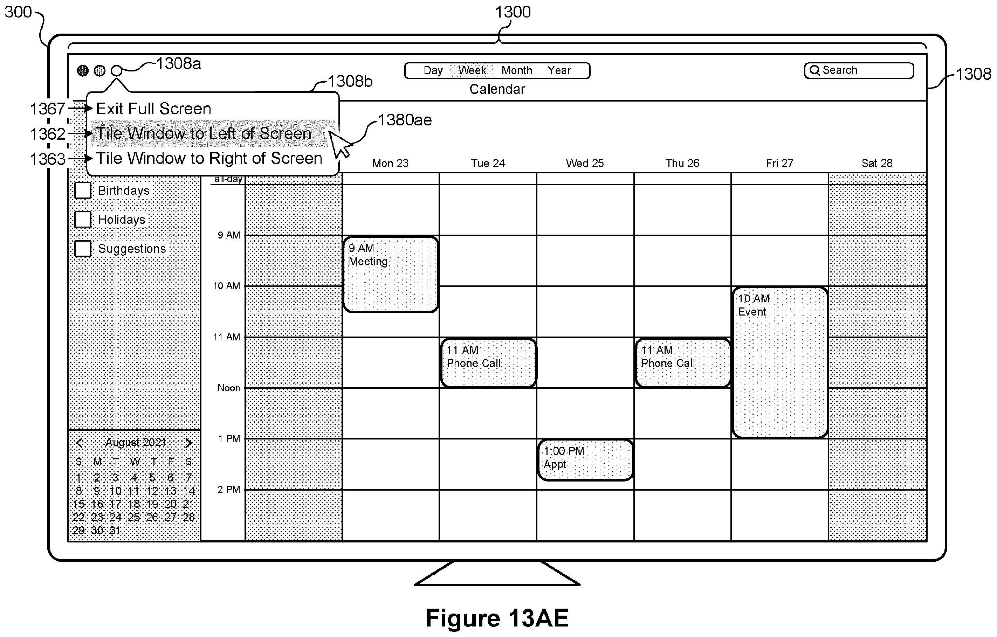

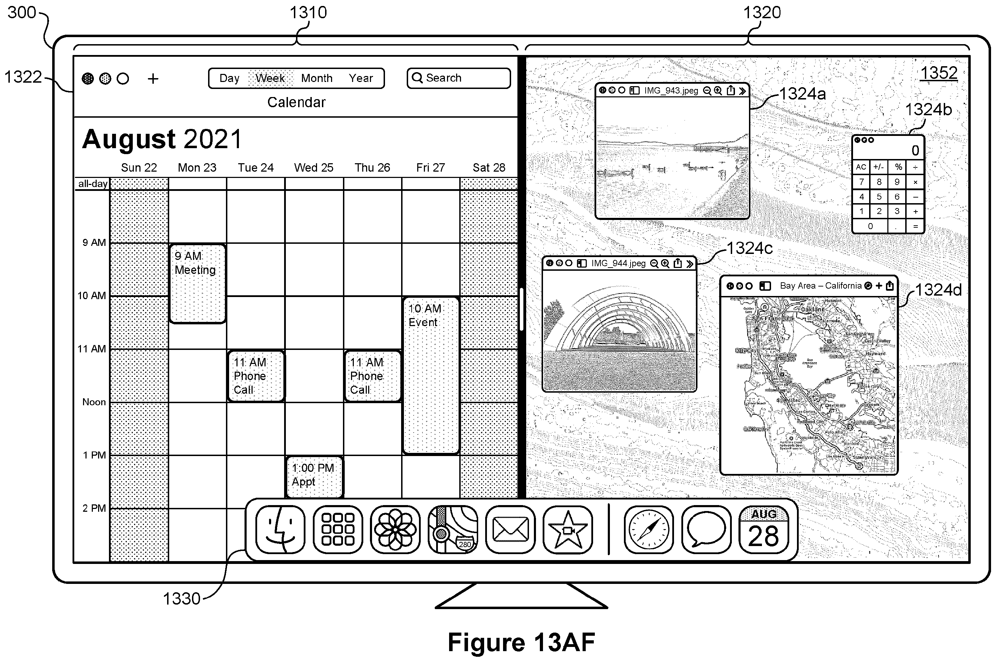

Figure 13AE illustrates user selection 1380ae of a second display configuration option 1362 of menu 1308b (labeled, e.g., "Tile Window to Left of Screen") following user selection 1380ab in Figure 13AB. Device 300 detects user input 1380ae (e.g., a mouse click) corresponding to selection of display configuration option 1362. In response to detecting user input 1380ae, device 300 replaces full-screen user interface 1308 in region 1300 with user interface 1322 in region 1310, as depicted in Figure 13AF. In some embodiments, placeholder application 1352 is displayed in region 1320 in the split-screen configuration with user interface 1322. From there, a subsequent user input may select a second application to open into the split-screen configuration (into region 1320) using any of the methods described above with reference to Figures 13D-13T.

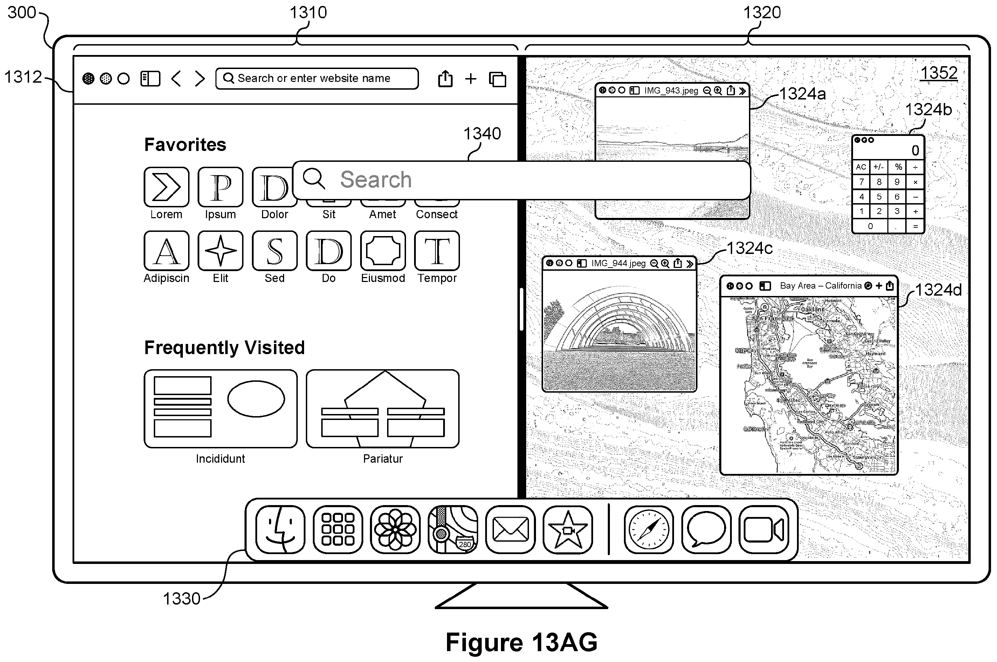

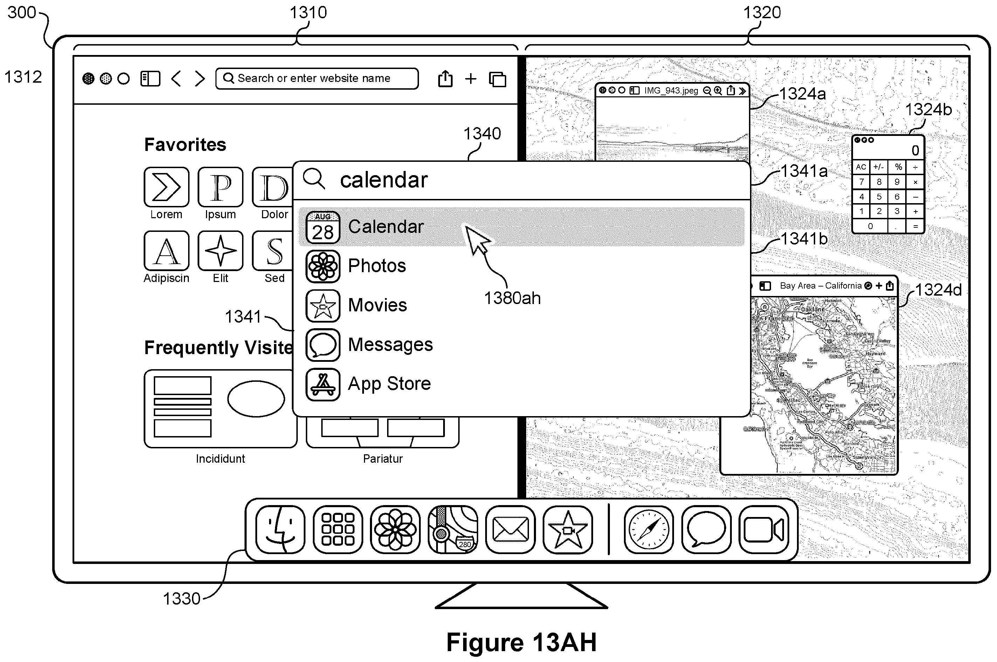

Figures 13AG-13AI illustrate user inputs that cause a second user interface (corresponding to a second application) to be displayed in the split-screen configuration using a search function (sometimes referred to as a spotlight search), in accordance with some embodiments. In Figure 13AG, device 300 concurrently displays first user interface 1312 corresponding to a first application in region 1310, and either a second user interface corresponding to a second application or placeholder user interface 1352 in region 1320, and dock 1330. As such, user interfaces 1312 and 1352 are displayed in the split-screen configuration. Device 300 detects a user input corresponding to a search command. In response to detecting the user input corresponding to the search command, device 300 displays a search field 1340. In some embodiments, the user input corresponding to the search command is a gesture such as a tap, a swipe, a flick, a mouse click, a mouse drag, or one or more keystrokes (e.g., a keyboard shortcut, such as command-spacebar). In some embodiments, search field 1340 is displayed concurrently with (e.g., overlaying) first region 1310 and/or second region 1320. In some embodiments, search field 1340 includes a search input region 1341a and optionally one or more regions 1341b displaying suggested searches (e.g., based on previous searches or common searches), as depicted in Figure 13AH. In Figure 13AH, device 300 detects user input 1380ah (e.g., a mouse click) corresponding to selection of a search result in region 1341b associated with a particular application. In response to detecting user input 1380ah, device 300 displays user interface 1322 of the particular application in second region 13210 in the split-screen configuration with first user interface 1312 of the first application in first region 1310.

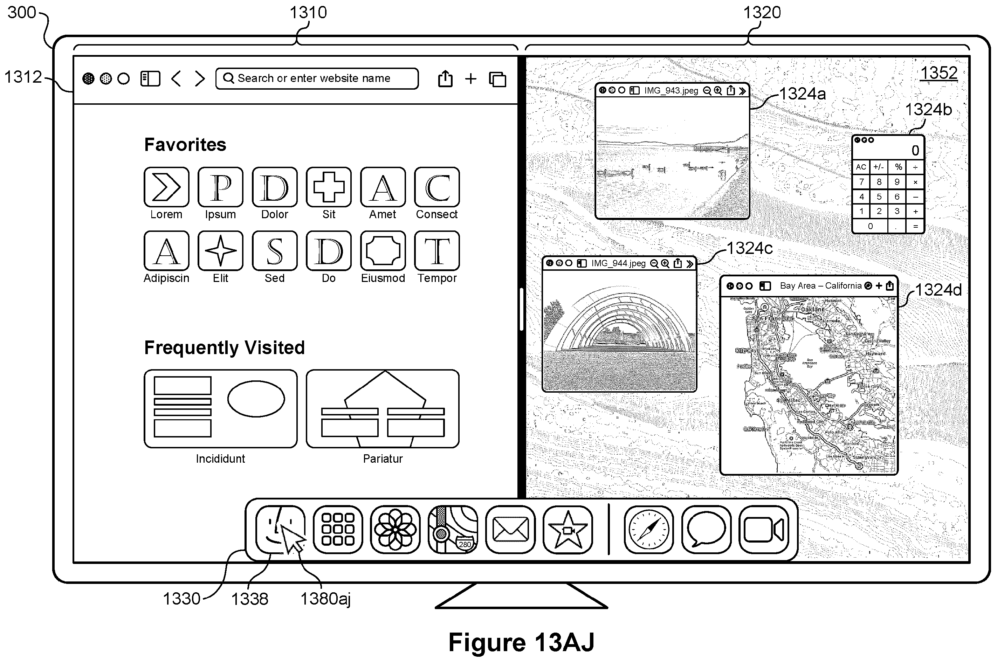

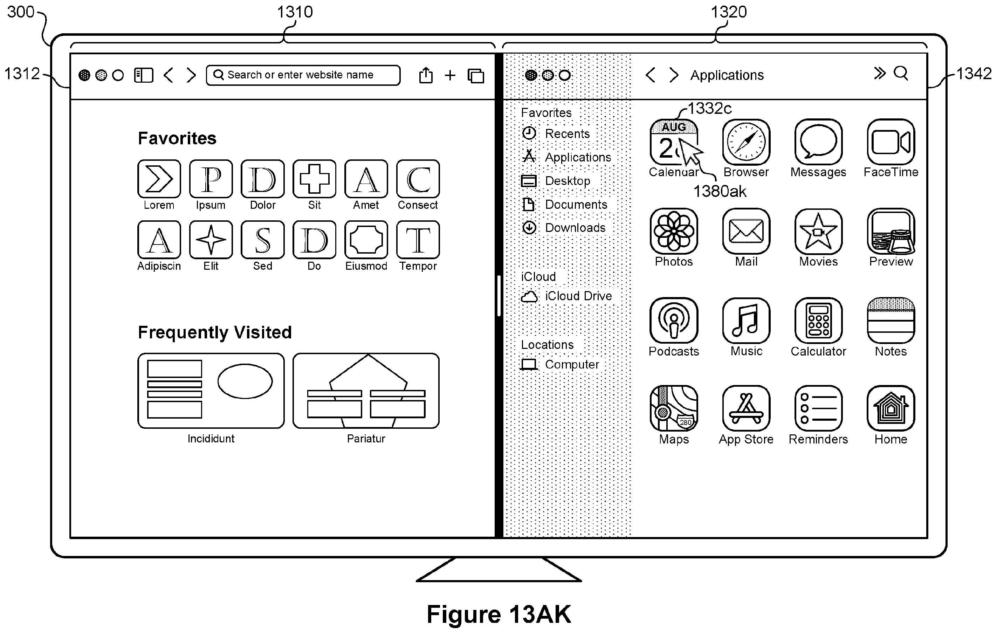

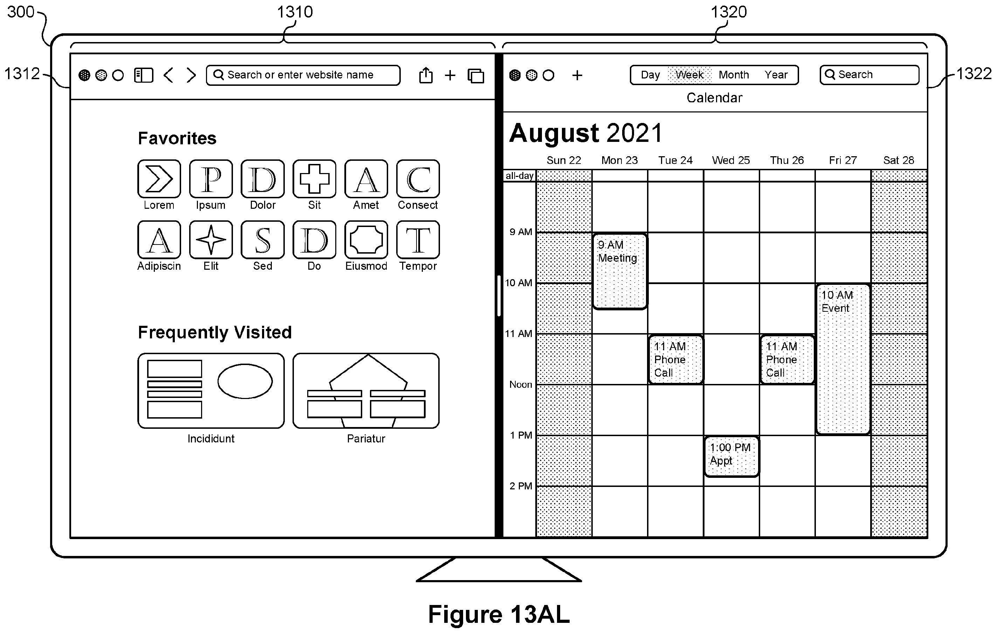

Figures 13AJ-13AL illustrate user inputs that cause a second user interface (corresponding to a second application) to be displayed in the split-screen configuration using a file manager (sometimes referred to as a finder), in accordance with some embodiments. In some embodiments, the file manager is an application that displays a plurality of files and/or applications that are stored on device 300 or otherwise capable of being executed via device 300. In Figure 13AJ, device 300 concurrently displays first user interface 1312 corresponding to a first application in region 1310, either a second user interface corresponding to a second application or placeholder user interface 1352 in region 1320, and dock 1330. As such, user interfaces 1312 and 1352 are displayed in the split-screen configuration. Alternatively, user interfaces 1312 and 1354 (Figure 13I), or user interfaces 1312 and 1322 (Figure 13M) may be displayed in the split-screen configuration. Device 300 detects user input 1380aj (e.g., a mouse click) corresponding to selection of icon 1338 (corresponding to the file manager application) in dock 1330. In response to detecting user input 1380aj, device 300 displays user interface 1342 corresponding to the file manager application in second region 1320, as depicted in Figure 13AK. As such, user interfaces 1312 and 1342 are displayed in the split-screen configuration. In Figure 13AK, device 300 detects user input 1322ak (e.g., a mouse click) corresponding to selection of a first application icon 1332c of the plurality of application icons displayed in user interface 1342. In response to detecting user input 1380ak, device 300 displays user interface 1322 of the application corresponding to application icon 1332c in second region 1320 in the split-screen configuration with user interface 1312 in first region 1310, as depicted in Figure 13AL.

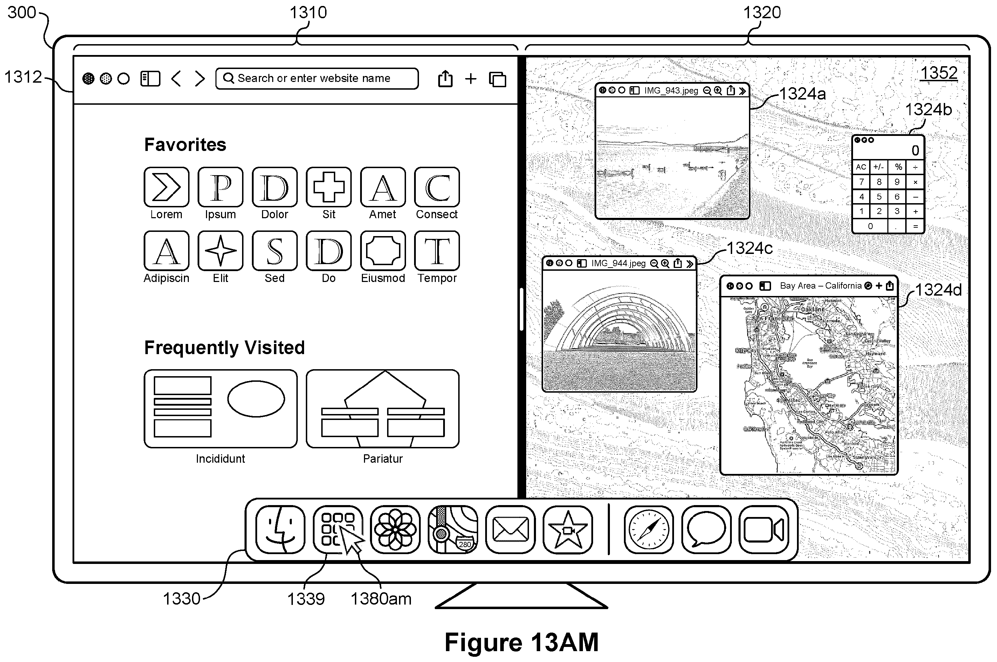

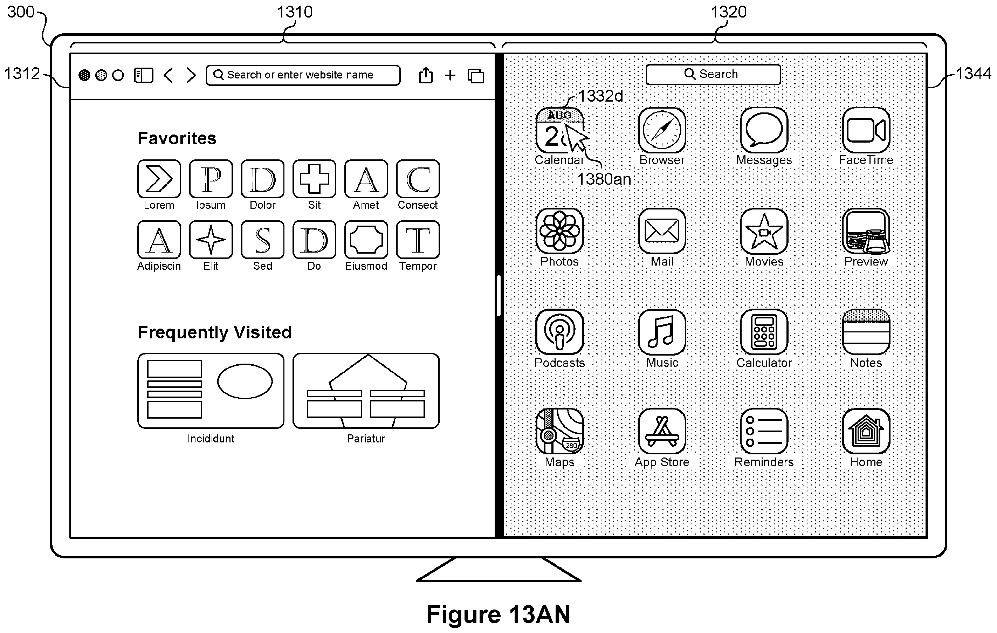

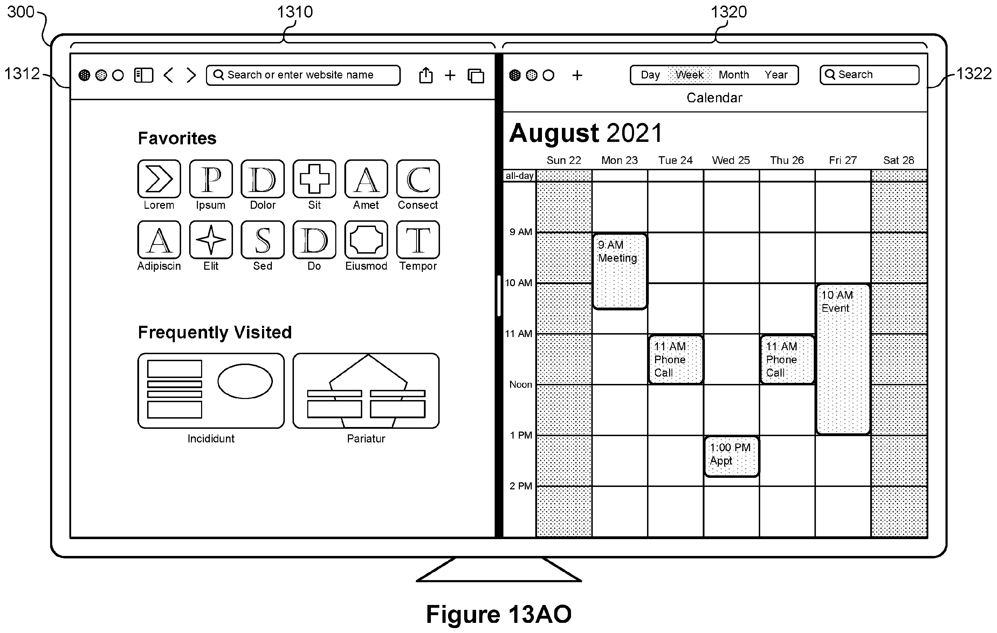

Figures 13AM-13AO illustrate user inputs that cause a second user interface (corresponding to a second application) to be displayed in the split-screen configuration using an application launcher (sometimes referred to as a launchpad), in accordance with some embodiments. In some embodiments, the application launcher is an application that displays a plurality of applications that are stored on device 300 or otherwise capable of being executed via device 300. In Figure 13AM, device 300 concurrently displays first user interface 1312 corresponding to a first application in region 1310, either a second user interface corresponding to a second application or placeholder user interface 1352 in region 1320, and dock 1330. As such, user interfaces 1312 and 1352 are displayed in the split-screen configuration. Alternatively, user interfaces 1312 and 1354 (Figure 13I), or user interfaces 1312 and 1322 (Figure 13M) may be displayed in the split-screen configuration. Device 300 detects user input 1380am (e.g., a mouse click) corresponding to selection of icon 1339 (corresponding to the application launcher) in dock 1330. In response to detecting user input 1380am, device 300 displays user interface 1344 corresponding to the application launcher in second region 1320, as depicted in Figure 13AN. As such, user interfaces 1312 and 1344 are displayed in the split-screen configuration. In Figure 13AN, device 300 detects user input 1322an (e.g., a mouse click) corresponding to selection of a first application icon 1332d of the plurality of application icons displayed in user interface 1344. In response to detecting user input 1380an, device 300 displays user interface 1322 of the application corresponding to application icon 1332d in second region 1320 in the split-screen configuration with user interface 1312 in first region 1310, as depicted in Figure 13AO.

The user interfaces depicted in Figures 13A-13AO are used as examples to illustrate the methods and/or processes described below. One of ordinary skill in the art will appreciate that the following user interfaces are merely examples. Moreover, one of ordinary skill in the art will appreciate that different layouts with additional or fewer affordances, user interface elements, or graphics can be used in various circumstances. Additional descriptions regarding Figures 13A-13AO are provided below in reference to method 14000. It should be understood that the particular order in which the operations in method 14000 have been described is merely an example and is not intended to indicate that the described order is the only order in which the operations could be performed. One of ordinary skill in the art would recognize various ways to reorder the operations described herein.

Figures 14A-14G are a flowchart of a method 14000 for displaying a plurality of user interfaces on a display device (e.g., device 300) in a split-screen configuration while reducing the number of inputs needed to populate each area of the screen with the different user interfaces. Some operations in method 14000 are, optionally, combined and/or the order of some operations is, optionally, changed.

Method 14000 is performed at a first computer system (14002) (e.g., a desktop, a laptop, a tablet computer, or a phone) (e.g., device 300 in Figure 13A) having a display generation component (e.g., a display, a projector, a heads-up display, or the like) and one or more input devices (e.g., a mouse and/or a keyboard). In some embodiments, device 300 concurrently displays (14004) in a display region provided by the display generation component: a dock (e.g., 1330, Figure 13D) including a plurality of icons respectively corresponding to a plurality of applications; and a first region (e.g., 1310, Figure 13D) and a second region (e.g., 1320, Figure 13D) displayed in a split-screen configuration, wherein the first region displays a first user interface (e.g., 1312, Figure 13D) of a first application, and the second region displays a placeholder interface (e.g., 1352, Figure 13D) indicating that the second region is available for placement of a user interface of an application other than the first application (e.g., 1322, Figure 13E). In some embodiments, the dock is overlaid over the other user interfaces, while in other embodiments, the dock is located in a bezel area or an edge region of the display generation component. In some embodiments, the dock includes the plurality of icons or affordances arranged in a row. In some embodiments, the placeholder interface displays selectable representations of applications that are already open, sometimes referred to as thumbnails (e.g., 1324a-1324d, Figure 13D). In some embodiments, the placeholder interface is blank or includes an image or text (e.g., 1326, Figure 13I) requesting a selection to display an application in the second region. In some embodiments, while concurrently displaying the dock, the first user interface of the first application in the first region, and the placeholder interface in the second region, device 300 detects (14006) a first user input (e.g., 1380d, Figure 13D, or 1380f-1380g, Figures 13F-13G) corresponding to selection of an icon (e.g., 1332, Figure 13D) in the dock that corresponds to a second application. In some embodiments, in response to detecting the first user input, device 300 displays (14008) a second user interface (e.g., 1322, Figure 13E) of the second application in the second region, wherein the second user interface of the second application is displayed with the first user interface of the first application in the split-screen configuration.

In some embodiments, the aforementioned operations (14002-14008) cause the second portion (second tile) of a split-screen display to be populated with a second application without requiring the user to first open the second application and manually reconfigure the display settings of the second application. Instead, merely selecting an icon or thumbnail associated with the second application causes the second application to open and the user interface of the second application to automatically position and size itself to be displayed in the split-screen configuration without requiring additional user input. Importantly, the second application is not required to already be open after the first application is tiled and before the second application is tiled. Instead, the second application may be opened and tiled with a single user input (e.g., a single mouse click). Triggering the display of a tiled version of a second application in a split-screen configuration next to a tiled version of a first application by detecting a single user input provides for the selection, positioning, and sizing of the second application for optimized viewing and interacting in an efficient manner with fewer operations, thereby reducing the number of inputs needed to perform an operation.

In some embodiments, displaying the first region and the second region in the split-screen configuration includes dividing (14010) the display region (e.g., 1300, Figure 13A) provided by the display generation component into a first portion (e.g., 1310, Figure 13C) and a second portion (e.g., 1320, Figure 13C) separated by a divider (e.g., 1315, Figure 13C), wherein the first region fills the first portion on a first side of the divider (e.g., the left side of the divider) and the second region fills the second portion on a second side of the divider (e.g., the right side of the divider). In some embodiments, displaying the first user interface of the first application and the second user interface of the second application in the split-screen configuration includes filling the first portion on the first side of the divider with the first user interface (e.g., 1312, Figure 13E) of the first application and filling the second portion on the second side of the divider with the second user interface (e.g., 1322, Figure 13E) of the second application. In some embodiments, the space occupied by the first and second user interfaces is exclusive of a space occupied by the dock. As such, the dock (e.g., 1330, Figure 13C) may overlay both regions (e.g., 1310 and 1320, Figure 13C) and the divider (e.g., 1315, Figure 13C). Positioning and sizing each user interface on either side of the divider in the split-screen configuration provides for efficient viewing and interacting with a plurality of user interfaces on the same screen, thereby reducing the number of inputs needed to perform an operation.

In some embodiments, the placeholder interface includes (14012) one or more representations of user interfaces (e.g., 1324a-1324d) of applications other than the first application (e.g., other than the browser application associated with user interface 1312). In some embodiments, the representations of user interfaces include windows of applications that are currently open in the background, windows of applications that have saved states, and/or windows of applications that are currently open in another region of an extended desktop and/or a virtual desktop or workspace. Including one or more representations of user interfaces in the placeholder interface reduces the number of user inputs required to populate the second region in the split-screen configuration, thereby reducing the number of inputs needed to perform an operation.

In some embodiments, displaying (14014) the second user interface of the second application in the second region includes ceasing to display the one or more representations of user interfaces of applications other than the first application in a region of the display region in which the second user interface is displayed (e.g., representations 1324a-1324d in Figure 13D are replaced by user interface 1322 in Figure 13E). Replacing the one or more representations of user interfaces in the placeholder interface with a user interface of an application displayed in the split-screen configuration provides for efficient viewing and interacting with a plurality of user interfaces on the same screen, thereby reducing the number of inputs needed to perform an operation.

In some embodiments, while concurrently displaying the dock (e.g., 1330, Figure 13M), the first user interface of the first application in the first region (e.g., 1312 in region 1310, Figure 13M), and the second user interface of the second application in the second region (e.g., 1322 in region 1320, Figure 13M), device 300 detects (14016) a second user input (e.g., 1380m, Figure 13M) corresponding to selection of an icon (e.g., 1334, Figure 13M) in the dock corresponding to a third application; and in response to detecting the second user input, device 300 replaces the second user interface of the second application (e.g., 1322, Figure 13M) with a third user interface of the third application (e.g., 1323, Figure 13N) in the second region, wherein the third user interface of the third application is displayed with the first user interface of the first application in the split-screen configuration. Replacing a user interface in a split-screen configuration with another user interface without leaving the split-screen configuration and without requiring the application associated with the other user interface to first be opened minimizes the user inputs required to replace applications in the split-screen configuration, which provides for efficient viewing and interacting with a plurality of user interfaces on the same screen, thereby reducing the number of inputs needed to perform an operation.

In some embodiments, displaying the second user interface of the second application (e.g., 1322 in Figure 13E, or 1323 in Figure N) includes opening (14018) the second application from a closed state. In some embodiments, the second application is not running or being executed in the foreground or in the background at the time of its selection for display in the split-screen configuration. In some embodiments, the second application is already running or being executed in the foreground or in the background at the time of its selection for display in the split-screen configuration. Displaying an application in the split-screen configuration without requiring the user to first open the application and then reconfigure the display of the application using separate inputs provides for efficient viewing and interacting with a plurality of user interfaces on the same screen, thereby reducing the number of inputs needed to perform an operation.

In some embodiments, while concurrently displaying the dock (e.g., 1330, Figure 13O), the first user interface of the first application in the first region (e.g., 1312 in region 1310, Figure 13O), and either the placeholder interface (e.g., 1352, Figure 13C) or the second user interface of the second application in the second region (e.g., 1323 in region 1320, Figure 13O), in accordance with a determination that a third application cannot be displayed in the split-screen configuration (e.g., the movies application is not supported for split-screen display), device 300 changes (14020) an appearance of an icon in the dock that corresponds to the third application to indicate that the third application cannot be displayed in the split-screen configuration. In some embodiments, the changing an appearance of the icon includes displaying the icon with an altered appearance (e.g., dimmed, blurred, grayed out, patterned etc.), indicating that the icon is not selectable (e.g., does not respond to mouse clicks). In some embodiments, the icon is not displayed in the dock. Changing an appearance of an icon associated with an application that is not supported for split-screen viewing provides for efficient viewing and interacting with a plurality of user interfaces that are supported for split-screen viewing without requiring other applications already open in the split-screen configuration to be closed or repositioned, thereby reducing the number of inputs needed to perform an operation.

In some embodiments, displaying, in the second region, the second user interface of the second application includes displaying (14022) two or more windows associated with the second application, wherein each of the two or more windows associated with the second application respectively correspond to a distinct user interface of the second application. For example, windows 1328a and 1328b in Figure 13Q correspond to distinct conversation interfaces of a messaging application, and a user selection of one of the windows (e.g., user input 1380q, Figure 13Q, or user input 1380s, Figure 13S) causes the corresponding user interface to be displayed in the split-screen configuration (e.g., 1329, Figure 13R or Figure 13T). In some embodiments, the two or more windows are arranged separate from each other (e.g., in one or more rows, as depicted in Figure 13Q). In some embodiments, the two or more windows are arranged partially overlapping with each other (e.g., in a stack, as depicted in Figure 13 S). Arranging multiple windows of an application in the placeholder interface provides for efficient populating of the split-screen configuration for applications associated with more than one window, thereby reducing the number of inputs needed to perform an operation.

In some embodiments, while displaying the two or more windows associated with the second application in the second region, device 300 displays (14024) an additional window affordance (e.g., 1328c, Figure 13Q) in the second region, detects a user input corresponding to selection of the additional window affordance, and in response to detecting the user input corresponding to selection of the additional window affordance, displays an additional window associated with the second application in addition to the two or more windows associated with the second application. Providing an option to open additional window of an application selected for display in the split-screen configuration provides for efficient viewing and interacting with a plurality of user interfaces on the same screen, thereby reducing the number of inputs needed to perform an operation.

In some embodiments, the two or more windows associated with the second application displayed in the second region include (14026) at least one window from a first virtual workspace and at least one window from a second virtual workspace different from the first virtual workspace. For example, window 1328a in Figure 13Q may have been opened in a first virtual desktop, and window 1328b in Figure 13Q may have been opened in a second virtual desktop prior being displayed in the placeholder interface. In some embodiments, the virtual desktops corresponding to virtual workspaces that may include multiple windows of an application that can be opened and closed collectively. Displaying multiple windows of an application that are open in different virtual desktops for selection to be displayed in the split-screen configuration provides for efficient viewing and interacting with a plurality of user interfaces on the same screen, thereby reducing the number of inputs needed to perform an operation.

In some embodiments, the placeholder interface in the second region includes (14028) a first representation of two user interfaces including a fourth user interface of a fourth application and a fifth user interface of a fifth application. For example, in Figure 13K, placeholder interface 1352 includes representation 1325, which is a representation of two user interfaces 1325a (e.g., for a map application) and 1325b (e.g., for a calendar application). The two user interfaces of the representation are displayed adjacent to each other in the second region in a split-view arrangement within the first representation. For example, in Figure 13K, user interfaces 1325a and 1325b are displayed adjacent to each other in region 1320 in a split-view arrangement within a single representation 1325, which may represent a split-screen configuration of another virtual desktop. For example, a user may open two applications and view them in a split-screen configuration in a first virtual desktop, then move to a second virtual desktop and open only one of the two applications (e.g., 1325b, Figure 13K) in an available region (e.g., 1320, Figure 13K) of a split-screen configuration. Displaying a split-screen thumbnail allows for the selection of just a portion of the split-screen thumbnail for display in a split-screen configuration, which provides for efficient viewing and interacting with a plurality of user interfaces on the same screen, thereby reducing the number of inputs needed to perform an operation.

In some embodiments, while concurrently displaying the dock, the first user interface of the first application in the first region, and the placeholder interface including the first representation of the two user interfaces in the second region, device 300 detects (14030) a fourth user input corresponding to (i) selection of a portion of the first representation corresponding to the fourth user interface, or (ii) selection of a portion of the first representation corresponding to the fifth user interface. Stated another way, the fourth user input corresponds to selection of a portion of the first representation corresponding to a respective user interface corresponding to a respective application (the respective application corresponding to the fourth user interface or the fifth user interface). For example, in Figure 13K, user input 1380k selects portion 1325b of split-screen thumbnail 1325 corresponding to a user interface for a calendar application. In response to detecting the fourth user input, device 300 displays the fourth user interface of the fourth application (or the fifth user interface of the fifth application, whichever was selected) in the second region (and, in some implementations, ceases to display the placeholder interface including the first representation of the two user interfaces), wherein the fourth user interface of the fourth application (or the fifth user interface of the fifth application) is displayed with the first user interface of the first application in the split-screen configuration. Stated another way, in response to detecting the fourth user input, device 300 displays a representation of the respective application (the fourth user interface or the fifth user interface, whichever was selected) in the second region, wherein the representation of the respective application is displayed with the first user interface of the first application in the split-screen configuration. Specifically, in accordance with a determination that the fourth user input corresponded to selection of the fourth user interface of the fourth application, the representation of the respective application is the fourth user interface of the fourth application; and in accordance with a determination that the fourth user input corresponded to selection of the fifth user interface of the fifth application, the representation of the respective application is the fifth user interface of the fifth application. For example, in response to user input 1380k (Figure 13K), user interface 1322 replaces placeholder interface 1352 in second region 1320 and is displayed in the split-screen configuration with user interface 1312, as depicted in Figure 13L. Selection of one portion (e.g., 1325b, Figure 13K) of the split-screen thumbnail does not trigger display of a user interface corresponding to the unselected portion (e.g., 1325a) of the split-screen thumbnail, thereby reducing the number of inputs needed to perform an operation. Displaying a split-screen thumbnail from one workspace and allowing selection of just a portion of the split-screen thumbnail for display in a split-screen configuration in a different workspace provides for efficient viewing and interacting with a plurality of user interfaces on the same screen, thereby reducing the number of inputs needed to perform an operation.

In some embodiments, prior to concurrently displaying the dock, the first user interface of the first application in the first region, and the placeholder interface in the second region, device 300 displays (14032), in a portion of a user interface displayed in at least a portion of the first region and at least a portion of the second region, a first window of the first application. For example, in Figure 13A, window 1304 is displayed in desktop interface 1350. The first window includes a window control affordance (e.g., 1304a, Figure 13A) that presents a plurality of display configuration option affordances for the first window, wherein the plurality of display configuration option affordances includes a first split-screen configuration option affordance corresponding to display of the first application in the first region in the split-screen configuration (e.g., 1362, Figure 13B), a second split-screen configuration option affordance corresponding to display of the first application in the second region in the split-screen configuration (e.g., 1363, Figure 13B), and a full-screen configuration option affordance corresponding to display of the first application in at least a portion of the first region and at least a portion of the second region in the full-screen configuration (e.g., 1361, Figure 13B). Device 300 detects a user input (e.g., 1380b, Figure 13B) corresponding to selection of the first split-screen configuration option affordance corresponding to display of the first application in the first region. In some embodiments, the first region and the second region are not visually distinct (e.g., the desktop interface 1350 is not separated by a divider). Device 300 displays (14034) the first user interface of the first application in the first region and the placeholder interface in the second region in the split-screen configuration in response to the detecting of the user input corresponding to the selection of the first split-screen configuration option affordance. For example, in Figure 13C, user interface 1312 is displayed in a split-screen configuration as a result of user input 1380b in Figure 13B. Providing display configuration options for a window that efficiently resize and reposition the window into a split-screen configuration provides for efficient viewing and interacting with a plurality of user interfaces on the same screen, thereby reducing the number of inputs needed to perform an operation.

In some embodiments, the second user interface of the second application includes (14036) a window control affordance corresponding to replacement of the second user interface in the second region with the placeholder interface. For example, in Figure 13V, user input 1380v selects a display configuration option for choosing a different window for display in second region 1320 in the split-screen configuration with user interface 1312. While concurrently displaying the first user interface of the first application in the first region and the second user interface of the second application in the second region in the split-screen configuration, device 300 detects (14038) a fifth user input corresponding to selection of the window control affordance corresponding to replacement of the second user interface in the second region with the placeholder interface, and in response to detecting the fifth user input, device 300 replaces at least a portion of (or all of) the second user interface in the second region with the placeholder interface. For example, in Figure 13V, user input 1380v selects the display configuration option for choosing a different window for display in second region 1320 in the split-screen configuration with user interface 1312, and in Figure 13W, placeholder interface 1352 and dock 1330 are displayed to all the user to select a new user interface for display in the split-screen configuration, without requiring the user to first close the application and open a new application, thereby reducing the number of inputs needed to perform an operation.

In some embodiments, the second user interface of the second application includes (14040) a window control affordance corresponding to display of a window of the second application in at least a portion of the first region and at least a portion of the second region. For example, in Figure 13X, user input 1380x selects a display configuration option for moving user interface 1322 to the desktop. While concurrently displaying the first user interface of the first application in the first region and the second user interface of the second application in the second region in the split-screen configuration, device 300 detects (14042) a sixth user input corresponding to selection of the window control affordance corresponding to display of a window of the second application in at least a portion of the first region and at least a portion of the second region, and in response to detecting the sixth user input, device 300 displays a window of the second application in at least a portion of the first region and at least a portion of the second region. For example, in Figure 13X, user input 1380x selects the display configuration option for moving the window (user interface 1322) to the desktop, thereby reducing the number of inputs needed to perform an operation.

In some embodiments, the second user interface of the second application includes (14044) a window control affordance corresponding to display of a full-screen user interface of the second application in a full-screen configuration displayed in at least a portion of the first region and at least a portion of the second region. For example, in Figure 13Z, user input 1380z selects a display configuration option for making user interface 1322 full screen. While concurrently displaying the first user interface of the first application in the first region and the second user interface of the second application in the second region in the split-screen configuration, device 300 detects (14046) a seventh user input corresponding to selection of the window control affordance corresponding to display of a full-screen user interface of the second application in a full-screen configuration displayed in at least a portion of the first region and at least a portion of the second region, and in response to detecting the seventh user input, device 300 displays a full-screen user interface of the second application in a full-screen configuration displayed in at least a portion of the first region and at least a portion of the second region. For example, in Figure 13Z, user input 1380z selects the display configuration option for making the window (user interface 1322) full screen, thereby reducing the number of inputs needed to perform an operation.

In some embodiments, the full-screen user interface of the second application includes (14048) a window control affordance corresponding to display of the second user interface of the second application in the first region or the second region in the split-screen configuration. For example, in Figure 13AE, user input 1380ae selects a display configuration option for displaying user interface 1308 in the left region (1310, Figure AF) of the screen in a split-screen configuration. While displaying the full-screen user interface of the second application in the full-screen configuration displayed in at least a portion of the first region and at least a portion of the second region, device 300 detects (14050) an eighth user input corresponding to selection of the window control affordance corresponding to display of the second user interface of the second application in the first region or the second region in the split-screen configuration, and in response to detecting the eighth user input, device 300 displays the second user interface of the second application in the first region or the second region in the split-screen configuration. For example, in Figure 13AE, user input 1380ae selects the display configuration option for moving full-screen user interface 1308 to first region 1310, thereby reducing the number of inputs needed to perform an operation.

In some embodiments, while concurrently displaying the first region and the second region in the split-screen configuration, device 300 detects (14052) a ninth user input corresponding to a search command, and in response to detecting the ninth user input, device 300 displays a search field concurrently with (e.g., overlaying) the first region and/or the second region. For example, in Figure 13AG, a keyboard shortcut causes search field 1340 to be displayed over user interfaces 1312 and 1352. In some embodiments, the search field includes a search input region (e.g., 1341a, Figure AH) and optionally one or more regions displaying suggested searches (e.g., 1341b, Figure AH). In some embodiments, the suggested searches are based on previous searches or common searches. In some embodiments, the search field is invoked with a user input corresponding to a gesture such as a tap, a swipe, a flick, a click, or a drag. While displaying the search field, device 300 detects (14054) a tenth user input corresponding to selection of a search result associated with a sixth application, and in response to detecting the tenth user input, device 300 displays a sixth user interface of the sixth application in the second region in the split-screen configuration with the first user interface of the first application in the first region. Displaying a search field while two applications remain in the split-screen configuration allows the user to replace one of the user interfaces in the split-screen configuration with a new user interface without requiring the user to first close one of the user interfaces, thereby reducing the number of inputs needed to perform an operation.

In some embodiments, the second application is a file manager (e.g., 1342, Figure 13AK) or an application launcher (e.g., 1344, Figure 13AN), the second user interface of the second application includes a plurality of application icons, and while concurrently displaying the first user interface of the first application in the first region and the second user interface of the second application in the second region in the split-screen configuration, device 300 detects (14056) an eleventh user input corresponding to selection of a first application icon of the plurality of application icons. In response to detecting the eleventh user input, device 300 displays a seventh user interface of a seventh application corresponding to the first application icon in the second region in the split-screen configuration with the first user interface of the first application in the first region. For example, in Figure 13AJ, while in the split-screen configuration, the user selects (1380aj) the file manager application, which opens into region 1320 in Figure 13AK. The user then selects (1380ak) calendar icon 1332c in file manager application 1342, and as a result, calendar user interface 1322 replaces the file manager in second region 1320 in Figure 13AL. In another example, in Figure 13AM, while in the split-screen configuration, the user selects (1380am) the application launcher, which opens into region 1320 in Figure 13AN. The user then selects (1380an) calendar icon 1332d in application launcher 1344, and as a result, calendar user interface 1322 replaces the application launcher in second region 1320 in Figure 13AO. Displaying a file manager and/or an application launcher in the split-screen configuration provides the user with an efficient process for selecting an application for split-screen viewing without requiring the user to first exit the split-screen configuration mode, thereby reducing the number of inputs needed to perform an operation.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

Exemplary embodiments are set out in the following items:
1. A method, comprising:
   at a first computer system having a first display generation component, wherein the first computer system is in communication with a first input device and a second computer system having a second display generation component different from the first display generation component:
   displaying, via the first display generation component, a first user interface in a first display region provided by the first display generation component, including displaying a first user interface object at a first location in the first display region;
   while displaying the first user interface in the first display region provided by the first display generation component, detecting a first input via the first input device, wherein the first input includes a first movement and corresponds to a request for dragging the first user interface object across the first display region provided by the first display generation component in accordance with a first portion of the first movement followed by a request for dragging the first user interface object beyond the first display region provided by the first display generation component toward a second display region provided by the second display generation component in accordance with a second portion of the first movement;
   in response to detecting the first movement:
      in accordance with a determination that the first user interface object is a representation of content and the first input is detected while the second display generation component is in communication with the first computer system in a first mode:
         moving the first user interface object across the first display region provided by the first display generation component from the first location to a second location in the first display region in accordance with the first portion of the first movement; and
         moving the first user interface object across the second display region provided by the second display generation component in accordance with the second portion of the first movement;
      in accordance with a determination that the first user interface object is a representation of content and the first input is detected while the second display generation component is in communication with the first computer system in a second mode different from the first mode:
         moving the first user interface object across the first display region provided by the first display generation component from the first location to a second location in the first display region in accordance with the first portion of the first movement; and
         moving the first user interface object across the second display region provided by the second display generation component in accordance with the second portion of the first movement;
      in accordance with a determination that the first user interface object is an application window and the first input is detected while the second display generation component is in communication with the first computer system in the first mode:
         moving the first user interface object across the first display region provided by the first display generation component from the first location to a second location in the first display region in accordance with the first portion of the first movement; and
         moving the first user interface object across the second display region provided by the second display generation component in accordance with the second portion of the first movement; and
      in accordance with a determination that the first user interface object is an application window and the first input is detected while the second display generation component is in communication with the first computer system in the second mode, preventing movement of the first user interface object into the second display region provided by the second display generation component.
2. The method of item 1, wherein:
   moving the first user interface object across the second display region includes moving the first user interface object from a first location on the second display region to a second location on the second display region; and
   the method further includes detecting a second input via the first input device, the second input corresponding to a request to position the first user interface object at the second location, where the second location on the second display region is determined in accordance with a determination of a location of receiving the second input.
3. The method of any of items 1-2, further including:
   when the first user interface object is a representation of content, maintaining display of the first user interface object while the first user interface object is being moved across the first display region and the second display region.
4. The method of any of items 1-3, further including:
   when the first user interface object is an application window, maintaining display of the application window as an open application window while the first user interface object is being moved.
5. The method of any of items 1-4, wherein preventing movement of the first user interface object into the second display region includes automatically moving the first user interface object across the first display region provided by the first display generation component from the second location back to the first location.
6. The method of any of items 1-5, wherein preventing movement of the first user interface object into the second display region includes pausing the movement of the first user interface object at the second location.
7. The method of any of items 1-6, wherein the first computer system is in communication with the second computer system via a wired connection.
8. The method of any of items 1-7, wherein the first computer system is in communication with the second computer system via a wireless connection.
9. The method of any of items 1-8, wherein the first computer system having the first display generation component is further in communication with a third computer system having a third display generation component that is different from the first display generation component and the second display generation component.
10. The method of any of items 1-9, further including:
   while moving the first user interface object across the first display region provided by the first display generation component, in accordance with a determination that the first user interface object can be moved from the first display region onto the second display region, displaying a first visual indication.
11. The method of item 10, further including:
   in accordance with a determination that the first user interface object cannot be moved from the first display region onto the second display region, displaying a second visual indication distinct from the first visual indication.
12. The method of any of items 1-11, further including:
   in accordance with a determination that first criteria for moving the first user interface object onto the second display region provided by the second display generation component or a third display region provided by a third display generation component are met, while moving the first user interface object across the first display region in accordance with the first portion of the first movement, displaying a third visual indication in a first position of the first display region indicating that the first user interface object is capable of being moved onto the second display region or the third display region.
13. The method of item 12, further including:
   in accordance with a determination that the first user interface object has a location at a respective time during the first portion of the first movement that is spatially closer to the second display region provided by the second display generation component than to the third display region provided by a third display generation component, displaying the third visual indication in the first position of the first display region indicating that the first user interface object can be moved onto the second display region and forgoing displaying a fourth visual indication in a second position of the first display region indicating that the first user interface object can be moved onto the third display region.
14. The method of any of items 1-13, wherein:
   moving the first user interface object across the second display region provided by the second display generation component, in accordance with the determination that the first input is detected while the second display generation component is in communication with the first computer system in the second mode, includes moving the first user interface object to a location on a native user interface of the second computer system.
15. A first computer system, comprising:
   a first display generation component:
   one or more processors;
   memory; and
   one or more programs, wherein the one or more programs are stored in the memory and configured to be executed by the one or more processors, the one or more programs including instructions for:
      at the first computer system having the first display generation component, wherein the first computer system is in communication with a first input device and a second computer system having a second display generation component different from the first display generation component:
      displaying, via the first display generation component, a first user interface in a first display region provided by the first display generation component, including displaying a first user interface object at a first location in the first display region;
      while displaying the first user interface in the first display region provided by the first display generation component, detecting a first input via the first input device, wherein the first input includes a first movement and corresponds to a request for dragging the first user interface object across the first display region provided by the first display generation component in accordance with a first portion of the first movement followed by a request for dragging the first user interface object beyond the first display region provided by the first display generation component toward a second display region provided by the second display generation component in accordance with a second portion of the first movement;
      in response to detecting the first movement:
         in accordance with a determination that the first user interface object is a representation of content and the first input is detected while the second display generation component is in communication with the first computer system in a first mode:
            moving the first user interface object across the first display region provided by the first display generation component from the first location to a second location in the first display region in accordance with the first portion of the first movement; and
            moving the first user interface object across the second display region provided by the second display generation component in accordance with the second portion of the first movement;
         in accordance with a determination that the first user interface object is a representation of content and the first input is detected while the second display generation component is in communication with the first computer system in a second mode different from the first mode:
            moving the first user interface object across the first display region provided by the first display generation component from the first location to a second location in the first display region in accordance with the first portion of the first movement; and
            moving the first user interface object across the second display region provided by the second display generation component in accordance with the second portion of the first movement;
         in accordance with a determination that the first user interface object is an application window and the first input is detected while the second display generation component is in communication with the first computer system in the first mode:
            moving the first user interface object across the first display region provided by the first display generation component from the first location to a second location in the first display region in accordance with the first portion of the first movement; and
            moving the first user interface object across the second display region provided by the second display generation component in accordance with the second portion of the first movement; and
         in accordance with a determination that the first user interface object is an application window and the first input is detected while the second display generation component is in communication with the first computer system in the second mode, preventing movement of the first user interface object into the second display region provided by the second display generation component.
16. A computer readable storage medium storing one or more programs, the one or more programs comprising instructions, which when executed by a first computer system having a first display generation component, cause the first computer system to:
   at the first computer system having the first display generation component, wherein the first computer system is in communication with a first input device and a second computer system having a second display generation component different from the first display generation component:
   display, via the first display generation component, a first user interface in a first display region provided by the first display generation component, including displaying a first user interface object at a first location in the first display region;
   while displaying the first user interface in the first display region provided by the first display generation component, detect a first input via the first input device, wherein the first input includes a first movement and corresponds to a request for dragging the first user interface object across the first display region provided by the first display generation component in accordance with a first portion of the first movement followed by a request for dragging the first user interface object beyond the first display region provided by the first display generation component toward a second display region provided by the second display generation component in accordance with a second portion of the first movement;
   in response to detecting the first movement:
      in accordance with a determination that the first user interface object is a representation of content and the first input is detected while the second display generation component is in communication with the first computer system in a first mode:
         move the first user interface object across the first display region provided by the first display generation component from the first location to a second location in the first display region in accordance with the first portion of the first movement; and
         move the first user interface object across the second display region provided by the second display generation component in accordance with the second portion of the first movement;
      in accordance with a determination that the first user interface object is a representation of content and the first input is detected while the second display generation component is in communication with the first computer system in a second mode different from the first mode:
         move the first user interface object across the first display region provided by the first display generation component from the first location to a second location in the first display region in accordance with the first portion of the first movement; and
         move the first user interface object across the second display region provided by the second display generation component in accordance with the second portion of the first movement;
      in accordance with a determination that the first user interface object is an application window and the first input is detected while the second display generation component is in communication with the first computer system in the first mode:
         move the first user interface object across the first display region provided by the first display generation component from the first location to a second location in the first display region in accordance with the first portion of the first movement; and
         move the first user interface object across the second display region provided by the second display generation component in accordance with the second portion of the first movement; and
   in accordance with a determination that the first user interface object is an application window and the first input is detected while the second display generation component is in communication with the first computer system in the second mode, prevent movement of the first user interface object into the second display region provided by the second display generation component.
17. A first computer system, comprising:
   a first display generation component:
   one or more processors;
   memory; and
   one or more programs, wherein the one or more programs are stored in the memory and configured to be executed by the one or more processors, the one or more programs including instructions for performing the method of any of items 1-14.
18. A computer readable storage medium storing one or more programs, the one or more programs comprising instructions, which when executed by a first computer system having a first display generation component, cause the first computer system to perform the method of any of items 1-14.
19. A method, comprising:
   at a first computer system having a first display generation component, wherein the first computer system is in communication with a first input device:
   displaying, via the first display generation component, a first user interface in a first display region provided by the first display generation component;
   while displaying the first user interface in the first display region provided by the first display generation component, detecting a first event that meets first criteria;
   in response to detecting the first event that meets the first criteria, displaying a respective visual indication of a respective representative spatial position of a user interface generated by a second display generation component of a second computer system, including:
      in accordance with a determination that the first computer system is sharing the first input device with the second computer system, and a user interface generated by the second display generation component has a first representative spatial position that can be reached by dragging a user interface object through a first portion of a user interface generated by the first display generation component, displaying a first visual indication in the first portion of the user interface generated by the first display generation component; and
      in accordance with a determination that the first computer system is sharing the first input device with the second computer system, and the user interface generated by the second display generation component has a second representative spatial position that can be reached by dragging a user interface object through a second portion of a user interface generated by the first display generation component, displaying a second visual indication in the second portion of the user interface generated by the first display generation component without displaying the first visual indication in the first portion of the user interface generated by the first display generation component;
   while the first computer system is sharing the first input device with the second computer system, detecting a first input via the first input device, wherein the first input includes a first movement and corresponds to a request for dragging a first user interface object across the first display region; and
   in response to detecting the first input:
      moving the first user interface object across the user interface generated by the first display generation component; and
      in accordance with a determination that the first input included movement across the first portion of the user interface where the respective visual indication was displayed when the first event that meets the first criteria was detected while the user interface generated by the second display generation component has the respective representative spatial position represented by the respective visual indication, moving the first user interface object across the user interface generated by the second display generation component in accordance with the first movement detected via the first input device.
20. The method of item 19, including, in response to detecting the first event that meets the first criteria, in accordance with a determination that the first computer system is not sharing the first input device with the second computer system, forgoing displaying the first visual indication in the first portion of the user interface generated by the first display generation component.
21. The method of item 20, further comprising;
   in response to detecting the first input, in accordance with a determination that the first input did not include movement across the first portion of the user interface where the respective visual indication was displayed when the first event that meets the first criteria was detected while user interface generated by the second display generation component has the respective representative spatial position represented by the respective visual indication, forgoing movement of the first user interface object across the user interface generated by the second display generation component in accordance with the first movement detected via the first input device.
22. The method of any of items 19-21, wherein the first visual indication has a first size illustrating a size of a region where user interface objects can be dragged from the user interface generated by the first display generation component to the user interface generated by the second display generation component.
23. The method of any of items 19-22, wherein the second computer system is in communication with the first input device.
24. The method of any of items 19-23, including:
   while moving the first user interface object across the user interface generated by the first display generation component and the user interface generated by the second display generation component, continuing to display the respective visual indication.
25. The method of any of items 19-24, further comprising a third computer system distinct from the first computer system and the second computer system, wherein the third computer system is in communication with the first computer system and the second computer system, and the first input device is connected to the third computer system.
26. The method of any of items 19-25, further comprising:
   in accordance with a determination that the first computer system is sharing the first input device with the third computer system and a user interface generated by a third display generation component of the third computer system has a third representative spatial position that can be reached by dragging a user interface object through a third portion of the user interface generated by the first display generation component, displaying a third visual indication in the third portion of the user interface generated by the first display generation component.
27. The method of any of items 19-26, wherein the first visual indication is displayed in a portion of a first edge of the first display generation component and the second visual indication is displayed in a portion of a second edge of the first display generation component.
28. The method of any of items 19-27, wherein the first event that meets the first criteria includes the second computer system transitioning from a low power state to an active state.
29. The method of any of items 19-28, further comprising:
   detecting a second input via the first input device, the second input including a second movement corresponding to a request to indicate a location of an input focus; and
   in response to detecting the second movement, changing an appearance of at least a portion of a respective display generation component that currently includes the input focus.
30. The method of any of items 19-29, further comprising:
   in accordance with a determination that a physical distance between the first computer system and the second computer system is below a threshold distance, automatically establishing a wireless connection between the first computer system and the second computer system.
31. The method of any of items 19-30, wherein:
   the second computer system is in communication with a second input device and the second computer system is sharing the second input device with the first computer system;
   while displaying a first input focus on a respective display generation component of the first display generation component and a second display generation component, detecting a third input via the first input device or the second input device; and
   in response to detecting the third input, in accordance with a determination that the third input corresponds to a request to perform a first operation, performing the first operation on the respective display generation component.
32. The method of any of items 19-31, further comprising:
   while displaying the first user interface in the first display region provided by the first display generation component, detecting a second event that meets second criteria; and
   in response to detecting the second event that meets the second criteria, displaying a respective visual indication by the first display generation component indicating that the second event has been detected.
33. The method of any of items 19-32, wherein the first user interface in the first display region provided by the first display generation component includes a region for displaying a control user interface, wherein the control user interface includes a plurality of affordances for controlling device functions of the first computer system including one or more affordances for controlling whether the first computer system shares the first input device with the second computer system.
34. The method of any of items 19-33, wherein the first user interface in the first display region provided by the first display generation component includes one or more affordances for enabling and disabling sharing of the first input device with any computer systems physically located within a threshold distance from the first computer system.
35. The method of any of items 19-34, further comprising:
   while displaying the input focus in a second display region provided by the second display generation component, detecting a termination of communication between the first input device and the second computer system; and
   in response to detecting the termination of communication, in accordance with a detection that the first computer system remains in communication with the first input device, moving the input focus to the first display region provided by the first display generation component.
36. The method of any of items 19-35, wherein:
   the first input device includes a display generation component including a touch-sensitive display screen;
   in accordance with a determination that a user input provided via the first input device is being directed to the first computer system, displaying a first plurality of affordances for controlling the first computer system on the touch-sensitive display screen; and
   in accordance with a determination that a user input provided via the first input device is being directed to the second computer system, displaying a second plurality of affordances for controlling the second computer system on the touch-sensitive display screen.
37. The method of any of items 19-36, wherein the first user interface in the first display region provided by the first display generation component includes an affordance for display settings, and the respective representative spatial position of the user interface generated by the second display generation component is determined based on a user input on the affordance for display settings.
38. The method of any of items 19-37, wherein the respective representative spatial position of the user interface generated by the second display generation component is determined based on a wireless signal between the second computer system and the first input device.
39. A first computer system, comprising:
   a first display generation component:
   one or more processors;
   memory; and
   one or more programs, wherein the one or more programs are stored in the memory and configured to be executed by the one or more processors, the one or more programs including instructions for:
      at the first computer system having the first display generation component, wherein the first computer system is in communication with a first input device:
      displaying, via the first display generation component, a first user interface in a first display region provided by the first display generation component;
      while displaying the first user interface in the first display region provided by the first display generation component, detecting a first event that meets first criteria;
      in response to detecting the first event that meets the first criteria, displaying a respective visual indication of a respective representative spatial position of a user interface generated by a second display generation component of a second computer system, including:
         in accordance with a determination that the first computer system is sharing the first input device with the second computer system, and a user interface generated by the second display generation component has a first representative spatial position that can be reached by dragging a user interface object through a first portion of a user interface generated by the first display generation component, displaying a first visual indication in the first portion of the user interface generated by the first display generation component; and
         in accordance with a determination that the first computer system is sharing the first input device with the second computer system, and the user interface generated by the second display generation component has a second representative spatial position that can be reached by dragging a user interface object through a second portion of a user interface generated by the first display generation component, displaying a second visual indication in the second portion of the user interface generated by the first display generation component without displaying the first visual indication in the first portion of the user interface generated by the first display generation component;
      while the first computer system is sharing the first input device with the second computer system, detecting a first input via the first input device, wherein the first input includes a first movement and corresponds to a request for dragging a first user interface object across the first display region; and
      in response to detecting the first input:
         moving the first user interface object across the user interface generated by the first display generation component; and
         in accordance with a determination that the first input included movement across the first portion of the user interface where the respective visual indication was displayed when the first event that meets the first criteria was detected while the user interface generated by the second display generation component has the respective representative spatial position represented by the respective visual indication, moving the first user interface object across the user interface generated by the second display generation component in accordance with the first movement detected via the first input device.
40. A computer readable storage medium storing one or more programs, the one or more programs comprising instructions, which when executed by a first computer system having a first display generation component, cause the first computer system to:
   at the first computer system having the first display generation component, wherein the first computer system is in communication with a first input device:
   display, via the first display generation component, a first user interface in a first display region provided by the first display generation component;
   while displaying the first user interface in the first display region provided by the first display generation component, detect a first event that meets first criteria;
   in response to detecting the first event that meets the first criteria, display a respective visual indication of a respective representative spatial position of a user interface generated by a second display generation component of a second computer system, including:
      in accordance with a determination that the first computer system is sharing the first input device with the second computer system, and a user interface generated by the second display generation component has a first representative spatial position that can be reached by dragging a user interface object through a first portion of a user interface generated by the first display generation component, display a first visual indication in the first portion of the user interface generated by the first display generation component; and
      in accordance with a determination that the first computer system is sharing the first input device with the second computer system, and the user interface generated by the second display generation component has a second representative spatial position that can be reached by dragging a user interface object through a second portion of a user interface generated by the first display generation component, display a second visual indication in the second portion of the user interface generated by the first display generation component without displaying the first visual indication in the first portion of the user interface generated by the first display generation component;
   while the first computer system is sharing the first input device with the second computer system, detect a first input via the first input device, wherein the first input includes a first movement and corresponds to a request for dragging a first user interface object across the first display region; and
   in response to detecting the first input:
      move the first user interface object across the user interface generated by the first display generation component; and
      in accordance with a determination that the first input included movement across the first portion of the user interface where the respective visual indication was displayed when the first event that meets the first criteria was detected while the user interface generated by the second display generation component has the respective representative spatial position represented by the respective visual indication, move the first user interface object across the user interface generated by the second display generation component in accordance with the first movement detected via the first input device.
41. A first computer system, comprising:
   a first display generation component:
   one or more processors;
   memory; and
   one or more programs, wherein the one or more programs are stored in the memory and configured to be executed by the one or more processors, the one or more programs including instructions for performing the method of any of items 19-38.
42. A computer readable storage medium storing one or more programs, the one or more programs comprising instructions, which when executed by a first computer system having a first display generation component, cause the first computer system to perform the method of any of items 19-38.
43. A method, comprising:
   at a first computer system having a first display generation component, wherein the first computer system is in communication with a first input device and a second computer system having a second display generation component:
   displaying, via the first display generation component, in a first display region provided by the first display generation component, a configuration user interface that includes a first representation of a representative spatial position for a user interface generated by the first display generation component and a second representation of a representative spatial position for a user interface generated by the second display generation component, wherein displaying the configuration user interface includes:
   in accordance with a determination that the first computer system and the second computer system are connected in a first mode in which the first display generation component displays a user interface controlled by the first computer system and the second display generation component displays a user interface controlled by the second computer system while the first computer system and the second computer system share the first input device, displaying the first representation of the representative spatial position for the user interface generated by the first display generation component and the second representation of the representative spatial position for the user interface generated by the second display generation component with first visual characteristics; and
   in accordance with a determination that the first computer system and the second computer system are connected in a second mode in which the first display generation component and the second display generation component both display a user interface controlled by the first computer system, displaying the first representation of the representative spatial position for the user interface generated by the first display generation component and the second representation of the representative spatial position for the user interface generated by the second display generation component with second visual characteristics different from the first visual characteristics.
44. The method of item 43, wherein:
   the first representation of the representative spatial position for the user interface generated by the first display generation component corresponds to a first virtual wallpaper and the second representation of the representative spatial position for the user interface generated by the second display generation component corresponds to a second virtual wallpaper distinct from the first virtual wallpaper.
45. The method of any of items 43 and 44, wherein:
   the first virtual wallpaper of the first representation corresponds to a wallpaper displayed on the first display generation component and the second virtual wallpaper of the second representation corresponds to a wallpaper displayed on the second display generation component.
46. The method of any of items 43-45, further including:
   detecting a first user input via the first input device;
   in response to detecting the first user input:
      in accordance with a determination that the first user input is over the second representation and the first user input corresponds to a request for identifying a display generation component associated with the second representation, displaying an indication on a second display region of a user interface generated by the second display generation component.
47. The method of item 46, wherein displaying the indication on the second display region provided by the second display generation component comprises changing an appearance of a portion of an edge of the second display generation component.
48. The method of any of items 43-47, further comprising:
   displaying, on the first display region provided by the first display generation component, one or more selectable affordances for selecting whether the first computer system and the second computer system are connected in the first mode or the second mode.
49. The method of item 48, wherein:
   in accordance with a determination that the first display generation component and the second display generation component are connected in the second mode and that the second display generation component is displaying a copy of the user interface that is generated by the first display generation component, the first representation and the second representation are displayed partially overlapping each other.
50. The method of any of items 43-49, wherein:
   the second display generation component operates as an extended display for the first display generation component when the first display generation component and the second display generation component are connected in the second mode, and the first display generation component and the second display generation component display content provided by the first computer system.
51. The method of any of items 43-50, wherein:
   the first computer system is in communication with a second input device distinct from the first input device, and the first computer system and the second computer system share the second input device when connected in the first mode.
52. The method of any of items 43-51, wherein:
   the second computer system is in communication with a third input device distinct from the first input device, and the first computer system and the second computer system share the first input device and the third input device when connected in the first mode.
53. The method of any of items 43-52, further including:
   displaying, in the first display region provided by the first display generation component, one or more affordances for controlling functions of one or more input devices and/or one or more displays.
54. The method of any of items 43-53, further including:
   displaying media content on the first display generation component provided by the first computer system;
   streaming the media content from the first computer system to the second display generation component provided by the second computer system while the second computer system is in an unlocked access mode;
   in response to detecting a user input corresponding to a request to operate the second computer system, locking access to the second computer system so that an authentication information is required for unlocking access for the second computer system.
55. The method of any of items 43-54, further including:
   while displaying the configuration user interface, detecting a second user input, via the first input device, on the configuration user interface;
   in response to detecting the second user input:
      in accordance with a determination that the second user input corresponds to a request to change a position of the first representation on the configuration user interface, displaying a first notification by the first display generation component; and
      in accordance with a determination that the second user input corresponds to a request to change a position of the second representation on the configuration user interface, displaying a second notification by the second display generation component.
56. The method of any of items 43-55, further including:
   in response to detecting the second user input:
   in accordance with the determination that the second user input corresponds to the request to change the position of the first representation or the request to change the position of the second representation on the configuration user interface, displaying the first notification by the first display generation component and the second notification by the second display generation component.
57. The method of any of items 43-56, wherein:
   in accordance with a determination that the second user input corresponds to a request to reduce a space between the first representation and the second representation on the configuration user interface, so that the space between the first representation and the second representation, subsequent to reducing the space, meets a first threshold distance, connecting the first computer system and the second computer system to each other in the second mode.
58. The method of any of items 43-57, wherein:
   the second user input corresponds to a request to change a position of the first representation or the second representation;
   in response to the second user input:
      in accordance with a determination that relative spatial locations of the first representation and the second representation, after changing the position of the first representation or the second representation, meet first criteria, connecting the first computer system and the second computer system to each other in the first mode; and
      in accordance with a determination that the relative spatial locations of the first representation and the second representation, after changing the position of the first representation or the second representation, meet second criteria, connecting the first computer system and the second computer system to each other in the second mode.
59. The method of item 58, wherein:
   the second criteria are met when changing the position of the first representation or the second representation reduces a distance between the first representation and the second representation.
60. The method of item 59, wherein:
   the first criteria are met when moving the first representation or the second representation reduces the distance between the first representation to below a first threshold distance.
61. The method of any of items 58-60, wherein:
   the first criteria are met when moving the first representation or the second representation increases a distance between the first representation and the second representation.
62. The method of item 61, wherein:
   the second criteria are met when moving the first representation or the second representation reduces the distance between the first representation to below a second threshold distance.
63. The method of any of items 43-62, wherein:
   the second user input corresponds to a combination of a keypress and a dragging movement via the first input device.
64. A first computer system, comprising:
   a first display generation component:
   one or more processors;
   memory; and
   one or more programs, wherein the one or more programs are stored in the memory and configured to be executed by the one or more processors, the one or more programs including instructions for:
      at the first computer system having the first display generation component, wherein the first computer system is in communication with a first input device and a second computer system having a second display generation component:
      displaying, via the first display generation component, in a first display region provided by the first display generation component, a configuration user interface that includes a first representation of a representative spatial position for a user interface generated by the first display generation component and a second representation of a representative spatial position for a user interface generated by the second display generation component, wherein displaying the configuration user interface includes:
      in accordance with a determination that the first computer system and the second computer system are connected in a first mode in which the first display generation component displays a user interface controlled by the first computer system and the second display generation component displays a user interface controlled by the second computer system while the first computer system and the second computer system share the first input device, displaying the first representation of the representative spatial position for the user interface generated by the first display generation component and the second representation of the representative spatial position for the user interface generated by the second display generation component with first visual characteristics; and
      in accordance with a determination that the first computer system and the second computer system are connected in a second mode in which the first display generation component and the second display generation component both display a user interface controlled by the first computer system, displaying the first representation of the representative spatial position for the user interface generated by the first display generation component and the second representation of the representative spatial position for the user interface generated by the second display generation component with second visual characteristics different from the first visual characteristics.
65. A computer readable storage medium storing one or more programs, the one or more programs comprising instructions, which when executed by a first computer system having a first display generation component, cause the first computer system to:
   at the first computer system having the first display generation component, wherein the first computer system is in communication with a first input device and a second computer system having a second display generation component:
   display, via the first display generation component, in a first display region provided by the first display generation component, a configuration user interface that includes a first representation of a representative spatial position for a user interface generated by the first display generation component and a second representation of a representative spatial position for a user interface generated by the second display generation component, wherein displaying the configuration user interface includes:
   in accordance with a determination that the first computer system and the second computer system are connected in a first mode in which the first display generation component displays a user interface controlled by the first computer system and the second display generation component displays a user interface controlled by the second computer system while the first computer system and the second computer system share the first input device, display the first representation of the representative spatial position for the user interface generated by the first display generation component and the second representation of the representative spatial position for the user interface generated by the second display generation component with first visual characteristics; and
   in accordance with a determination that the first computer system and the second computer system are connected in a second mode in which the first display generation component and the second display generation component both display a user interface controlled by the first computer system, display the first representation of the representative spatial position for the user interface generated by the first display generation component and the second representation of the representative spatial position for the user interface generated by the second display generation component with second visual characteristics different from the first visual characteristics.
66. A first computer system, comprising:
   a first display generation component:
   one or more processors;
   memory; and
   one or more programs, wherein the one or more programs are stored in the memory and configured to be executed by the one or more processors, the one or more programs including instructions for performing the method of any of items 43-63.
67. A computer readable storage medium storing one or more programs, the one or more programs comprising instructions, which when executed by a first computer system having a first display generation component, cause the first computer system to perform the method of any of items 43-63.
68. A method, comprising:
   at a first computer system comprising a first display generation component and an input device:
   displaying, via the first display generation component, a visual indication of a location of a portal between a first display region associated with the first display generation component and a second display region associated with a second display generation component, wherein the portal includes a portion of the first display region at which user interface objects can be moved between the first display region and the second display region;
   while displaying the visual indication of the portal, detecting a first input corresponding to a first movement in the first display region; and
   in response to detecting the first input, changing a size and/or location of the visual indication of the portal between the first display region associated with the first display generation component and the second display region associated with the second display generation component to indicate a change to the size and/or location of the portal between the first display region associated with the first display generation component and the second display region associated with the second display generation component.
69. The method of item 68, further including:
   prior to displaying the visual indication of the portal, detecting, via the input device, a second input in the first display region generated by the first display generation component that is in communication with the second display generation component; and
   in response to detecting the second input, displaying, via the first display generation component, the visual indication of the portal.
70. The method of item 69, including, in accordance with a determination that the second input includes a second movement toward a first edge region of the first display region, displaying a first portion of the visual indication of the location of the portal in the first edge region of the first display region.
71. The method of item 70, including, in accordance with a determination that the second input includes the second movement toward the first edge region of the first display region, a second portion of the visual indication of the portal is displayed at a respective edge region of the second display region that is selected based on a direction of the second movement.
72. The method of any of items 70-71, wherein:
   the first computer system is in communication a plurality of candidate devices that are in communication with corresponding display generation components including a first candidate device that is in communication with a first candidate display generation component and a second candidate device that is in communication with a second candidate display generation component;
   in response to detecting the second input, displaying a visual indication of the portal in the second display region, including:
      in accordance with a determination that the first candidate device is a most recently active candidate device of the plurality of candidate devices, using the first candidate display generation component to display the second display region; and
      in accordance with a determination that the second candidate device is a most recently active candidate device of the plurality of candidate devices, using the second candidate display generation component to display the second display region.
73. The method of any of items 70-72, wherein in response to detecting the second input, a display generation component that was previously in a low power state transitions into an active state to display the second display region.
74. The method of any of items 70-73, wherein in response to the second input, displaying a visual indication of the portal in the second display region along with a lock screen for a device associated with the second display region.
75. The method of any of items 70-74, wherein the visual indication of the portal is displayed in response to detecting a pause of the second movement of the second input having a duration that is longer than a threshold duration.
76. The method of any of items 70-75, wherein the visual indication for a portal is an indicator of where a cursor will move when moved from the first display region to the second display region.
77. The method of any of items 68-76, wherein a first portion of the visual indication of the location of the portal is displayed in the first display region associated with the first display generation component.
78. The method of item 77, wherein a second portion of the visual indication of the portal is displayed in the second display region associated with the second display generation component.
79. The method of any of items 68-78, further including:
   detecting an additional input including a movement in a direction from the first display region toward the second display region: and
   in response to detecting the additional input, displaying movement of a cursor off the first display region, wherein after the cursor is moved off of the first display region based on the additional input from a respective input device, a corresponding cursor moves onto the second display region based on a continuation of the additional input from the respective input device.
80. The method of item 79, wherein the corresponding cursor is displayed at a predetermined position in a second portion of the visual indication of the portal in the second display region.
81. The method of item 79 or 80, wherein the cursor displayed in the first display region associated with the first display generation component has a first appearance and the corresponding cursor displayed in the second display region has a second appearance distinct from the first appearance.
82. The method of any of items 79-81, wherein in response to a determination that the first movement of the first input has not been detected for a duration that is longer than a threshold duration, displaying a cursor location indication for indicating a location of the corresponding cursor in the second display region.
83. The method of any of items 79-82, wherein the corresponding cursor is displayed within a second portion of the visual indication for the portal in the second display region.
84. The method of any of items 79-83, wherein movement of the corresponding cursor on the second display region includes a first portion of movement of the corresponding cursor on the second display region within the visual indication of the portal on the second display region with a first movement resistance, and a second portion of movement of the corresponding cursor on the second display region from within the visual indication of the portal to outside the visual indication of the portal with a second movement resistance that is greater than the first movement resistance.
85. The method of any of items 79-84, wherein displaying movement of the cursor off the first display region to the second display region includes moving the cursor to an edge of the first display region followed by ceasing to display the cursor in the first display region.
86. The method of any of items 68-85, including:
   displaying, in the first display region provided by the first display generation component, a configuration user interface that includes a first representation of a representative spatial position for the first display region generated by the first display generation component and a second representation of a representative spatial position for the second display region generated by the second display generation component;
   while displaying the configuration user interface, detecting an input corresponding to a request to move the first representation or the second representation;
   in response to detecting the input corresponding to the request to move the first representation or the second representation, displaying the visual indication of the portal.
87. The method of any of items 68-86, wherein changing the size and/or location of the visual indication of the portal includes reducing the size of the visual indication of the portal in response to a detection that the visual indication of the portal has been moved in accordance with the first movement of the first input, the first movement of the first input being upward or downward movement that has reached a top edge or a bottom edge of the first display region.
88. The method of any of items 68-87, wherein changing the size and/or location of the visual indication of the portal includes changing the location of the visual indication of the portal, including moving the visual indication of the portal along a first edge of the first display region.
89. The method of any of items 68-88, wherein changing the size and/or location of the visual indication of the portal includes increasing the size of the visual indication of the portal in response to a detection that the first input corresponds to a request to move the visual indication toward a second edge non-parallel to a first edge of the first display region, and the first input continues to attempt to move the visual indication toward the second edge.
90. The method of any of items 68-89, wherein changing the size and/or location of the visual indication of the portal includes changing the size of the visual indication of the portal, including displaying a stretching animation of the visual indication of the portal.
91. The method of any of items 68-90, wherein:
   the first display generation component displays a first portion of the visual indication of the portal in the first display region;
   a second portion of the visual indication of the portal is displayed in the second display region; and
   changing the size and/or location of the visual indication of the portal includes changing a size and/or location of the first portion or the second portion of the visual indication of the portal.
92. The method of item 91, wherein changing the size and/or location of the visual indication of the portal includes changing the location of a respective portion of the visual indication of the portal of the first and second portions of the visual indication of the portal, the respective portion of the visual indication of the portal being displayed by a larger display region of the first display region and the second display region.
93. The method of any of items 68-92, wherein the first portion of the visual indication of the portal displayed in the first display region and the second portion of the visual indication of the portal displayed in the second display region have a size that is determined based on a size of a respective display region of the first display region and the second display region having a smaller size measured along a respective edge that the visual indication of the portal is displayed along.
94. The method of any of items 68-93, including:
   detecting a user input corresponding to a first request to move a cursor from the first display region to the second display region via the visual indication of the portal; and
   in response to detecting the user input corresponding to the first request to move the cursor from the first display region to the second display region via the visual indication of the portal, ceasing to display the visual indication of the portal; and
   after ceasing to display the visual indication of the portal, detecting a user input corresponding to a second request to move the cursor between the first display region and the second display region; and
   in response to detecting the user input corresponding to the second request to move the cursor between the first display region and the second display region, in accordance with a determination that the user input corresponding to the second request is at a location selected for the portal based on user input corresponding to a request to move a cursor from within the visual indication of the portal to the second display region, moving the cursor between the first display region and the second display region in accordance with the user input corresponding to the second request.
95. The method of any of items 68-94, including:
   after determining a location for a portal between the first display region and the second display region, disconnecting the first display generation component and the second display generation component; and
   after disconnecting the first display generation component and the second display generation component, reconnecting the first display generation component and the second display generation component; and
   after reconnecting the first display generation component and the second display generation component, detecting a request to move a cursor from a display region associated with the first display generation component to a display region associated with the second display generation component; and
   in response to detecting the request to move the cursor from the display region associated with the first display generation component to the display region associated with the second display generation component:
      in accordance with a determination that the first display generation component and/or the second display generation component meet portal reset criteria, resetting a location of the portal between the display region associated with the first display generation component and the display region associated with the second display generation component; and
      in accordance with a determination that the first display generation component and/or the second display generation component do not meet the portal reset criteria, maintaining the portal between the display region associated with the first display generation component and the display region associated with the second display generation component at a location that was established for the portal before the first display generation component and the second display generation component were disconnected.
96. A first computer system, comprising:
   a first display generation component:
   an input device;
   one or more processors;
   memory; and
   one or more programs, wherein the one or more programs are stored in the memory and configured to be executed by the one or more processors, the one or more programs including instructions for:
      displaying, via the first display generation component, a visual indication of a location of a portal between a first display region associated with the first display generation component and a second display region associated with a second display generation component, wherein the portal is a portion of the first display region at which user interface objects can be moved between the first display region and the second display region;
      while displaying the visual indication of the portal, detecting a first input corresponding to a first movement in the first display region; and
      in response to detecting the first input, changing a size and/or location of the visual indication of the portal between the first display region associated with the first display generation component and the second display region associated with the second display generation component to indicate a change to the size and/or location of the portal between the first display region associated with the first display generation component and the second display region associated with the second display generation component.
97. A computer readable storage medium storing one or more programs, the one or more programs comprising instructions, which when executed by a first computer system having a first display generation component and an input device, cause the first computer system to:
   display, via the first display generation component, a visual indication of a location of a portal between a first display region associated with the first display generation component and a second display region associated with a second display generation component, wherein the portal is a portion of the first display region at which user interface objects can be moved between the first display region and the second display region;
   while displaying the visual indication of the portal, detect a first input corresponding to a first movement in the first display region; and
   in response to detecting the first input, change a size and/or location of the visual indication of the portal between the first display region associated with the first display generation component and the second display region associated with the second display generation component to indicate a change to the size and/or location of the portal between the first display region associated with the first display generation component and the second display region associated with the second display generation component.
98. A first computer system, comprising:
   a first display generation component:
   an input device;
   one or more processors;
   memory; and
   one or more programs, wherein the one or more programs are stored in the memory and configured to be executed by the one or more processors, the one or more programs including instructions for performing the method of any of items 68-95.
99. A computer readable storage medium storing one or more programs, the one or more programs comprising instructions, which when executed by a first computer system having a first display generation component and an input device, cause the first computer system to perform the method of any of items 68-95.
100. A method, comprising:
   at a first computer system having a display generation component and one or more input devices:
   concurrently displaying in a display region provided by the display generation component:
      a dock including a plurality of icons respectively corresponding to a plurality of applications; and
      a first region and a second region displayed in a split-screen configuration, wherein the first region displays a first user interface of a first application, and the second region displays a placeholder interface indicating that the second region is available for placement of a user interface of an application other than the first application;
   while concurrently displaying the dock, the first user interface of the first application in the first region, and the placeholder interface in the second region, detecting a first user input corresponding to selection of an icon in the dock that corresponds to a second application; and
   in response to detecting the first user input, displaying a second user interface of the second application in the second region, wherein the second user interface of the second application is displayed with the first user interface of the first application in the split-screen configuration.
101. The method of item 100, wherein:
   displaying the first region and the second region in the split-screen configuration includes dividing the display region provided by the display generation component into a first portion and a second portion separated by a divider, wherein the first region fills the first portion on a first side of the divider and the second region fills the second portion on a second side of the divider; and
   displaying the first user interface of the first application and the second user interface of the second application in the split-screen configuration includes filling the first portion on the first side of the divider with the first user interface of the first application and filling the second portion on the second side of the divider with the second user interface of the second application.
102. The method of any of items 100 and 101, wherein the placeholder interface includes one or more representations of user interfaces of applications other than the first application.
103. The method of item 102, wherein displaying the second user interface of the second application in the second region includes ceasing to display the one or more representations of user interfaces of applications other than the first application in a region of the display region in which the second user interface is displayed.
104. The method of any of items 100-103, further including:
   while concurrently displaying the dock, the first user interface of the first application in the first region, and the second user interface of the second application in the second region, detecting a second user input corresponding to selection of an icon in the dock corresponding to a third application; and
   in response to detecting the second user input, replacing the second user interface of the second application with a third user interface of the third application in the second region, wherein the third user interface of the third application is displayed with the first user interface of the first application in the split-screen configuration.
105. The method of any of items 100-104, wherein displaying the second user interface of the second application includes opening the second application from a closed state.
106. The method of any of items 100-101, further including, while concurrently displaying the dock, the first user interface of the first application in the first region, and either the placeholder interface or the second user interface of the second application in the second region, in accordance with a determination that a third application cannot be displayed in the split-screen configuration, changing an appearance of an icon in the dock that corresponds to the third application to indicate that the third application cannot be displayed in the split-screen configuration.
107. The method of any of items 100-106, wherein displaying, in the second region, the second user interface of the second application includes displaying two or more windows associated with the second application, wherein a first window of the two or more windows associated with the second application corresponds to a first user interface for the second application and a second window of the two or more windows associated with the second application corresponds to a second user interface for the second application, wherein the second user interface for the second application is different from the first user interface for the first application.
108. The method of item 107, further including:
   while displaying the two or more windows associated with the second application in the second region, displaying an additional window affordance in the second region;
   detecting a user input corresponding to selection of the additional window affordance; and
   in response to detecting the user input corresponding to selection of the additional window affordance, displaying an additional window associated with the second application in addition to the two or more windows associated with the second application.
109. The method of any of items 107-108, wherein the two or more windows associated with the second application displayed in the second region include at least one window from a first virtual workspace and at least one window from a second virtual workspace different from the first virtual workspace.
110. The method of any of items 100-109, wherein the placeholder interface in the second region includes a first representation of two user interfaces including a fourth user interface of a fourth application and a fifth user interface of a fifth application, wherein the fourth user interface and the fifth user interface are displayed adjacent to each other in the second region in a split-view arrangement within the first representation.
111. The method of item 110, further including:
   while concurrently displaying the dock, the first user interface of the first application in the first region, and the placeholder interface including the first representation of the two user interfaces in the second region, detecting a fourth user input corresponding to selection of a portion of the first representation corresponding to a respective user interface corresponding to a respective application; and
   in response to detecting the fourth user input, displaying a representation of the respective application in the second region, wherein the representation of the respective application is displayed with the first user interface of the first application in the split-screen configuration.
112. The method of item 111, wherein displaying the representation of the respective application with the first user interface of the first application includes:
   in accordance with a determination that the fourth user input corresponded to selection of the fourth user interface of the fourth application, the representation of the respective application is the fourth user interface of the fourth application; and
   in accordance with a determination that the fourth user input corresponded to selection of the fifth user interface of the fifth application, the representation of the respective application is the fifth user interface of the fifth application.
113. The method of any of items 100-112, further including:
   prior to concurrently displaying the dock, the first user interface of the first application in the first region, and the placeholder interface in the second region:
      displaying, in a portion of a user interface displayed in at least a portion of the first region and at least a portion of the second region, a first window of the first application, wherein the first window includes a window control affordance that presents a plurality of display configuration option affordances for the first window, wherein the plurality of display configuration option affordances includes a first split-screen configuration option affordance corresponding to display of the first application in the first region in the split-screen configuration, a second split-screen configuration option affordance corresponding to display of the first application in the second region in the split-screen configuration, and a full-screen configuration option affordance corresponding to display of the first application in at least a portion of the first region and at least a portion of the second region in the full-screen configuration; and
      detecting a user input corresponding to selection of the first split-screen configuration option affordance corresponding to display of the first application in the first region;
   wherein displaying the first user interface of the first application in the first region and the placeholder interface in the second region in the split-screen configuration is in response to the detecting of the user input corresponding to the selection of the first split-screen configuration option affordance.
114. The method of any of items 100-113, wherein the second user interface of the second application includes a window control affordance corresponding to replacement of the second user interface in the second region with the placeholder interface; and
   the method further includes:
   while concurrently displaying the first user interface of the first application in the first region and the second user interface of the second application in the second region in the split-screen configuration, detecting a fifth user input corresponding to selection of the window control affordance corresponding to replacement of the second user interface in the second region with the placeholder interface; and
   in response to detecting the fifth user input, replacing at least a portion of the second user interface in the second region with the placeholder interface.
115. The method of any of items 100-114, wherein the second user interface of the second application includes a window control affordance corresponding to display of a window of the second application in at least a portion of the first region and at least a portion of the second region; and
   the method further includes:
   while concurrently displaying the first user interface of the first application in the first region and the second user interface of the second application in the second region in the split-screen configuration, detecting a sixth user input corresponding to selection of the window control affordance corresponding to display of a window of the second application in at least a portion of the first region and at least a portion of the second region; and
   in response to detecting the sixth user input, displaying a window of the second application in at least a portion of the first region and at least a portion of the second region.
116. The method of any of items 100-115, wherein the second user interface of the second application includes a window control affordance corresponding to display of a full-screen user interface of the second application in a full-screen configuration displayed in at least a portion of the first region and at least a portion of the second region; and
   the method further includes:
   while concurrently displaying the first user interface of the first application in the first region and the second user interface of the second application in the second region in the split-screen configuration, detecting a seventh user input corresponding to selection of the window control affordance corresponding to display of a full-screen user interface of the second application in a full-screen configuration displayed in at least a portion of the first region and at least a portion of the second region; and
   in response to detecting the seventh user input, displaying a full-screen user interface of the second application in a full-screen configuration displayed in at least a portion of the first region and at least a portion of the second region.
117. The method of any of items 100-116, wherein the full-screen user interface of the second application includes a window control affordance corresponding to display of the second user interface of the second application in the first region or the second region in the split-screen configuration; and
   the method further includes:
   while displaying the full-screen user interface of the second application in the full-screen configuration displayed in at least a portion of the first region and at least a portion of the second region, detecting an eighth user input corresponding to selection of the window control affordance corresponding to display of the second user interface of the second application in the first region or the second region in the split-screen configuration; and
   in response to detecting the eighth user input, displaying the second user interface of the second application in the first region or the second region in the split-screen configuration.
118. The method of any of items 100-117, further including:
   while concurrently displaying the first region and the second region in the split-screen configuration, detecting a ninth user input corresponding to a search command; and
   in response to detecting the ninth user input, displaying a search field concurrently with the first region and/or the second region.
119. The method of item 118, further including:
   while displaying the search field, detecting a tenth user input corresponding to selection of a search result associated with a sixth application; and
   in response to detecting the tenth user input, displaying a sixth user interface of the sixth application in the second region in the split-screen configuration with the first user interface of the first application in the first region.
120. The method of any of items 100-119, wherein:
   the second application is a file manager or an application launcher; and
   the second user interface of the second application includes a plurality of application icons; and
   the method further includes:
      while concurrently displaying the first user interface of the first application in the first region and the second user interface of the second application in the second region in the split-screen configuration, detecting an eleventh user input corresponding to selection of a first application icon of the plurality of application icons; and
      in response to detecting the eleventh user input, displaying a seventh user interface of a seventh application corresponding to the first application icon in the second region in the split-screen configuration with the first user interface of the first application in the first region.
121. A first computer system, comprising:
   a first display generation component:
   one or more processors;
   memory; and
   one or more programs, wherein the one or more programs are stored in the memory and configured to be executed by the one or more processors, the one or more programs including instructions for:
      at a first computer system having a display generation component and one or more input devices:
      concurrently displaying in a display region provided by the display generation component:
         a dock including a plurality of icons respectively corresponding to a plurality of applications; and
         a first region and a second region displayed in a split-screen configuration, wherein the first region displays a first user interface of a first application, and the second region displays a placeholder interface indicating that the second region is available for placement of a user interface of an application other than the first application;
      while concurrently displaying the dock, the first user interface of the first application in the first region, and the placeholder interface in the second region, detecting a first user input corresponding to selection of an icon in the dock that corresponds to a second application; and
      in response to detecting the first user input, displaying a second user interface of the second application in the second region, wherein the second user interface of the second application is displayed with the first user interface of the first application in the split-screen configuration.
122. A computer readable storage medium storing one or more programs, the one or more programs comprising instructions, which when executed by a first computer system having a first display generation component, cause the first computer system to:
   at the first computer system having a display generation component and one or more input devices:
   concurrently displaying in a display region provided by the display generation component:
      a dock including a plurality of icons respectively corresponding to a plurality of applications; and
      a first region and a second region displayed in a split-screen configuration, wherein the first region displays a first user interface of a first application, and the second region displays a placeholder interface indicating that the second region is available for placement of a user interface of an application other than the first application;
   while concurrently displaying the dock, the first user interface of the first application in the first region, and the placeholder interface in the second region, detecting a first user input corresponding to selection of an icon in the dock that corresponds to a second application; and
   in response to detecting the first user input, displaying a second user interface of the second application in the second region, wherein the second user interface of the second application is displayed with the first user interface of the first application in the split-screen configuration.
123. A first computer system, comprising:
   a first display generation component:
   one or more processors;
   memory; and
   one or more programs, wherein the one or more programs are stored in the memory and configured to be executed by the one or more processors, the one or more programs including instructions for performing the method of any of items 100-120.
124. A computer readable storage medium storing one or more programs, the one or more programs comprising instructions, which when executed by a first computer system having a first display generation component, cause the first computer system to perform the method of any of items 100-120.

## Claims

1. A method, comprising:
at a first computer system comprising a first display generation component and an input device, wherein the first computer system is in communication with a second device:
while the second device is in a low power state, detecting, via the input device, a first input sequence including movement of a cursor to an edge of the first display generation component; and
in response to detecting the first input sequence including movement of the cursor to an edge of the first display generation component:
transitioning the second device from the low power state to an active state that displays a second display region associated with the second device; and
displaying a representation of the cursor on the second device.

2. The method of claim 1, wherein the movement of the cursor to the edge of the first display generation component includes movement in a direction corresponding to a position of the second device relative to the first computer system.

3. The method of any of claims 1-2, wherein transitioning the second device from the low power state to an active state includes:
displaying a lock screen user interface; and
in response to detecting authentication information, ceasing display of the lock screen user interface and unlocking the second device.

4. The method of any of claims 1-3, wherein the first computer system is in communication with the second device in accordance with a determination that the first computer system and the second device are signed into a same user account.

5. The method of any of claims 1-4, wherein the first computer system is in communication with the second device in accordance with a determination that the first computer system and the second device are connected via a short-range communication protocol.

6. The method of any of claims 1-5, including, in accordance with a determination that the first input sequence includes a first movement toward a first edge region of the first display generation component, displaying a visual indication in the first edge region at which user interface objects can be moved between the first display generation component and the second device.

7. The method of any of claims 1-6, wherein:
the first computer system is in communication with a plurality of candidate devices including a first candidate device and a second candidate device; and
transitioning the second device from the low power state to an active state that displays a second display region associated with the second device includes:
in accordance with a determination that the first candidate device is a most recently active candidate device of the plurality of candidate devices, using the first candidate device as the second device that is transitioned from the low power state to an active state; and
in accordance with a determination that the second candidate device is a most recently active candidate device of the plurality of candidate devices, using the second candidate device as the second device that is transitioned from the low power state to an active state.

8. The method of any of claims 1-7, including:
in response to detecting the first input sequence, displaying movement of the cursor off the first display generation component, wherein after the cursor is moved off of the first display generation component, the representation of the cursor moves on the second device based on a continuation of movement of the cursor in accordance with the first input sequence.

9. The method of any of claims 1-8, including, in response to detecting the first input sequence including movement of the cursor to an edge of the first display generation component: moving the cursor to an edge of the first display generation component followed by ceasing to display the cursor on the first display generation component.

10. The method of any of claims 1-9, wherein:
the cursor displayed on the first display generation component has a first appearance; and
the representation of the cursor displayed on the second device has a second appearance distinct from the first appearance.

11. The method of any of claim 1-10, including:
detecting a second input that includes movement of a first user interface object between the first display generation component and the second device; and
in response to detecting the second input, causing the first user interface object to be displayed on the second device in accordance with the movement of the second input.

12. A first computer system in communication with a second device, comprising:
a first display generation component:
an input device;
one or more processors;
memory; and
one or more programs, wherein the one or more programs are stored in the memory and configured to be executed by the one or more processors, the one or more programs including instructions for:
while the second device is in a low power state, detecting, via the input device, a first input sequence including movement of a cursor to an edge of the first display generation component;
in response to detecting the first input sequence including movement of the cursor to an edge of the first display generation component:
transitioning the second device from the low power state to an active state that displays a second display region associated with the second device; and
displaying a representation of the cursor on the second device.

13. A computer readable storage medium storing one or more programs, the one or more programs comprising instructions, which when executed by a first computer system having a first display generation component and an input device, the first computer system being in communication with a second device, cause the first computer system to perform operations including:
while the second device is in a low power state, detecting, via the input device, a first input sequence including movement of a cursor to an edge of the first display generation component;
in response to detecting the first input sequence including movement of the cursor to an edge of the first display generation component:
transitioning the second device from the low power state to an active state that displays a second display region associated with the second device; and
displaying a representation of the cursor on the second device.

14. A first computer system, comprising:
a first display generation component:
an input device;
one or more processors;
memory; and
one or more programs, wherein the one or more programs are stored in the memory and configured to be executed by the one or more processors, the one or more programs including instructions for performing the method of any of claims 1-11.

15. A computer readable storage medium storing one or more programs, the one or more programs comprising instructions, which when executed by a first computer system having a first display generation component and an input device, cause the first computer system to perform the method of any of claims 1-11.
